# EUROPEAN PATENT APPLICATION

(11) **EP 4 428 753 A1**
(43) Date of publication of application: **11.09.2024**
(21) Application number: 22906435.7
(22) Date of filing: 09.12.2022
(51) Int. Cl.: G06K 19/077

(54) **CARD**

(30) Priority: 15.12.2021 CN 202111537787; 31.03.2022 CN 202210334297
(71) Applicant: Huawei Technologies Co., Ltd., Shenzhen, Guangdong 518129 (CN)
(72) Inventor: FAN, Shunan, Shenzhen, Guangdong 518129 (CN); YANG, Jiangtao, Shenzhen, Guangdong 518129 (CN); ZHOU, Lei, Shenzhen, Guangdong 518129 (CN); ZHANG, Shihao, Shenzhen, Guangdong 518129 (CN)
(74) Representative: Gill Jennings & Every LLP
(86) International application number: PCT/CN2022/138027
(87) International publication number: WO 2023/109688

(57) **Abstract**

This application provides a card, including a card body and a card interface. The card body includes a memory card circuit and a SIM card circuit, the card interface is fastened to the card body, the memory card circuit and the SIM card circuit transmit signals through 10 gold fingers of the card interface, and the 10 gold fingers are exposed on a same side of the card body. The card is compatible with a nano-SIM card function and a memory card function, to implement a plurality of functions, increase a degree of integration, reduce a quantity of card holder assemblies of an electronic device, and help lighten and thin the electronic device.

## Description

This application claims priority to Chinese Patent Application No. 202111537787.1, filed with the China National Intellectual Property Administration on December 15, 2021 and entitled "TERMINAL, CARD CONNECTOR, CARD HOLDER, CARD HOLDER ASSEMBLY, AND MEMORY CARD", which is incorporated herein by reference in its entirety. This application further claims priority to Chinese Patent Application No. 202210334297.X, filed with the China National Intellectual Property Administration on March 31, 2022 and entitled "CARD", which is incorporated herein by reference in its entirety.

### TECHNICAL FIELD

This application relates to the field of communication technologies, and in particular, to a card.

### BACKGROUND

With development of electronic device products, a plurality of information cards need to be disposed in an electronic device, to meet functional requirements of the electronic device. A mobile phone is used as an example. Usually, a subscriber identification module (Subscriber Identification Module, SIM) card, a memory card, and the like need to be disposed in the mobile phone. Each type of information card needs to match a corresponding card holder assembly. Therefore, a plurality of card holder assemblies usually need to be disposed in the electronic device. Consequently, the card holder assembly needs to occupy a larger board area, and occupy space inside the electronic device. This seriously restricts development of the electronic device in terms of lightness and thinness.

### SUMMARY

This application provides a card. The card is compatible with a nano-SIM card function and a memory card function, to implement a plurality of functions, and increase a degree of integration. In addition, when an electronic device is provided with a card holder assembly matching the card, one card holder assembly can meet a card insertion requirement of the electronic device, to reduce a quantity of card holder assemblies, and help lighten and thin the electronic device.

According to a first aspect, this application provides a card. The card is an information card. The card includes a card body and a card interface, the card body includes a memory card circuit and a SIM card circuit, and the card may be a two-in-one card. The card interface is fastened to the card body, the memory card circuit and the SIM card circuit transmit signals through 10 gold fingers of the card interface, and the 10 gold fingers are exposed on a same side of the card body.

In this application, the card implements signal transmission of the SIM card circuit and signal transmission of the memory card circuit through the 10 gold fingers, so that the card can integrate a SIM card function and a memory card function, to implement a plurality of functions, and increase a degree of integration. When a card is inserted into an electronic device, a quantity of information cards that need to be inserted can be effectively reduced, and a quantity of card holder assemblies can be reduced, to help lighten and thin the electronic device, and improve user experience.

In some possible implementations, one of the 10 gold fingers is configured to transmit a reset signal of a SIM card and one signal of a memory card.

In this implementation, a reset operation of the SIM card circuit of the card is not a frequent operation, and a reset process can be completed quickly. Therefore, when the reset signal of the SIM card and one signal of the memory card share a same gold finger, the gold finger may be fully used for signal transmission in a time-division multiplexing manner, to improve working efficiency of the card.

In some possible implementations, the card further includes a switching circuit, the switching circuit is connected to a reset interface of the SIM card circuit and one interface of the memory card circuit, and the switching circuit is further connected to one of the 10 gold fingers. The switching circuit is configured to: detect a signal transmitted through the gold finger, and implement corresponding switching.

In some possible implementations, the memory card circuit supports an EMMC interface protocol; and one of the 10 gold fingers is configured to transmit a data signal of the SIM card, one gold finger is configured to transmit a clock signal of the SIM card, four gold fingers are configured to transmit data signals of the memory card, one gold finger is configured to transmit a clock signal of the memory card, one gold finger is configured to transmit the reset signal of the SIM card and a command and response signal of the memory card, one gold finger is configured to transmit a ground signal of the SIM card and a ground signal of the memory card, and one gold finger is configured to transmit a power signal of the SIM card and a power signal of the memory card.

In some possible implementations, the 10 gold fingers are arranged in an array, the 10 gold fingers are arranged in a first column of gold fingers and a second column of gold fingers in a length direction of the card, the first column of gold fingers includes a first gold finger, a third gold finger, a fifth gold finger, a seventh gold finger, and a ninth gold finger that are arranged in a width direction of the card, and the second column of gold fingers includes a second gold finger, a fourth gold finger, a sixth gold finger, an eighth gold finger, and a tenth gold finger that are arranged in the width direction of the card.

The first gold finger, the second gold finger, the ninth gold finger, and the tenth gold finger are configured to transmit the data signals of the memory card, the third gold finger is configured to transmit the data signal of the SIM card, the fourth gold finger is configured to transmit the clock signal of the SIM card, the fifth gold finger is configured to transmit the clock signal of the memory card, the sixth gold finger is configured to transmit the reset signal of the SIM card and the command and response signal of the memory card, the seventh gold finger is configured to transmit the ground signal of the SIM card and the ground signal of the memory card, and the eighth gold finger is configured to transmit the power signal of the SIM card and the power signal of the memory card.

In this implementation, the card implements signal transmission of the SIM card circuit and signal transmission of the memory card circuit through the first gold finger to the tenth gold finger, so that the card can integrate a SIM card function and a memory card function, to implement a plurality of functions, and increase a degree of integration. When a card is inserted into an electronic device, a quantity of information cards that need to be inserted can be effectively reduced, and a quantity of card holder assemblies can be reduced, to help lighten and thin the electronic device, and improve user experience.

In addition, the first gold finger, the second gold finger, the ninth gold finger, and the tenth gold finger are exclusive gold fingers of the memory card circuit, and are configured to transmit high-speed data of the memory card. A connection circuit switching design between a high-speed data interface and a low-speed data interface does not need to be performed for the first gold finger, the second gold finger, the ninth gold finger, and the tenth gold finger, to effectively reduce difficulty in designing an internal circuit of the card. An implementation is easy.

In addition, the third gold finger, the fourth gold finger, and the fifth gold finger are also exclusive gold fingers of the SIM card circuit or the memory card circuit. The connection circuit switching design does not need to be performed for the gold fingers, so that the difficulty in designing the internal circuit of the card is low. An implementation is easy.

In this implementation, the card implements transmission switching between two paths of signals through the switching circuit, so that both the reset signal of the SIM card and a command and response signal of the memory card can be transmitted through the sixth gold finger, a degree of integration of the card interface of the card is high, difficulty in switching a connection circuit between an interface of the SIM card circuit and an interface of the memory card circuit is low, an implementation is easy, and reliability of the card is high.

Because the reset signal of the SIM card is not a common signal, a default state of the switching circuit may be set to connect the sixth gold finger and the command and response interface of the memory card circuit, and the sixth gold finger and the reset interface of the SIM card circuit are in a disconnected state.

For example, the SIM card circuit and the memory card circuit each transmit a ground signal through the seventh gold finger, and transmit a power signal through the eighth gold finger. The card may be provided with no solution of switching a related connection circuit, or a switching solution is easy to implement. Therefore, a degree of integration of the card interface of the card can be increased, and the difficulty in designing the internal circuit is low, so that reliability of the card is high, and costs are low.

In some possible implementations, the memory card circuit supports an EMMC interface protocol; and one of the 10 gold fingers is configured to transmit a data signal of the SIM card, one gold finger is configured to transmit a clock signal of the SIM card, four gold fingers are configured to transmit data signals of the memory card, one gold finger is configured to transmit a command and response signal of the memory card, one gold finger is configured to transmit the reset signal of the SIM card and a clock signal of the memory card, one gold finger is configured to transmit a ground signal of the SIM card and a ground signal of the memory card, and one gold finger is configured to transmit a power signal of the SIM card and a power signal of the memory card.

In some possible implementations, the 10 gold fingers are arranged in an array, the 10 gold fingers are arranged in a first column of gold fingers and a second column of gold fingers in a length direction of the card, the first column of gold fingers includes a first gold finger, a third gold finger, a fifth gold finger, a seventh gold finger, and a ninth gold finger that are arranged in a width direction of the card, and the second column of gold fingers includes a second gold finger, a fourth gold finger, a sixth gold finger, an eighth gold finger, and a tenth gold finger that are arranged in the width direction of the card.

The first gold finger, the second gold finger, the ninth gold finger, and the tenth gold finger are configured to transmit the data signals of the memory card, the third gold finger is configured to transmit the data signal of the SIM card, the fourth gold finger is configured to transmit the clock signal of the SIM card, the fifth gold finger is configured to transmit the command and response signal of the memory card, the sixth gold finger is configured to transmit the reset signal of the SIM card and the clock signal of the memory card, the seventh gold finger is configured to transmit the ground signal of the SIM card and the ground signal of the memory card, and the eighth gold finger is configured to transmit the power signal of the SIM card and the power signal of the memory card.

In some possible implementations, the memory card circuit supports a UFS interface protocol or a PCIE interface protocol; and one of the 10 gold fingers is configured to transmit a data signal of the SIM card, one gold finger is configured to transmit a clock signal of the SIM card, four gold fingers are configured to transmit data signals of the memory card, one gold finger is configured to transmit a second power signal of the memory card, one gold finger is configured to transmit the reset signal of the SIM card and a reference clock signal of the memory card, one gold finger is configured to transmit a ground signal of the SIM card and a ground signal of the memory card, and one gold finger is configured to transmit a power signal of the SIM card and a first power signal of the memory card.

In some possible implementations, the 10 gold fingers are arranged in an array, the 10 gold fingers are arranged in a first column of gold fingers and a second column of gold fingers in a length direction of the card, the first column of gold fingers includes a first gold finger, a third gold finger, a fifth gold finger, a seventh gold finger, and a ninth gold finger that are arranged in a width direction of the card, and the second column of gold fingers includes a second gold finger, a fourth gold finger, a sixth gold finger, an eighth gold finger, and a tenth gold finger that are arranged in the width direction of the card.

The fifth gold finger, the ninth gold finger, and the tenth gold finger are configured to transmit the data signals of the memory card, the third gold finger is configured to transmit the data signal of the SIM card, the fourth gold finger is configured to transmit the clock signal of the SIM card, the sixth gold finger is configured to transmit the reset signal of the SIM card and the reference clock signal of the memory card, the seventh gold finger is configured to transmit the ground signal of the SIM card and the ground signal of the memory card, and the eighth gold finger is configured to transmit the power signal of the SIM card and the first power signal of the memory card; and one of the first gold finger and the second gold finger is configured to transmit the data signal of the memory card, and the other is configured to transmit the second power signal of the memory card.

In some possible implementations, one of the 10 gold fingers is configured to transmit a clock signal of the SIM card and a clock signal or a reference clock signal of the memory card.

In this implementation, the card may implement sharing for the reference clock signal of the memory card and a clock interface of the SIM card circuit through a same gold finger, so that a degree of integration of the card interface of the card is high, connection circuit switching does not need to be performed for the gold finger, implementation difficulty of the card is low, an implementation is easy to implement, and reliability of the card is high.

In some possible implementations, the card further includes a frequency divider, and the frequency divider is connected to a clock interface of the SIM card circuit, is further connected to a clock interface or a reference clock interface of the memory card circuit, and is further connected to one of the 10 gold fingers. In this case, the frequency divider is disposed, so that an initial clock signal transmitted through a gold finger may be the reference clock signal of the memory card, and the reference clock signal of the memory card is directly transmitted to the reference clock interface of the memory card circuit. The frequency divider adjusts a frequency of the reference clock signal of the memory card, to form the clock signal of the SIM card, and then transmits the clock signal of the SIM card to the clock interface of the SIM card circuit.

In some possible implementations, the memory card circuit supports an EMMC interface protocol; and one of the 10 gold fingers is configured to transmit a data signal of the SIM card, one gold finger is configured to transmit a reset signal of the SIM card, four gold fingers are configured to transmit data signals of the memory card, one gold finger is configured to transmit a command and response signal of the memory card, one gold finger is configured to transmit the clock signal of the SIM card and a clock signal of the memory card, one gold finger is configured to transmit a ground signal of the SIM card and a ground signal of the memory card, and one gold finger is configured to transmit a power signal of the SIM card and a power signal of the memory card.

In some possible implementations, the 10 gold fingers are arranged in an array, the 10 gold fingers are arranged in a first column of gold fingers and a second column of gold fingers in a length direction of the card, the first column of gold fingers includes a first gold finger, a third gold finger, a fifth gold finger, a seventh gold finger, and a ninth gold finger that are arranged in a width direction of the card, and the second column of gold fingers includes a second gold finger, a fourth gold finger, a sixth gold finger, an eighth gold finger, and a tenth gold finger that are arranged in the width direction of the card.

The first gold finger, the second gold finger, the ninth gold finger, and the tenth gold finger are configured to transmit the data signals of the memory card, the third gold finger is configured to transmit the data signal of the SIM card, the fourth gold finger is configured to transmit the clock signal of the SIM card and the clock signal of the memory card, the fifth gold finger is configured to transmit the command and response signal of the memory card, the sixth gold finger is configured to transmit the reset signal of the SIM card, the seventh gold finger is configured to transmit the ground signal of the SIM card and the ground signal of the memory card, and the eighth gold finger is configured to transmit the power signal of the SIM card and the power signal of the memory card.

In some possible implementations, the memory card circuit supports a UFS interface protocol or a PCIE interface protocol; and one of the 10 gold fingers is configured to transmit a data signal of the SIM card, one gold finger is configured to transmit the reset signal of the SIM card, four gold fingers are configured to transmit data signals of the memory card, one gold finger is configured to transmit a second power signal of the memory card, one gold finger is configured to transmit a clock signal of the SIM card and a reference clock signal of the memory card, one gold finger is configured to transmit a ground signal of the SIM card and a ground signal of the memory card, and one gold finger is configured to transmit a power signal of the SIM card and a first power signal of the memory card.

In some possible implementations, the 10 gold fingers are arranged in an array, the 10 gold fingers are arranged in a first column of gold fingers and a second column of gold fingers in a length direction of the card, the first column of gold fingers includes a first gold finger, a third gold finger, a fifth gold finger, a seventh gold finger, and a ninth gold finger that are arranged in a width direction of the card, and the second column of gold fingers includes a second gold finger, a fourth gold finger, a sixth gold finger, an eighth gold finger, and a tenth gold finger that are arranged in the width direction of the card.

The fifth gold finger, the ninth gold finger, and the tenth gold finger are configured to transmit the data signals of the memory card, the third gold finger is configured to transmit the data signal of the SIM card, the fourth gold finger is configured to transmit the clock signal of the SIM card and the reference clock signal of the memory card, the sixth gold finger is configured to transmit the reset signal of the SIM card, the seventh gold finger is configured to transmit the ground signal of the SIM card and the ground signal of the memory card, and the eighth gold finger is configured to transmit the power signal of the SIM card and the first power signal of the memory card; and one of the first gold finger and the second gold finger is configured to transmit the data signal of the memory card, and the other is configured to transmit the second power signal of the memory card.

In some possible implementations, the card further includes a voltage regulator, and one of the 10 gold fingers is connected to a power interface of the SIM card circuit, is further connected to a first power interface of the memory card circuit, and is further connected to a second power interface of the memory card circuit through the voltage regulator.

In this implementation, because the second power signal of the memory card may be obtained by regulating a voltage of the first power signal of the memory card, data transmission does not need to be performed through a separate gold finger, to reduce a quantity of gold fingers of the card interface of the card, and increase a degree of integration of the card interface. In addition, an internal circuit structure of the card is simple, and an implementation is easy.

In some possible implementations, the memory card circuit supports a UFS interface protocol or a PCIE interface protocol; and one of the 10 gold fingers is configured to transmit a data signal of the SIM card, one gold finger is configured to transmit a clock signal of the SIM card, one gold finger is configured to transmit the reset signal of the SIM card, four gold fingers are configured to transmit data signals of the memory card, one gold finger is configured to transmit a reference clock signal of the memory card, one gold finger is configured to transmit a ground signal of the SIM card and a ground signal of the memory card, and one gold finger is configured to transmit a power signal of the SIM card and a first power signal of the memory card.

In some possible implementations, the 10 gold fingers are arranged in an array, the 10 gold fingers are arranged in a first column of gold fingers and a second column of gold fingers in a length direction of the card, the first column of gold fingers includes a first gold finger, a third gold finger, a fifth gold finger, a seventh gold finger, and a ninth gold finger that are arranged in a width direction of the card, and the second column of gold fingers includes a second gold finger, a fourth gold finger, a sixth gold finger, an eighth gold finger, and a tenth gold finger that are arranged in the width direction of the card.

The first gold finger, the second gold finger, the ninth gold finger, and the tenth gold finger are configured to transmit the data signals of the memory card, the third gold finger is configured to transmit the data signal of the SIM card, the fourth gold finger is configured to transmit the clock signal of the SIM card, the seventh gold finger is configured to transmit the ground signal of the SIM card and the ground signal of the memory card, and the eighth gold finger is configured to transmit the power signal of the SIM card and the first power signal of the memory card; and one of the fifth gold finger and the sixth gold finger is configured to transmit the reference clock signal of the memory card, and the other is configured to transmit the reset signal of the SIM card.

In some possible implementations, the memory card circuit supports a PCIE interface protocol, and one of the 10 gold fingers is configured to transmit a reference clock signal of the memory card and a second power signal of the memory card.

In this implementation, because the reference clock signal of the memory card and the second power signal of the memory card are transmitted through a same gold finger, to reduce a quantity of gold fingers of the card interface of the card, and increase a degree of integration of the card interface. In addition, an internal circuit structure of the card is simple, and an implementation is easy.

In some possible implementations, the card further includes a separate circuit, a reference clock interface and a second power interface of the memory card circuit are connected to the separate circuit, and the separate circuit is further connected to one of the 10 gold fingers. The separate circuit is configured to: separate, from the reference clock signal of the memory card, a signal transmitted through the gold finger, and transmit the signal to the reference clock interface of the memory card circuit; and is further configured to: separate, from the second power signal of the memory card, the signal transmitted through the gold finger, and transmit the signal to the second power interface of the memory card circuit.

In some possible implementations, the 10 gold fingers are arranged in an array, the 10 gold fingers are arranged in a first column of gold fingers and a second column of gold fingers in a length direction of the card, the first column of gold fingers includes a first gold finger, a third gold finger, a fifth gold finger, a seventh gold finger, and a ninth gold finger that are arranged in a width direction of the card, and the second column of gold fingers includes a second gold finger, a fourth gold finger, a sixth gold finger, an eighth gold finger, and a tenth gold finger that are arranged in the width direction of the card.

The first gold finger, the second gold finger, the ninth gold finger, and the tenth gold finger are configured to transmit the data signals of the memory card, the third gold finger is configured to transmit the data signal of the SIM card, the fourth gold finger is configured to transmit the clock signal of the SIM card, the seventh gold finger is configured to transmit the ground signal of the SIM card and the ground signal of the memory card, and the eighth gold finger is configured to transmit the power signal of the SIM card and the first power signal of the memory card; and one of the fifth gold finger and the sixth gold finger is configured to transmit the reference clock signal of the memory card and the second power signal of the memory card, and the other is configured to transmit the reset signal of the SIM card.

In some possible implementations, a dimension of the card body of the card is the same as a dimension of a card body of a nano-SIM card; a location of the third gold finger corresponds to a location of a first gold finger of the nano-SIM card; a location of the fourth gold finger corresponds to a location of a second gold finger of the nano-SIM card; a location of the fifth gold finger corresponds to a location of a third gold finger of the nano-SIM card; a location of the sixth gold finger corresponds to a location of a fourth gold finger of the nano-SIM card; a location of the seventh gold finger corresponds to a location of a fifth gold finger of the nano-SIM card; and a location of the eighth gold finger corresponds to a location of a sixth gold finger of the nano-SIM card.

In this implementation, the dimension of the card body of the card is the same as the dimension of the card body of the nano-SIM card, and the locations of the third gold finger to the eighth gold finger of the card are in a one-to-one correspondence with the locations of the first gold finger to the sixth gold finger of the nano-SIM card, so that the memory card can be well inserted into a card holder assembly that is compatible with the nano-SIM card.

In some possible implementations, the card and the nano-SIM card are able to be installed in a same card holder assembly, and a card connector of the card holder assembly includes a first spring plate to a tenth spring plate that are arranged in an array.

When the card is installed in the card holder assembly, the third gold finger is electrically connected to a third spring plate of the card connector, the fourth gold finger is electrically connected to a fourth spring plate of the card connector, the fifth gold finger is electrically connected to a fifth spring plate of the card connector, the sixth gold finger is electrically connected to a sixth spring plate of the card connector, the seventh gold finger is electrically connected to a seventh spring plate of the card connector, and the eighth gold finger is electrically connected to an eighth spring plate of the card connector.

When the nano-SIM card is installed in the card holder assembly, the first gold finger of the nano-SIM card is electrically connected to the third spring plate of the card connector, the second gold finger of the nano-SIM card is electrically connected to the fourth spring plate of the card connector, the third gold finger of the nano-SIM card is electrically connected to the fifth spring plate of the card connector, the fourth gold finger of the nano-SIM card is electrically connected to the sixth spring plate of the card connector, the fifth gold finger of the nano-SIM card is electrically connected to the seventh spring plate of the card connector, and the sixth gold finger of the nano-SIM card is electrically connected to the eighth spring plate of the card connector.

In some possible implementations, the card body of the card includes a first edge, a second edge, a third edge, and a fourth edge, the first edge and the third edge are disposed opposite to each other and extend along the length direction of the card, the second edge and the fourth edge are disposed opposite to each other and extend along the width direction of the card, and a spacing between the second edge and the fourth edge is greater than a spacing between the first edge and the third edge; a corner of the card body of the card is a beveled edge, and the beveled edge is disposed between the first edge and the second edge; and the first column of gold fingers is located between the second edge and the second column of gold fingers, the first gold finger is located between the first edge and the third gold finger, and the second gold finger is located between the first edge and the fourth gold finger.

In some possible implementations, the 10 gold fingers are arranged in a first row of gold fingers to a fifth row of gold fingers in the width direction of the card; a center spacing between a second row of gold fingers and a third row of gold fingers is greater than a center spacing between the first row of gold fingers and the second row of gold fingers, and is greater than a center spacing between a fourth row of gold fingers and the fifth row of gold fingers; and a center spacing between the third row of gold fingers and the fourth row of gold fingers is greater than the center spacing between the first row of gold fingers and the second row of gold fingers, and is greater than the center spacing between the fourth row of gold fingers and the fifth row of gold fingers.

In this implementation, an arrangement manner and a center spacing of the 10 gold fingers of the card are set, to insert the card into the card holder assembly that is compatible with the nano-SIM card, reduce a quantity of card holder assemblies of the electronic device, and help lighten and thin the electronic device.

In some possible implementations, the center spacing between the second row of gold fingers and the third row of gold fingers falls within a range of 1.5 mm to 2.8 mm, the center spacing between the third row of gold fingers and the fourth row of gold fingers falls within the range of 1.5 mm to 2.8 mm, and the center spacing between the first row of gold fingers and the second row of gold fingers falls within a range of 1.0 mm to 1.7 mm, and the center spacing between the fourth row of gold fingers and the fifth row of gold fingers falls within the range of 1.0 mm to 1.7 mm.

In this implementation, when the card is inserted into the card holder assembly that is compatible with the nano-SIM card, a risk of a short circuit between the 10 gold fingers of the card is low, and an electrical connection relationship between the card and the card holder assembly is reliable.

### BRIEF DESCRIPTION OF DRAWINGS

FIG. 1 is a diagram of a structure of an electronic device according to an embodiment of this application;
FIG. 2 is a diagram of a structure of a card holder assembly shown in FIG. 1 in some use states;
FIG. 3 is a diagram of an exploded structure of a card holder shown in FIG. 2;
FIG. 4 is a diagram of a structure of a card tray shown in FIG. 2 from another perspective;
FIG. 5 is a diagram of a structure of a card connector according to an embodiment of this application;
FIG. 6 is a diagram 1 of a structure of the card connector shown in FIG. 5 from another perspective;
FIG. 7 is a diagram of a structure of a conductive body of the card connector shown in FIG. 6;
FIG. 8 is a diagram of an internal structure of a structure of a location A of the card connector shown in FIG. 6;
FIG. 9 is a diagram 2 of a structure of the card connector shown in FIG. 5 from another perspective;
FIG. 10 is a schematic block diagram of a nano-SIM card according to an embodiment of this application;
FIG. 11 is a diagram of a structure of the nano-SIM card shown in FIG. 10 in some embodiments;
FIG. 12 is a diagram of a structure when the nano-SIM card shown in FIG. 11 is connected to the card connector shown in FIG. 5;
FIG. 13 is a schematic block diagram of a first NM card according to an embodiment of this application;
FIG. 14 is a diagram of a structure of the first NM card shown in FIG. 13 in some embodiments;
FIG. 15 is a diagram of a structure when the first NM card shown in FIG. 14 is connected to the card connector shown in FIG. 5;
FIG. 16 is a schematic block diagram of a two-in-one card according to an embodiment of this application;
FIG. 17 is a diagram of a structure of the two-in-one card shown in FIG. 16 in some embodiments;
FIG. 18 is a diagram of a structure when the two-in-one card shown in FIG. 17 is connected to the card connector shown in FIG. 5;
FIG. 19 is a diagram of dimensions of the two-in-one card shown in FIG. 17 in some embodiments;
FIG. 20A is a diagram of dimensions of the two-in-one card shown in FIG. 16 in some other embodiments;
FIG. 20B is a diagram of another dimension of the two-in-one card shown in FIG. 20A;
FIG. 21 is a diagram of dimensions of the two-in-one card shown in FIG. 16 in some other embodiments;
FIG. 22 is a diagram of dimensions of the two-in-one card shown in FIG. 16 in some other embodiments;
FIG. 23 is a diagram of the two-in-one card shown in FIG. 17 in some embodiments;
FIG. 24A is a schematic of a connection circuit between the two-in-one card shown in FIG. 23 and an electronic device;
FIG. 24B is a schematic of a partial circuit structure of an electronic device in some embodiments according to an embodiment of this application;
FIG. 25 is a diagram of the two-in-one card shown in FIG. 17 in some other embodiments;
FIG. 26A is a schematic of a connection circuit between the two-in-one card shown in FIG. 25 and an electronic device;
FIG. 26B is a schematic of a partial circuit structure of an electronic device in some other embodiments according to an embodiment of this application;
FIG. 27 is a diagram of the two-in-one card shown in FIG. 17 in some other embodiments;
FIG. 28A is a schematic of a connection circuit between the two-in-one card shown in FIG. 27 and an electronic device;
FIG. 28B is a schematic of a partial circuit structure of an electronic device in some other embodiments according to an embodiment of this application;
FIG. 29 is a diagram of the two-in-one card shown in FIG. 17 in some other embodiments;
FIG. 30 is a schematic of a connection circuit between the two-in-one card shown in FIG. 29 and an electronic device;
FIG. 31 is a diagram of the two-in-one card shown in FIG. 17 in some other embodiments;
FIG. 32 is a schematic of a connection circuit between the two-in-one card shown in FIG. 31 and an electronic device;
FIG. 33 is a diagram of the two-in-one card shown in FIG. 17 in some other embodiments;
FIG. 34 is a schematic of a connection circuit between the two-in-one card shown in FIG. 33 and an electronic device;
FIG. 35 is a diagram of the two-in-one card shown in FIG. 17 in some other embodiments;
FIG. 36 is a schematic of a connection circuit between the two-in-one card shown in FIG. 35 and an electronic device;
FIG. 37 is a diagram of the two-in-one card shown in FIG. 17 in some other embodiments;
FIG. 38 is a schematic of a connection circuit between the two-in-one card shown in FIG. 37 and an electronic device;
FIG. 39 is a diagram of the two-in-one card shown in FIG. 17 in some other embodiments; and
FIG. 40 is a schematic of a connection circuit between the two-in-one card shown in FIG. 39 and an electronic device.

### DESCRIPTION OF EMBODIMENTS

The following describes the technical solutions in embodiments of this application with reference to the accompanying drawings. In descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In this specification, "at least partially" includes two cases: "partially" and "all". In this specification, "plurality of" means two or more, and "plurality of pieces of" means two or more pieces.

In the following, terms such as "first" and "second" are used only for description purposes, and cannot be understood as implying or implying relative importance or implicitly indicating a quantity of indicated technical features. Therefore, a feature limited by "first" or "second" may explicitly or implicitly include one or more features.

Orientation terms mentioned in embodiments of this application, for example, "up", "down", "front", "back", "left", "right", "inside", "outside", "side face", "top", and "bottom", are merely directions in the accompanying drawings. Therefore, the orientation terms are used to better and more clearly describe and understand embodiments of this application, instead of indicating or implying that a specified apparatus or element needs to have a specific orientation, and be constructed and operated in the specific orientation. Therefore, this cannot be understood as a limitation on embodiments of this application.

In the description of embodiments of this application, it should be noted that, unless otherwise specified and limited, terms "installation", "connecting", "connection", and "disposed on..." should be understood in a broad sense. For example, "connection" may be a detachable connection, or may be an undetachable connection, or may be a direct connection, or may be an indirect connection by using an intermediate medium.

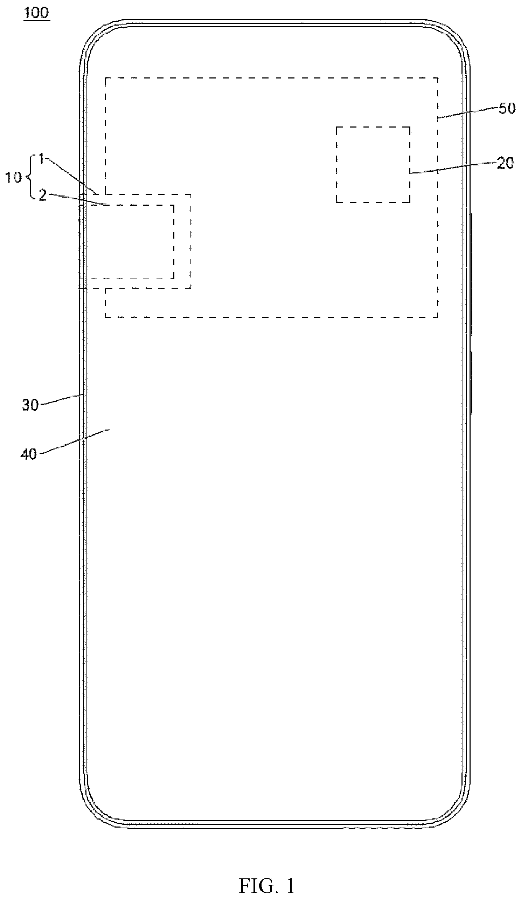

FIG. 1 is a diagram of a structure of an electronic device 100 according to an embodiment of this application. The electronic device 100 may be an electronic product such as a mobile phone, a tablet, or an intelligent wearable device. In this embodiment of this application, that the electronic device 100 is a mobile phone is used as an example for illustration.

In some embodiments, the electronic device 100 may include a card holder assembly 10, a processor 20, a housing 30, a display 40, and a printed circuit board 50. The display 40 may be installed in the housing 30, and the display 40 is configured to display an image, a video, or the like. The printed circuit board 50 is installed on an inner side of the housing 30, and the processor 20 may be fastened to the printed circuit board 50, and is electrically connected to the printed circuit board 50. The card holder assembly 10 includes a card holder 1 and a card tray 2. The card holder 1 may be installed on the inner side of the housing 30, and the card holder 1 may be further fastened to the printed circuit board 50, and is electrically connected to the printed circuit board 50. The processor 20 may be electrically connected to the card holder 1 through the printed circuit board 50. The card tray 2 is detachably inserted into the card holder 1. The card tray 2 is configured to install one or more information cards. The card tray 2 may carry the information card and is inserted into the card holder 1, so that the information card is inserted into the card holder assembly 10, and the information card communicates with the electronic device 100.

For example, the information card may be a nano-SIM (subscriber identification module, subscriber identification module) card, a nano memory card, or a nano two-in-one card. The nano-SIM card is also referred to as a 4FF card, for example, a SIM card with a card body whose dimension is that a length is 12.30 mm, a width is 8.80 mm, and a thickness is 0.67 mm in the specification ETSI TS 102 221 V11.0.0. A user may insert the nano-SIM card into the card holder assembly 10, the nano-SIM card communicates with the processor 20, and the electronic device 100 interacts with a network through the nano-SIM card, to implement functions such as a call function and a data communication function. The nano memory card may also be briefly referred to as an NM (nano memory, nano) card. The user may alternatively insert the NM card into the card holder assembly 10, and the NM card communicates with the processor 20, to implement a data storage function. For example, files such as music and video may be stored in the NM card. The nano two-in-one card may include a SIM card circuit and a memory card circuit. The SIM card circuit is configured to support the functions such as the call function and the data communication function, and the memory card circuit is configured to support the data storage function. The user may alternatively insert the nano two-in-one card into the card holder assembly 10, and the nano two-in-one card communicates with the processor 20, to implement functions such as the call function, the data communication function, and the data storage function.

In some embodiments, the electronic device 100 may further include one or more of an internal memory, a universal serial bus (universal serial bus, USB) port, a charging management module, a power management module, a battery, an antenna, a mobile communication module, a wireless communication module, an audio module, a speaker, a receiver, a microphone, a headset jack, a sensor module, a button, a motor, an indicator, a camera, and the like. In some other embodiments, the electronic device 100 may have more or fewer components than those in the foregoing solutions, may combine two or more components, or may have different component configurations. The various components may be implemented in hardware, software, or a combination of hardware and software including one or more signal processing and/or application-specific integrated circuits.

In some embodiments, the processor may include one or more processing units. For example, the processor may include one or more of an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and the like. This is not strictly limited in this embodiment of this application. Different processing units may be independent devices, or may be integrated into one or more processors. The processor may further include one or more interfaces, and the processor may communicate with another component of the electronic device through one or more interfaces.

In some embodiments, the processor 20 may include one or more processing units. For example, the processor 20 may include one or more of an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and the like. This is not strictly limited in this embodiment of this application. Different processing units may be independent devices, or may be integrated into one or more processors 20. The processor 20 may further include one or more interfaces, and the processor 20 may communicate with another component of the electronic device 100 through one or more interfaces.

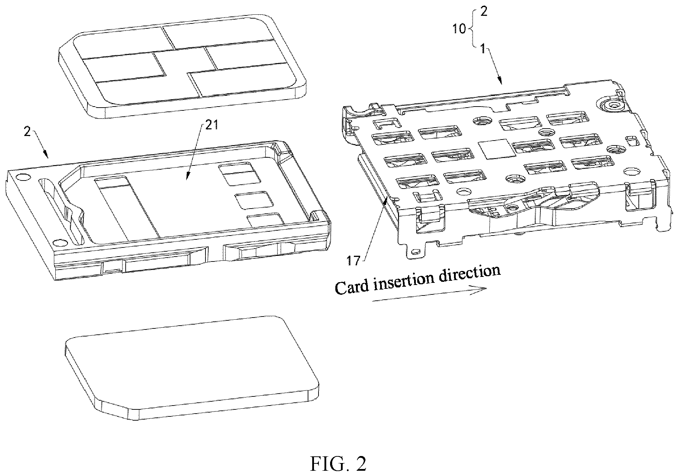

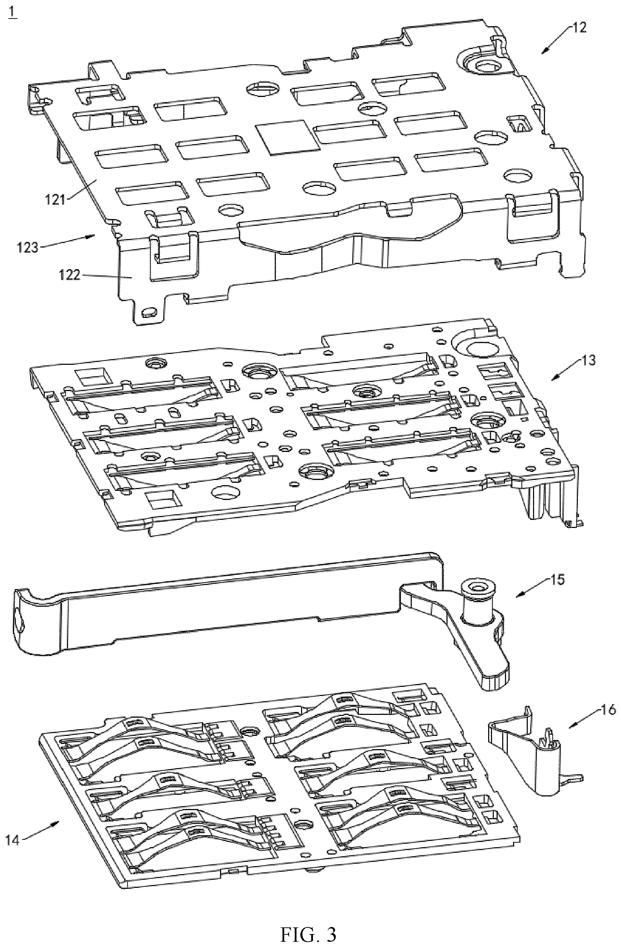

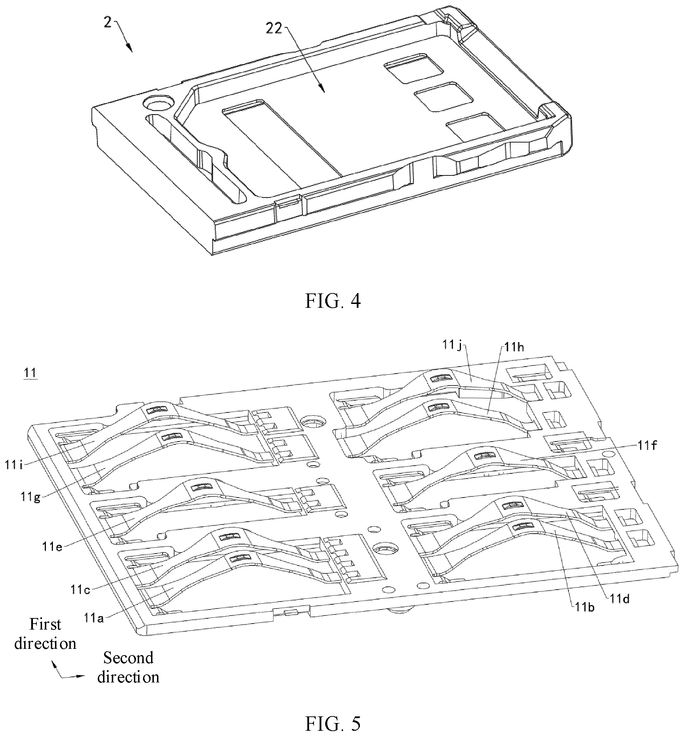

Refer to FIG. 2 to FIG. 4 together. FIG. 2 is a diagram of a structure of a card holder assembly 10 shown in FIG. 1 in some use states. FIG. 3 is a diagram of an exploded structure of a card holder 1 shown in FIG. 2. FIG. 4 is a diagram of a structure of a card tray 2 shown in FIG. 2 from another perspective.

In some embodiments, the card holder 1 may include a holder body 12, a first card connector 13, a second card connector 14, an ejection component 15, and an insertion detection spring plate 16. The holder body 12 is usually in a cover shape, and the holder body 12 includes a top plate 121 and a plurality of side plates 122 connected to the top plate 121. The top plate 121 and the plurality of side plates 122 jointly enclose inner space 123 of the holder body 12. The first card connector 13 is located in the inner space 123 of the holder body 12, and is fastened to the holder body 12. The first card connector 13 and the top plate 121 are disposed opposite to each other. A structure of the second card connector 14 may be the same as or different from a structure of the first card connector 13. The second card connector 14 is located in the inner space 123 of the holder body 12, the second card connector 14 is located on a side that is of the first card connector 13 and that is opposite to the top plate 121, the second card connector 14 and the first card connector 13 are disposed opposite to each other, and a gap is formed between the second card connector 14 and the first card connector 13. The first card connector 13, the second card connector 14, and the side plate 122 of the holder body 12 jointly enclose a card slot 17 of the card holder 1. One end of the card slot 17 is open and forms an opening, and the other end of the card slot 17 forms a bottom of the card slot 17.

When the card holder 1 is installed in an electronic device 100, end portions that are of the plurality of side plates 122 and that are away from the top plate 121 are fastened to a printed circuit board 50 of the electronic device 100. A plurality of legs of the first card connector 13 are fastened to and are electrically connected to the printed circuit board 50, so that the first card connector 13 can be electrically connected to a processor 20 of the electronic device 100. The second card connector 14 may be fastened to the printed circuit board 50, to be fastened to the holder body 12 through the printed circuit board 50. Alternatively, the second card connector 14 may be directly and fastened to the holder body 12. A plurality of legs of the second card connector 14 are fastened to and are electrically connected to the printed circuit board 50, so that the second card connector 14 can be electrically connected to the processor 20 of the electronic device 100.

The card tray 2 may have a first installation slot 21 and a second installation slot 22 that are disposed opposite to each other, and an opening of the first installation slot 21 and an opening of the second installation slot 22 are respectively located on surfaces of two sides of the card tray 2. The first installation slot 21 and the second installation slot 22 each are configured to install an information card. For example, in FIG. 2 and FIG. 4, two information cards may be respectively installed in the first installation slot 21 and the second installation slot 22. Slot dimensions of the first installation slot 21 and the second installation slot 22 may be the same or similar, and card bodies of the two information cards installed in the first installation slot 21 and the second installation slot 22 have a same dimension. In some other embodiments, slot dimensions of the first installation slot 21 and the second installation slot 22 may alternatively be different, and card bodies of the two information cards installed in the first installation slot 21 and the second installation slot 22 have different dimensions.

The slot dimensions of the first installation slot 21 and the second installation slot 22 match the dimensions of card bodies of the corresponding information cards. For example, the slot dimensions of the first installation slot 21 and the second installation slot 22 may be slightly larger than the dimensions of the card bodies of the corresponding information cards, but a dimension difference is not large, so that the information card can be smoothly installed in the first installation slot 21 and the second installation slot 22, and installation locations are stable.

The card tray 2 may separately inserted into the card slot 17 through the opening of the card slot 17, or carry an information card and is inserted into the card slot 17 through the opening of the card slot 17. A direction (that is, a card insertion direction) in which the card tray 2 and/or the information card are/is inserted into the card slot 17 is a direction from the opening of the card slot 17 to the bottom of the card slot 17. A dimension of the card slot 17 matches a dimension of the card tray 2. For example, the dimension of the card slot 17 may be slightly greater than the dimension of the card tray 2, but a difference between the dimension of the card slot 17 and the dimension of the card tray 2 is not large. There is a specific matching gap between the card tray 2 and a slot wall of the card slot 17, so that the card tray 2 can be smoothly inserted into the card slot 17, and can be stably installed in the card slot 17. When the card tray 2 carries the information card and is inserted into the card slot 17, the information card installed in the card tray 2 is electrically connected to the first card connector 13 or the second card connector 14, to be electrically connected to the electronic device 100.

The ejection component 15 may be installed in the holder body 12 and/or the first card connector 13. When the card tray 2 is inserted into the card slot 17, a user may control the ejection component 15, so that the ejection component 15 ejects a part of the card tray 2 out of the card slot 17, to help the user remove the card tray 2. For example, the insertion detection spring plate 16 may be installed in the first card connector 13, and is electrically connected to the printed circuit board 50. The insertion detection spring plate 16 may be at least partially located at the bottom of the card slot 17. The insertion detection spring plate 16 may be configured to detect whether the card tray 2 is inserted into the card slot 17.

In some other embodiments, the card holder 1 may alternatively be provided with one card connector, the card holder assembly 10 is configured to install an information card, and a structure of the card tray 2 is adaptively adjusted. In some other embodiments, the card holder 1 may alternatively be provided with three or more card connectors, so that the card holder assembly 10 can be configured to install at least three information cards. The structure of the card tray 2 is adaptively adjusted. A quantity of card connectors of the card holder 1, a location, a specific structure of the card tray 2, and the like are not strictly limited in this embodiment of this application.

In some other embodiments, the card holder 1 may alternatively be provided with an ejection component 15 and/or an insertion detection spring plate 16 that have/has a structure different from the structure shown in the figure. In some other embodiments, the card holder assembly 10 may include more or fewer components than those in the foregoing embodiments. This is not strictly limited in this embodiment of this application.

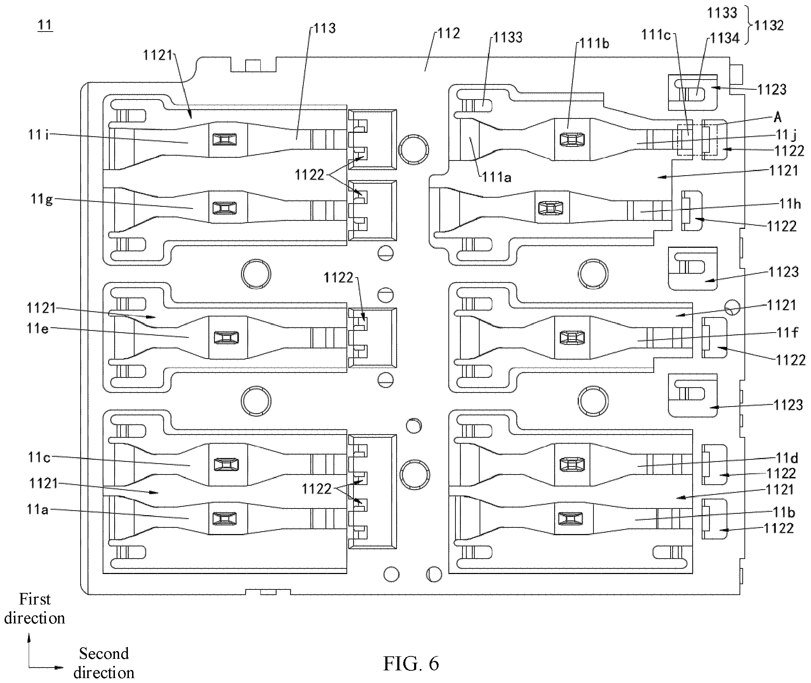

Refer to FIG. 5 and FIG. 6 together. FIG. 5 is a diagram of a structure of a card connector 11 according to an embodiment of this application. FIG. 6 is a diagram 1 of a structure of the card connector 11 shown in FIG. 5 from another perspective. For example, the card connector 11 shown in FIG. 5 may be used in the card holder 1 shown in FIG. 3, and is used as the first card connector 13 and/or the second card connector 14.

This embodiment of this application provides a card connector 11. The card connector 11 may be used in a card holder 1 of an electronic device 100, and the card connector 11 is configured to be connected to an information card. The card connector 11 includes a plurality of spring plates. When the card connector 11 is connected to the information card, the spring plate abuts against the information card.

In some embodiments, the card connector 11 includes 10 spring plates arranged in an array, and the 10 spring plates are separated from each other. The 10 spring plates may be roughly arranged in an array structure of 2 x 5. For example, the 10 spring plates are arranged in a first row of spring plates to a fifth row of spring plates in a first direction, and are arranged in a first column of spring plates and a second column of spring plates in a second direction. The first column of spring plates includes a first spring plate 11a, a third spring plate 11c, a fifth spring plate 11e, a seventh spring plate 11g, and a ninth spring plate 11i that are arranged in the first direction, and the second column of spring plates includes a second spring plate 11b, a fourth spring plate 11d, a sixth spring plate 11f, an eighth spring plate 11h, and a tenth spring plate 11j that are arranged in the first direction. The first spring plate 11a and the second spring plate 11b are located in the first row of spring plates, the third spring plate 11c and the fourth spring plate 11d are located in a second row of spring plates, the fifth spring plate 11e and the sixth spring plate 11f are located in a third row of spring plates, the seventh spring plate 11g and the eighth spring plate 11h are located in a fourth row of spring plates, and the ninth spring plate 11i and the tenth spring plate 11j are located in the fifth row of spring plates.

When the plurality of spring plates are arranged in a column in the first direction, points of center of the plurality of spring plates in a same column (that is, points of center of parts that are of the spring plates and that are used to abut against the information card) may be aligned in the first direction, or may not be aligned and slightly staggered. This is not strictly limited in this embodiment of this application. When the plurality of spring plates are arranged in a row in the second direction, points of center of two spring plates in a same row (that is, points of center of parts that are of the spring plates and that are used to abut against the information card) may be aligned in the second direction, or may not be aligned and slightly staggered. This is not strictly limited in this embodiment of this application.

Refer to FIG. 2, FIG. 3, FIG. 5, and FIG. 6 together. When the card connector 11 is used in a card holder assembly 10, a card insertion direction in which the information card is inserted into a card slot 17 of the card holder assembly 10 is parallel to the second direction. In other words, an insertion direction in which the information card is connected to the card connector 11 is parallel to the second direction. In a process of inserting the information card, the information card contacts a structure that is of the card connector 11 and that is arranged on a front side, and then contacts a structure that is of the card connector 11 and that is arranged on a back side. When the card connector 11 is installed in the card holder 1, the structure that is of the card connector 11 and that is arranged on the front side is close to an opening of the card slot 17, and the structure that is of the card connector 11 and that is arranged on the back side is away from the opening of the card slot 17. For example, the second column of spring plates of the card connector 11 may be located on a back side of the first column of spring plates, and the second column of spring plates is located away from the opening of the card slot 17 of the card holder assembly 10 relative to the first column of spring plates. In some other embodiments, the second column of spring plates of the card connector 11 is located close to the opening of the card slot 17 of the card holder assembly 10 relative to the first column of spring plates. This solution is not described in this embodiment of this application.

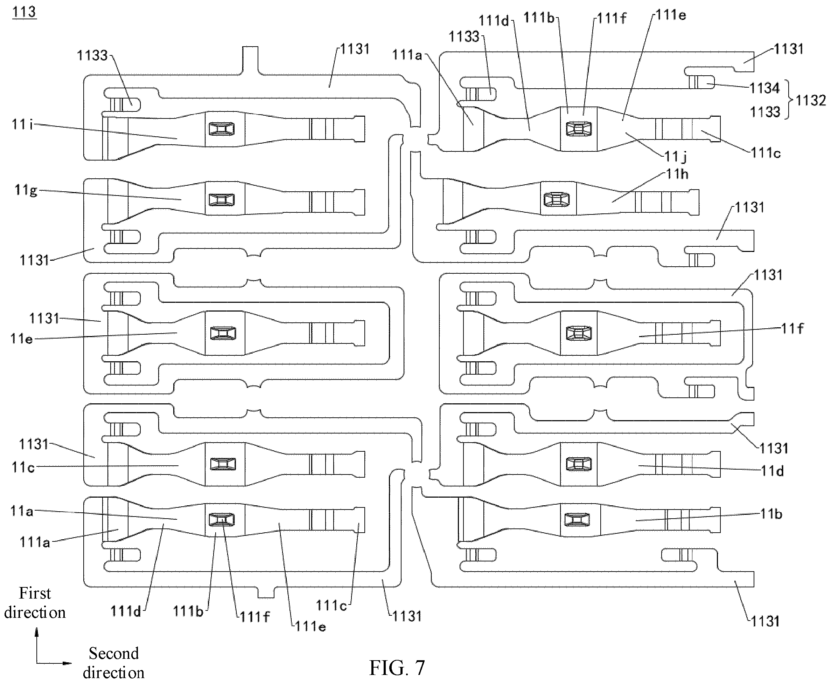

Refer to FIG. 6 and FIG. 7 together. FIG. 7 is a diagram of a structure of a conductive body 113 of the card connector 11 shown in FIG. 6.

In some embodiments, the card connector 11 includes an insulation body 112 and the conductive body 113. The insulation body 112 may be approximately in a plate shape, and the insulation body 112 is further provided with a plurality of hollow regions separated from each other. For example, the insulation body 112 may include six first hollow regions 1121, a plurality of second hollow regions 1122, and a plurality of third hollow regions 1123. The six first hollow regions 1121 may be arranged in two columns and three rows, and include a first column of first hollow regions 1121 and a second column of first hollow regions 1121 that are located on a back side of the first column of first hollow regions 1121. The second hollow regions 1122 may be arranged in two columns, and the two columns of second hollow regions 1122 are respectively located on back sides of the two columns of first hollow regions 1121. The third hollow regions 1123 may be arranged in one row, and are located on a back side of the second column of first hollow regions 1121.

For example, the conductive body 113 is built into the insulation body 112. The conductive body 113 may be formed by stamping an integral metal plate member. The conductive body 113 includes 10 spring plates and 10 fastening members 1131, the 10 spring plates may include the first spring plate 11a to the tenth spring plate 11j, the 10 fastening members 1131 are connected to the 10 spring plates in a one-to-one correspondence, and the fastening member 1131 and the spring plate are conductive materials. The conductive body 113 includes 10 conductive blocks, a fastening member 1131 and a spring plate that correspond to each other are located in a same conductive block, and the 10 conductive blocks are separated from each other. The 10 fastening members 1131 are built into the insulation body 112, to be fastened to the insulation body 112, and the 10 spring plates are respectively fastened to the insulation body 112 through the 10 fastening members 1131.

For example, each spring plate (for brevity of the accompanying drawings, one spring plate (for example, 11j) is marked) includes a fastening end 111a, an abutment end 111b, and a movable end 111c. The fastening end 111a, the abutment end 111b, and the movable end 111c are sequentially arranged in an extension direction of the spring plate, and the extension direction of the spring plate is perpendicular to the first direction, in other words, parallel to the second direction. The fastening end 111a is connected to the fastening member 1131, and the fastening end 111a is fastened to the insulation body 112 through the fastening member 1131. The abutment end 111b protrudes relative to a surface of a side of the insulation body 112, to elastically abut against an information card when the card connector 11 is connected to the information card. The movable end 111c is movably installed on the insulation body 112, and the movable end 111c can move in the second direction relative to the insulation body 112.

In this embodiment, when the card connector 11 is connected to the information card, the abutment end 111b abuts against the information card, the abutment end 111b moves toward the insulation body 112, the movable end 111c is displaced relative to the insulation body 112, the spring plate is smoothly deformed, and an elastic force of the spring plate abutting against the information card is moderate, so that the information card can be smoothly connected to the card connector 11, a risk of damage to the information card due to an excessive elastic force of the spring plate can be reduced, and reliability is improved.

The spring plate further includes a first connecting segment 111d and a second connecting segment 111e, the first connecting segment 111d is connected to the fastening end 111a and the abutment end 111b, the second connecting segment 111e is connected to the abutment end 111b and the movable end 111c, and the abutment end 111b protrudes relative to the first connecting segment 111d and the second connecting segment 111e. In other words, in a thickness direction (perpendicular to the first direction and the second direction) of the card connector 11, the abutment end 111b, the first connecting segment 111d and the second connecting segment 111e, and the fastening end 111a and the movable end 111c are located from top to bottom. When the spring plate is connected to the information card, the abutment end 111b abuts against the spring plate, the spring plate is electrically connected to the information card, and the first connecting segment 111d, the fastening end 111a, the second connecting segment 111e, and the movable end 111c are not in contact with the information card, and have a gap with the information card.

The abutment end 111b may include an abutment contact 111f that protrudes, and the abutment contact 111f has a specific contact area. When the card connector 11 is connected to the information card, the abutment contact 111f abuts against a gold finger of the information card, so that the card connector 11 is electrically connected to the information card.

For example, the third spring plate 11c to the eighth spring plate 11h may be respectively located in the six first hollow regions 1121, the first spring plate 11a and the third spring plate 11c may be located in a same first hollow region 1121, the second spring plate 11b and the fourth spring plate 11d may be located in a same first hollow region 1121, the seventh spring plate 11g and the ninth spring plate 11i may be located in a same first hollow region 1121, and the eighth spring plate 11h and the tenth spring plate 11j may be located in a same first hollow region 1121.

Each fastening member 1131 encloses or semi-encloses a corresponding spring plate. A fastening member 1131 corresponding to a spring plate separately located in a first hollow region 1121 completely encloses the spring plate. For example, the fifth spring plate 11e is separately located in a first hollow region 1121, and a fastening member 1131 connected to the fifth spring plate 11e encloses the fifth spring plate 11e. The sixth spring plate 11f is separately located in a first hollow region 1121, and a fastening member 1131 connected to the sixth spring plate 11f encloses the sixth spring plate 11f.

Two fastening members 1131 corresponding to two spring plates that share a same first hollow region 1121 tend to converge, jointly include the two spring plates, and respectively semi-enclose corresponding spring plates. For example, the first spring plate 11a and the third spring plate 11c are located in a same first hollow region 1121. A fastening member 1131 connected to the first spring plate 11a and a fastening member 1131 connected to the third spring plate 11c jointly enclose the first spring plate 11a and the third spring plate 11c. The fastening member 1131 connected to the first spring plate 11a semi-encloses the first spring plate 11a, and the fastening member 1131 connected to the third spring plate 11c semi-encloses the third spring plate 11c. The seventh spring plate 11g and the ninth spring plate 11i are located in a same first hollow region 1121. A fastening member 1131 connected to the seventh spring plate 11g and a fastening member 1131 connected to the ninth spring plate 11i jointly enclose the seventh spring plate 11g and the ninth spring plate 11i. The fastening member 1131 connected to the seventh spring plate 11g semi-encloses the seventh spring plate 11g, and the fastening member 1131 connected to the ninth spring plate 11i semi-encloses the ninth spring plate 11i. For a relationship between a combination of the second spring plate 11b and the fourth spring plate 11d and fastening members 1131 corresponding to the second spring plate 11b and the fourth spring plate 11d and a relationship between a combination of the eighth spring plate 11h and the tenth spring plate 11j and fastening members 1131 corresponding to the eighth spring plate 11h and the tenth spring plate 11j, refer to the foregoing descriptions. Details are not described herein again.

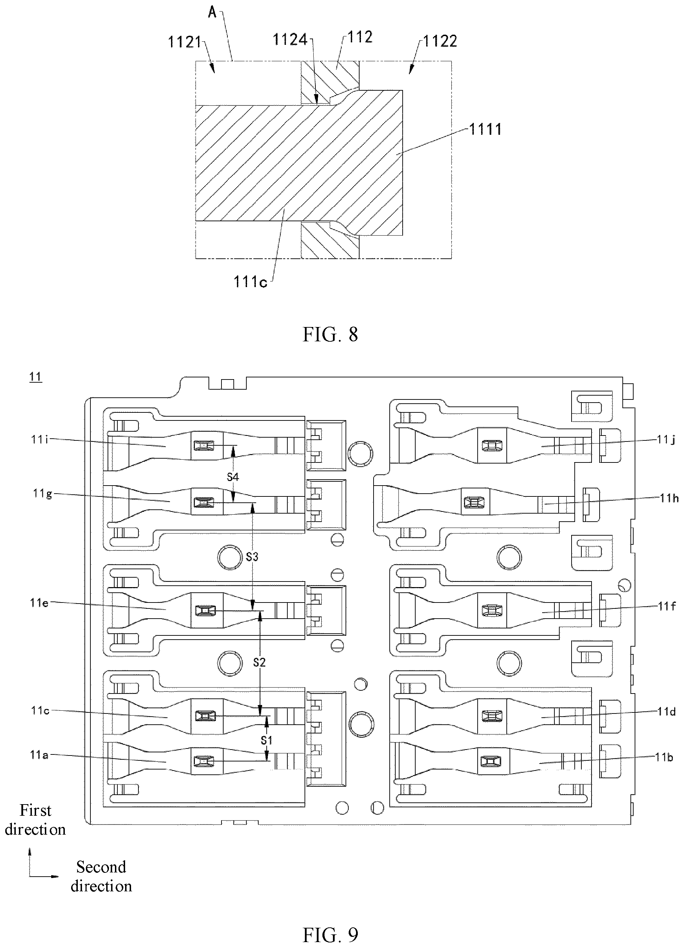

Refer to FIG. 6 and FIG. 8 together. FIG. 8 is a diagram of an internal structure of a structure of a location A of the card connector 11 shown in FIG. 6. FIG. 8 shows a connection structure between a movable end 111c of a spring plate and an insulation body 112. In FIG. 6, the tenth spring plate 11j is used as an example for marking.

In some embodiments, the insulation body 112 further includes a communicating hole 1124, and the communicating hole 1124 communicates a first hollow region 1121 and a second hollow region 1122 that are adjacent to the communicating hole 1124. The movable end 111c of the spring plate is inserted into the communicating hole 1124, and an end of the movable end 111c includes a stop block 1111. The stop block 1111 and the insulation body 112 form an anti-detachment structure through matching. In this embodiment, the anti-detachment structure can effectively prevent the movable end 111c of the spring plate from being detached from the insulation body 112, so that reliability of connecting the spring plate and the insulation body 112 is improved, and reliability of the card connector 11 is high.

For example, a fastening end 111a and an abutment end 111b of the spring plate are located in the first hollow region 1121, the movable end 111c of the spring plate is inserted into the communicating hole 1124, and extends to the second hollow region 1122 through the communicating hole 1124, and the stop block 1111 is at least partially located in the second hollow region 1122. A width of the communicating hole 1124 in a card location direction is less than a width of the stop block 1111 in the card location direction, and the card location direction may be any direction. Provided that a dimension of the communicating hole 1124 in a direction is less than a dimension of the stop block 1111 in the same direction, the stop block 1111 and the insulation body 112 may form the anti-detachment structure through matching, to prevent the movable end 111c of the spring plate from being detached from the insulation body 112 when the stop block 1111 passes through the communicating hole 1124. For example, in a direction perpendicular to an extension direction of the spring plate, namely, in the first direction, a width of the stop block 1111 is greater than a width of the communicating hole 1124. It may be understood that a shape and a dimension of the communicating hole 1124 and a shape and a dimension of the stop block 1111 are not strictly limited in this embodiment of this application.

Refer to FIG. 6 and FIG. 7 again. In some embodiments, each conductive block of the conductive body 113 further includes a leg 1132 (for brevity of the accompanying drawings, some legs 1132 are marked), the leg 1132 is fastened to the fastening member 1131, and the leg 1132 is configured to be soldered to a printed circuit board 50 (refer to FIG. 1), so that the card connector 11 is fastened to the printed circuit board 50 and the spring plate is electrically connected to the printed circuit board 50. There is at least one leg 1132 in each conductive block.

For example, at least one leg 1132 of each conductive block includes a first leg 1133, and the first leg 1133 is disposed close to the fastening end 111a of the spring plate. In other words, the first leg 1133 is connected to an end portion that is of the fastening member 1131 and that is close to the fastening end 111a of the spring plate. In a card insertion process of the information card, a force of friction is generated between the information card and the abutment end 111b of the spring plate. The force of friction enables the spring plate to tend to move in the card insertion direction (namely, the second direction), and the fastening end 111a of the spring plate is subject to a pulling force. The conductive block is provided with the first leg 1133 close to the fastening end 111a of the spring plate, and the first leg 1133 is soldered to the printed circuit board 50, so that a force exerted on the spring plate is transferred from the first leg 1133 to the printed circuit board 50. The fastening member 1131 of the conductive block is not prone to be deformed, and a connection relationship between the fastening member 1131 and the insulation body 112 is stable, to help improve reliability of the card connector 11 and the card holder assembly 10. It may be understood that, in a card removal process of the information card, the first leg 1133 can also transfer a stress.

At least one leg 1132 of some conductive blocks may further include a second leg 1134, and the second leg 1134 is disposed close to the movable end 111c of the spring plate. In other words, the second leg 1134 is connected to an end portion that is of the fastening member 1131 and that is close to the movable end 111c of the spring plate. In the card removal process of the information card, a force of friction is generated between the information card and the abutment end 111b of the spring plate. The force of friction enables the spring plate to tend to move in the card removal direction (namely, a reverse direction of the second direction). The movable end 111c of the spring plate generates a pulling force on the insulation body 112 by using the anti-detachment structure. The conductive block is provided with the second leg 1134 close to the movable end 111c of the spring plate, and the second leg 1134 is soldered to the printed circuit board 50, so that a force exerted on the insulation body 112 is transferred from the second leg 1134 to the printed circuit board 50. The fastening member 1131 of the conductive block is not prone to be deformed, and a connection relationship between the fastening member 1131 and the insulation body 112 is stable, to help improve reliability of the card connector 11 and the card holder assembly 10. It may be understood that, in the card removal process of the information card, the first leg 1133 can also transfer a stress. In the card insertion process of the information card, both the first leg 1133 and the second leg 1134 can transfer a stress.

In some other embodiments, the leg 1132 of the conductive block may also be connected to another location of the fastening member 1131, for example, a middle part of the fastening member 1131. This is not strictly limited in this embodiment of this application.

For example, some of a plurality of leg 1132 of the conductive body 113 may be located in the first hollow region 1121, and some legs 1132 may be located in a third hollow region 1123. For an arrangement location, refer to FIG. 6. In some other embodiments, the plurality of legs 1132 of the conductive body 113 may also have another arrangement manner. For example, if the plurality of legs 1132 of the conductive body 113 are all located in the first hollow region 1121, the insulation body 112 may not be provided with the third hollow region 1123. This is not strictly limited in this embodiment of this application.

FIG. 9 is a diagram 2 of a structure of the card connector shown 11 in FIG. 5 from another perspective.

In some embodiments, a center spacing S2 between a second row of spring plates (11c and 11d) and a third row of spring plates (11e and 11f) is greater than a center spacing S1 between a first row of spring plates (11a and 11b) and the second row of spring plates (11c and 11d), and is greater than a center spacing S4 between a fourth row of spring plates (11g and 11h) and a fifth row of spring plates (11i and 11j). A center spacing S3 between the third row of spring plates (11e and 11f) and the fourth row of spring plates (11g and 11h) is greater than the center spacing S1 between the first row of spring plates (11a and 11b) and the second row of spring plates (11c and 11d), and is greater than the center spacing S4 between the fourth row of spring plates (11g and 11h) and the fifth row of spring plates (11i and 11j). In other words, the center spacing S2 between the second row of spring plates (11c and 11d) and the third row of spring plates (11e and 11f) and the center spacing S3 between the third row of spring plates (11e and 11f) and the fourth row of spring plates (11g and 11h) are large, and the center spacing S1 between the first row of spring plates (11a and 11b) and the second row of spring plates (11c and 11d) and the center spacing S4 between the fourth row of spring plates (11g and 11h) and the fifth row of spring plates (11i and 11j) are small.

When two spring plates in a same row are aligned, a center spacing between two rows of spring plates is a center spacing between two spring plates located in a same column. The center spacing between the two spring plates is a spacing, in a first direction, between points of center of parts (for example, an abutment contact 111f) that are of the two spring plates and that are used to abut against the information card. When two spring plates in a same row are slightly staggered in a second direction, a center spacing between two rows of spring plates is an average value of a center spacing between two spring plates in a first column of spring plates and a center spacing between two spring plates in a second column of spring plates.

As shown in FIG. 9, a center spacing between the third spring plate 11c and the fifth spring plate 11e is greater than a center spacing between the first spring plate 11a and the third spring plate 11c and a center spacing between the seventh spring plate 11g and the ninth spring plate 11i; a center spacing between the fifth spring plate 11e and the seventh spring plate 11g is greater than the center spacing between the first spring plate 11a and the third spring plate 11c and the center spacing between the seventh spring plate 11g and the ninth spring plate 11i; a center spacing between the fourth spring plate 11d and the sixth spring plate 11f is greater than a center spacing between the second spring plate 11b and the fourth spring plate 11d and a center spacing between the eighth spring plate 11h and the tenth spring plate 11j; and a center spacing between the sixth spring plate 11f and the eighth spring plate 11h is greater than a center spacing between the second spring plate 11b and the fourth spring plate 11d and a center spacing between the eighth spring plate 11h and the tenth spring plate 11j.

For example, the center spacing S2 between the second row of spring plates (11c and 11d) and the third row of spring plates (11e and 11f) may fall within a range of 1.0 mm to 3.0 mm, for example, may fall within a range of 1.5 mm to 2.8 mm, for example, may be 2.48 mm, 2.54 mm, 2.59 mm, or 2.63 mm; and/or the center spacing S3 between the third row of spring plates (11e and 11f) and the fourth row of spring plates (11g and 11h) may fall within a range of 1.0 mm to 3.0 mm, for example, may fall within the range of 1.5 mm to 2.8 mm, for example, may be 2.48 mm, 2.54 mm, 2.59 mm, or 2.63 mm; and/or the center spacing S1 between the first row of spring plates (11a and 11b) and the second row of spring plates (11c and 11d) may fall within a range of 1.0 mm to 1.7 mm, for example, may be 1.03 mm, 1.07 mm, or 1.12 mm; and/or the center spacing S4 between the fourth row of spring plates (11g and 11h) and the fifth row of spring plates (11i and 11j) may fall within the range of 1.0 mm to 1.7 mm, for example, may be 1.32 mm, 1.37 mm, or 1.41 mm.

The center spacing S2 between the second row of spring plates (11c and 11d) and the third row of spring plates (11e and 11f) and the center spacing S3 between the third row of spring plates (11e and 11f) and the fourth row of spring plates (11g and 11h) may be equal or may be unequal. This is not strictly limited in this embodiment of this application. A center spacing between two corresponding groups of spring plates in two adjacent rows of spring plates may be equal or may be unequal. This is not strictly limited in this embodiment of this application. For example, in the first row of spring plates (11a and 11b) and the second row of spring plates (11c and 11d), the center spacing between the first spring plate 11a and the third spring plate 11c and the center spacing between the second spring plate 11b and the fourth spring plate 11d may be equal or may be unequal.

In this embodiment of this application, an arrangement manner and a center spacing of a plurality of spring plates are set, so that the plurality of spring plates can form a plurality of combinations. A quantity and locations of spring plates in the plurality of combinations can match a quantity and locations of gold fingers of a plurality of types of information cards, so that the card connector 11 can communicate with different types of information cards, to implement multi-card compatibility and good expandability. Therefore, when the card connector 11 is used in a card holder assembly 10 of an electronic device 100, the electronic device 100 can match a plurality of types of information cards by using a same card holder assembly 10, to reduce a quantity of card holder assemblies 10, reduce occupation of internal space of the electronic device 100, and help lighten and thin the electronic device 100.

In some embodiments, the card connector 11 may communicate with a nano-SIM card having six gold fingers (which may also be referred to as terminals, ports, metal contacts), or may communicate with a two-in-one card having at least 10 gold fingers, to be compatible with the nano-SIM card and the two-in-one card. A dimension of a card body of the two-in-one card is the same as a dimension of a card body of the nano-SIM card. In this application, that dimensions of card bodies of two information cards are the same may mean that the dimensions of the card bodies of the two information cards are consistent, or may be that the dimensions of the card bodies of the two information cards are close, and the two information cards can be both stably placed in a same installation slot of a card tray 2 of the card holder assembly 10.

In some other embodiments, the card connector 11 may communicate with a nano-SIM card having six gold fingers, or may communicate with a two-in-one card having at least 10 gold fingers, or may communicate with a first NM card having eight gold fingers, to be compatible with the nano-SIM card, the two-in-one card, and the first NM card.

In some other embodiments, the card connector 11 may communicate with a nano-SIM card having six gold fingers, or may communicate with a two-in-one card having at least 10 gold fingers, or may communicate with a second NM card having 10 gold fingers, eight gold fingers, or another quantity of gold fingers, to be compatible with the nano-SIM card, the two-in-one card, and the second NM card. A dimension of a card body of the second NM card is the same as a dimension of a card body of the nano-SIM card. The first NM card is a first-generation NM card, the second NM card is a second-generation NM card, and a transmission rate of the second NM card is greater than a transmission rate of the first NM card. A dimension of a card body of the first NM card may be the same as a dimension of a card body of the nano-SIM card.

In some other embodiments, the card connector 11 may be further compatible with a first NM card and/or a second NM card when being compatible with a nano-SIM card and a two-in-one card. This is not strictly limited in this embodiment of this application.

This application provides a nano-SIM card. The nano-SIM card can match the card connector 11. The following uses an example to describe a structure of the nano-SIM card and a connection structure of the nano-SIM card and the card connector 11.

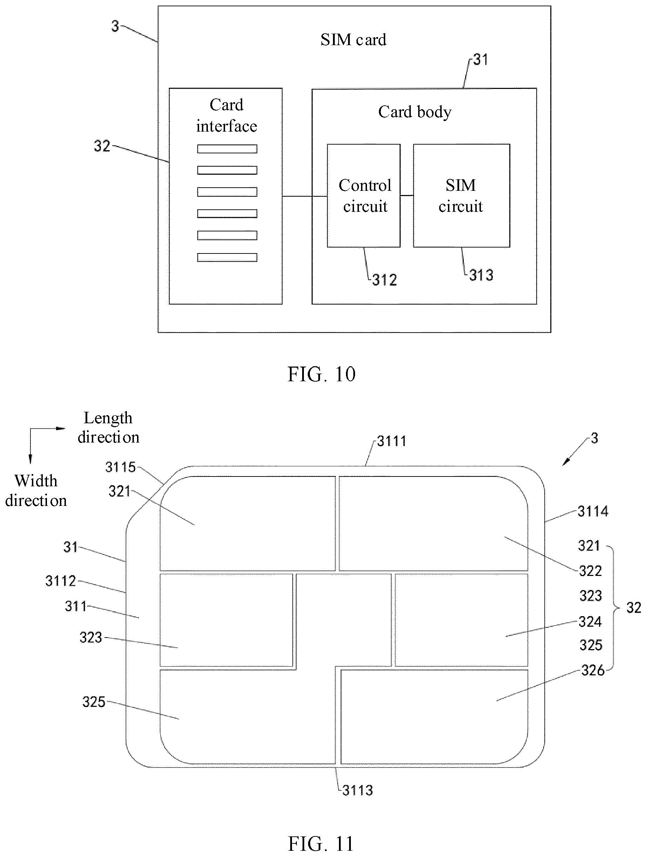

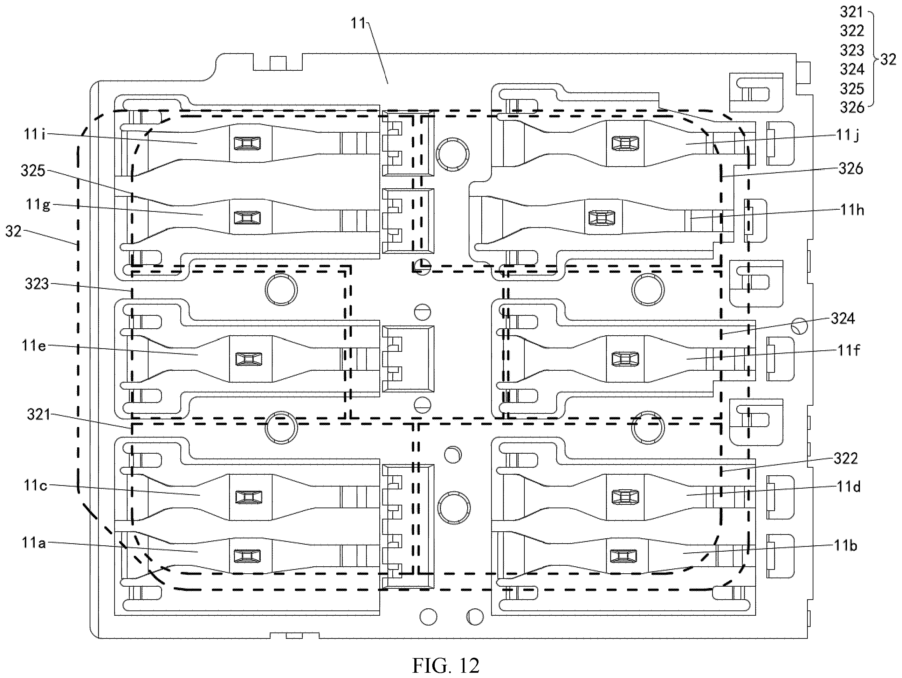

Refer to FIG. 10 to FIG. 12 together. FIG. 10 is a schematic block diagram of a nano-SIM card 3 according to an embodiment of this application. FIG. 11 is a diagram of a structure of the nano-SIM card 3 shown in FIG. 10 in some embodiments. FIG. 12 is a diagram of a structure when the nano-SIM card 3 shown in FIG. 11 is connected to the card connector 11 shown in FIG. 5.

In some embodiments, as shown in FIG. 10 and FIG. 11, the nano-SIM card 3 may include a card body 31 and a card interface 32. The card body 31 includes a package 311, a control circuit 312 and a SIM card circuit 313 that are disposed in the package 311. The card interface 32 is fastened to the card body 31, and is exposed relative to the card body 31. The card interface 32 is electrically connected to the control circuit 312. The package 311 is configured to package the control circuit 312, the SIM card circuit 313, and an electrical connection line between the card interface 32 and each of the control circuit 312 and the SIM card circuit 313, to perform protection. The package 311 is of a dielectric material, and the dielectric material includes but is not limited to materials such as ethylene-vinyl acetate (ethylene-vinyl acetate, EVA), polyvinyl butyral (polyvinyl butyral, PVB), an ionomer, a polyolefin (polyolefin, PO), silicon, and a thermoplastic polyurethane.

The nano-SIM card 3 has a length direction, a width direction, and a thickness direction of which every two are perpendicular to each other. A maximum dimension of the card body 31 of the nano-SIM card 3 in the length direction is a length of the card body 31, a maximum dimension of the card body 31 in the width direction is a width of the card body 31, and a maximum dimension of the card body 31 in the thickness direction is a thickness of the card body 31. Dimensions of the card body 31 of the nano-SIM card 3 are that the length is 12.30 mm, the width is 8.80 mm, and the thickness is 0.67 mm. In this embodiment of this application, a dimension of a card body of an information card is a dimension of an outer contour of a package of the card body.

The card interface 32 of the nano-SIM card 3 in FIG. 11 is disposed to face upward. A perspective of the nano-SIM card 3 in FIG. 12 is obtained by turning upside down a perspective of the nano-SIM card 3 in FIG. 11. The card interface 32 of the nano-SIM card 3 in FIG. 12 is disposed to face downward, and the card connector 11 is located below the nano-SIM card 3.

In some embodiments, the card body 31 of the nano-SIM card 3 includes a first edge 3111, a second edge 3112, a third edge 3113, and a fourth edge 3114. The first edge 3111 and the third edge 3113 are disposed opposite to each other and extend in the length direction of the nano-SIM card 3, and the second edge 3112 and the fourth edge 3114 are disposed opposite to each other and extend in the width direction of the nano-SIM card 3. A spacing between the second edge 3112 and the fourth edge 3114 is greater than a spacing between the first edge 3111 and the third edge 3113. In other words, the first edge 3111 and the third edge 3113 are long edges, and the second edge 3112 and the fourth edge 3114 are short edges. The first edge 3111 and the third edge 3113 may be disposed in parallel or approximately in parallel, and the second edge 3112 and the fourth edge 3114 may be disposed in parallel or approximately in parallel.

A corner of the card body 31 of the nano-SIM card 3 is a beveled edge, and the beveled edge is disposed between the first edge 3111 and the second edge 3112. The beveled edge forms a cut edge 3115, an obtuse angle is formed between the cut edge 3115 and the first edge 3111, and an obtuse angle is formed between the cut edge 3115 and the second edge 3112. An arc transition structure or a chamfered transition structure may be disposed between adjacent edges (including the first edge 3111, the second edge 3112, the third edge 3113, the fourth edge 3114, and the cut edge 3115) of the card body 31 of the nano-SIM card 3. In some other embodiments, the card body 31 of the nano-SIM card 3 may not be provided with the beveled edge. This is not strictly limited in this application.

For example, the card interface 32 of the nano-SIM card 3 includes at least six gold fingers, for example, includes a first gold finger 321, a second gold finger 322, a third gold finger 323, a fourth gold finger 324, a fifth gold finger 325, and a sixth gold finger 326 that are arranged in an array. The first gold finger 321 is closer to the cut edge 3115 of the card body 31 of the nano-SIM card 3 than the other gold fingers.

When a card tray 2 is installed with the nano-SIM card 3, the nano-SIM card 3 is inserted into a card holder assembly 10, and the nano-SIM card 3 is connected to the card connector 11, 10 spring plates of the card connector 11 all abut against the nano-SIM card 3. A third spring plate 11c to an eighth spring plate 11h (namely, a second row of spring plates to a fourth row of spring plates) of the card connector 11 abut against and are electrically connected to the first gold finger 321 to the sixth gold finger 326 of the nano-SIM card 3 in one-to-one correspondence, to be electrically connected to the nano-SIM card 3. In this embodiment of this application, when the spring plate of the card connector 11 abuts against a gold finger of the information card, the spring plate of the card connector 11 and the gold finger of the information card are electrically connected.

In this embodiment, the third spring plate 11c to the eighth spring plate 11h of the card connector 11 are arranged in two columns and three rows, the third spring plate 11c to the eighth spring plate 11h can abut against and be electrically connected to the first gold finger 321 to the sixth gold finger 326 of the nano-SIM card 3 in a one-to-one correspondence, and the card connector 11 can be electrically connected to the nano-SIM card 3, to implement communication.

Refer to FIG. 9 and FIG. 12 together. A center spacing between the second row of spring plates (11c and 11d) and a third row of spring plates (11e and 11f) and a center spacing between the third row of spring plates (11e and 11f) and the fourth row of spring plates (11g and 11h) are set to fall within a range of 1.5 mm to 2.8 mm, so that an electronic device 100 can communicate with the first gold finger 321 to the sixth gold finger 326 of the nano-SIM card 3 through the third spring plate 1 1c to the eighth spring plate 11h, and a risk of a short circuit between the gold fingers of the nano-SIM card 3 can be effectively reduced. In this way, an electric connection relationship between the card connector 11 and the nano-SIM card 3 is reliable.

It may be understood that shapes and dimensions of gold fingers of nano-SIM cards 3 of different countries/different operators may be different, and different gold finger arrangement manners are formed. For example, the nano-SIM card 3 shown in FIG. 11 is a gold finger arrangement manner defined in compliance with a specification. In this embodiment of this application, the card connector 11 and the card holder assembly 10 are compatible with the nano-SIM cards 3 of various countries/different operators.

When the nano-SIM card 3 is connected to the card connector 11, a first row of spring plates (11a and 11b) and a fifth row of spring plates (11i and 11j) of the card connector 11 abut against the nano-SIM card 3. In some embodiments, as shown in FIG. 11 and FIG. 12, when the nano-SIM card 3 is connected to the card connector 11, a first spring plate 11a and the third spring plate 11c may abut against and be electrically connected to the first gold finger 321 of the nano-SIM card 3, a second spring plate 11b and a fourth spring plate 11d may abut against and be electrically connected to the second gold finger 322 of the nano-SIM card 3, a seventh spring plate 11g and a ninth spring plate 11i may abut against and be electrically connected to the fifth gold finger 325 of the nano-SIM card 3, and the eighth spring plate 11h and a tenth spring plate 11j may abut against and be electrically connected to the sixth gold finger 326 of the nano-SIM card 3. Two spring plates that abut against a same gold finger may be connected through the gold finger.

In some other embodiments, a plurality of gold fingers of the card interface 32 of the nano-SIM card 3 may also have an arrangement structure different from that in FIG. 11. When the nano-SIM card 3 is connected to the card connector 11, the first row of spring plates (11a and 11b) and the fifth row of spring plates (11i and 11j) of the card connector 11 abut against the card body 31 of the nano-SIM card 3; or the first spring plate 11a and the third spring plate 11c of the card connector 11 may abut against and be electrically connected to the first gold finger 321 of the nano-SIM card 3, the second spring plate 11b and the fourth spring plate 11d may abut against and be electrically connected to the second gold finger 322 of the nano-SIM card 3, and the fifth row of spring plates (11i and 11j) of the card connector 11 abuts against the card body 31 of the nano-SIM card 3; or the seventh spring plate 11g and the ninth spring plate 11i may abut against and be electrically connected to the fifth gold finger 325 of the nano-SIM card 3, the eighth spring plate 11h and the tenth spring plate 11j may abut against and be electrically connected to the sixth gold finger 326 of the nano-SIM card 3, and the first row of spring plates (11a and 11b) of the card connector 11 abuts against the card body 31 of the nano-SIM card 3. When the first row of spring plates (11a and 11b) and/or the fifth row of spring plates (11i and 11j) of the card connector 11 abut/abuts against the card body 31 of the nano-SIM card 3, the first row of spring plates (11a and 11b) and/or the fifth row of spring plates (11i and 11j) do/does not contact the gold finger of the nano-SIM card 3, and there is no electrical connection relationship between the first row of spring plates (11a and 11b) and/or the fifth row of spring plates (11i and 11j). A specific connection structure between the nano-SIM card 3 and each of the first row of spring plates (11a and 11b) and the fifth row of spring plates (11i and 11j) of the card connector 11 is not strictly limited in this embodiment of this application.

For example, the six gold fingers of the nano-SIM card 3 may be respectively configured to transmit a data signal (DATA), a clock signal (clock, CLK), a programming voltage/input signal (programming voltage/input signal, VPP), a reset signal (reset signal, RST), a ground signal (GND), and a power signal (VCC). The data signal (DATA), also referred to as an I/O signal, is used to implement data transmission and communication. The programming voltage/input signal (programming voltage/input signal, VPP) is used to perform programming for the nano-SIM card 3, and may also be used for communication on a card that supports near field communication (near field communication, NFC).

Table 1 is a table of a correspondence between a plurality of spring plates of the card connector 11 and each of a plurality of gold fingers of the nano-SIM card 3 and transmission signals thereof. For example, the third spring plate 11c of the card connector 11 is electrically connected to the first gold finger 321 of the nano-SIM card 3, and the first gold finger 321 is configured to transmit the data signal (DATA); the fourth spring plate 11d is electrically connected to the second gold finger 322 of the nano-SIM card 3, and the second gold finger 322 is configured to transmit the clock signal (CLK); the fifth spring plate 11e is electrically connected to the third gold finger 323 of the nano-SIM card 3, and the third gold finger 323 is configured to transmit the programming voltage/input signal (VPP); the sixth spring plate 11f is electrically connected to the fourth gold finger 324 of the nano-SIM card 3, and the fourth gold finger 324 is configured to transmit the reset signal (RST); the seventh spring plate 11g is electrically connected to the fifth gold finger 325 of the nano-SIM card 3, and the fifth gold finger 325 is configured to transmit the ground signal (GND); and the eighth spring plate 11h is electrically connected to the sixth gold finger 326 of the nano-SIM card 3, and the sixth gold finger 326 is configured to transmit the power signal (VCC).

**Table 1**

| Card connector 11 | Nano-SIM card 3 | |
|---|---|---|
| First spring plate 11a | | |
| Second spring plate 11b | | |
| Third spring plate 11c | First gold finger 321 | DATA |
| Fourth spring plate 11d | Second gold finger 322 | CLK |
| Fifth spring plate 11e | Third gold finger 323 | VPP |
| Sixth spring plate 11f | Fourth gold finger 324 | RST |
| Seventh spring plate 11g | Fifth gold finger 325 | GND |
| Eighth spring plate 11h | Sixth gold finger 326 | VCC |
| Ninth spring plate 11i | | |
| Tenth spring plate 11j | | |

In some other embodiments, the six gold fingers of the nano-SIM card 3 may also have another correspondence with the six paths of signals. The six gold fingers of the nano-SIM card 3 may also be configured to transmit another combination of signals. For example, the nano-SIM card 3 may alternatively not transmit the programming voltage/input signal (VPP), and the third gold finger 323 is suspended. Correspondingly, the fifth spring plate 11e corresponding to the third gold finger 323 may not provide the programming voltage/input signal (VPP) either. This is not strictly limited in this embodiment of this application. In this embodiment of this application, that the gold finger is suspended is that the gold finger is not configured to transmit a signal, and is not configured to provide a signal port for the information card.

This application provides a first NM card. The first NM card can match the card connector 11. The following uses an example to describe a structure of the first NM card and a connection structure of the first NM card and the card connector 11.

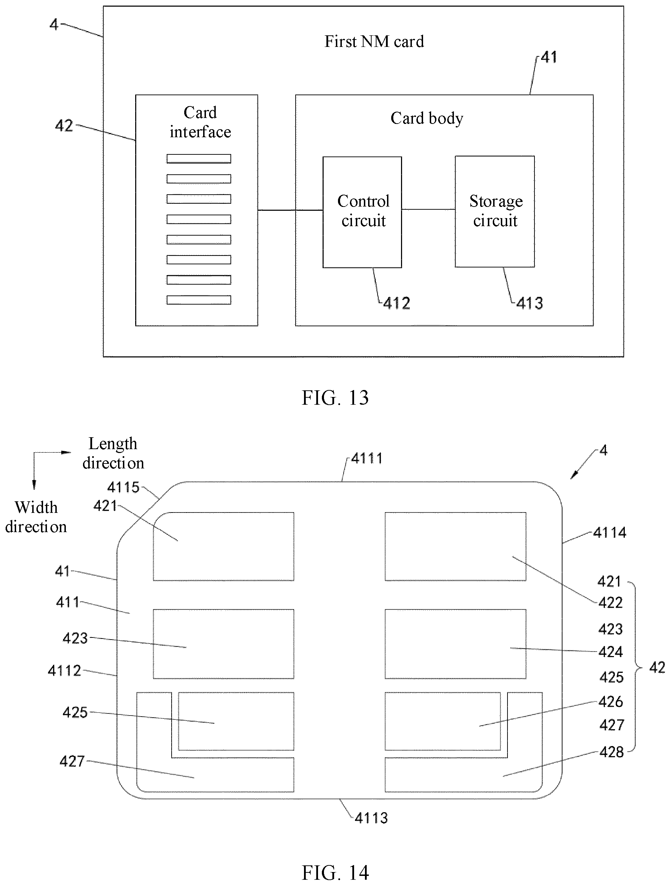

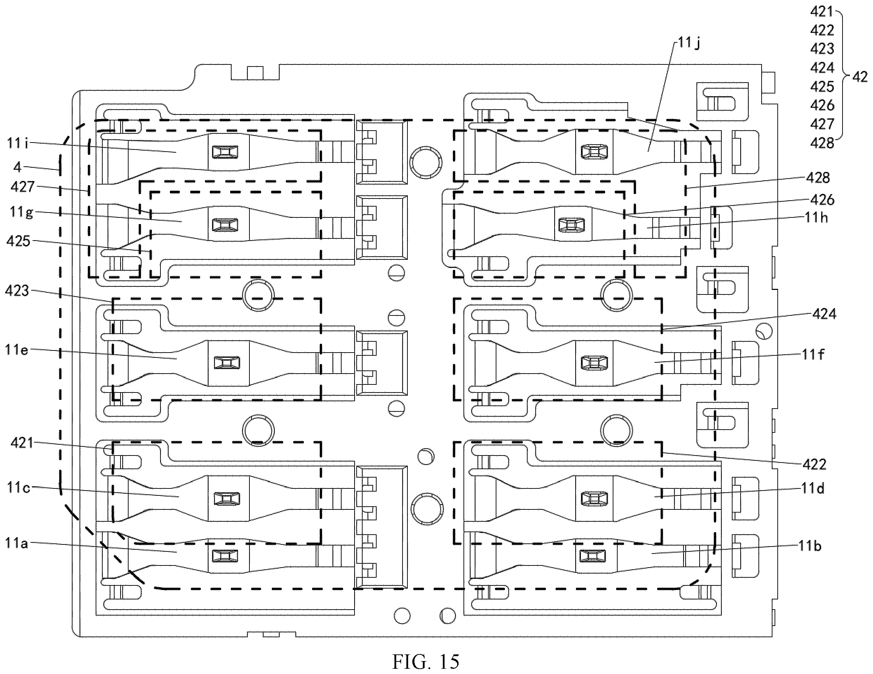

Refer to FIG. 13, FIG. 14, and FIG. 15 together. FIG. 13 is a schematic block diagram of a first NM card 4 according to an embodiment of this application. FIG. 14 is a diagram of a structure of the first NM card 4 shown in FIG. 13 in some embodiments. FIG. 15 is a diagram of a structure when the first NM card 4 shown in FIG. 14 is connected to the card connector 11 shown in FIG. 5.

In some embodiments, as shown in FIG. 13 and FIG. 14, the first NM card 4 includes a card body 41 and a card interface 42. The card body 41 includes a package 411, a control circuit 412 and a memory card circuit 413 that are disposed in the package 411. The card interface 42 is fastened to the card body 41, and is exposed relative to the card body 41. The card interface 42 is electrically connected to the control circuit 412. The package 411 is configured to package the control circuit 412, the storage circuit 413, and an electrical connection line between the card interface 42 and each of the control circuit 412 and the storage circuit 413, to perform protection. The package 411 is of a dielectric material, and the dielectric material includes but is not limited to materials such as ethylene-vinyl acetate (ethylene-vinyl acetate, EVA), polyvinyl butyral (polyvinyl butyral, PVB), an ionomer, a polyolefin (polyolefin, PO), silicon, and a thermoplastic polyurethane.

A dimension of the card body 41 of the first NM card 4 may be the same as a dimension of a card body 31 of a nano-SIM card 3. The first NM card 4 has a length direction, a width direction, and a thickness direction of which every two are perpendicular to each other. A maximum dimension of the card body 41 of the first NM card 4 in the length direction is a length of the card body 41, a maximum dimension of the card body 41 in the width direction is a width of the card body 41, and a maximum dimension of the card body 41 in the thickness direction is a thickness of the card body 41. For example, the dimensions of the card body 41 of the first NM card 4 may be that the length is 12.30 mm, the width is 8.80 mm, and the thickness is 0.67 mm.

The card interface 42 of the first NM card 4 in FIG. 14 is disposed to face upward. A perspective of the first NM card 4 in FIG. 15 is obtained by turning upside down a perspective of the first NM card 4 in FIG. 14. The card interface 42 of the first NM card 4 in FIG. 15 is disposed to face downward, and the card connector 11 is located below the first NM card 4.

In some embodiments, the card body 41 of the first NM card 4 includes a first edge 4111, a second edge 4112, a third edge 4113, and a fourth edge 4114. The first edge 4111 and the third edge 4113 are disposed opposite to each other and extend in the length direction of the first NM card 4, and the second edge 4112 and the fourth edge 4114 are disposed opposite to each other and extend in the width direction of the first NM card 4. A spacing between the second edge 4112 and the fourth edge 4114 is greater than a spacing between the first edge 4111 and the third edge 4113. In other words, the first edge 4111 and the third edge 4113 are long edges, and the second edge 4112 and the fourth edge 4114 are short edges. The first edge 4111 and the third edge 4113 may be disposed in parallel or approximately in parallel, and the second edge 4112 and the fourth edge 4114 may be disposed in parallel or approximately in parallel.

A corner of the card body 41 of the first NM card 4 is a beveled edge, and the beveled edge is disposed between the first edge 4111 and the second edge 4112. The beveled edge forms a cut edge 4115, an obtuse angle is formed between the cut edge 4115 and the first edge 4111, and an obtuse angle is formed between the cut edge 4115 and the second edge 4112. An arc transition structure or a chamfered transition structure may be disposed between adjacent edges (including the first edge 4111, the second edge 4112, the third edge 4113, the fourth edge 4114, and the cut edge 4115) of the card body 41 of the first NM card 4. In some other embodiments, the card body 41 of the first NM card 4 may not be provided with the beveled edge. This is not strictly limited in this application. A size of the beveled edge of the card body 41 of the first NM card 4 may be the same as or different from a size of a beveled edge of the card body 31 of the nano-SIM card 3. When the size of the beveled edge of the card body 41 of the first NM card 4 is different from the size of the beveled edge of the card body 31 of the nano-SIM card 3, it is also considered that the dimension of the card body 41 of the first NM card 4 may be the same as the dimension of the card body 31 of the nano-SIM card 3.

For example, the card interface 42 of the first NM card 4 includes at least eight gold fingers, for example, may include a first gold finger 421, a second gold finger 422, a third gold finger 423, a fourth gold finger 424, a fifth gold finger 425, a sixth gold finger 426, a seventh gold finger 427, and an eighth gold finger 428 that are arranged in an array. The first gold finger 421 is closer to the cut edge 4115 of the card body 41 than the other gold fingers.

When a card tray 2 is installed with the first NM card 4, the first NM card 4 is inserted into a card holder assembly 10, and the first NM card 4 is connected to the card connector 11, 10 spring plates of the card connector 11 all abut against the first NM card 4. A third spring plate 11c to a tenth spring plate 11j (namely, a second row of spring plates to a fourth row of spring plates) of the card connector 11 abut against the first gold finger 421 to the eighth gold finger 428 of the first NM card 4 in a one-to-one correspondence, to be electrically connected to the first NM card 4.

In this embodiment, the third spring plate 11c to the tenth spring plate 11j of the card connector 11 are arranged in four rows and two columns. A center spacing between the fourth row of spring plates (11g and 11h) and a fifth row of spring plates (11i and 11j) is less than a center spacing between the second row of spring plates (11c and 11d) and a third row of spring plates (11e and 11f) and a center spacing between the third row of spring plates (11e and 11f) and the fourth row of spring plates (11g and 11h), so that the third spring plate 11c to the eighth spring plate 11h of the card connector 11 can be electrically connected to six gold fingers of the nano-SIM card 3 in a one-to-to-one correspondence, and the third spring plate 11c to the tenth spring plate 11j can also be electrically connected to the eight gold fingers of the first NM card 4 in a one-to-to-one correspondence. Therefore, the card connector 11 is compatible with the nano-SIM card 3 and the first NM card 4.

Refer to FIG. 9, FIG. 12, and FIG. 15 together. Because the nano-SIM card 3 and the first NM card 4 have different quantities of gold fingers, different shapes of the gold fingers, different dimensions of the gold fingers, different arrangement locations of the gold fingers, and different spacings between the gold fingers, the center spacing between the second row of spring plates (11c and 11d) and the third row of spring plates (11e and 11f) and the center spacing between the third row of spring plates (11e and 11f) and the fourth row of spring plates (11g and 11h) are set to fall within a range of 1.5 mm to 2.8 mm, and the center spacing between the fourth row of spring plates (11g and 11h) and the fifth row of spring plates (11i and 11j) is set to fall within a range of 1.0 mm to 1.7 mm, so that the third spring plate 11c to the eighth spring plate 11h can respectively communicate with the six gold fingers of the nano-SIM card 3, and the third spring plate 11c to the tenth spring plate 11j can respectively communicate with the eight gold fingers of the first NM card 4. Based on that the card connector 11 is compatible with the nano-SIM card 3 and the first NM card 4, a risk of a short circuit between the gold finger of the nano-SIM card 3 and the spring plate of the card connector 11 when the nano-SIM card 3 is disposed in the card connector 11 and a risk of a short circuit between the gold finger of the first NM card 4 and the spring plate of the card connector 11 when the first NM card 4 is disposed in the card connector 11 are effectively reduced, so that an electrical connection relationship between the card connector 11 and each of the nano-SIM card 3 and the first NM card 4 is reliable, and the nano-SIM card 3 and the first NM card 4 may share a same card connector 11 in a time-division manner.

As shown in FIG. 15, although the seventh gold finger 427 and the eighth gold finger 428 of the first NM card 4 are of an "L" type, because the spring plate of the card connector 11 abuts against a gold finger of an information card through an abutment contact of the spring plate, and a gap is formed between the remaining part of the spring plate and the gold finger, the ninth spring plate 11i is electrically connected to the seventh gold finger 427, the seventh spring plate 11g and the seventh gold finger 427 are not in contact and have no electrical connection relationship, the tenth spring plate 11j is electrically connected to the eighth gold finger 428, and the eighth spring plate 11h and the eighth gold finger 428 are not in contact and have no electrical connection relationship.

When the first NM card 4 is connected to the card connector 11, a first row of spring plates (11a and 11b) of the card connector 11 abuts against the first NM card 4. In some embodiments, the first spring plate 11a and the third spring plate 11c abut against and are electrically connected to the first gold finger 421 of the first NM card 4, and the second spring plate 11b and the fourth spring plate 11d abut against and are electrically connected to the second gold finger 422 of the first NM card 4. In some other embodiments, the first row of spring plates (11a and 11b) abuts against the card body 41 of the first NM card 4. In this case, there is no electrical connection relationship between the first row of spring plates (11a and 11b) and the first NM card 4. A specific connection structure between the first row of spring plates (11a and 11b) of the card connector 11 and the first NM card 4 is not strictly limited in this embodiment of this application.

For example, an embedded multimedia card (embedded multimedia card, EMMC) interface protocol may be used for the first NM card 4. Four of the eight gold fingers of the first NM card 4 may be configured to transmit data signals (DATA 0, DATA 1, DATA 2, and DATA 3), one gold finger is configured to transmit a clock signal (CLK), one gold finger is configured to transmit a command and response signal (CMD), one gold finger is configured to transmit a ground signal (GND), and one gold finger is configured to transmit a power signal (VCC). The data signals (DATA 0, DATA 1, DATA 2, and DATA 3) are used to implement data transmission and communication. The command and response signal (CMD) may send a command from an external device to a memory card, or may enable a memory card to respond to a command from an external device.

Table 2 is a table of a correspondence between a plurality of spring plates of the card connector 11 and each of a plurality of gold fingers of the nano-SIM card 3 and the first NM card 4 and transmission signals thereof. When the first NM card 4 is connected to the card connector 11, the third spring plate 11c to the tenth spring plate 11j of the card connector 11 abut against and are electrically connected to the first gold finger 421 to the eighth gold finger 428 of the first NM card 4 in a one-to-one correspondence. In this application, if two gold fingers of two information cards are connected to the card connector 11 of an electronic device 100 and abut against and are electrically connected to a same spring plate, it is considered that locations of the two gold fingers correspond to each other. For example, locations of the first gold finger 421 to the sixth gold finger 426 of the first NM card 4 correspond to locations of the first gold finger 321 to the sixth gold finger 326 of the nano-SIM card 3 in a one-to-one correspondence. When the locations of the two gold fingers of the two information cards correspond to each other, shapes and dimensions of the two gold fingers and specific locations of the two gold fingers on card bodies of the information cards may be the same or may be different. This is not strictly limited in this embodiment of this application.

For example, the first gold finger 421, the fourth gold finger 424, the seventh gold finger 427, and the eighth gold finger 428 of the first NM card 4 may be configured to transmit data signals. For example, the first gold finger 421 is configured to transmit the data signal (DATA 1), the fourth gold finger 424 is configured to transmit the data signal (DATA 0), the seventh gold finger 427 is configured to transmit the data signal (DATA 3), and the eighth gold finger 428 is configured to transmit the data signal (DATA 2). Signals transmitted in the first gold finger 421, the fourth gold finger 424, the seventh gold finger 427, and the eighth gold finger 428 may be exchanged in some other embodiments. Details are not described herein again. The second gold finger 422 of the first NM card 4 is configured to transmit the clock signal (CLK), the third gold finger 423 is configured to transmit the command and response signal (CMD), the fifth gold finger 425 is configured to transmit the ground signal (GND), and the sixth gold finger 426 is configured to transmit the power signal (VCC).

**Table 2**

| Card connector 11 | Nano-SIM card 3 | | First NM card 4 | |
|---|---|---|---|---|
| First spring plate 11a | | | | |
| Second spring plate 11b | | | | |
| Third spring plate 11c | First gold finger 321 | DATA | First gold finger 421 | DATA 1 |
| Fourth spring plate 11d | Second gold finger 322 | CLK | Second gold finger 422 | CLK |
| Fifth spring plate 11e | Third gold finger 323 | VPP | Third gold finger 423 | CMD |
| Sixth spring plate 11f | Fourth gold finger 324 | RST | Fourth gold finger 424 | DATA 0 |
| Seventh spring plate 11g | Fifth gold finger 325 | GND | Fifth gold finger 425 | GND |
| Eighth spring plate 11h | Sixth gold finger 326 | VCC | Sixth gold finger 426 | VCC |
| Ninth spring plate 11i | | | Seventh gold finger 427 | DATA 3 |
| Tenth spring plate 11j | | | Eighth gold finger 428 | DATA 2 |

In some other embodiments, the eight gold fingers of the first NM card 4 may also have another correspondence with the eight paths of signals. The eight gold fingers of the first NM card 4 may also be configured to transmit another combination of signals. This is not strictly limited in this embodiment of this application.

For example, the first gold finger 421, the fourth gold finger 424, and the eighth gold finger 428 of the first NM card 4 each may be electrically connected to a high-voltage resistant circuit or a protection switch, to prevent a circuit of the first NM card 4 from being burnt when the third spring plate 11c to the fifth spring plate 11e and the eighth spring plate 11h provide a high voltage. The high-voltage resistant circuit or the protection switch is located in the package 411 of the first NM card 4. In some other embodiments, a high-impedance protection circuit may alternatively be provided within the electronic device. For example, a protection circuit is added within an interface controller for an implementation.

This application further provides a two-in-one card. The two-in-one card integrates a SIM card circuit and a memory card circuit, and the SIM card circuit and the memory card circuit communicate with an external device such as an electronic device through 10 gold fingers, to compatibly implement functions such as a call function, a data communication function, and a data storage function.

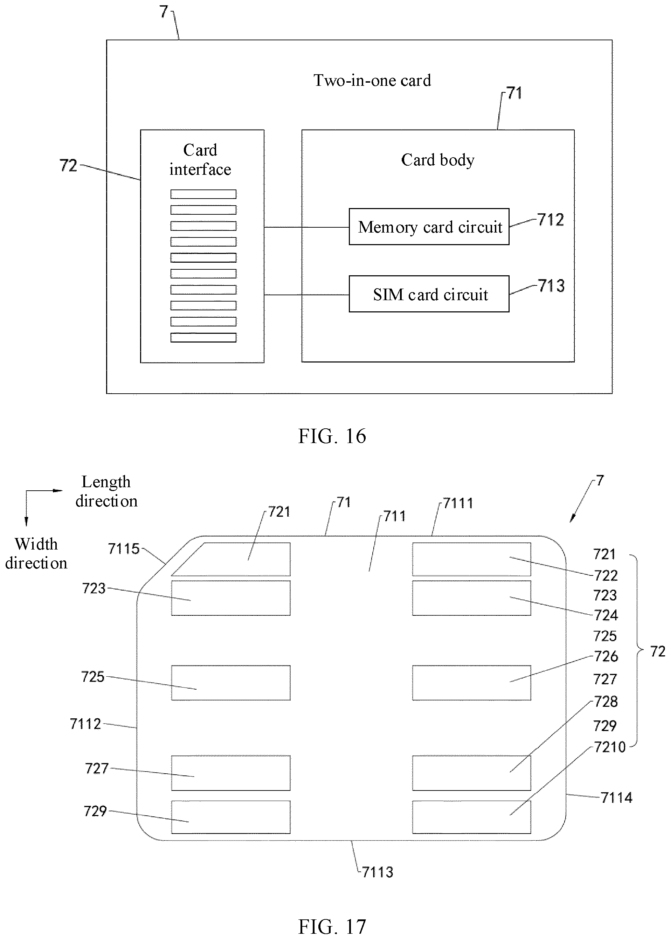

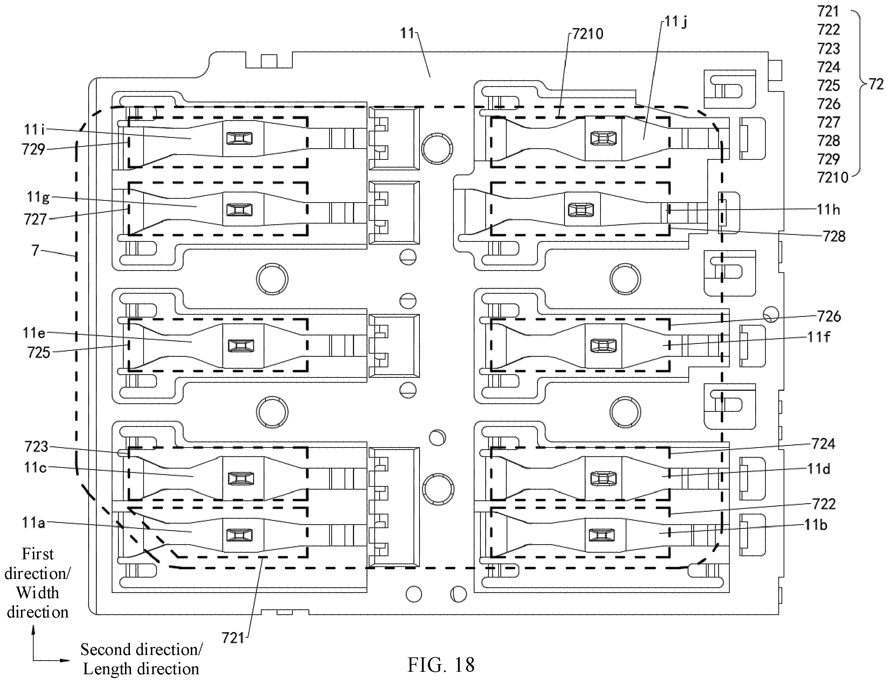

Refer to FIG. 16, FIG. 17, and FIG. 18 together. FIG. 16 is a schematic block diagram of a two-in-one card 7 according to an embodiment of this application. FIG. 17 is a diagram of a structure of the two-in-one card 7 shown in FIG. 16 in some embodiments. FIG. 18 is a diagram of a structure when the two-in-one card 7 shown in FIG. 17 is connected to the card connector shown in FIG. 5.

In some embodiments, as shown in FIG. 16 and FIG. 17, the two-in-one card 7 includes a card body 71 and a card interface 72. The card body 71 includes a package 711, a memory card circuit 712 and a SIM card circuit 713 that are disposed in the package 711. The card interface 72 is fastened to the card body 71, and is exposed relative to the card body 71. The card interface 72 is electrically connected to the memory card circuit 712 and the SIM card circuit 713. The package 711 is configured to package the memory card circuit 712, the SIM card circuit 713, and an electrical connection line between the card interface 72 and each of the memory card circuit 712 and the SIM card circuit 713, to perform protection. The package 711 is of a dielectric material, and the dielectric material includes but is not limited to materials such as ethylene-vinyl acetate (ethylene-vinyl acetate, EVA), polyvinyl butyral (polyvinyl butyral, PVB), an ionomer, a polyolefin (polyolefin, PO), silicon, and a thermoplastic polyurethane.

An interface protocol such as an embedded multimedia card (embedded multimedia card, EMMC) interface protocol, a universal flash storage (Universal Flash Storage, UFS) interface protocol, a peripheral component interconnect express (peripheral component interconnect express, PCIE) interface protocol, or a secure digital (Secure Digital, SD) interface protocol may be used for the memory card circuit 712. The memory card circuit 712 may include a control part and a storage part, the control part is electrically connected to the card interface 72 of the two-in-one card 7, the storage part is electrically connected to the storage part, the control part carries interface protocol content, the control part is configured to: receive data transmitted from the card interface 72, and perform command identification and processing based on a received basis, and the storage part is configured to store data. The SIM card circuit 713 may also include a control part and a SIM part, the control part is electrically connected to the card interface 72 of the two-in-one card 7, the storage part is electrically connected to the SIM part, the control part carries interface protocol content, the control part is configured to: receive data transmitted from the card interface 72, and perform command identification and processing based on a received basis, and the SIM part is configured to store data.

The card interface 72, the memory card circuit 712, and the SIM card circuit 713 may also be provided with another circuit part, so that the card interface 72, the memory card circuit 712, and the SIM card circuit 713 perform a matched signal transmission process.

A dimension of the card body 71 of the two-in-one card 7 may be the same as a dimension of a card body of a nano-SIM card. The two-in-one card 7 has a length direction, a width direction, and a thickness direction of which every two are perpendicular to each other. A maximum dimension of the card body 71 of the two-in-one card 7 in the length direction is a length of the card body 71, a maximum dimension of the card body 71 in the width direction is a width of the card body 71, and a maximum dimension of the card body 71 in the thickness direction is a thickness of the card body 71. For example, the dimensions of the card body 71 of the two-in-one card 7 may be that the length is 12.30 mm, the width is 8.80 mm, and the thickness is 0.67 mm.

The card interface 72 of the two-in-one card 7 in FIG. 17 is disposed to face upward. A perspective of the two-in-one card 7 in FIG. 18 is obtained turning upside down a perspective of the two-in-one card 7 in FIG. 17. The card interface 72 of the two-in-one card 7 in FIG. 18 is disposed to face downward, and the card connector is located below the two-in-one card 7.

In some embodiments, the card body 71 of the two-in-one card 7 includes a first edge 7111, a second edge 7112, a third edge 7113, and a fourth edge 7114. The first edge 7111 and the third edge 7113 are disposed opposite to each other and extend in the length direction of the two-in-one card 7, and the second edge 7112 and the fourth edge 7114 are disposed opposite to each other and extend in the width direction of the two-in-one card 7. A spacing between the second edge 7112 and the fourth edge 7114 is greater than a spacing between the first edge 7111 and the third edge 7113. In other words, the first edge 7111 and the third edge 7113 are long edges, and the second edge 7112 and the fourth edge 7114 are short edges. The first edge 7111 and the third edge 7113 may be disposed in parallel or approximately in parallel, and the second edge 7112 and the fourth edge 7114 may be disposed in parallel or approximately in parallel.

A corner of the card body 71 of the two-in-one card 7 is a beveled edge, and the beveled edge is disposed between the first edge 7111 and the second edge 7112. The beveled edge forms a cut edge 7115, an obtuse angle is formed between the cut edge 7115 and the first edge 7111, and an obtuse angle is formed between the cut edge 7115 and the second edge 7112. An arc transition structure or a chamfered transition structure may be disposed between adjacent edges (including the first edge 7111, the second edge 7112, the third edge 7113, the fourth edge 7114, and the cut edge 7115) of the card body 71. In some other embodiments, the card body 71 of the two-in-one card 7 may not be provided with the beveled edge. This is not strictly limited in this application. A size of the beveled edge of the card body 71 of the two-in-one card 7 may be the same as or different from a size of the beveled edge of the card body 31 of the nano-SIM card 3. When the size of the beveled edge of the card body 71 of the two-in-one card 7 may be different from the size of the beveled edge of the card body 31 of the nano-SIM card 3, it is also considered that the dimension of the card body 71 of the two-in-one card 7 may be the same as the dimension of the card body 31 of the nano-SIM card 3.

For example, the card interface 72 of the two-in-one card 7 includes a plurality of gold fingers, and the plurality of gold fingers are exposed on a same side of the card body 71. There are at least 10 gold fingers of the two-in-one card 7. For example, the plurality of gold fingers may include a first gold finger 721, a second gold finger 722, a third gold finger 723, a fourth gold finger 724, a fifth gold finger 725, a sixth gold finger 726, a seventh gold finger 727, an eighth gold finger 728, a ninth gold finger 729, and a tenth gold finger 7210. The first gold finger 721, the third gold finger 723, the fifth gold finger 725, the seventh gold finger 727, and the ninth gold finger 729 of the two-in-one card 7 are arranged in a first column of gold fingers in the width direction of the two-in-one card 7; the second gold finger 722, the fourth gold finger 724, the sixth gold finger 726, the eighth gold finger 728, and the tenth gold finger 7210 are arranged in a second column of gold fingers in the width direction of the two-in-one card 7; the first column of gold fingers and the second column of gold fingers are arranged in the length direction of the two-in-one card 7; and five gold fingers in the first column of gold fingers (721, 723, 725, 727, and 729) and five gold fingers in the second column of gold fingers (722, 724, 726, 728, and 7210) are in a one-to-one correspondence, and every two gold fingers are set to form a row. In other words, the 10 gold fingers are arranged in a first row of gold fingers (721 and 722), a second row of gold fingers (723 and 724), a third row of gold fingers (725 and 726), a fourth row of gold fingers (727 and 728), and a fifth row of gold fingers (729 and 7210) in the width direction of the two-in-one card 7. That is, the first gold finger 321 to the tenth gold finger 7210 are arranged in two columns and five rows.

The first column of gold fingers (721, 723, 725, 727, and 729) is located between the second edge 7112 and the second column of gold fingers (722, 724, 726, 728, and 7210). In other words, the first column of gold fingers (721, 723, 725, 727, and 729) is arranged close to the second edge 7112, and the second column of gold fingers (722, 724, 726, 728, and 7210) is arranged close to the fourth edge 7114.

The first gold finger 721 is located between the first edge 7111 and the third gold finger 723, and the second gold finger is located between the first edge 7111 and the fourth gold finger 714. In other words, the first row of gold fingers (721 and 722) is arranged close to the first edge 7111, and the fifth row of gold fingers (729 and 7210) is arranged close to the third edge 7113.

The first gold finger 721 may be provided with an oblique edge, to form a right trapezoid. The oblique edge of the first gold finger 721 is disposed to face a cut edge 7115 of the card body 71, and a spacing between the oblique edge and the cut edge 7115 is greater than or equal to 0.1 mm, for example, may be 0.2 mm. The second gold finger 722 to the tenth gold finger 7210 may be rectangular. In some other embodiments, the first gold finger 721 may also be rectangular.

A center spacing between the second row of gold fingers (723 and 724) and the third row of gold fingers (725 and 726) is greater than a center spacing between the first row of gold fingers (721 and 722) and the second row of gold fingers (723 and 724), and is greater than a center spacing between the fourth row of gold fingers (727 and 728) and the fifth row of gold fingers (729 and 7210); A center spacing between the third row of gold fingers (725 and 726) and the fourth row of gold fingers (727 and 728) is greater than the center spacing between the first row of gold fingers (721 and 722) and the second row of gold fingers (723 and 724), and is greater than the center spacing between the fourth row of gold fingers (727 and 728) and the fifth row of gold fingers (729 and 7210).

For example, the center spacing between the second row of gold fingers (723 and 724) and the third row of gold fingers (725 and 726) may fall within a range of 1.5 mm to 2.8 mm, the center spacing between the third row of gold fingers (725 and 726) and the fourth row of gold fingers (727 and 728) may fall within the range of 1.5 mm to 2.8 mm, and the center spacing between the first row of gold fingers (721 and 722) and the second row of gold fingers (723 and 724) may fall within a range of 1.0 mm to 1.7 mm, and the center spacing between the fourth row of gold fingers (727 and 728) and the fifth row of gold fingers (729 and 7210) may fall within the range of 1.0 mm to 1.7 mm.

When the card tray 2 is installed with the two-in-one card 7, the two-in-one card 7 is inserted into a card holder assembly 10, and the two-in-one card 7 is connected to the card connector 11, the width direction of the two-in-one card 7 is parallel to a first direction of the card connector 11, the length direction is parallel to a second direction of the card connector 11, and 10 spring plates of the card connector 11 abut against the two-in-one card 7. When the two-in-one card 7 is connected to the card connector 11, the 10 spring plates of the card connector 11 abut against the 10 gold fingers of the two-in-one card 7 in a one-to-one correspondence, and the first spring plate 11a to the tenth spring plate 11j abut against the first gold finger 721 to the tenth gold finger 7210 of the two-in-one card 7 in a one-to-one correspondence.

In this embodiment, the first spring plate 11a to the tenth spring plate 11j of the card connector 11 are arranged in two columns and five rows, and a center spacing between the second row of spring plates (11c and 11d) and the third row of spring plates (11e and 11f) and a center spacing between the third row of spring plates (11e and 11f) and the fourth row of spring plates (11g and 11h) are both greater than a center spacing between the first row of spring plates (11a and 11b) and the second row of spring plates (11c and 11d) and a center spacing between the fourth row of spring plates (11g and 11h) and the fifth row of spring plates (11i and 11j), so that the third spring plate 11c to the eighth spring plate 11h of the card connector 11 can abut against and be electrically connected to the first gold finger 321 to the sixth gold finger 326 of the nano-SIM card 3 in one-to-one correspondence, the third spring plate 11c to the tenth spring plate 11j of the card connector 11 can abut against and be electrically connected to the first gold finger 421 to the eighth gold finger 428 of the first NM card 4 in a one-to-one correspondence, and the first spring plate 11a to the tenth spring plate 11j of the card connector 11 abut against and are electrically connected to the first gold finger 721 to the tenth gold finger 7210 of the two-in-one card 7 in a one-to-one correspondence. Therefore, the card connector 11 is compatible with the nano-SIM card 3, the first NM card 4, and the two-in-one card 7. In some other embodiments, the card connector 11 may also be designed to be compatible with the nano-SIM card 3 and the two-in-one card 7.

For example, with reference to FIG. 9, FIG. 12, FIG. 15, and FIG. 18, the center spacing between the second row of spring plates (11c and 11d) and the third row of spring plates (11e and 11f) of the card connector 11 and the center spacing between the third row of spring plates (11e and 11f) and the fourth row of spring plates (11g and 11h) are set to fall within a range of 1.5 mm to 2.8 mm, the center spacing between the first row of spring plates (11a and 11b) and the second row of spring plates (11c and 11d) is set to fall within a range of 1.0 mm to 1.7 mm, and the center spacing between the fourth row of spring plates (11g and 11h) and the fifth row of spring plates (11i and 11j) is set to fall within the range of 1.0 mm to 1.7 mm, so that the third spring plate 11c to the eighth spring plate 11h can respectively communicate with the six gold fingers of the nano-SIM card 3, the third spring plate 11c to the tenth spring plate 11j can respectively communicate with the eight gold fingers of the first NM card 4, and the first spring plate 11a to the tenth spring plate 11j can respectively communicate with the 10 gold fingers of the two-in-one card 7.

Because the nano-SIM card 3, the first NM card 4, and the two-in-one card 7 have different quantities of gold fingers, different shapes of the gold fingers, different arrangement locations of the gold fingers, and different spacings between the gold fingers, a spacing between the first spring plate 11a to the tenth spring plate 1 1j is uniquely designed, so that based on that the card connector 11 is compatible with the nano-SIM card 3, the first NM card 4, and the two-in-one card 7, a risk of a short circuit between the gold finger of the nano-SIM card 3 and the spring plate of the card connector 11 when the nano-SIM card 3 is disposed in the card connector 11, a risk of a short circuit between the gold finger of the first NM card 4 and the spring plate of the card connector 11 when the first NM card 4 is disposed in the card connector 11, and a risk of a short circuit between the gold finger of the two-in-one card 7 and the spring plate of the card connector 11 when two-in-one card 7 is disposed in the card connector 11 are effectively reduced, so that an electrical connection relationship between the card connector 11 and each of the nano-SIM card 3, the first NM card 4, and the two-in-one card 7 is reliable, and the nano-SIM card 3, the first NM card 4, and the two-in-one card 7 may share a same card connector 11 in a time-division manner. It may be understood that, in some other embodiments, a solution in which the card connector 11 is compatible with only the nano-SIM card 3 and the two-in-one card 7 may alternatively be designed.

In this application, there may be a plurality of implementations of the card interface of the two-in-one card 7. For example, the following uses an example to describe a case in which the two-in-one card 7 can be connected to the card connector 11 shown in FIG. 5 in the following embodiments.

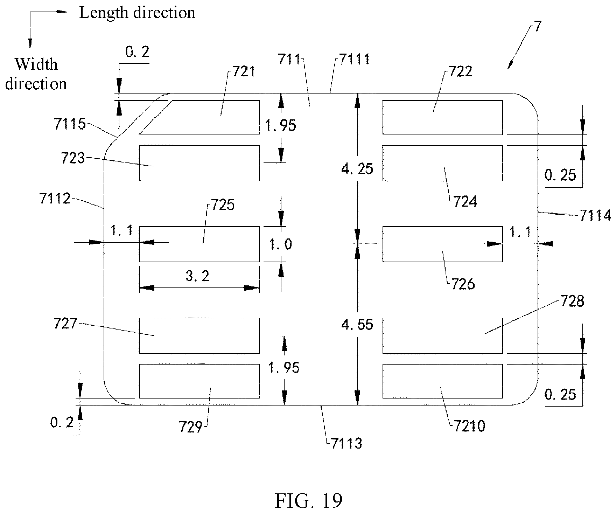

FIG. 19 is a diagram of dimensions of the two-in-one card 7 shown in FIG. 17 in some embodiments.

In some embodiments, the 10 gold fingers of the two-in-one card 7 are arranged in two columns and five rows, the first column of gold fingers (721, 723, 725, 727, and 729) is arranged close to the second edge 7112, the second column of gold fingers (722, 724, 726, 728, and 7210) is arranged close to the fourth edge 7114, each column of gold fingers is arranged in alignment in the width direction, the first row of gold fingers (721 and 722) is arranged close to the first edge 7111, the fifth row of gold fingers (729 and 7210) is arranged close to the third edge 7113, and each row of gold fingers is arranged in alignment in the length direction. The first gold finger 721 may be provided with a cut edge, to form a right trapezoid. The oblique edge of the first gold finger 721 is disposed to face a cut edge 7115 of the card body 71, and a spacing between the oblique edge and the cut edge 7115 may be 0.2 mm. The second gold finger 722 to the tenth gold finger 7210 may be rectangular.

For example, in the width direction, a spacing between a center of the second row of gold fingers (723 and 724) and the first edge 7111 may be 1.95 mm, a spacing between a center of the third row of gold fingers (725 and 726) and the first edge 7111 may be 4.25 mm, a spacing between a center of the third row of gold fingers (725 and 726) and the third edge 7113 may be 4.55 mm, and a spacing between a center of the fourth row of gold fingers (727 and 728) and the third edge 7113 may be 1.95 mm. In the width direction, a spacing between the first row of gold fingers (721 and 722) and the second row of gold fingers (723 and 724) may be 0.25 mm, and a spacing between the first row of gold fingers (721 and 722) and the first edge 7111 may be 0.2 mm. In the width direction, a spacing between the fourth row of gold fingers (727 and 728) and the fifth row of gold fingers (729 and 7210) may be 0.25 mm, and a spacing between the fifth row of gold fingers (729 and 7210) and the third edge 7113 may be 0.2 mm. In the length direction, a spacing between the first column of gold fingers (721, 723, 725, 727, and 729) and the second edge 7112 may be 1.1 mm, and a spacing between the second column of gold fingers (722, 724, 726, 728, and 7210) and the fourth edge 7114 may be 1.1 mm.

A length of each gold finger may be 3.2 mm, and a width may be 1.0 mm. A length of the first gold finger 721 is a length of a bottom edge of the first gold finger 721, and a width of the first gold finger 721 is a height of the first gold finger 721.

A tolerance of a shape dimension and a spacing dimension is ±0.1 mm.

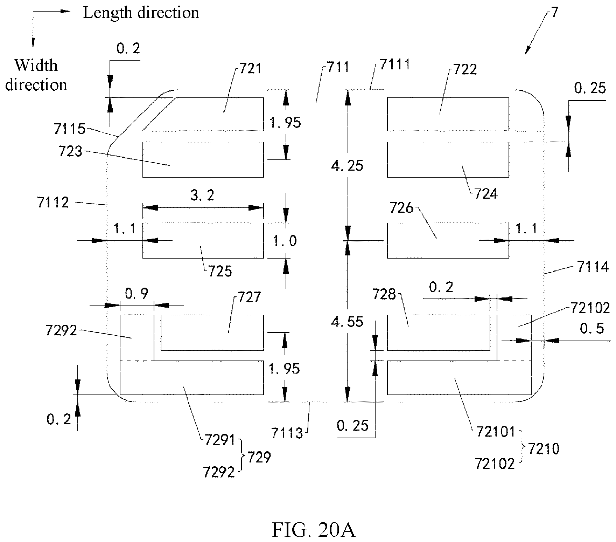

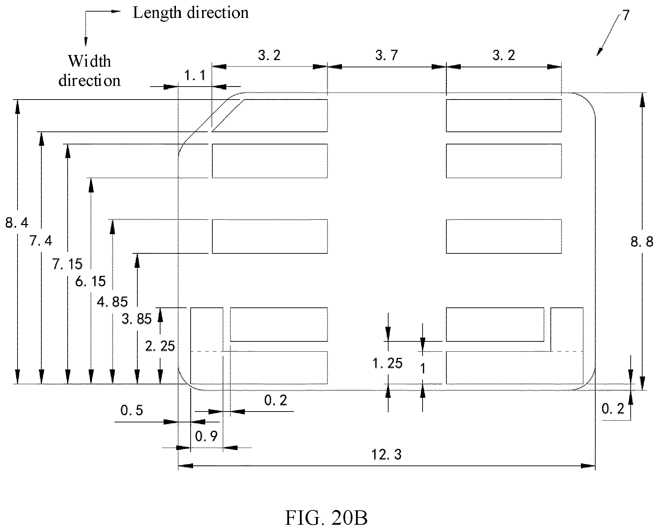

Refer to FIG. 20A and FIG. 20B together. FIG. 20A is a diagram of dimensions of the two-in-one card 7 shown in FIG. 16 in some other embodiments. FIG. 20B is a diagram of another dimension of the two-in-one card 7 shown in FIG. 20A.

In some embodiments, a package 711 of a card body 71 of the two-in-one card 7 includes a first edge 7111, a third edge 7113, a second edge 7112, and a fourth edge 7114. The first edge 7111 and the third edge 7113 are disposed opposite to each other and are long edges, the second edge 7112 and the fourth edge 7114 are disposed opposite to each other and are short edges, and a circular arc transition structure or a chamfered transition structure may be disposed between adjacent sides.

For example, 0 gold fingers of the two-in-one card 7 are arranged in two columns, a first column of gold fingers (721, 723, 725, 727, and 729) is arranged close to the second edge 7112, and a second column of gold fingers (722, 724, 726, 728, and 7210) is arranged close to the fourth edge 7114. A first gold finger 721 to a sixth gold finger 726 are arranged in two columns and three rows, each column of gold fingers is arranged in alignment in a width direction, a first row of gold fingers (721 and 722) is arranged close to the first edge 7111, each row of gold fingers is arranged in alignment in the length direction, and a fourth row of gold fingers (727 and 728) is arranged in alignment in a length direction. The first gold finger 721 may be provided with a cut edge, to form a right trapezoid. An oblique edge of the first gold finger 721 is disposed to face a cut edge 7115 of the card body 71, and a spacing between the oblique edge and the cut edge 7115 may be 0.2 mm. The second gold finger 722 to the eighth gold finger 728 may be rectangular. A ninth gold finger 729 and a tenth gold finger 7210 may be of an "L" shape. The ninth gold finger 729 semi-encloses a seventh gold finger 727. The ninth gold finger 729 includes a first part 7291 and a second part, the first part 7291 extends in the length direction, and the second part 7292 extends in the width direction. The first part 7291 of the ninth gold finger 729 is located between the seventh gold finger 727 and the third edge 7113, and the second part 7292 of the ninth gold finger 729 is connected to the first part 7291 and is located between the seventh gold finger 727 and the second edge 7112. The tenth gold finger 7210 includes a first part 72101 and a second part 72102, the first part 72101 extends in the length direction, and the second part 72102 extends in the width direction. The first part 72101 of the tenth gold finger 7210 is located between the eighth gold finger 728 and the third edge 7113, and the second part 72102 of the tenth gold finger 7210 is connected to the first part 7291 and is located between the eighth gold finger 728 and the second edge 7112. As described above, the ninth gold finger 729 and the tenth gold finger 7210 may be understood as a fifth row of gold fingers (729 and 7210).

For example, in the width direction, a spacing between a center of the second row of gold fingers (723 and 724) and the first edge 7111 may be 1.95 mm, a spacing between a center of the third row of gold fingers (725 and 726) and the first edge 7111 may be 4.25 mm, a spacing between a center of the third row of gold fingers (725 and 726) and the third edge 7113 may be 4.55 mm, and a spacing between a center of the fourth row of gold fingers (727 and 728) and the third edge 7113 may be 1.95 mm. In the width direction, a spacing between the first row of gold fingers (721 and 722) and the second row of gold fingers (723 and 724) may be 0.25 mm, and a spacing between the first row of gold fingers (721 and 722) and the first edge 7111 may be 0.2 mm. In the width direction, a spacing between the fourth row of gold fingers (727 and 728) and the fifth row of gold fingers (729 and 7210) may be 0.25 mm, and a spacing between the fifth row of gold fingers (729 and 7210) and the third edge 7113 may be 0.2 mm. In other words, in the width direction, a spacing between the ninth gold finger 729 and the third edge 7113 may be 0.2 mm, and a spacing between the first part 7291 of the ninth gold finger 729 and the seventh gold finger 727 may be 0.25 mm; and a spacing between the tenth gold finger 7210 and the third edge 7113 may be 0.2 mm, and a spacing between the first part 72101 of the tenth gold finger 7210 and the eighth gold finger 728 may be 0.25 mm. A top edge that is of the second part 7292 of the ninth gold finger 729 and that is close to the first edge 7111 may be flush with a top edge that is of the seventh gold finger 727 and that is close to the first edge 7111; and a top edge that is of the second part 72102 of the tenth gold finger 7210 and that is close to the first edge 7111 may be flush with a top edge that is of the eighth gold finger 728 and that is close to the first edge 7111. In the width direction, widths of the first gold finger 721 to the eighth gold finger 728, the first part 7291 of the ninth gold finger 729, and the first part 72101 of the tenth gold finger 7210 each may be 1.0 mm.

For example, in the length direction, a spacing between the second edge 7112 and each of the first gold finger 721, the third gold finger 723, and the fifth gold finger 725 may be 1.1 mm, and a spacing between the fourth edge 7114 and each of the second gold finger 722, the fourth gold finger 724, and the sixth gold finger 726 may be 1.1 mm. In the length direction, a side edge that is of the seventh gold finger 727 and that is close to the fourth edge 7114 and a side edge that is of the first part 7291 of the ninth gold finger 729 and that is close to the fourth edge 7114 each may be flush with a side edge that is of the fifth gold finger 725 and that is close to the fourth edge 7114; a spacing between the seventh gold finger 727 and the second part 7292 of the ninth gold finger 729 may be 0.2 mm, and a spacing between the ninth gold finger 729 and the second edge 7112 may be 0.5 mm; and a width of the second part 7292 of the ninth gold finger 729 may be 0.9 mm. In the length direction, a side edge that is of the eighth gold finger 728 and that is close to the second edge 7112 and a side edge that is of the first part 72101 of the tenth gold finger 7210 and that is close to the second edge 7112 each may be flush with a side edge that is of the sixth gold finger 726 and that is close to the second edge 7112; a spacing between the eighth gold finger 728 and the second part 72102 of the tenth gold finger 7210 may be 0.2 mm, and a spacing between the tenth gold finger 7210 and the fourth edge 7114 may be 0.5 mm; and a width of the second part 72102 of the tenth gold finger 7210 may be 0.9 mm.

A tolerance of a shape dimension and a spacing dimension is ±0.1 mm.

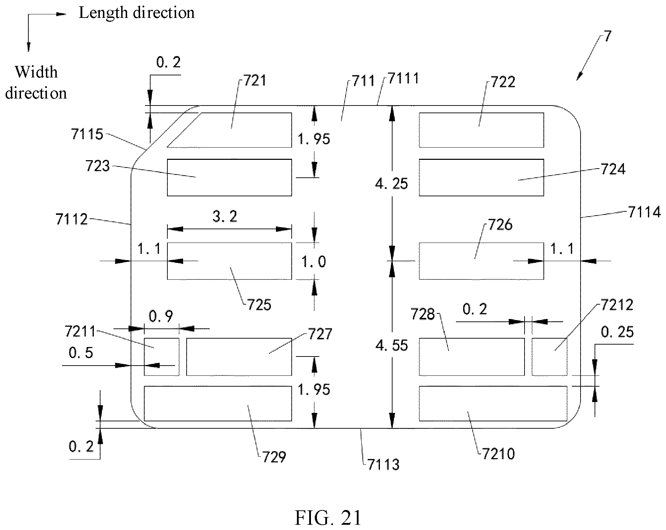

FIG. 21 is a diagram of dimensions of the two-in-one card 7 shown in FIG. 16 in some other embodiments.

In some embodiments, a package 711 of a card body 71 of the two-in-one card 7 includes a first edge 7111, a third edge 7113, a second edge 7112, and a fourth edge 7114. The first edge 7111 and the third edge 7113 are disposed opposite to each other and are long edges, the second edge 7112 and the fourth edge 7114 are disposed opposite to each other and are short edges, and a circular arc transition structure or a chamfered transition structure may be disposed between adjacent sides.

For example, a first gold finger 721 to a tenth gold finger 7210 of the two-in-one card 7 are arranged in two columns and five rows, a first column of gold fingers (721, 723, 725, 727, and 729) is arranged close to the second edge 7112, a second column of gold fingers (722, 724, 726, 728, and 7210) is arranged close to the fourth edge 7114, a first row of gold fingers (721 and 722) is arranged close to the first edge 7111, a fifth row of gold fingers (729 and 7210) is arranged close to the third edge 7113, and each row of gold fingers is arranged in alignment in a length direction. The two-in-one card 7 further includes an eleventh gold finger 7220 and a twelfth gold finger 7230, the eleventh gold finger 7220 and the twelfth gold finger 7230 are arranged in a fourth row of gold fingers (727, 728, 7220, and 7230), the eleventh gold finger 7220 is located between the second edge 7112 and a seventh gold finger 727, and the twelfth gold finger 7230 is located between the fourth edge 7114 and an eighth gold finger 728. The first gold finger 721 may be provided with a cut edge, to form a right trapezoid. The oblique edge of the first gold finger 721 is disposed to face a cut edge 7115 of the card body 71, and a spacing between the oblique edge and the cut edge 7115 may be 0.2 mm. The second gold finger 722 to the twelfth gold finger 7230 may be rectangular.

For example, in a width direction, a spacing between a center of the second row of gold fingers (723 and 724) and the first edge 7111 may be 1.95 mm, a spacing between a center of the third row of gold fingers (725 and 726) and the first edge 7111 may be 4.25 mm, a spacing between a center of the third row of gold fingers (725 and 726) and the third edge 7113 may be 4.55 mm, and a spacing between a center of the fourth row of gold fingers (727, 728, 7220, and 7230) and the third edge 7113 may be 1.95 mm. In the width direction, a spacing between the first row of gold fingers (721 and 722) and the second row of gold fingers (723 and 724) may be 0.25 mm, and a spacing between the first row of gold fingers (721 and 722) and the first edge 7111 may be 0.2 mm. In the width direction, a spacing between the fourth row of gold fingers (727, 728, 7220, 7230) and the fifth row of gold fingers (729 and 7210) may be 0.25 mm, and a spacing between the fifth row of gold fingers (729 and 7210) and the third edge 7113 may be 0.2 mm. In the width direction, widths of the first gold finger 721 and the twelfth gold finger 7230 each may be 1.0 mm.

For example, in the length direction, a spacing between the second edge 7112 and each of the first gold finger 721, the third gold finger 723, and the fifth gold finger 725 may be 1.1 mm, and a spacing between the fourth edge 7114 and each of the second gold finger 722, the fourth gold finger 724, and the sixth gold finger 726 may be 1.1 mm. In the length direction, a side edge that is of the seventh gold finger 727 and that is close to the fourth edge 7114 and a side edge that is of the ninth gold finger 729 and that is close to the fourth edge 7114 each may be flush with a side edge that is of the fifth gold finger 725 and that is close to the fourth edge 7114; a side edge that is of the eleventh gold finger 7220 and that is close to the second edge 7112 is flush with a side edge that is of the ninth gold finger 729 and that is close to the second edge 7112; and a spacing between the seventh gold finger 727 and the eleventh gold finger 7220 may be 0.2 mm, a spacing between the eleventh gold finger 7220 and the second edge 7112 may be 0.5 mm, and a length of the eleventh gold finger 7220 may be 0.9 mm. In the length direction, a side edge that is of the eighth gold finger 728 and that is close to the second edge 7112 and a side edge that is of the tenth gold finger 7210 and that is close to the second edge 7112 each may be flush with a side edge that is of the sixth gold finger 726 and that is close to the second edge 7112; a side edge that is of the twelfth gold finger 7230 and that is close to the fourth edge 7114 is flush with a side edge that is of the tenth gold finger 7210 and that is close to the fourth edge 7114; and a spacing between the eighth gold finger 728 and the twelfth gold finger 7230 may be 0.2 mm, a spacing between the twelfth gold finger 7230 and the fourth edge 7114 may be 0.5 mm, and a length of the twelfth gold finger 7230 may be 0.9 mm.

A tolerance of a shape dimension and a spacing dimension is ±0.1 mm.

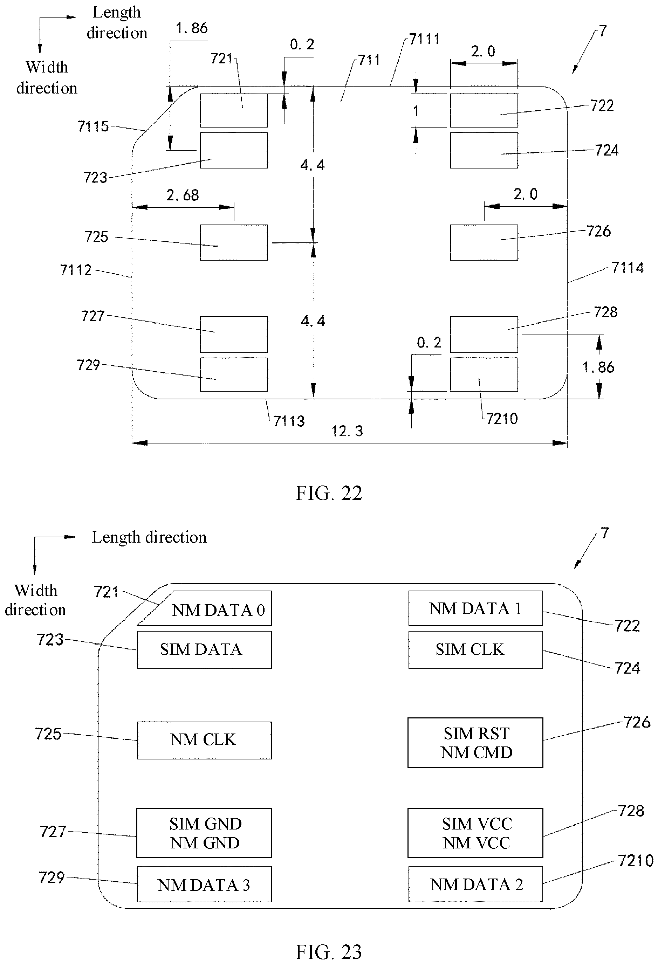

FIG. 22 is a diagram of dimensions of the two-in-one card 7 shown in FIG. 16 in some other embodiments.

In some embodiments, a package 711 of a card body 71 of the two-in-one card 7 includes a first edge 7111, a third edge 7113, a second edge 7112, and a fourth edge 7114. The first edge 7111 and the third edge 7113 are disposed opposite to each other and are long edges, the second edge 7112 and the fourth edge 7114 are disposed opposite to each other and are short edges, and a circular arc transition structure or a chamfered transition structure may be disposed between adjacent sides.

For example, a first gold finger 721 to a tenth gold finger 7210 of the two-in-one card 7 are arranged in two columns and five rows, a first column of gold fingers (721, 723, 725, 727, and 729) is arranged close to the second edge 7112, a second column of gold fingers (722, 724, 726, 728, and 7210) is arranged close to the fourth edge 7114, each column of gold fingers is arranged in alignment in a width direction, a first row of gold fingers (721 and 722) is arranged close to the first edge 7111, a fifth row of gold fingers (729 and 7210) is arranged close to the third edge 7113, and each row of gold fingers is arranged in alignment in a length direction. The first gold finger 721 to the tenth gold finger 7210 each may be rectangular. The first gold finger 721 may be closer to the cut edge 7115 of the card body 71 than the other gold fingers.

For example, in the width direction, a spacing between a center of the second row of gold fingers (723 and 724) and the first edge 7111 may be 1.86 mm, a spacing between a center of the third row of gold fingers (725 and 726) and the first edge 7111 may be 4.4 mm, a spacing between a center of the third row of gold fingers (725 and 726) and the third edge 7113 may be 4.4 mm, and a spacing between a center of the fourth row of gold fingers (727 and 728) and the third edge 7113 may be 1.86 mm. A spacing between the first row of gold fingers (721 and 722) and the first edge 7111 may be 0.2 mm, and a spacing between the fifth row of gold fingers (729 and 7210) and the third edge 7113 may be 0.2 mm.

For example, in the length direction, a spacing between a center of the first column of gold fingers (721, 723, 725, 727, and 729) and the second edge 7112 may be 2.68 mm, and a spacing between a center of the second column of gold fingers (722, 724, 726, 728, and 7210) and the fourth edge 7114 may be 2.0 mm. A length of the card body 71 of the two-in-one card 7 may be 12.3 mm.

A tolerance of a shape dimension and a spacing dimension is ±0.1 mm.

It may be understood that structure dimensions of the two-in-one card 7 shown in FIG. 19 to FIG. 22 are some examples of the two-in-one card 7, and the card interface 72 of the two-in-one card 7 may further have more gold finger arrangement manners and dimensions, provided that the card interface 72 of the two-in-one card 7 includes at least the first gold finger 721 to the tenth gold finger 7210. This is not strictly limited in this embodiment of this application.

The following uses an example to describe a signal arrangement manner and an internal circuit of a card interface 72 of a two-in-one card 7, and uses an example to describe a partial circuit of an electronic device that can be connected to the two-in-one card 7. The signal arrangement manner of the card interface 72 of the two-in-one card 7 in the following embodiments can be applied to a two-in-one card 7 that has a first gold finger to a tenth gold finger, for example, the two-in-one card 7 shown in FIG. 17, the two-in-one card 7 shown in FIG. 19 to FIG. 22, and the two-in-one card 7 that has another structure of the card interface 72. The structure of the card interface 72 shown in FIG. 17 is used as an example for illustration in the following embodiments.

FIG. 23 is a diagram of the two-in-one card 7 shown in FIG. 17 in some embodiments.

In some embodiments, a memory card circuit 712 of the two-in-one card 7 supports an EMMC interface protocol. The card interface 72 of the two-in-one card 7 includes a first gold finger 721 to a tenth gold finger 7210 that are arranged in an array. In the first gold finger 721 to the tenth gold finger 7210, one gold finger is configured to transmit a data signal (SIM DATA) of a SIM card, one gold finger is configured to transmit a clock signal (SIM CLK) of the SIM card, four gold fingers are configured to transmit data signals (NM DATA 0, NM DATA 1, NM DATA 2, and NM DATA 3) of a memory card, one gold finger is configured to transmit a clock signal (NM CLK) of the memory card, one gold finger is configured to transmit a reset signal (SIM RST) of the SIM card and a command and response signal (NM CMD) of the memory card, one gold finger is configured to transmit a ground signal (SIM GND) of the SIM card and a ground signal (NM GND) of the memory card, and one gold finger is configured to transmit a power signal (SIM VCC) of the SIM card and a power signal (NM VCC) of the memory card.

For example, the first gold finger 721, a second gold finger 722, a ninth gold finger 729, and the tenth gold finger 7210 of the two-in-one card 7 are configured to transmit data signals (NM DATA 0, NM DATA 1, NM DATA 3, and NM DATA 2) of the memory card. An example in which the first gold finger 721 is configured to transmit a data signal (NM DATA 0), the second gold finger 722 is configured to transmit a data signal (NM DATA 1), the ninth gold finger 729 is configured to transmit a data signal (NM DATA 3), and the tenth gold finger 7210 is configured to transmit a data signal (NM DATA 2) is used for description in the following embodiments. In some other embodiments, the data signals transmitted through the first gold finger 721, the second gold finger 722, the ninth gold finger 729, and the tenth gold finger 7210 can be exchanged. For example, the data signals transmitted through the first gold finger 721 and the second gold finger 722 are exchanged, and the data signals transmitted through the ninth gold finger 729 and the tenth gold finger 7210 are exchanged. Details are not described herein in another embodiment.

The third gold finger 723 is configured to transmit the data signal (SIM DATA) of the SIM card, the fourth gold finger 724 is configured to transmit the clock signal (SIM CLK) of the SIM card, the fifth gold finger 725 is configured to transmit the clock signal (NM CLK) of the memory card, the sixth gold finger 726 is configured to transmit the reset signal (SIM RST) of the SIM card and the command and response signal (NM CMD) of the memory card, the seventh gold finger 727 is configured to transmit the ground signal (SIM GND) of the SIM card and the ground signal (NM GND) of the memory card, and the eighth gold finger 728 is configured to transmit the power signal (SIM VCC) of the SIM card and the power signal (NM VCC) of the memory card.

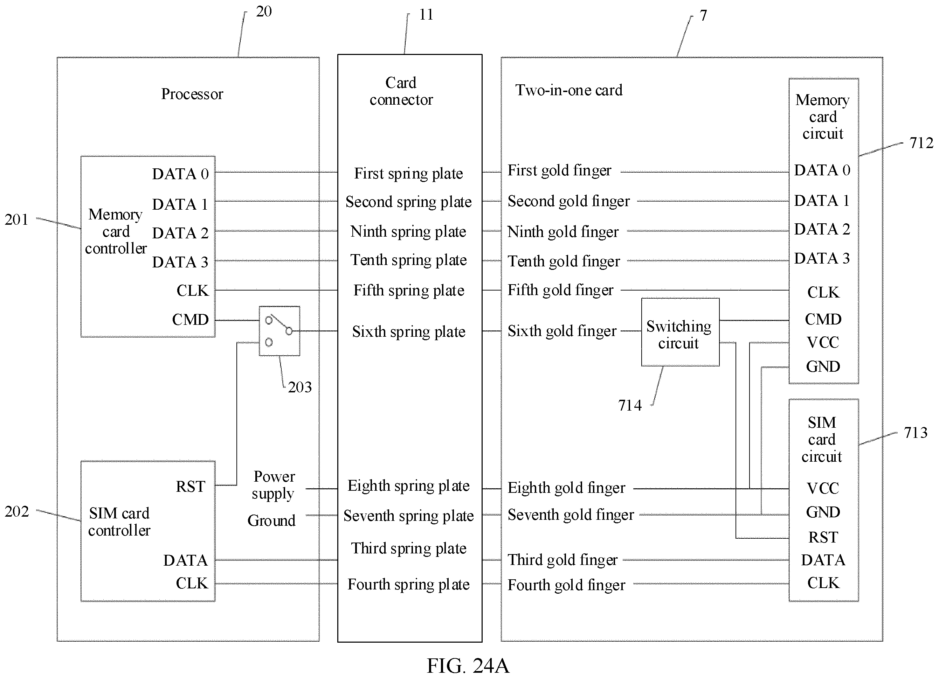

Refer to FIG. 23, FIG. 24A, and Table 3 together. Table 3 is an illustration table of a correspondence between the gold finger of the two-in-one card 7 shown in FIG. 23 and an interface of a circuit. In this embodiment of this application, for ease of illustration, an interface of a circuit or an interface of a controller used in the following descriptions and accompanying drawings is identified by using a signal transmitted through the interface of the circuit or the interface of the controller.

**Table 3**

| Two-in-one card 7 | | |
|---|---|---|
| Card interface 72 | Memory card circuit 712 | SIM card circuit 713 |
| First gold finger 721 | Data interface (DATA 0) | |
| Second gold finger 722 | Data interface (DATA 1) | |
| Third gold finger 723 | | Data interface (DATA) |
| Fourth gold finger 724 | | Clock interface (CLK) |
| Fifth gold finger 725 | Clock interface (CLK) | |
| Sixth gold finger 726 | Command and response interface (CMD) | Reset interface (RST) |
| Seventh gold finger 727 | Ground interface (GND) | Ground interface (GND) |
| Eighth gold finger 728 | Power interface (VCC) | Power interface (VCC) |
| Ninth gold finger 729 | Data interface (DATA 3) | |
| Tenth gold finger 7210 | Data interface (DATA 2) | |

In some embodiments, the memory card circuit 712 includes the four data interfaces (DATA 0, DATA 1, DATA 2, DATA 3), the clock interface (CLK), the command and response interface (CMD), the ground interface (GND), and the power interface (VCC). The four data interfaces (DATA 0, DATA 1, DATA 2, and DATA 3) of the memory card circuit 712 are configured to transmit the data signals (NM DATA 0, NM DATA 1, NM DATA 2, and NM DATA 3) of the memory card, the clock interface (CLK) of the memory card circuit 712 is configured to transmit the clock signal (NM CLK) of the memory card, the command and response interface (CMD) of the memory card circuit 712 is configured to transmit the command and response signal (NM CMD) of the memory card, the ground interface (GND) of the memory card circuit 712 is configured to transmit the ground signal (NM GND) of the memory card, and the power interface (VCC) of the memory card circuit 712 is configured to transmit the power signal (NM VCC) of the memory card. An interface of the memory card circuit 712 may be located in a control part of the memory card circuit 712.

The SIM card circuit 713 includes the data interface (DATA), the clock interface (CLK), the reset interface (RST), the ground interface (GND), and the power interface (VCC). The data interface (DATA) of the SIM card circuit 713 is configured to transmit the data signal (SIM DATA) of the SIM card, the clock interface (CLK) of the SIM card circuit 713 is configured to transmit the clock signal (SIM CLK) of the SIM card, the reset interface (RST) of the SIM card circuit 713 is configured to transmit the reset signal (SIM RST) of the SIM card, the ground interface (GND) of the SIM card circuit 713 is configured to transmit the ground signal (SIM GND) of the SIM card, and the power interface (VCC) of the SIM card circuit 713 is configured to transmit the power signal (SIM VCC) of the SIM card. An interface of the SIM card circuit 713 may be located in a control part of the SIM card circuit 713.

The two-in-one card 7 further includes a switching circuit 714. The first gold finger 721, the second gold finger 722, the ninth gold finger 729, and the tenth gold finger 7210 of the two-in-one card 7 are respectively electrically connected to the four data interfaces (DATA 0, DATA 1, DATA 3, and DATA 2) of the memory card circuit 712, the third gold finger 723 is electrically connected to the data interface (DATA) of the SIM card circuit 713, the fourth gold finger 724 is electrically connected to the clock interface (CLK) of the SIM card circuit 713, the fifth gold finger 725 is electrically connected to the clock interface (CLK) of the memory card circuit 712, the sixth gold finger 726 is electrically connected to the reset interface (RST) of the SIM card circuit 713 and the command and response interface (CMD) of the memory card circuit 712 through the switching circuit 714, the seventh gold finger 727 is electrically connected to the ground interface (GND) of the SIM card circuit 713 and the ground interface (GND) of the memory card circuit 712, and the eighth gold finger 728 is electrically connected to the power interface (VCC) of the SIM card circuit 713 and the power interface (VCC) of the memory card circuit 712.

In this embodiment, the two-in-one card 7 implements signal transmission of the SIM card circuit 713 and signal transmission of the memory card circuit 712 through the first gold finger 721 to the tenth gold finger 7210, so that the two-in-one card 7 can integrate a SIM card function and a memory card function, to implement a plurality of functions, and increase a degree of integration. When the two-in-one card 7 is inserted into an electronic device, a quantity of information cards that need to be inserted can be effectively reduced, and a quantity of card holder assemblies can be reduced, to help lighten and thin the electronic device, and improve user experience.

In addition, the first gold finger 721, the second gold finger 722, the ninth gold finger 729, and the tenth gold finger 7210 are exclusive gold fingers of the memory card circuit 712, and are configured to transmit high-speed data of the memory card. A connection circuit switching design between a high-speed data interface and a low-speed data interface does not need to be performed for the first gold finger 721, the second gold finger 722, the ninth gold finger 729, and the tenth gold finger 7210, to effectively reduce difficulty in designing an internal circuit of the two-in-one card 7. An implementation is easy.

In addition, the third gold finger 723, the fourth gold finger 724, and the fifth gold finger 725 are also exclusive gold fingers of the SIM card circuit 713 or the memory card circuit 712. The connection circuit switching design does not need to be performed for the gold fingers, so that the difficulty in designing the internal circuit of the two-in-one card 7 is low. An implementation is easy.

For example, the switching circuit 714 is configured to: detect a signal transmitted through the sixth gold finger 726, and implement corresponding switching. For example, if the switching circuit 714 detects that the signal transmitted through the sixth gold finger 726 is the reset signal (SIM RST) of the SIM card, the sixth gold finger 726 and the reset interface (RST) of the SIM card circuit 713 are connected. In this case, the sixth gold finger 726 and the command and response interface (CMD) of the memory card circuit 712 are in a disconnected state. If the switching circuit 714 detects that the signal transmitted through the sixth gold finger 726 is the command and response signal (NM CMD) of the memory card, the sixth gold finger 726 and the command and response interface (CMD) of the memory card circuit 712 are connected. In this case, the sixth gold finger 726 and the reset interface (RST) of the SIM card circuit 713 are in a disconnected state.

In this embodiment, the two-in-one card 7 implements transmission switching between two paths of signals through the switching circuit 714, so that both the reset signal (SIM RST) of the SIM card and the command and response signal (CMD) of the memory card circuit 712 can be transmitted through the sixth gold finger 726, a degree of integration of the card interface 72 of the two-in-one card 7 is high, difficulty in switching a connection circuit between an interface of the SIM card circuit 713 and an interface of the memory card circuit 712 is low, an implementation is easy, and reliability of the two-in-one card 7 is high.

Because the reset signal (SIM RST) of the SIM card is not a common signal, a default state of the switching circuit 714 may be set to connect the sixth gold finger 726 and the command and response interface (CMD) of the memory card circuit 712, and the sixth gold finger 726 and the reset interface (RST) of the SIM card circuit 713 are in a disconnected state.

For example, the SIM card circuit 713 and the memory card circuit 712 each transmit a ground signal through the seventh gold finger 727, and transmit a power signal through the eighth gold finger 728. The two-in-one card 7 may be provided with no solution of switching a related connection circuit, or a switching solution is easy to implement. Therefore, a degree of integration of the card interface 72 of the two-in-one card 7 can be increased, and the difficulty in designing the internal circuit is low, so that reliability of the two-in-one card 7 is high, and costs are low.

For example, a ground signal is transmitted through the seventh gold finger 727. The ground signal is transmitted to the ground interface (GND) of the SIM card circuit 713, and is also transmitted to the ground interface (GND) of the memory card circuit 712. A power signal is transmitted through the eighth gold finger 728. When the power signal (SIM VCC) of the SIM card and the power signal (NM VCC) of the memory card have same pressure, the power signal is transmitted to the power interface (VCC) of the SIM card circuit 713 and the power interface (VCC) of the memory card circuit 712; or when the power signal (SIM VCC) of the SIM card and the power signal (NM VCC) of the memory card have different pressure, the eighth gold finger 728 is electrically connected to one direct transmission branch and one voltage regulation branch, the direct transmission branch is connected to the voltage regulation branch in parallel, the direct transmission branch is configured to transmit a power signal of the eighth gold finger 728, the voltage regulation branch adjusts the power signal of the eighth gold finger 728, and then continues to transmit the power signal, and one of the direct transmission branch and the voltage regulation branch is electrically connected to the power interface (VCC) of the SIM card circuit 713, and the other is electrically connected to the power interface (VCC) of the memory card circuit 712. The voltage regulation branch may be connected to the voltage regulator (regulator) in series, to implement voltage regulation.

In some other embodiments, when the power signal (SIM VCC) of the SIM card and the power signal (NM VCC) of the memory card have same pressure, the eighth gold finger 728 may also be electrically connected to two voltage regulation branches connected in parallel, and the two voltage regulation branches are respectively connected to the power interface (VCC) of the SIM card circuit 713 and the power interface (VCC) of the memory card circuit 712.

In some other embodiments, when the power signal (SIM VCC) of the SIM card and the power signal (NM VCC) of the memory card have same pressure, a voltage regulation action of the power signal may also be completed by the memory card circuit 712 or the SIM card circuit 713. The power signal transmitted through the eighth gold finger 728 is directly transmitted to the power interface (VCC) of the SIM card circuit 713 and the power interface (VCC) of the memory card circuit 712. Whether to regulate a voltage of the power signal (SIM VCC) of the SIM card and a voltage of the power signal (NM VCC) of the memory card, a voltage regulation implementation, and the like are not strictly limited in this embodiment of this application.

In some other embodiments, the power interface and the ground interface of the memory card circuit 712 and the power interface and the ground interface of the SIM card circuit 713 may be independent of each other, to form a power interface and a ground interface of the two-in-one card 7.

Refer to FIG. 23 and FIG. 24A together. FIG. 24A is a schematic of a connection circuit between the two-in-one card 7 shown in FIG. 23 and an electronic device.

In some embodiments, when the two-in-one card 7 is inserted into a card holder assembly of the electronic device, and is electrically connected to a card connector 11, a first spring plate to a tenth spring plate of the card connector 11 abut against and are electrically connected to a first gold finger 721 to a tenth gold finger 7210 of the two-in-one card 7 in a one-to-one correspondence. For example, a processor 20 of the electronic device may include a memory card controller 201, a SIM card controller 202, a switch 203, a power interface, and a ground interface. The memory card controller 201 may be configured to control running of the memory card circuit of the two-in-one card 7, and the SIM card controller 202 may be configured to control running of the SIM card circuit of the two-in-one card 7. A plurality of controllers of the processor 20 may be components independent of each other, or may be combined by using an integrated component, or one controller may be split into a plurality of components. This is not strictly limited in this embodiment of this application.

For example, a power interface of the processor 20 is configured to transmit a power signal, and a ground interface is configured to transmit a ground signal. The power signal may be a power signal (SIM VCC) of the SIM card or a power signal (NM VCC) of the memory card that interacts with the two-in-one card 7, and the ground signal may be a ground signal (NM GND) of the memory card or a ground signal (SIM GND) of the SIM card that interacts with the two-in-one card 7. The power interface and the ground interface may be independent of the SIM card controller 202 and the memory card controller 201, or may be separately split and integrated into the SIM card controller 202 and the memory card controller 201. This is not strictly limited in this embodiment of this application. In FIG. 24A and subsequent accompanying drawings, that the power interface and the ground interface are independent of the SIM card controller 202 and the memory card controller 201 is used as an example for illustration, and the power interface and the ground interface are respectively identified as a power supply and a ground.

For example, the interface of the memory card controller 201 and an interface of the SIM card controller 202 are connected to eight of 10 spring plates of the card connector 11. The power interface is connected to another one of the 10 spring plates, and the ground interface is connected to the other one of the 10 spring plates. In this embodiment, the electronic device implements interaction such as calling, data communication, and data storage of the two-in-one card 7 through the 10 spring plates of the card connector 11. There is a small quantity of spring plates, and the card connector 11 and the card holder assembly have small volumes, to help lighten and thin the electronic device.

For example, the SIM card controller 202 includes a reset interface (RST), and the reset interface (RST) is configured to transmit a reset signal (SIM RST) of the SIM card. The switch 203 may be connected to the reset interface (RST) included in the SIM card controller 202 and one interface of the memory card controller 201, and the switch 203 is further connected to one of the 10 spring plates of the card connector 11.

In this embodiment, a reset operation of the SIM card circuit of the two-in-one card 7 is not a frequent operation, and a reset process can be completed quickly. When the reset interface (RST) and one interface of the memory card controller 201 share a same spring plate, the spring plate may be fully used for signal transmission in a time-division multiplexing manner. For example, when the SIM card circuit of the two-in-one card 7 needs to be reset, a spring plate of the card connector 11 is first connected to the reset interface (RST) included in the SIM card controller 202, to ensure networking experience of a user. After a reset process of a SIM card circuit of the two-in-one card 7 is completed, the spring plate is switched back to be connected to the memory card controller 201, to continue to complete a read/write operation of the two-in-one card 7, thereby improving working efficiency of the electronic device.

In some embodiments, the memory card controller 201 supports the EMMC interface protocol. The memory card controller 201 includes four data interfaces (DATA 0, DATA 1, DATA 2, and DATA 3), a clock interface (CLK), and a command and response interface (CMD). The four data interfaces (DATA 0, DATA 1, DATA 2, and DATA 3) are configured to transmit data signals (NM DATA 0, NM DATA 1, NM DATA 2, and NM DATA 3) of the memory card, the clock interface (CLK) is configured to transmit a clock signal (NM CLK) of the memory card, and the command and response interface (CMD) is configured to transmit a command and response signal (NM CMD) of the memory card. The SIM card controller 202 further includes a data interface (DATA) and a clock interface (CLK), the data interface (DATA) is configured to transmit a data signal (SIM DATA) of the SIM card, and the clock interface (CLK) is configured to transmit a clock signal (SIM CLK) of the SIM card.

The switch 203 is further connected to the command and response interface (CMD) of the memory card controller 201. Seven of the 10 spring plates of the card connector 11 are connected to the four data interfaces (DATA 0, DATA 1, DATA 2, and DATA 3) of the memory card controller 201, the clock interface (CLK) of the memory card controller 201, the data interface (DATA) of the SIM card controller 202, and the clock interface (CLK) of the SIM card controller 202 in a one-to-one correspondence.

For example, the four data interfaces (DATA 0, DATA 1, DATA 3, and DATA 2) of the memory card controller 201 are electrically connected to the first spring plate, the second spring plate, the ninth spring plate, and the tenth spring plate of the card connector 11 in a one-to-one correspondence manner, and the clock interface (CLK) of the memory card controller 201 is electrically connected to the fifth spring plate of the card connector 11. The data interface (DATA) of the SIM card controller 202 is electrically connected to the third spring plate of the card connector 11, and the clock interface (CLK) of the SIM card controller 202 is electrically connected to the fourth spring plate of the card connector 11. The switch 203 is connected to the command and response interface (CMD) of the memory card controller 201 and the reset interface (RST) of the SIM card controller 202, and the switch 203 is further connected to the sixth spring plate of the card connector 11. The switch 203 is configured to: connect the sixth spring plate and the command and response interface (CMD) of the memory card controller 201, or connect the sixth spring plate and the reset interface (RST) of the SIM card controller 202. The power interface of the processor 20 is electrically connected to an eighth spring plate of the card connector 11, and the ground interface is electrically connected to a seventh spring plate of the card connector 11.

In this embodiment, when the two-in-one card 7 is inserted into the electronic device and the memory card circuit 712 of the two-in-one card 7 works, the memory card controller 201 transmits the data signals (NM DATA 0, NM DATA 1, NM DATA 3, NM DATA 2) of the memory card with the two-in-one card 7 through the first spring plate, the second spring plate, the ninth spring plate, and the tenth spring plate, transmits the clock signal (NM CLK) of the memory card with the two-in-one card 7 through the fifth spring plate, and transmits the command and response signal (NM CMD) of the memory card with the two-in-one card 7 through the sixth spring plate. The power interface of the processor 20 transmits the power signal (NM VCC) of the memory card with the two-in-one card 7 through the eighth spring plate, and the ground interface transmits the ground signal (NM GND) of the memory card with the two-in-one card 7 through the seventh spring plate. The two-in-one card 7 implements a data storage function.

When the electronic device needs to store data, the switch 203 is controlled to connect the command and response interface (CMD) of the memory card controller 201 and the sixth spring plate, the sixth spring plate sends a signal to the sixth gold finger 726 of the two-in-one card 7, the switching circuit 714 connected to the sixth gold finger 726 identifies a transmission signal or a to-be-transmitted signal as the command and response signal (NM CMD) of the memory card, and the switching circuit 714 connects the sixth gold finger 726 and the command and response interface (CMD) of the memory card circuit 712, to implement transmission of the command and response signal (NM CMD) of the memory card.

When the two-in-one card 7 is inserted into the electronic device and the SIM card circuit 713 of the two-in-one card 7 works, the SIM card controller 202 transmits the data signal (SIM DATA) of the SIM card with the two-in-one card 7 through the third spring plate, and transmits the clock signal (SIM CLK) of the SIM card with the two-in-one card 7 through the fourth spring plate. The power interface of the processor 20 transmits the power signal (SIM VCC) of the SIM card with the two-in-one card 7 through the eighth spring plate, and the ground interface transmits the ground signal (SIM GND) of the SIM card with the two-in-one card 7 through the seventh spring plate. The two-in-one card 7 implements a calling function and a data communication function.

When the electronic device needs to perform a reset operation on the SIM card circuit 713 of the two-in-one card 7, the processor 20 controls the switch 203 to connect the reset interface (RST) of the SIM card controller 202 and the sixth spring plate, and the sixth spring plate sends a signal to the sixth gold finger 726 of the two-in-one card 7, and is connected to the switching circuit 714 of the sixth gold finger 726 to identify a transmission signal or a to-be-transmitted signal as the reset signal (SIM RST) of the SIM card. The switching circuit 714 connects the sixth gold finger 726 and the reset interface (SIM RST) of the SIM card circuit 713, to implement transmission of the reset signal (SIM RST) of the SIM card, and control the SIM card circuit 713 to be reset.

In this embodiment, the reset operation of the SIM card is not a frequent operation, and a reset process can be completed quickly. When the SIM card needs to be reset, the sixth gold finger 726 of the two-in-one card 7 is first connected to the reset interface (RST) of the SIM card, to ensure networking experience of the user. After the reset process of the SIM card is completed, the sixth gold finger 726 is switched back to be connected to the memory card circuit 712, to continue to complete a read/write operation, thereby improving working efficiency of the two-in-one card 7.

In some other embodiments, a signal arrangement of the card interface 72 of the two-in-one card 7 may be in another manner. For example, the fifth gold finger 725 is configured to transmit the command and response signal (NM CMD) of the memory card, and the sixth gold finger 726 is configured to: transmit the reset signal (SIM RST) of the SIM card and transmit the clock signal (NM CLK) of the memory card. Signal arrangements of the other gold fingers remain unchanged. In this case, the switching circuit 714 of the two-in-one card 7 is electrically connected to the clock interface (CLK) of the memory card circuit 712 and the reset interface (RST) of the SIM card circuit 713, the fifth gold finger 725 is connected to the command and response interface (CMD) of the memory card circuit 712, and a connection circuit between another interface and a gold finger remains unchanged. The command and response interface (CMD) of the memory card controller 201 of the electronic device is electrically connected to the fifth spring plate, the clock interface (CLK) of the memory card controller 201 is electrically connected to the switch 203, and a connection circuit between another interface and the spring plate of the card connector 11 remains unchanged. Working procedures of the two-in-one card 7 and the electronic device are adaptively adjusted. Details are not described herein again.

Table 4 is a table of a correspondence between a plurality of spring plates of the card connector 11 and each of a plurality of gold fingers of the nano-SIM card 3, a plurality of gold fingers of the first NM card 4, a plurality of gold fingers of the two-in-one card 7 shown in FIG. 23, and transmission signals thereof. When the two-in-one card 7 is connected to the card connector 11, the first spring plate to the tenth spring plate of the card connector 11 abut against and are electrically connected to the first gold finger 721 to the tenth gold finger 7210 of the two-in-one card 7 in a one-to-one correspondence, and locations of the third gold finger 723 to the eighth gold finger 728 of the two-in-one card 7 correspond to locations of the first gold finger 321 to the sixth gold finger 326 of the nano-SIM card 3 in a one-to-one correspondence. In some embodiments, locations of the third gold finger 723 to the tenth gold finger 7210 of the two-in-one card 7 correspond to locations of the first gold finger 421 to the eighth gold finger 428 of the first NM card 4 in a one-to-one correspondence.

**Table 4**

| Card connector 11 | Nano-SIM card 3 | | First NM card 4 | | Two-in-one card 7 | |
|---|---|---|---|---|---|---|
| First spring plate | | | | | First gold finger 721 | NM DATA 0 |
| Second spring plate | | | | | Second gold finger 722 | NM DATA 1 |
| Third spring plate | First gold finger 321 | DATA | First gold finger 421 | DATA 1 | Third gold finger 723 | SIM DATA |
| Fourth spring plate | Second gold finger 322 | CLK | Second gold finger 422 | CLK | Fourth gold finger 724 | SIM CLK |
| Fifth spring plate | Third gold finger 323 | VPP | Third gold finger 423 | CMD | Fifth gold finger 725 | NM CLK |
| Sixth spring plate | Fourth gold finger 324 | RST | Fourth gold finger 424 | DATA 0 | Sixth gold finger 726 | SIM RST and NM CMD |
| Seventh spring plate | Fifth gold finger 325 | GND | Fifth gold finger 425 | GND | Seventh gold finger 727 | SIM GND and NM GND |
| Eighth spring plate | Sixth gold finger 326 | VCC | Sixth gold finger 426 | VCC | Eighth gold finger 728 | SIM VCC and NM VCC |
| Ninth spring plate | | | Seventh gold finger 427 | DATA 3 | Ninth gold finger 729 | NM DATA 3 |
| Tenth spring | | | Eighth gold | DATA | Tenth gold | NM DATA 2 |
| plate | | | finger 428 | 2 | finger 7210 | |

When the electronic device is compatible with the nano-SIM card 3 and the two-in-one card 7 shown in FIG. 23, the SIM card controller 202 of the electronic device may not support a programming voltage/input signal. Alternatively, the SIM card controller 202 of the electronic device may support a programming voltage/input signal. In this case, the SIM card controller 202 of the electronic device may further include a programming voltage/input signal interface (VPP). The processor 20 may be provided with a switch, and the switch is connected to the programming voltage/input signal interface (VPP) of the SIM card controller 202 and the clock interface (CLK) of the memory card controller 201, and is further connected to the fifth spring plate of the card connector 11. When the nano-SIM card 3 is inserted into the electronic device, the switch connects the programming voltage/input signal interface (VPP) of the SIM card controller 202 and the fifth spring plate. When the two-in-one card 7 is inserted into the electronic device, the switch connects the clock interface (CLK) of the memory card controller 201 and the fifth spring plate.

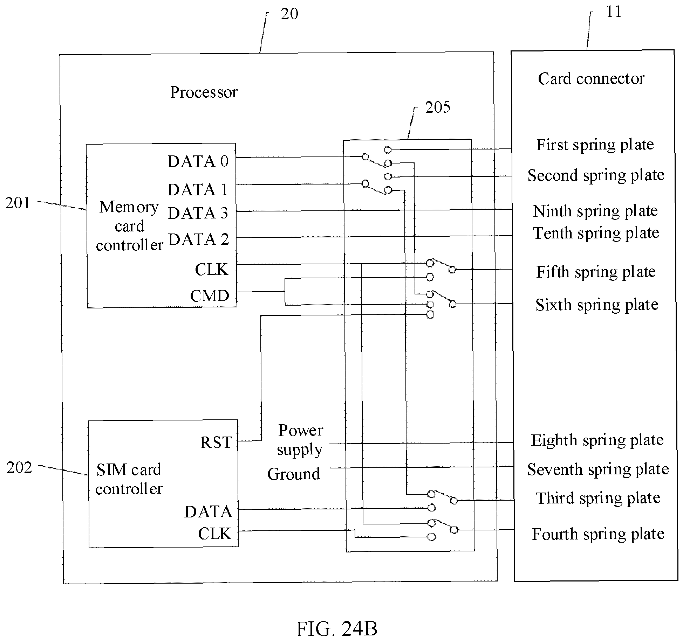

Refer to FIG. 24B and Table 4 together. FIG. 24B is a schematic of a partial circuit structure of an electronic device in some embodiments according to an embodiment of this application. The electronic device in this embodiment may include most technical content of the electronic device corresponding to FIG. 24A. The following mainly describes a difference between the two electronic devices.

In some embodiments, the electronic device is compatible with a nano-SIM card 3, a first NM card 4, and the two-in-one card 7 shown in FIG. 23. A processor 20 of the electronic device includes a memory card controller 201, a SIM card controller 202, and an interface controller 205. The interface controller 205 is electrically connected to the memory card controller 201 and the SIM card controller 202, and the interface controller 205 is further electrically connected to a plurality of spring plates of a card connector 11. An interface protocol (for example, an EMMC interface protocol) of the memory card controller 201 can communicate with the first NM card 4 and a memory card circuit of the two-in-one card 7, and is configured to control the first NM card 4 and the memory card circuit of the two-in-one card 7 to run. The SIM card controller 202 is configured to control the nano-SIM card 3 to run. When different information cards are inserted into a card holder assembly 10 of the electronic device and are electrically connected to the card connector 11, the interface controller 205 can control the memory card controller 201 and/or the SIM card controller 202 to communicate with the information card through the card connector 11. For example, when a card tray 2 is installed with the nano-SIM card 3, and the nano-SIM card 3 is inserted into the card holder assembly 10, the interface controller 205 controls the SIM card controller 202 to communicate with the nano-SIM card 3 through the card connector 11; when the card tray 2 is installed with the first NM card 4, and the first NM card 4 is inserted into the card holder assembly 10, the interface controller 205 controls the memory card controller 201 to communicate with the first NM card 4 through the card connector 11; and when the card tray 2 is installed with the two-in-one card 7, and the two-in-one card 7 is inserted into the card holder assembly 10, the interface controller 205 controls the memory card controller 201 and the SIM card controller 202 to communicate with the two-in-one card 7 through the card connector 11.

The interface controller 205 may include a plurality of switches, and a connection relationship between a plurality of spring plates of the card connector 11 and a plurality of controllers in the processor 20 is switched through the plurality of switches, to implement a communication requirement in different scenarios. The interface controller 205 may further include a plurality of conducting wires. For an example solution of the interface controller 205, refer to FIG. 24B. Details are not described herein again. For other technical content of this embodiment, refer to related descriptions of the embodiment corresponding to FIG. 24A. Details are not described herein again. The switch 203 may be a part of the interface controller 205.

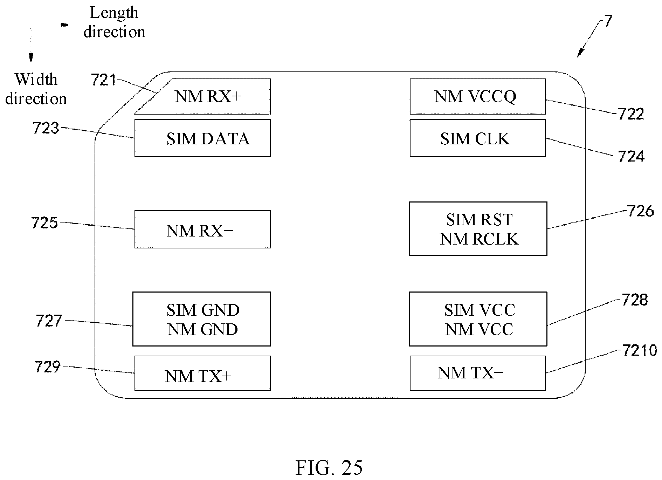

FIG. 25 is a diagram of the two-in-one card 7 shown in FIG. 17 in some other embodiments.

In some embodiments, a memory card circuit 712 of the two-in-one card 7 supports a UFS interface protocol. The UFS interface protocol is a standard that is formulated by the joint electron device engineering council (Joint Electron Device Engineering Council, JEDEC) association and that is used to define an electrical interface of a UFS universal flash memory and a UFS storage device. The UFS defines a complete protocol stack, and the complete protocol stack is an application layer, a transport layer, and an interconnection layer from top to bottom. The UFS defines a unique UFS feature set, a feature set of an EMMC standard is used as a subset. UniPro (interface) of an MIPI (Mobile Industry Processor Interface, Mobile Industry Processor Interface 20 interface) alliance is used as a data link layer and an M-PHY (serial interface) of the MIPI is used as a physical layer. The data link layer and the physical layer are collectively referred to as an interconnect layer (UFS InterConnect Layer). For the UFS interface protocol, Version 1.0 is released in 2011, and subsequently, Version 1.1, Version 2.0, Version 2.1, and Version 3.0 are respectively released in 2012, 2013, 2016, and 2018. An update of each version is accompanied by an increase in a speed. The UFS interface protocol is a bridge after Version 4.5 of an EMMC interface protocol. The UFS interface protocol is mainly improved on the transmission layer. Differential serial transmission is performed for data signal transmission in the UFS interface protocol, to support to simultaneously read and write data. In addition, because a differential signal has a strong anti-interference capability and can provide a wider bandwidth, compared with a previous generation protocol standard EMMC, the UFS interface protocol is featured by a fast speed and low power consumption.

A card interface 72 of the two-in-one card 7 includes a first gold finger 721 to a tenth gold finger 7210. In the first gold finger 721 to the tenth gold finger 7210, one gold finger is configured to transmit a data signal (SIM DATA) of a SIM card, one gold finger is configured to transmit a clock signal (SIM CLK) of the SIM card, four gold fingers are configured to transmit data signals (NM RX+, NM RX-, NM TX+, and NM TX-) of a memory card, one gold finger is configured to transmit a second power signal (NM VCCQ) of the memory card, one gold finger is configured to transmit a reset signal (SIM RST) of the SIM card and a reference clock signal (NM RCLK) of the memory card, one gold finger is configured to transmit a ground signal (SIM GND) of the SIM card and a ground signal (NM GND) of the memory card, and one gold finger is configured to transmit a power signal (SIM VCC) of the SIM card and a first power signal (NM VCC) of the memory card.

The data signal (NM RX+) of the memory card and the data signal (NM RX-) of the memory card are input differential signals. The data signal (NM TX+) of the memory card and the data signal (NM TX-) signal of the memory card are output differential signals. The first power signal (NM VCC) of the memory card is responsible for supplying power to a flash memory granularity (that is, a storage part) of a memory card circuit 712 of the two-in-one card 7. The second power signal (NM VCCQ) of the memory card is responsible for supplying power to a control part of the memory card circuit 712 of the two-in-one card 7. In some embodiments, the second power signal (NM VCCQ) of the memory card may also be responsible for supplying power to an M-PHY interface of the memory card circuit 712, a flash memory input/output, and another internal low-voltage circuit. A voltage of the first power signal (NM VCC) of the memory card may fall within a range of 1.7 V to 1.95 V, or may fall within a range of 2.7 V to 3.6 V A voltage of the second power signal (NM VCCQ) of the memory card may fall within a range of 1.1 Vto 1.3 V

For example, the first gold finger 721, a fifth gold finger 725, a ninth gold finger 729, and the tenth gold finger 7210 of the two-in-one card 7 are configured to transmit the data signals (NM RX+, NM RX-, NM TX+, and NM TX-) of the memory card. An example in which the first gold finger 721 is configured to transmit the data signal (NM RX+), the fifth gold finger 725 is configured to transmit the data signal (NM RX-), the ninth gold finger 729 is configured to transmit the data signal (NM TX+), and the tenth gold finger 7210 is configured to transmit the data signal (NM TX-) is used for description in the following embodiments. In some other embodiments, the data signals transmitted through the first gold finger 721, the fifth gold finger 725, the ninth gold finger 729, and the tenth gold finger 7210 can be exchanged. For example, the data signals transmitted through the first gold finger 721 and the fifth gold finger 725 are exchanged, and the data signals transmitted through the ninth gold finger 729 and the tenth gold finger 7210 are exchanged. Details are not described herein in another embodiment.

A second gold finger 722 is configured to transmit the second power signal (NM VCCQ) of the memory card, a third gold finger 723 is configured to transmit the data signal (SIM DATA) of the SIM card, a fourth gold finger 724 is configured to transmit the clock signal (SIM CLK) of the SIM card, a sixth gold finger 726 is configured to transmit the reset signal (SIM RST) of the SIM card and the reference clock signal (NM RCLK) of the memory card, the seventh gold finger 727 is configured to transmit the ground signal (SIM GND) of the SIM card and the ground signal (NM GND) of the memory card, and an eighth gold finger 728 is configured to transmit the power signal (SIM VCC) of the SIM card and the first power signal (NM VCC) of the memory card.

Refer to FIG. 25 and Table 5 together. Table 5 is an illustration table of a correspondence between the gold finger of the two-in-one card 7 shown in FIG. 25 and an interface of a circuit. In this embodiment of this application, for ease of illustration, an interface of a circuit or an interface of a controller used in the following descriptions and accompanying drawings is identified by using a signal transmitted through the interface of the circuit or the interface of the controller.

**Table 5**

| Two-in-one card 7 | | |
|---|---|---|
| Card interface 72 | Memory card circuit 712 | SIM card circuit 713 |
| First gold finger 721 | Data interface (RX+) | |
| Second gold finger 722 | Second power interface (VCCQ) | |
| Third gold finger 723 | | Data interface (DATA) |
| Fourth gold finger 724 | | Clock interface (CLK) |
| Fifth gold finger 725 | Data interface (RX-) | |
| Sixth gold finger 726 | Reference clock interface (RCLK) | Reset interface (RST) |
| Seventh gold finger 727 | Ground interface (GND) | Ground interface (GND) |
| Eighth gold finger 728 | First power interface (VCC) | Power interface (VCC) |
| Ninth gold finger 729 | Data interface (TX+) | |
| Tenth gold finger 7210 | Data interface (TX-) | |

In some embodiments, the memory card circuit 712 includes the four data interfaces (RX+, RX-, TX+, and TX-), the second power interface (VCCQ), the reference clock interface (RCLK), the ground interface (GND), and the first power interface (VCC). The four data interfaces (RX+, RX-, TX+, and TX-) of the memory card circuit 712 are configured to transmit the data signals (NM RX+, NM RX-, NM TX+, and NM TX-) of the memory card, the second power interface (VCCQ) of the memory card circuit 712 is configured to transmit the second power signal (NM VCCQ) of the memory card, the reference clock interface (RCLK) of the memory card circuit 712 is configured to transmit the reference clock signal (NM RCLK) of the memory card, the ground interface (GND) of the memory card circuit 712 is configured to transmit the ground signal (NM GND) of the memory card, and the first power interface (VCC) of the memory card circuit 712 is configured to transmit the first power signal (NM VCC) of the memory card.

The SIM card circuit 713 includes the data interface (DATA), the clock interface (CLK), the reset interface (RST), the ground interface (GND), and the power interface (VCC). The data interface (DATA) of the SIM card circuit 713 is configured to transmit the data signal (SIM DATA) of the SIM card, the clock interface (CLK) of the SIM card circuit 713 is configured to transmit the clock signal (SIM CLK) of the SIM card, the reset interface (RST) of the SIM card circuit 713 is configured to transmit the reset signal (SIM RST) of the SIM card, the ground interface (GND) of the SIM card circuit 713 is configured to transmit the ground signal (SIM GND) of the SIM card, and the power interface (VCC) of the SIM card circuit 713 is configured to transmit the power signal (SIM VCC) of the SIM card.

The two-in-one card 7 further includes a switching circuit 714. The first gold finger 721, the fifth gold finger 725, the ninth gold finger 729, and the tenth gold finger 7210 of the two-in-one card 7 are respectively electrically connected to the four data interfaces (RX+, RX-, TX+, and TX-) of the memory card circuit 712, the second gold finger 722 is electrically connected to the second power interface (VCCQ) of the memory card circuit 712, the third gold finger 723 is electrically connected to the data interface (DATA) of the SIM card circuit 713, the fourth gold finger 724 is electrically connected to the clock interface (CLK) of the SIM card circuit 713, the sixth gold finger 726 is electrically connected to the reset interface (RST) of the SIM card circuit 713 and the reference clock interface (RCLK) of the memory card circuit 712 through the switching circuit 714, the seventh gold finger 727 is electrically connected to the ground interface (GND) of the SIM card circuit 713 and the ground interface (GND) of the memory card circuit 712, and the eighth gold finger 728 is electrically connected to the power interface (VCC) of the SIM card circuit 713 and the first power interface (VCC) of the memory card circuit 712.

In this embodiment, the two-in-one card 7 implements signal transmission of the SIM card circuit 713 and signal transmission of the memory card circuit 712 through the first gold finger 721 to the tenth gold finger 7210, so that the two-in-one card 7 can integrate a SIM card function and a memory card function, to implement a plurality of functions, and increase a degree of integration. When the two-in-one card 7 is inserted into an electronic device, a quantity of information cards that need to be inserted can be effectively reduced, and a quantity of card holder assemblies can be reduced, to help lighten and thin the electronic device, and improve user experience.

In addition, the first gold finger 721, the fifth gold finger 725, the ninth gold finger 729, and the tenth gold finger 7210 are exclusive gold fingers of the memory card circuit 712, and are configured to transmit high-speed data of the memory card. A connection circuit switching design between a high-speed data interface and a low-speed data interface does not need to be performed for the first gold finger 721, the fifth gold finger 725, the ninth gold finger 729, and the tenth gold finger 7210, to effectively reduce difficulty in designing an internal circuit of the two-in-one card 7. An implementation is easy.

In addition, the second gold finger 722, the third gold finger 723, and the fourth gold finger 724 are also exclusive gold fingers of the SIM card circuit 713 or the memory card circuit 712. The connection circuit switching design does not need to be performed for the gold fingers, so that the difficulty in designing the internal circuit of the two-in-one card 7 is low. An implementation is easy.

For example, the switching circuit 714 is configured to: detect a signal transmitted through the sixth gold finger 726, and implement corresponding switching. For example, if the switching circuit 714 detects that the signal transmitted through the sixth gold finger 726 is the reset signal (SIM RST) of the SIM card, the sixth gold finger 726 and the reset interface (RST) of the SIM card circuit 713 are connected. In this case the sixth gold finger 726 and the reference clock interface (RCLK) of the memory card circuit 712 are in a disconnected state. If the switching circuit 714 detects that the signal transmitted through the sixth gold finger 726 is the reference clock signal (NM RCLK) of the memory card, the sixth gold finger 726 and the reference clock interface (RCLK) of the memory card circuit 712 are connected. In this case, the sixth gold finger 726 and the reset interface (RST) of the SIM card circuit 713 are in a disconnected state.

In this embodiment, the two-in-one card 7 implements transmission switching between two paths of signals through the switching circuit 714, so that both the reset signal (SIM RST) of the SIM card and the reference clock interface (RCLK) of the memory card circuit 712 can be transmitted through the sixth gold finger 726, a degree of integration of the card interface 72 of the two-in-one card 7 is high, difficulty in switching a connection circuit between an interface of the SIM card circuit 713 and an interface of the memory card circuit 712 is low, an implementation is easy, and reliability of the two-in-one card 7 is high.

Because the reset signal (SIM RST) of the SIM card is not a common signal, a default state of the switching circuit 714 may be set to connect the sixth gold finger 726 and the reference clock interface (RCLK) of the memory card circuit 712, and the sixth gold finger 726 and the reset interface (RST) of the SIM card circuit 713 are in a disconnected state.

In this embodiment, the reset operation of the SIM card is not a frequent operation, and a reset process can be completed quickly. When the SIM card needs to be reset, the sixth gold finger 726 of the two-in-one card 7 is first connected to the reset interface (RST) of the SIM card, to ensure networking experience of the user. After the reset process of the SIM card is completed, the sixth gold finger 726 is switched back to be connected to the memory card circuit 712, to continue to complete a read/write operation, thereby improving working efficiency of the two-in-one card 7.

For example, the SIM card circuit 713 and the memory card circuit 712 each transmit a ground signal through the seventh gold finger 727, and transmit a power signal through the eighth gold finger 728. The two-in-one card 7 may be provided with no solution of switching a related connection circuit, or a switching solution is easy to implement. Therefore, a degree of integration of the card interface 72 of the two-in-one card 7 can be increased, and the difficulty in designing the internal circuit is low, so that reliability of the two-in-one card 7 is high, and costs are low. For a solution in which the SIM card circuit 713 and the memory card circuit 712 transmit the ground signal and the power signal through the seventh gold finger 727 and the eighth gold finger 728, specifically refer to related descriptions in the foregoing embodiments. Details are not described herein again.

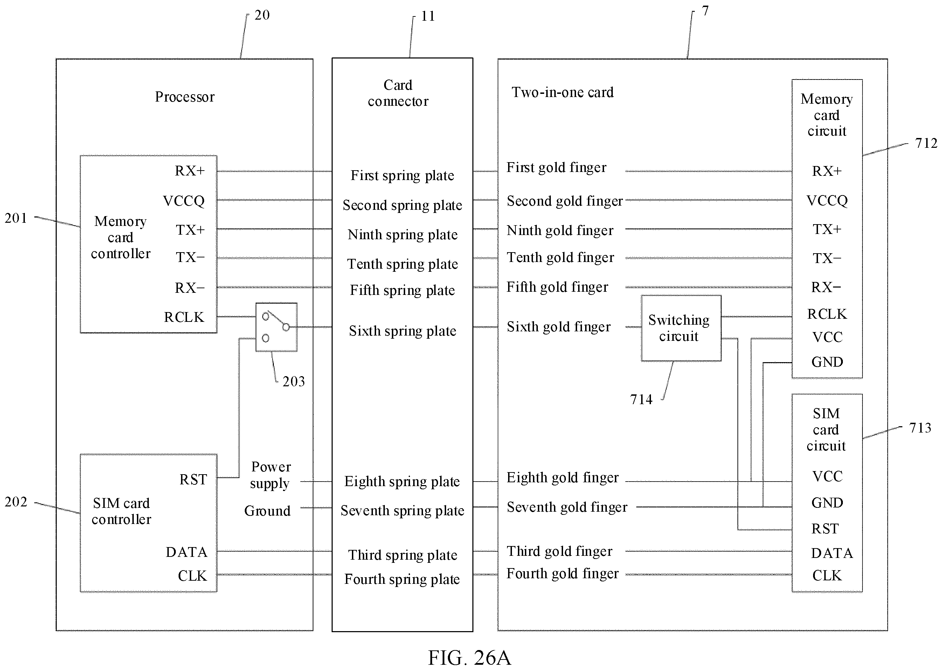

Refer to FIG. 25 and FIG. 26A together. FIG. 26A is a schematic of a connection circuit between the two-in-one card 7 shown in FIG. 25 and an electronic device.

In some embodiments, when the two-in-one card 7 is inserted into a card holder assembly of the electronic device, and is electrically connected to a card connector 11, a first spring plate to a tenth spring plate of the card connector 11 abut against and are electrically connected to a first gold finger 721 to a tenth gold finger 7210 of the two-in-one card 7 in a one-to-one correspondence. For example, a processor 20 of the electronic device may include a memory card controller 201, a SIM card controller 202, a switch 203, a power interface, and a ground interface. The memory card controller 201 may be configured to control running of the memory card circuit of the two-in-one card 7, and the SIM card controller 202 may be configured to control running of the SIM card circuit of the two-in-one card 7. A plurality of controllers of the processor 20 may be components independent of each other, or may be combined by using an integrated component, or one controller may be split into a plurality of components. This is not strictly limited in this embodiment of this application.

For example, a power interface of the processor 20 is configured to transmit a power signal, and a ground interface is configured to transmit a ground signal. The power signal may be a power signal (SIM VCC) of a SIM card or a first power signal (NM VCC) of a memory card, and the ground signal may be a ground signal (NM GND) of the memory card or a ground signal (SIM GND) of the SIM card. The power interface and the ground interface may be independent of the SIM card controller 202 and the memory card controller 201, or may be separately split and integrated into the SIM card controller 202 and the memory card controller 201. This is not strictly limited in this embodiment of this application. In FIG. 26A and subsequent accompanying drawings, that the power interface and the ground interface are independent of the SIM card controller 202 and the memory card controller 201 is used as an example for illustration, and the power interface and the ground interface are respectively identified as a power supply and a ground.

For example, the interface of the memory card controller 201 and an interface of the SIM card controller 202 are connected to eight of 10 spring plates of the card connector 11. The power interface is connected to another one of the 10 spring plates, and the ground interface is connected to the other one of the 10 spring plates. In this embodiment, the electronic device implements interaction such as calling, data communication, and data storage of the two-in-one card 7 through the 10 spring plates of the card connector 11. There is a small quantity of spring plates, and the card connector 11 and the card holder assembly have small volumes, to help lighten and thin the electronic device.

For example, the SIM card controller 202 includes a reset interface (RST), and the reset interface (RST) is configured to transmit a reset signal (SIM RST) of the SIM card. The switch 203 may be connected to the reset interface (RST) included in the SIM card controller 202 and one interface of the memory card controller 201, and the switch 203 is further connected to one of the 10 spring plates of the card connector 11.

In this embodiment, a reset operation of the SIM card circuit of the two-in-one card 7 is not a frequent operation, and a reset process can be completed quickly. When the reset interface (RST) and one interface of the memory card controller 201 share a same spring plate, the spring plate may be fully used for signal transmission in a time-division multiplexing manner. For example, when the SIM card circuit of the two-in-one card 7 needs to be reset, a spring plate of the card connector 11 is first connected to the reset interface (RST) included in the SIM card controller 202, to ensure networking experience of a user. After a reset process of a SIM card module of the two-in-one card 7 is completed, the spring plate is switched back to be connected to the memory card controller 201, to continue to complete a read/write operation of the two-in-one card 7, thereby improving working efficiency of the electronic device.

In some embodiments, the memory card controller 201 supports a UFS interface protocol. The memory card controller 201 includes four data interfaces (RX+, RX-, TX+, and TX-), a second power interface (VCCQ), and a reference clock interface (RCLK). The four data interfaces (RX+, RX-, TX+, and TX-) are configured to transmit data signals (NM RX+, NM RX-, NM TX+, and NM TX-) of the memory card, the second power interface (VCCQ) is configured to transmit a second power signal (NM VCCQ) of the memory card, and the reference clock interface (RCLK) is configured to transmit a reference clock signal (NM RCLK) of the memory card. The SIM card controller 202 further includes a data interface (DATA) and a clock interface (CLK), the data interface (DATA) is configured to transmit a data signal (SIM DATA) of the SIM card, and the clock interface (CLK) is configured to transmit a clock signal (SIM CLK) of the SIM card.

The switch 203 is further connected to the reference clock interface (RCLK) of the memory card controller 201, and seven of the 10 spring plates of the card connector 11 are connected to the four data interfaces (RX+, RX-, TX+, and TX-) of the memory card controller 201, the second power interface (VCCQ) of the memory card controller 201, the data interface (DATA) of the SIM card controller 202, and the data interface (DATA) of the SIM card controller 202 in a one-to-one correspondence.

For example, the four data interfaces (RX+, RX-, TX+, and TX-) of the memory card controller 201 are respectively electrically connected to the first spring plate, a fifth spring plate, a ninth spring plate, and the tenth spring plate of the card connector 11, and the second power interface (VCCQ) of the memory card controller 201 is electrically connected to the second spring plate of the card connector 11. The data interface (DATA) of the SIM card controller 202 is electrically connected to a third spring plate of the card connector 11, and the data interface (DATA) of the SIM card controller 202 is electrically connected to a fourth spring plate of the card connector 11. The switch 203 is connected to the reference clock interface (RCLK) of the memory card controller 201 and the reset interface (RST) of the SIM card controller 202, and the switch 203 is further connected to a sixth spring plate of the card connector 11. The switch 203 is configured to: connect the sixth spring plate and the reference clock interface (RCLK) of the memory card controller 201, or connect the sixth spring plate and the reset interface (RST) of the SIM card controller 202. The power interface of the processor 20 is electrically connected to an eighth spring plate of the card connector 11, and the ground interface is electrically connected to a seventh spring plate of the card connector 11.

In this embodiment, when the two-in-one card 7 is inserted into the electronic device and the memory card circuit 712 of the two-in-one card 7 works, the memory card controller 201 transmits the data signals (NM RX+, NM RX-, NM TX+, and NM TX-) of the memory card with the two-in-one card 7 through the first spring plate, the fifth spring plate, the ninth spring plate, and the tenth spring plate, transmits the second power signal (NM VCCQ) of the memory card with the two-in-one card 7 through the second spring plate, and transmits the reference clock signal (NM RCLK) of the memory card with the two-in-one card 7 through the sixth spring plate. The power interface of the processor 20 transmits the first power signal (NM VCC) of the memory card with the two-in-one card 7 through the eighth spring plate, and the ground interface transmits the ground signal (NM GND) of the memory card with the two-in-one card 7 through the seventh spring plate. The two-in-one card 7 implements a data storage function.

When the electronic device needs to store data, the switch 203 is controlled to connect the reference clock interface (RCLK) of the memory card controller 201 and the sixth spring plate, the sixth spring plate sends a signal to the sixth gold finger 726 of the two-in-one card 7, the switching circuit 714 connected to the sixth gold finger 726 identifies a transmission signal or a to-be-transmitted signal as the reference clock signal (NM RCLK) of the memory card, and the switching circuit 714 connects the sixth gold finger 726 and the reference clock interface (RCLK) of the memory card circuit 712, to implement transmission of the reference clock signal (NM RCLK) of the memory card.

When the two-in-one card 7 is inserted into the electronic device and the SIM card circuit 713 of the two-in-one card 7 works, the SIM card controller 202 transmits the data signal (SIM DATA) of the SIM card with the two-in-one card 7 through the third spring plate, and transmits the clock signal (SIM CLK) of the SIM card with the two-in-one card 7 through the fourth spring plate. The power interface of the processor 20 transmits the power signal (SIM VCC) of the SIM card with the two-in-one card 7 through the eighth spring plate, and the ground interface transmits the ground signal (SIM GND) of the SIM card with the two-in-one card 7 through the seventh spring plate. The two-in-one card 7 implements a calling function and a data communication function.

When the electronic device needs to perform a reset operation on the SIM card circuit 713 of the two-in-one card 7, the processor 20 controls the switch 203 to connect the reset interface (RST) of the SIM card controller 202 and the sixth spring plate, and the sixth spring plate sends a signal to the sixth gold finger 726 of the two-in-one card 7, and is connected to the switching circuit 714 of the sixth gold finger 726 to identify a transmission signal or a to-be-transmitted signal as the reset signal (SIM RST) of the SIM card. The switching circuit 714 connects the sixth gold finger 726 and the reset interface (SIM RST) of the SIM card circuit 713, to implement transmission of the reset signal (SIM RST) of the SIM card, and control the SIM card circuit 713 to be reset.

In this embodiment, the reset operation of the SIM card is not a frequent operation, and a reset process can be completed quickly. When the SIM card needs to be reset, the sixth gold finger 726 of the two-in-one card 7 is first connected to the reset interface (RST) of the SIM card, to ensure networking experience of the user. After the reset process of the SIM card is completed, the sixth gold finger 726 is switched back to be connected to the memory card circuit 712, to continue to complete a read/write operation, thereby improving working efficiency of the two-in-one card 7.

In some other embodiments, a signal arrangement of the card interface 72 of the two-in-one card 7 may be in another manner. For example, the first gold finger 721 is configured to transmit the second power signal (NM VCCQ) of the memory card, the second gold finger 722 is configured to transmit one of the data signals (for example, NM RX+) of the memory card, and signal arrangements of the other gold fingers remain unchanged. In this case, the first gold finger 721 of the two-in-one card 7 is electrically connected to the second power interface (VCCQ) of the memory card circuit 712, the second gold finger 722 is connected to one of the data interfaces (for example, RX+) of the memory card circuit 712, and a connection circuit between another interface and a gold finger remains unchanged. The second power interface (VCCQ) of the memory card controller 201 of the electronic device is electrically connected to the first spring plate, one of the data interfaces (for example, RX+) of the memory card controller 201 is electrically connected to the second spring plate, and a connection circuit between another interface and the spring plate of the card connector 11 remains unchanged. Working procedures of the two-in-one card 7 and the electronic device are adaptively adjusted. Details are not described herein again.

Table 6 is a table of a correspondence between a plurality of spring plates of the card connector 11 and each of a plurality of gold fingers of the nano-SIM card 3, a plurality of gold fingers of the first NM card 4, a plurality of gold fingers of the two-in-one card 7 shown in FIG. 25, and transmission signals thereof. When the two-in-one card 7 is connected to the card connector 11, the first spring plate to the tenth spring plate of the card connector 11 abut against and are electrically connected to the first gold finger 721 to the tenth gold finger 7210 of the two-in-one card 7 in a one-to-one correspondence, and locations of the third gold finger 723 to the eighth gold finger 728 of the two-in-one card 7 correspond to locations of the first gold finger 321 to the sixth gold finger 326 of the nano-SIM card 3 in a one-to-one correspondence. In some embodiments, locations of the third gold finger 723 to the tenth gold finger 7210 of the two-in-one card 7 correspond to locations of the first gold finger 421 to the eighth gold finger 428 of the first NM card 4 in a one-to-one correspondence.

**Table 6**

| Card connector 11 | Nano-SIM card 3 | | First NM card 4 | | Two-in-one card 7 | |
|---|---|---|---|---|---|---|
| First spring plate | | | | | First gold finger 721 | NMRX+ |
| Second spring plate | | | | | Second gold finger 722 | NM VCCQ |
| Third spring plate | First gold finger 321 | DATA | First gold finger 421 | DATA 1 | Third gold finger 723 | SIM DATA |
| Fourth spring plate | Second gold finger 322 | CLK | Second gold finger 422 | CLK | Fourth gold finger 724 | SIM CLK |
| Fifth spring plate | Third gold finger 323 | VPP | Third gold finger 423 | CMD | Fifth gold finger 725 | NMRX- |
| Sixth spring plate | Fourth gold finger 324 | RST | Fourth gold finger 424 | DATA 0 | Sixth gold finger 726 | SIM RST and NM RCLK |
| Seventh spring plate | Fifth gold finger 325 | GND | Fifth gold finger 425 | GND | Seventh gold finger 727 | SIM GND and NM GND |
| Eighth spring plate | Sixth gold finger 326 | VCC | Sixth gold finger 426 | VCC | Eighth gold finger 728 | SIM VCC and NM VCC |
| Ninth spring plate | | | Seventh gold finger 427 | DATA 3 | Ninth gold finger 729 | NM TX+ |
| Tenth spring plate | | | Eighth gold finger 428 | DATA 2 | Tenth gold finger 7210 | NM TX- |

When the electronic device is compatible with the nano-SIM card 3 and the two-in-one card 7 shown in FIG. 25, the SIM card controller 202 of the electronic device may not support a programming voltage/input signal. Alternatively, the SIM card controller 202 of the electronic device may support a programming voltage/input signal. In this case, the SIM card controller 202 of the electronic device may further include a programming voltage/input signal interface (VPP). The processor 20 may be provided with a switch, and the switch is connected to the programming voltage/input signal interface (VPP) of the SIM card controller 202 and the data interface (for example, RX-) of the memory card controller 201, and is further connected to the fifth spring plate of the card connector 11. When the nano-SIM card 3 is inserted into the electronic device, the switch connects the programming voltage/input signal interface (VPP) of the SIM card controller 202 and the fifth spring plate. When the two-in-one card 7 is inserted into the electronic device, the switch connects the data interface (for example, RX-) of the memory card controller 201 and the fifth spring plate.

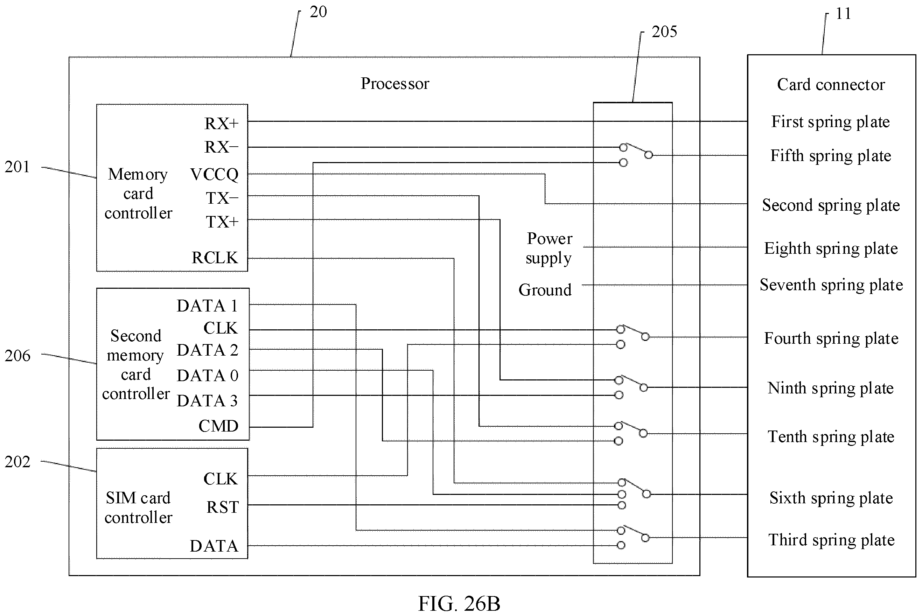

Refer to FIG. 26B and Table 6 together. FIG. 26B is a schematic of a partial circuit structure of an electronic device in some other embodiments according to an embodiment of this application. The electronic device in this embodiment may include most technical content of the electronic device corresponding to FIG. 26A. The following mainly describes a difference between the two electronic devices.

In some embodiments, the electronic device is compatible with a nano-SIM card 3, a first NM card 4, and the two-in-one card 7 shown in FIG. 25. A processor 20 of the electronic device includes a memory card controller 201, a second memory card controller 206, a SIM card controller 202, and an interface controller 205. The interface controller 205 is electrically connected to the memory card controller 201, the second memory card controller 206, and the SIM card controller 202, and the interface controller 205 is further electrically connected to a plurality of spring plates of a card connector 11.

An interface protocol (for example, a UFS interface protocol) of the memory card controller 201 can communicate with a memory card circuit of the two-in-one card 7, and is used to control the memory card circuit of the two-in-one card 7 to run. The SIM card controller 202 is configured to control the nano-SIM card 3 to run. An interface protocol (for example, an EMMC interface protocol) of the second memory card controller 206 can communicate with the first NM card 4, and is used to control the first NM card 4 to run.

When different information cards are inserted into a card holder assembly 10 of the electronic device, and are electrically connected to the card connector 11, the interface controller 205 can control the SIM card controller 202 to communicate with the information card through the card connector 11, or control the memory card controller 201 and the SIM card controller 202 to communicate with the information card through the card connector 11, or control the second memory card controller 206 to communicate with the information card through the card connector 11. For example, when a card tray 2 is installed with the nano-SIM card 3, and the nano-SIM card 3 is inserted into the card holder assembly 10, the interface controller 205 controls the SIM card controller 202 to communicate with the nano-SIM card 3 through the card connector 11; when the card tray 2 is installed with the first NM card 4, and the first NM card 4 is inserted into the card holder assembly 10, the interface controller 205 controls the second memory card controller 206 to communicate with the first NM card 4 through the card connector 11; and when the card tray 2 is installed with the two-in-one card 7, and the two-in-one card 7 is inserted into the card holder assembly 10, the interface controller 205 controls the memory card controller 201 and the SIM card controller 202 to communicate with the two-in-one card 7 through the card connector 11.

The interface controller 205 may include a plurality of switches, and a connection relationship between a plurality of spring plates of the card connector 11 and a plurality of controllers in the processor 20 is switched through the plurality of switches, to implement a communication requirement in different scenarios. The interface controller 205 may further include a plurality of conducting wires. For an example solution of the interface controller 205, refer to FIG. 26B. Details are not described herein again. For other technical content of this embodiment, refer to related descriptions of the embodiment corresponding to FIG. 26A. Details are not described herein again. The switch 203 may be a part of the interface controller 205.

In this embodiment, a high-speed signal (for example, NM RX+) of the two-in-one card 7 is arranged on the first gold finger 721. Because a location of the first gold finger 721 of the two-in-one card 7 corresponds to none of locations of all gold fingers of the nano-SIM card 3 and the first NM card 4, regardless of whether the information card inserted into the electronic device is the two-in-one card 7, the nano-SIM card 3, or the first NM card 4, the processor 20 does not need to switch an interface electrically connected to the first spring plate, to simplify a circuit of the processor 20, and reduce design difficulty and costs.

A second power signal (NM VCCQ) of a memory card of the two-in-one card 7 is arranged on a second gold finger 722. Because a location of the second gold finger 722 of the two-in-one card 7 corresponds to none of locations of all the gold fingers of the nano-SIM card 3 and the first NM card 4, the second gold finger 722 of the two-in-one card 7 does not need to share a same spring plate of the card connector 11 of the electronic device with the nano-SIM card 3 and the first NM card 4, to prevent the second power signal (NM VCCQ) of the memory card from sharing a same spring plate with data signals of the nano-SIM card 3 and the first NM card 4, and reduce a risk that the nano-SIM card 3 and the first NM card 4 are burnt by the second power signal (NM VCCQ) of the memory card when the nano-SIM card 3 and the first NM card 4 are inserted into the electronic device and are connected to the card connector 11. Reliability of compatibility of the electronic device with the nano-SIM card 3, the first NM card 4, and the two-in-one card 7 is high. In addition, a high-voltage resistant design that is used to prevent a circuit from being burnt by the second power signal (NM VCCQ) of the memory card does not need to be deployed for the first NM card 4 and the nano-SIM card 3 either, to reduce costs.

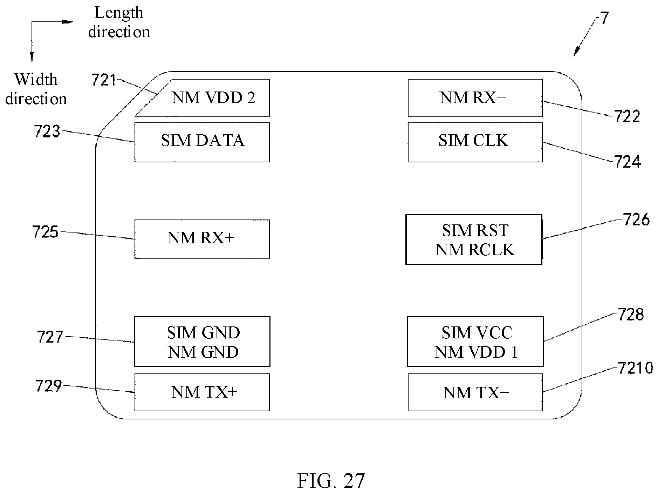

FIG. 27 is a diagram of the two-in-one card 7 shown in FIG. 17 in some other embodiments.

In some embodiments, a memory card circuit 712 of the two-in-one card 7 supports a PCIE interface protocol. PCIE, also referred to as PCI Express, is a hierarchical protocol, and includes a transaction layer, a data link layer, and a physical layer. A main advantage of PCIE is a high data transmission rate, and PCIE further has advantages such as a strong anti-interference capability, a long transmission distance, and low power consumption. A transmission mode of PCI Express is changed from a parallel transmission of PCI to serial transmission, to perform differential signal transmission (differential transmission). In such a transmission mode, same content is transmitted through positive and negative mirroring, to improve interference discovery and correction efficiency. In addition, full duplex may be used for PCI Express. Therefore, transmission efficiency of PCI Express is greatly improved compared with PCI. Since 2001, PCI Express has been updated from Version 1.0 to Version 5.0 in 20 years, and is formally updated to Version 6.0 in 2021. Undoubtedly, PCI Express is a popular transmission bus standard. A bandwidth of PCIE 1.0 is nearly two times of a bandwidth of PCI. A maximum bandwidth of PCI Express 6.0 released in 2021 is up to 256 GB/s. In 2018, the SD Association officially announced that an SD (Secure Digital) card is compatible with a PCI Express channel, and PCI Express is compatible with a mobile memory card. For an NM card, PCI Express provides an advantage of a large bandwidth.

A card interface 72 of the two-in-one card 7 includes a first gold finger 721 to a tenth gold finger 7210. In the first gold finger 721 to the tenth gold finger 7210, one gold finger is configured to transmit a data signal (SIM DATA) of a SIM card, one gold finger is configured to transmit a clock signal (SIM CLK) of the SIM card, four gold fingers are configured to transmit data signals (NM RX+, NM RX-, NM TX+, and NM TX-) of a memory card, one gold finger is configured to transmit a second power signal (NM VDD 2) of the memory card, one gold finger is configured to transmit a reset signal (SIM RST) of the SIM card and a reference clock signal (NM RCLK) of the memory card, one gold finger is configured to transmit a ground signal (SIM GND) of the SIM card and a ground signal (NM GND) of the memory card, and one gold finger is configured to transmit a power signal (SIM VCC) of the SIM card and a first power signal (NM VDD 1) of the memory card.

For example, a second gold finger 722, a fifth gold finger 725, a ninth gold finger 729, and the tenth gold finger 7210 of the two-in-one card 7 are configured to transmit the data signals (NM RX+, NM RX-, NM TX+, and NM TX-) of the memory card. An example in which the second gold finger 722 is configured to transmit a data signal (NM RX-), the fifth gold finger 725 is configured to transmit a data signal (NM RX+), the ninth gold finger 729 is configured to transmit a data signal (NM TX+), and the tenth gold finger 7210 is configured to transmit a data signal (NM TX-) is used for description in the following embodiments. In some other embodiments, the data signals transmitted through the second gold finger 722, the fifth gold finger 725, the ninth gold finger 729, and the tenth gold finger 7210 can be exchanged. For example, the data signals transmitted through the second gold finger 722 and the fifth gold finger 725 are exchanged, and the data signals transmitted through the ninth gold finger 729 and the tenth gold finger 7210 are exchanged. Details are not described herein in another embodiment.

The first gold finger 721 is configured to transmit the second power signal (NM VDD 2) of the memory card, the third gold finger 723 is configured to transmit the data signal (SIM DATA) of the SIM card, the fourth gold finger 724 is configured to transmit the clock signal (SIM CLK) of the SIM card, the sixth gold finger 726 is configured to transmit the reset signal (SIM RST) of the SIM card and the reference clock signal (NM RCLK) of the memory card, the seventh gold finger 727 is configured to transmit the ground signal (SIM GND) of the SIM card and the ground signal (NM GND) of the memory card, and the eighth gold finger 728 is configured to transmit the power signal (SIM VCC) of the SIM card and the first power signal (NM VDD 1) of the memory card.

Refer to FIG. 27 and Table 7 together. Table 7 is an illustration table of a correspondence between the gold finger of the two-in-one card 7 shown in FIG. 27 and an interface of a circuit. In this embodiment of this application, for ease of illustration, an interface of a circuit or an interface of a controller used in the following descriptions and accompanying drawings is identified by using a signal transmitted through the interface of the circuit or the interface of the controller.

| **Table 7** | | |
|---|---|---|
| Two-in-one card 7 | | |
| Card interface 72 | Memory card circuit 712 | SIM card circuit 713 |
| First gold finger 721 | Second power interface (VDD 2) | |
| Second gold finger 722 | Data interface (RX-) | |
| Third gold finger 723 | | Data interface (DATA) |
| Fourth gold finger 724 | | Clock interface (CLK) |
| Fifth gold finger 725 | Data interface (RX+) | |
| Sixth gold finger 726 | Reference clock interface (RCLK) | Reset interface (RST) |
| Seventh gold finger 727 | Ground interface (GND) | Ground interface (GND) |
| Eighth gold finger 728 | First power interface (VDD 1) | Power interface (VCC) |
| Ninth gold finger 729 | Data interface (TX+) | |
| Two-in-one card 7 | | |
| Card interface 72 | Memory card circuit 712 | SIM card circuit 713 |
| Tenth gold finger 7210 | Data interface (TX-) | |

In some embodiments, the memory card circuit 712 includes the four data interfaces (RX+, RX-, TX+, and TX-), the second power interface (VDD 2), the reference clock interface (RCLK), the ground interface (GND), and the first power interface (VDD 1). The four data interfaces (RX+, RX-, TX+, and TX-) of the memory card circuit 712 are configured to transmit the data signals (NM RX+, NM RX-, NM TX+, and NM TX-) of the memory card, the second power interface (VDD 2) of the memory card circuit 712 is configured to transmit the second power signal (NM VDD 2) of the memory card, the reference clock interface (RCLK) of the memory card circuit 712 is configured to transmit the reference clock signal (NM RCLK) of the memory card, the ground interface (GND) of the memory card circuit 712 is configured to transmit the ground signal (NM GND) of the memory card, and the first power interface (VDD 1) of the memory card circuit 712 is configured to transmit the first power signal (NM VDD 1) of the memory card.

The SIM card circuit 713 includes the data interface (DATA), the clock interface (CLK), the reset interface (RST), the ground interface (GND), and the power interface (VCC). The data interface (DATA) of the SIM card circuit 713 is configured to transmit the data signal (SIM DATA) of the SIM card, the clock interface (CLK) of the SIM card circuit 713 is configured to transmit the clock signal (SIM CLK) of the SIM card, the reset interface (RST) of the SIM card circuit 713 is configured to transmit the reset signal (SIM RST) of the SIM card, the ground interface (GND) of the SIM card circuit 713 is configured to transmit the ground signal (SIM GND) of the SIM card, and the power interface (VCC) of the SIM card circuit 713 is configured to transmit the power signal (SIM VCC) of the SIM card.

The second gold finger 722, the fifth gold finger 725, the ninth gold finger 729, and the tenth gold finger 7210 of the two-in-one card 7 are respectively electrically connected to the four data interfaces (RX+, RX-, TX+, and TX-) of the memory card circuit 712, the first gold finger 721 is electrically connected to the second power interface (VDD 2) of the memory card circuit 712, the third gold finger 723 is electrically connected to the data interface (DATA) of the SIM card circuit 713, the fourth gold finger 724 is electrically connected to the clock interface (CLK) of the SIM card circuit 713, the sixth gold finger 726 is electrically connected to the reset interface (RST) of the SIM card circuit 713 and the reference clock interface (RCLK) of the memory card circuit 712 through the switching circuit 714, the seventh gold finger 727 is electrically connected to the ground interface (GND) of the SIM card circuit 713 and the ground interface (GND) of the memory card circuit 712, and the eighth gold finger 728 is electrically connected to the power interface (VCC) of the SIM card circuit 713 and the first power interface (VDD 1) of the memory card circuit 712.

In this embodiment, the two-in-one card 7 implements signal transmission of the SIM card circuit 713 and signal transmission of the memory card circuit 712 through the first gold finger 721 to the tenth gold finger 7210, so that the two-in-one card 7 can integrate a SIM card function and a memory card function, to implement a plurality of functions, and increase a degree of integration. When the two-in-one card 7 is inserted into an electronic device, a quantity of information cards that need to be inserted can be effectively reduced, and a quantity of card holder assemblies can be reduced, to help lighten and thin the electronic device, and improve user experience.

In addition, the second gold finger 722, the fifth gold finger 725, the ninth gold finger 729, and the tenth gold finger 7210 are exclusive gold fingers of the memory card circuit 712, and are configured to transmit high-speed data of the memory card. A connection circuit switching design between a high-speed data interface and a low-speed data interface does not need to be performed for the second gold finger 722, the fifth gold finger 725, the ninth gold finger 729, and the tenth gold finger 7210, to effectively reduce difficulty in designing an internal circuit of the two-in-one card 7. An implementation is easy.

In addition, the first gold finger 721, the third gold finger 723, and the fourth gold finger 724 are also exclusive gold fingers of the SIM card circuit 713 or the memory card circuit 712. The connection circuit switching design does not need to be performed for the gold fingers, so that the difficulty in designing the internal circuit of the two-in-one card 7 is low. An implementation is easy.

For example, the switching circuit 714 is configured to: detect a signal transmitted through the sixth gold finger 726, and implement corresponding switching. For example, if the switching circuit 714 detects that the signal transmitted through the sixth gold finger 726 is the reset signal (SIM RST) of the SIM card, the sixth gold finger 726 and the reset interface (RST) of the SIM card circuit 713 are connected. In this case the sixth gold finger 726 and the reference clock interface (RCLK) of the memory card circuit 712 are in a disconnected state. If the switching circuit 714 detects that the signal transmitted through the sixth gold finger 726 is the reference clock signal (NM RCLK) of the memory card, the sixth gold finger 726 and the reference clock interface (RCLK) of the memory card circuit 712 are connected. In this case, the sixth gold finger 726 and the reset interface (RST) of the SIM card circuit 713 are in a disconnected state.

In this embodiment, the two-in-one card 7 implements transmission switching between two paths of signals through the switching circuit 714, so that both the reset signal (SIM RST) of the SIM card and the reference clock interface (RCLK) of the memory card circuit 712 can be transmitted through the sixth gold finger 726, a degree of integration of the card interface 72 of the two-in-one card 7 is high, difficulty in switching a connection circuit between an interface of the SIM card circuit 713 and an interface of the memory card circuit 712 is low, an implementation is easy, and reliability of the two-in-one card 7 is high.

Because the reset signal (SIM RST) of the SIM card is not a common signal, a default state of the switching circuit 714 may be set to connect the sixth gold finger 726 and the reference clock interface (RCLK) of the memory card circuit 712, and the sixth gold finger 726 and the reset interface (RST) of the SIM card circuit 713 are in a disconnected state.

In this embodiment, the reset operation of the SIM card is not a frequent operation, and a reset process can be completed quickly. When the SIM card needs to be reset, the sixth gold finger 726 of the two-in-one card 7 is first connected to the reset interface (RST) of the SIM card, to ensure networking experience of the user. After the reset process of the SIM card is completed, the sixth gold finger 726 is switched back to be connected to the memory card circuit 712, to continue to complete a read/write operation, thereby improving working efficiency of the two-in-one card 7.

For example, the SIM card circuit 713 and the memory card circuit 712 each transmit a ground signal through the seventh gold finger 727, and transmit a power signal through the eighth gold finger 728. The two-in-one card 7 may be provided with no solution of switching a related connection circuit, or a switching solution is easy to implement. Therefore, a degree of integration of the card interface 72 of the two-in-one card 7 can be increased, and the difficulty in designing the internal circuit is low, so that reliability of the two-in-one card 7 is high, and costs are low. For a solution in which the SIM card circuit 713 and the memory card circuit 712 transmit the ground signal and the power signal through the seventh gold finger 727 and the eighth gold finger 728, specifically refer to related descriptions in the foregoing embodiments. Details are not described herein again.

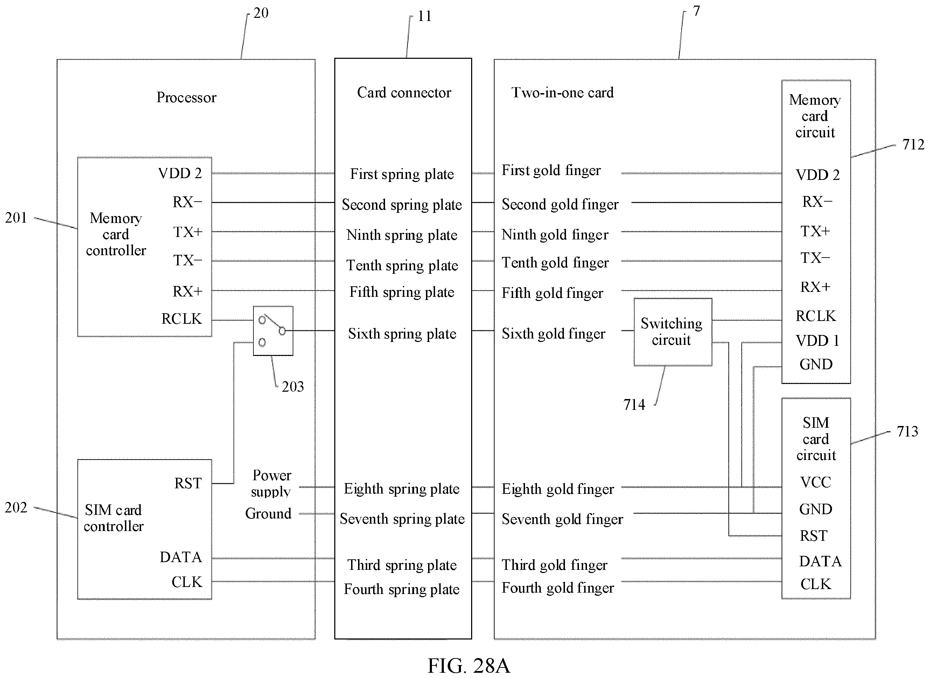

Refer to FIG. 27 and FIG. 28A together. FIG. 28A is a schematic of a connection circuit between the two-in-one card 7 shown in FIG. 27 and an electronic device.

In some embodiments, when the two-in-one card 7 is inserted into a card holder assembly of the electronic device, and is electrically connected to a card connector 11, a first spring plate to a tenth spring plate of the card connector 11 abut against and are electrically connected to a first gold finger 721 to a tenth gold finger 7210 of the two-in-one card 7 in a one-to-one correspondence. For example, a processor 20 of the electronic device may include a memory card controller 201, a SIM card controller 202, a switch 203, a power interface, and a ground interface. The memory card controller 201 may be configured to control running of the memory card circuit of the two-in-one card 7, and the SIM card controller 202 may be configured to control running of the SIM card circuit of the two-in-one card 7. A plurality of controllers of the processor 20 may be components independent of each other, or may be combined by using an integrated component, or one controller may be split into a plurality of components. This is not strictly limited in this embodiment of this application.

For example, a power interface of the processor 20 is configured to transmit a power signal, and a ground interface is configured to transmit a ground signal. The power signal may be a power signal (SIM VCC) of a SIM card or a first power signal (NM VDD 1) of a memory card, and the ground signal may be a ground signal (NM GND) of the memory card or a ground signal (SIM GND) of the SIM card. The power interface and the ground interface may be independent of the SIM card controller 202 and the memory card controller 201, or may be separately split and integrated into the SIM card controller 202 and the memory card controller 201. This is not strictly limited in this embodiment of this application. In FIG. 28A and subsequent accompanying drawings, that the power interface and the ground interface are independent of the SIM card controller 202 and the memory card controller 201 is used as an example for illustration, and the power interface and the ground interface are respectively identified as a power supply and a ground.

For example, the interface of the memory card controller 201 and an interface of the SIM card controller 202 are connected to eight of 10 spring plates of the card connector 11. The power interface is connected to another one of the 10 spring plates, and the ground interface is connected to the other one of the 10 spring plates. In this embodiment, the electronic device implements interaction such as calling, data communication, and data storage of the two-in-one card 7 through the 10 spring plates of the card connector 11. There is a small quantity of spring plates, and the card connector 11 and the card holder assembly have small volumes, to help lighten and thin the electronic device.

For example, the SIM card controller 202 includes a reset interface (RST), and the reset interface (RST) is configured to transmit a reset signal (SIM RST) of the SIM card. The switch 203 may be connected to the reset interface (RST) included in the SIM card controller 202 and one interface of the memory card controller 201, and the switch 203 is further connected to one of the 10 spring plates of the card connector 11.

In this embodiment, a reset operation of the SIM card circuit of the two-in-one card 7 is not a frequent operation, and a reset process can be completed quickly. When the reset interface (RST) and one interface of the memory card controller 201 share a same spring plate, the spring plate may be fully used for signal transmission in a time-division multiplexing manner. For example, when the SIM card circuit of the two-in-one card 7 needs to be reset, a spring plate of the card connector 11 is first connected to the reset interface (RST) included in the SIM card controller 202, to ensure networking experience of a user. After a reset process of a SIM card module of the two-in-one card 7 is completed, the spring plate is switched back to be connected to the memory card controller 201, to continue to complete a read/write operation of the two-in-one card 7, thereby improving working efficiency of the electronic device.

In some embodiments, the memory card controller 201 supports a PCIE interface protocol. The memory card controller 201 includes four data interfaces (RX+, RX-, TX+, and TX-), a second power interface (VDD 2), and a reference clock interface (RCLK). The four data interfaces (RX+, RX-, TX+, and TX-) are configured to transmit data signals (NM RX+, NM RX-, NM TX+, and NM TX-) of the memory card, the second power interface (VDD 2) is configured to transmit a second power signal (NM VDD 2) of the memory card, and the reference clock interface (RCLK) is configured to transmit a reference clock signal (NM RCLK) of the memory card. The SIM card controller 202 further includes a data interface (DATA) and a clock interface (CLK), the data interface (DATA) is configured to transmit a data signal (SIM DATA) of the SIM card, and the clock interface (CLK) is configured to transmit a clock signal (SIM CLK) of the SIM card.

The switch is further connected to the reference clock interface (RCLK) of the memory card controller 201, and seven of the 10 spring plates of the card connector 11 are connected to the four data interfaces (RX+, RX-, TX+, and TX-) of the memory card controller 201, the second power interface (VDD 2) of the memory card controller 201, the data interface (DATA) of the SIM card controller 202, and the data interface (DATA) of the SIM card controller 202 in a one-to-one correspondence.

For example, the four data interfaces (RX+, RX-, TX+, and TX-) of the memory card controller 201 are respectively electrically connected to a second spring plate, a fifth spring plate, a ninth spring plate, and the tenth spring plate of the card connector 11, and the second power interface (VDD 2) of the memory card controller 201 is electrically connected to the first spring plate of the card connector 11. The data interface (DATA) of the SIM card controller 202 is electrically connected to a third spring plate of the card connector 11, and the data interface (DATA) of the SIM card controller 202 is electrically connected to a fourth spring plate of the card connector 11. The switch 203 is connected to the reference clock interface (RCLK) of the memory card controller 201 and the reset interface (RST) of the SIM card controller 202, and the switch 203 is further connected to a sixth spring plate of the card connector 11. The switch 203 is configured to: connect the sixth spring plate and the reference clock interface (RCLK) of the memory card controller 201, or connect the sixth spring plate and the reset interface (RST) of the SIM card controller 202. The power interface of the processor 20 is electrically connected to an eighth spring plate of the card connector 11, and the ground interface is electrically connected to a seventh spring plate of the card connector 11.

In this embodiment, when the two-in-one card 7 is inserted into the electronic device and the memory card circuit 712 of the two-in-one card 7 works, the memory card controller 201 transmits the data signals (NM RX+, NM RX-, NM TX+, and NM TX-) of the memory card with the two-in-one card 7 through the second spring plate, the fifth spring plate, the ninth spring plate, and the tenth spring plate, transmits the second power signal (NM VDD 2) of the memory card with the two-in-one card 7 through the first spring plate, and transmits the reference clock signal (NM RCLK) of the memory card with the two-in-one card 7 through the sixth spring plate. The power interface of the processor 20 transmits the first power signal (NM VDD 1) of the memory card with the two-in-one card 7 through the eighth spring plate, and the ground interface transmits the ground signal (NM GND) of the memory card with the two-in-one card 7 through the seventh spring plate. The two-in-one card 7 implements a data storage function.

When the electronic device needs to store data, the switch 203 is controlled to connect the reference clock interface (RCLK) of the memory card controller 201 and the sixth spring plate, the sixth spring plate sends a signal to the sixth gold finger 726 of the two-in-one card 7, the switching circuit 714 connected to the sixth gold finger 726 identifies a transmission signal or a to-be-transmitted signal as the reference clock signal (NM RCLK) of the memory card, and the switching circuit 714 connects the sixth gold finger 726 and the reference clock interface (RCLK) of the memory card circuit 712, to implement transmission of the reference clock signal (NM RCLK) of the memory card.

When the two-in-one card 7 is inserted into the electronic device and the SIM card circuit 713 of the two-in-one card 7 works, the SIM card controller 202 transmits the data signal (SIM DATA) of the SIM card with the two-in-one card 7 through the third spring plate, and transmits the clock signal (SIM CLK) of the SIM card with the two-in-one card 7 through the fourth spring plate. The power interface of the processor 20 transmits the power signal (SIM VCC) of the SIM card with the two-in-one card 7 through the eighth spring plate, and the ground interface transmits the ground signal (SIM GND) of the SIM card with the two-in-one card 7 through the seventh spring plate. The two-in-one card 7 implements a calling function and a data communication function.

When the electronic device needs to perform a reset operation on the SIM card circuit 713 of the two-in-one card 7, the processor 20 controls the switch 203 to connect the reset interface (RST) of the SIM card controller 202 and the sixth spring plate, and the sixth spring plate sends a signal to the sixth gold finger 726 of the two-in-one card 7, and is connected to the switching circuit 714 of the sixth gold finger 726 to identify a transmission signal or a to-be-transmitted signal as the reset signal (SIM RST) of the SIM card. The switching circuit 714 connects the sixth gold finger 726 and the reset interface (SIM RST) of the SIM card circuit 713, to implement transmission of the reset signal (SIM RST) of the SIM card, and control the SIM card circuit 713 to be reset.

In this embodiment, the reset operation of the SIM card is not a frequent operation, and a reset process can be completed quickly. When the SIM card needs to be reset, the sixth gold finger 726 of the two-in-one card 7 is first connected to the reset interface (RST) of the SIM card, to ensure networking experience of the user. After the reset process of the SIM card is completed, the sixth gold finger 726 is switched back to be connected to the memory card circuit 712, to continue to complete a read/write operation, thereby improving working efficiency of the two-in-one card 7.

In some other embodiments, a signal arrangement of the card interface 72 of the two-in-one card 7 may be in another manner. For example, the first gold finger 721 is configured to transmit one data signal (for example, NM RX-) of the memory card, the second gold finger 722 is configured to transmit the second power signal (NM VDD 2) of the memory card, and signal arrangements of the other gold fingers remain unchanged. In this case, the first gold finger 721 of the two-in-one card 7 is connected to one data interface (for example, RX-) of the memory card circuit 712, the second gold finger 722 is electrically connected to the second power interface (VDD 2) of the memory card circuit 712, and a connection circuit between another interface and a gold finger remains unchanged. One data interface (for example, RX-) of the memory card controller 201 of the electronic device is electrically connected to the first spring plate, the second power interface (VDD 2) of the memory card controller 201 is electrically connected to the second spring plate, and a connection circuit between another interface and the spring plate of the card connector 11 remains unchanged. Working procedures of the two-in-one card 7 and the electronic device are adaptively adjusted. Details are not described herein again.

Table 8 is a table of a correspondence between a plurality of spring plates of the card connector 11 and each of a plurality of gold fingers of the nano-SIM card 3, a plurality of gold fingers of the first NM card 4, a plurality of gold fingers of the two-in-one card 7 shown in FIG. 27, and transmission signals thereof. When the two-in-one card 7 is connected to the card connector 11, the first spring plate to the tenth spring plate of the card connector 11 abut against and are electrically connected to the first gold finger 721 to the tenth gold finger 7210 of the two-in-one card 7 in a one-to-one correspondence, and locations of the third gold finger 723 to the eighth gold finger 728 of the two-in-one card 7 correspond to locations of the first gold finger 321 to the sixth gold finger 326 of the nano-SIM card 3 in a one-to-one correspondence. In some embodiments, locations of the third gold finger 723 to the tenth gold finger 7210 of the two-in-one card 7 correspond to locations of the first gold finger 421 to the eighth gold finger 428 of the first NM card 4 in a one-to-one correspondence.

**Table 8**

| Card connector 11 | Nano-SIM card 3 | | First NM card 4 | | Two-in-one card 7 | |
|---|---|---|---|---|---|---|
| First spring plate | | | | | First gold finger 721 | NM VDD 2 |
| Second spring plate | | | | | Second gold finger 722 | NMRX- |
| Third spring plate | First gold finger 321 | DATA | First gold finger 421 | DATA 1 | Third gold finger 723 | SIM DATA |
| Fourth spring plate | Second gold finger 322 | CLK | Second gold finger 422 | CLK | Fourth gold finger 724 | SIM CLK |
| Fifth spring plate | Third gold finger 323 | VPP | Third gold finger 423 | CMD | Fifth gold finger 725 | NM RX+ |
| Sixth spring plate | Fourth gold finger 324 | RST | Fourth gold finger 424 | DATA 0 | Sixth gold finger 726 | SIM RST and NM RCLK |
| Seventh spring plate | Fifth gold finger 325 | GND | Fifth gold finger 425 | GND | Seventh gold finger 727 | SIM GND and NM GND |
| Eighth spring plate | Sixth gold finger 326 | VCC | Sixth gold finger 426 | VCC | Eighth gold finger 728 | SIM VCC and NM VDD 1 |
| Ninth spring plate | | | Seventh gold finger 427 | DATA 3 | Ninth gold finger 729 | NM TX+ |
| Tenth spring plate | | | Eighth gold finger 428 | DATA 2 | Tenth gold finger 7210 | NM TX- |

When the electronic device is compatible with the nano-SIM card 3 and the two-in-one card 7 shown in FIG. 27, the SIM card controller 202 of the electronic device may not support a programming voltage/input signal. Alternatively, the SIM card controller 202 of the electronic device may support a programming voltage/input signal. In this case, the SIM card controller 202 of the electronic device may further include a programming voltage/input signal interface (VPP). The processor 20 may be provided with a switch, and the switch is connected to the programming voltage/input signal interface (VPP) of the SIM card controller 202 and the data interface (for example, RX+) of the memory card controller 201, and is further connected to the fifth spring plate of the card connector 11. When the nano-SIM card 3 is inserted into the electronic device, the switch connects the programming voltage/input signal interface (VPP) of the SIM card controller 202 and the fifth spring plate. When the two-in-one card 7 is inserted into the electronic device, the switch connects the data interface (for example, RX+) of the memory card controller 201 and the fifth spring plate.

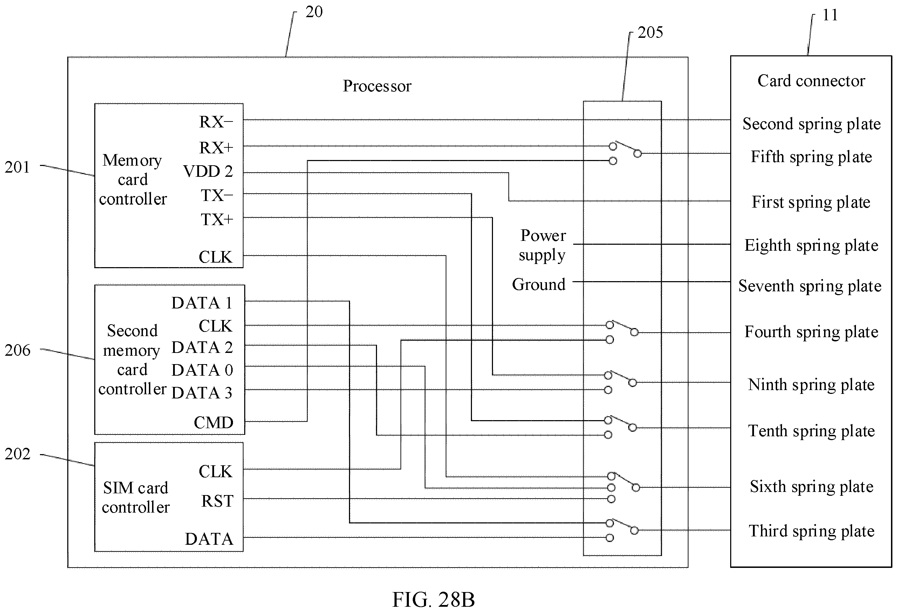

Refer to FIG. 28B and Table 8 together. FIG. 28B is a schematic of a partial circuit structure of an electronic device in some other embodiments according to an embodiment of this application. The electronic device in this embodiment may include most technical content of the electronic device corresponding to FIG. 28A. The following mainly describes a difference between the two electronic devices.

In some embodiments, the electronic device is compatible with a nano-SIM card 3, a first NM card 4, and the two-in-one card 7 shown in FIG. 27. A processor 20 of the electronic device includes a memory card controller 201, a second memory card controller 206, a SIM card controller 202, and an interface controller 205. The interface controller 205 is electrically connected to the memory card controller 201, the second memory card controller 206, and the SIM card controller 202, and the interface controller 205 is further electrically connected to a plurality of spring plates of a card connector 11.

An interface protocol (for example, an EMMC interface protocol) of the memory card controller 201 can communicate with a memory card circuit of the two-in-one card 7, and is used to control the memory card circuit of the two-in-one card 7 to run. The SIM card controller 202 is configured to control the nano-SIM card 3 to run. An interface protocol (for example, a PCIE interface protocol) of the second memory card controller 206 can communicate with the first NM card 4, and is used to control the first NM card 4 to run.

When different information cards are inserted into a card holder assembly 10 of the electronic device, and are electrically connected to the card connector 11, the interface controller 205 can control the SIM card controller 202 to communicate with the information card through the card connector 11, or control the memory card controller 201 and the SIM card controller 202 to communicate with the information card through the card connector 11, or control the second memory card controller 206 to communicate with the information card through the card connector 11. For example, when a card tray 2 is installed with the nano-SIM card 3, and the nano-SIM card 3 is inserted into the card holder assembly 10, the interface controller 205 controls the SIM card controller 202 to communicate with the nano-SIM card 3 through the card connector 11; when the card tray 2 is installed with the first NM card 4, and the first NM card 4 is inserted into the card holder assembly 10, the interface controller 205 controls the second memory card controller 206 to communicate with the first NM card 4 through the card connector 11; and when the card tray 2 is installed with the two-in-one card 7, and the two-in-one card 7 is inserted into the card holder assembly 10, the interface controller 205 controls the memory card controller 201 and the SIM card controller 202 to communicate with the two-in-one card 7 through the card connector 11.

The interface controller 205 may include a plurality of switches, and a connection relationship between a plurality of spring plates of the card connector 11 and a plurality of controllers in the processor 20 is switched through the plurality of switches, to implement a communication requirement in different scenarios. The interface controller 205 may further include a plurality of conducting wires. For an example solution of the interface controller 205, refer to FIG. 28B. Details are not described herein again. For other technical content of this embodiment, refer to related descriptions of the embodiment corresponding to FIG. 28A. Details are not described herein again. The switch 203 may be a part of the interface controller 205.

In this embodiment, a second power signal (NM VDD 2) of a memory card of the two-in-one card 7 is arranged on a first gold finger 721. Because a location of the first gold finger 721 of the two-in-one card 7 corresponds to none of locations of all gold fingers of the nano-SIM card 3 and the first NM card 4, the first gold finger 721 of the two-in-one card 7 does not need to share a same spring plate of the card connector 11 of the electronic device with the nano-SIM card 3 and the first NM card 4, to prevent the second power signal (NM VDD 2) of the memory card from sharing a same spring plate with data signals of the nano-SIM card 3 and the first NM card 4, and reduce a risk that the nano-SIM card 3 and the first NM card 4 are burnt by the second power signal (NM VDD 2) of the memory card when the nano-SIM card 3 and the first NM card 4 are inserted into the electronic device and are connected to the card connector 11. Reliability of compatibility of the electronic device with the nano-SIM card 3, the first NM card 4, and the two-in-one card 7 is high. In addition, a high-voltage resistant design that is used to prevent a circuit from being burnt by the second power signal (NM VDD 2) of the memory card does not need to be deployed for the first NM card 4 and the nano-SIM card 3 either, to reduce costs.

A high-speed signal (for example, NM RX-) of the two-in-one card 7 is arranged on the second gold finger 722. Because a location of the second gold finger 722 of the two-in-one card 7 corresponds to none of locations of all gold fingers of the nano-SIM card 3 and the first NM card 4, regardless of whether the information card inserted into the electronic device is the two-in-one card 7, the nano-SIM card 3, or the first NM card 4, the processor 20 does not need to switch an interface electrically connected to the second spring plate, to simplify a circuit of the processor 20, and reduce design difficulty and costs.

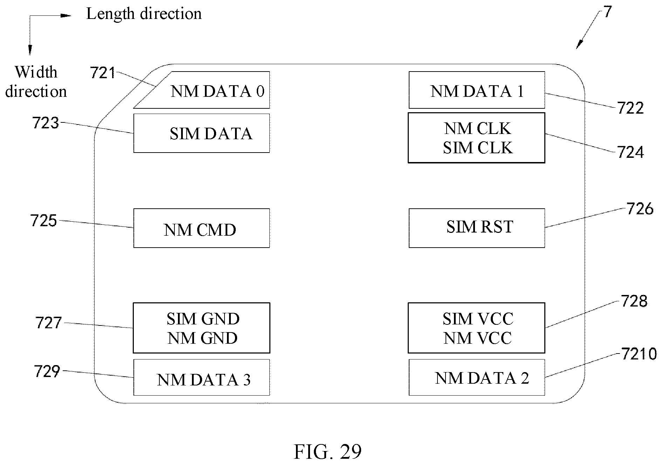

FIG. 29 is a diagram of the two-in-one card 7 shown in FIG. 17 in some other embodiments.

In some embodiments, an EMMC interface protocol is used for a memory card circuit 712 of the two-in-one card 7. A card interface 72 of the two-in-one card 7 includes a first gold finger 721 to a tenth gold finger 7210. In the first gold finger 721 to the tenth gold finger 7210, one gold finger is configured to transmit a data signal (SIM DATA) of a SIM card, one gold finger is configured to transmit a reset signal (SIM RST) of the SIM card, four gold fingers are configured to transmit data signals (NM DATA 0, NM DATA 1, NM DATA 2, and NM DATA 3) of a memory card, one gold finger is configured to transmit a command and response signal (NM CMD) of the memory card, one gold finger is configured to transmit a clock signal (SIM CLK) of the SIM card and a clock signal (NM CLK) of the memory card, one gold finger is configured to transmit a ground signal (SIM GND) of the SIM card and a ground signal (NM GND) of the memory card, and one gold finger is configured to transmit a power signal (SIM VCC) of the SIM card and a power signal (NM VCC) of the memory card.

For example, the first gold finger 721, a second gold finger 722, a ninth gold finger 729, and the tenth gold finger 7210 of the two-in-one card 7 are configured to transmit data signals (NM DATA 0, NM DATA 1, NM DATA 3, and NM DATA 2) of the memory card. An example in which the first gold finger 721 is configured to transmit a data signal (NM DATA 0), the second gold finger 722 is configured to transmit a data signal (NM DATA 1), the ninth gold finger 729 is configured to transmit a data signal (NM DATA 3), and the tenth gold finger 7210 is configured to transmit a data signal (NM DATA 2) is used for description in the following embodiments. In some other embodiments, the data signals transmitted through the first gold finger 721, the second gold finger 722, the ninth gold finger 729, and the tenth gold finger 7210 can be exchanged. For example, the data signals transmitted through the first gold finger 721 and the second gold finger 722 are exchanged, and the data signals transmitted through the ninth gold finger 729 and the tenth gold finger 7210 are exchanged. Details are not described herein in another embodiment.

The third gold finger 723 is configured to transmit a data signal (SIM DATA) of the SIM card, the fourth gold finger 724 is configured to transmit the clock signal (SIM CLK) of the SIM card and the clock signal (NM CLK) of the memory card, the fifth gold finger 725 is configured to transmit the command and response signal (NM CMD) of the memory card, the sixth gold finger 726 is configured to transmit the reset signal (SIM RST) of the SIM card, the seventh gold finger 727 is configured to transmit the ground signal (SIM GND) of the SIM card and the ground signal (NM GND) of the memory card, and the eighth gold finger 728 is configured to transmit the power signal (SIM VCC) of the SIM card and the power signal (NM VCC) of the memory card.

Refer to FIG. 29 and Table 9 together. Table 9 is an illustration table of a correspondence between the gold finger of the two-in-one card 7 shown in FIG. 29 and an interface of a circuit. In this embodiment of this application, for ease of illustration, an interface of a circuit or an interface of a controller used in the following descriptions and accompanying drawings is identified by using a signal transmitted through the interface of the circuit or the interface of the controller.

**Table 9**

| Two-in-one card 7 | | |
|---|---|---|
| Card interface 72 | Memory card circuit 712 | SIM card circuit 713 |
| First gold finger 721 | Data interface (DATA 0) | |
| Second gold finger 722 | Data interface (DATA 1) | |
| Third gold finger 723 | | Data interface (DATA) |
| Fourth gold finger 724 | Clock interface (CLK) | Clock interface (CLK) |
| Fifth gold finger 725 | Command and response interface (CMD) | |
| Sixth gold finger 726 | | Reset interface (RST) |
| Seventh gold finger 727 | Ground interface (GND) | Ground interface (GND) |
| Eighth gold finger 728 | Power interface (VCC) | Power interface (VCC) |
| Ninth gold finger 729 | Data interface (DATA 3) | |
| Tenth gold finger 7210 | Data interface (DATA 2) | |

In some embodiments, the memory card circuit 712 includes the four data interfaces (DATA 0, DATA 1, DATA 2, DATA 3), the clock interface (CLK), the command and response interface (CMD), the ground interface (GND), and the power interface (VCC). The four data interfaces (DATA 0, DATA 1, DATA 2, and DATA 3) of the memory card circuit 712 are configured to transmit the data signals (NM DATA 0, NM DATA 1, NM DATA 2, and NM DATA 3) of the memory card, the clock interface (CLK) of the memory card circuit 712 is configured to transmit the clock signal (NM CLK) of the memory card, the command and response interface (CMD) of the memory card circuit 712 is configured to transmit the command and response signal (NM CMD) of the memory card, the ground interface (GND) of the memory card circuit 712 is configured to transmit the ground signal (NM GND) of the memory card, and the power interface (VCC) of the memory card circuit 712 is configured to transmit the power signal (NM VCC) of the memory card. An interface of the memory card circuit 712 may be located in a control part of the memory card circuit 712.

The SIM card circuit 713 includes the data interface (DATA), the clock interface (CLK), the reset interface (RST), the ground interface (GND), and the power interface (VCC). The data interface (DATA) of the SIM card circuit 713 is configured to transmit the data signal (SIM DATA) of the SIM card, the clock interface (CLK) of the SIM card circuit 713 is configured to transmit the clock signal (SIM CLK) of the SIM card, the reset interface (RST) of the SIM card circuit 713 is configured to transmit the reset signal (SIM RST) of the SIM card, the ground interface (GND) of the SIM card circuit 713 is configured to transmit the ground signal (SIM GND) of the SIM card, and the power interface (VCC) of the SIM card circuit 713 is configured to transmit the power signal (SIM VCC) of the SIM card. An interface of the SIM card circuit 713 may be located in a control part of the SIM card circuit 713.

The two-in-one card 7 further includes a frequency divider 715. The first gold finger 721, the second gold finger 722, the ninth gold finger 729, and the tenth gold finger 7210 of the two-in-one card 7 are respectively electrically connected to the four data interfaces (DATA 0, DATA 1, DATA 3, and DATA 2) of the memory card circuit 712, the third gold finger 723 is electrically connected to the data interface (DATA) of the SIM card circuit 713, the fourth gold finger 724 is electrically connected to the clock interface (CLK) of the memory card circuit 712 and is electrically connected to the clock interface (CLK) of the SIM card circuit 713 through the frequency divider 715, the fifth gold finger 725 is electrically connected to the command and response interface (CMD) of the memory card circuit 712, the sixth gold finger 726 is electrically connected to the reset interface (RST) of the SIM card circuit 713, the seventh gold finger 727 is electrically connected to the ground interface (GND) of the SIM card circuit 713 and the ground interface (GND) of the memory card circuit 712, and the eighth gold finger 728 is electrically connected to the power interface (VCC) of the SIM card circuit 713 and the power interface (VCC) of the memory card circuit 712.

In this embodiment, the two-in-one card 7 implements signal transmission of the SIM card circuit 713 and signal transmission of the memory card circuit 712 through the first gold finger 721 to the tenth gold finger 7210, so that the two-in-one card 7 can integrate a SIM card function and a memory card function, to implement a plurality of functions, and increase a degree of integration. When the two-in-one card 7 is inserted into an electronic device, a quantity of information cards that need to be inserted can be effectively reduced, and a quantity of card holder assemblies can be reduced, to help lighten and thin the electronic device, and improve user experience.

In addition, the first gold finger 721, the second gold finger 722, the ninth gold finger 729, and the tenth gold finger 7210 are exclusive gold fingers of the memory card circuit 712, and are configured to transmit high-speed data of the memory card. A connection circuit switching design between a high-speed data interface and a low-speed data interface does not need to be performed for the first gold finger 721, the second gold finger 722, the ninth gold finger 729, and the tenth gold finger 7210, to effectively reduce difficulty in designing an internal circuit of the two-in-one card 7. An implementation is easy.

In addition, the third gold finger 723, the fifth gold finger 725, and the sixth gold finger 726 are also exclusive gold fingers of the SIM card circuit 713 or the memory card circuit 712. The connection circuit switching design does not need to be performed for the gold fingers, so that the difficulty in designing the internal circuit of the two-in-one card 7 is low. An implementation is easy.

For example, the frequency divider 715 is configured to change a frequency of a signal. In this embodiment, the frequency divider 715 is disposed, so that an initial clock signal transmitted through the fourth gold finger 724 may be the clock signal (NM CLK) of the memory card, and the clock signal (NM CLK) of the memory card is directly transmitted to the clock interface (CLK) of the memory card circuit 712. The frequency divider 715 adjusts a frequency of the clock signal (NM CLK) of the memory card, to form the clock signal (SIM CLK) of the SIM card, and then transmits the clock signal (SIM CLK) of the SIM card to the clock interface (CLK) of the SIM card circuit 713. For example, the frequency of the clock signal (NM CLK) of the memory card is 200 MHz, and the frequency divider 715 may adjust the frequency to 5 MHz, to form the clock signal (SIM CLK) of the SIM card.

In this embodiment, the two-in-one card 7 may implement sharing for the clock signal (NM CLK) of the memory card and the clock interface (CLK) of the SIM card circuit 713 through a same gold finger (namely, the fourth gold finger 724), so that a degree of integration of the card interface 72 of the two-in-one card 7 is high. In addition, connection circuit switching does not need to be performed for the fourth gold finger 724, implementation difficulty of the two-in-one card 7 is low, an implementation is easy, and reliability of the two-in-one card 7 is high. The clock signal (NM CLK) of the memory card and the clock interface (CLK) of the SIM card circuit 713 may share the fourth gold finger 724 in a time-division manner, or may simultaneously use the fourth gold finger 724. This is not strictly limited in this application.

For example, the SIM card circuit 713 and the memory card circuit 712 each transmit a ground signal through the seventh gold finger 727, and transmit a power signal through the eighth gold finger 728. The two-in-one card 7 may be provided with no solution of switching a related connection circuit, or a switching solution is easy to implement. Therefore, a degree of integration of the card interface 72 of the two-in-one card 7 can be increased, and the difficulty in designing the internal circuit is low, so that reliability of the two-in-one card 7 is high, and costs are low. For a solution in which the SIM card circuit 713 and the memory card circuit 712 transmit the ground signal and the power signal through the seventh gold finger 727 and the eighth gold finger 728, specifically refer to related descriptions in the foregoing embodiments. Details are not described herein again.

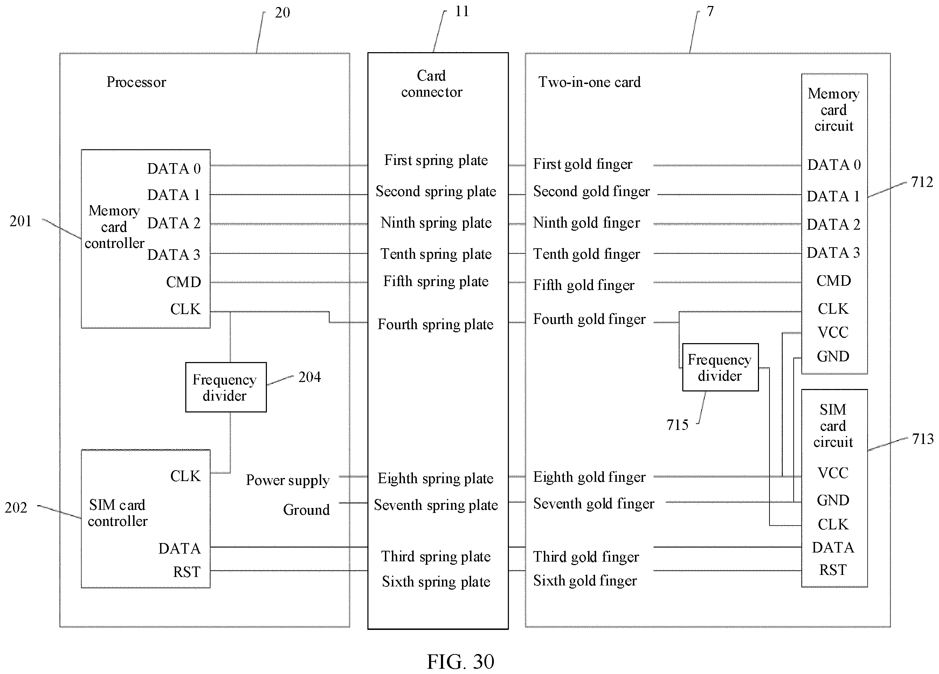

Refer to FIG. 29 and FIG. 30 together. FIG. 30 is a schematic of a connection circuit between the two-in-one card 7 shown in FIG. 29 and an electronic device.

In some embodiments, when the two-in-one card 7 is inserted into a card holder assembly of the electronic device, and is electrically connected to a card connector 11, a first spring plate to a tenth spring plate of the card connector 11 abut against and are electrically connected to a first gold finger 721 to a tenth gold finger 7210 of the two-in-one card 7 in a one-to-one correspondence. For example, a processor 20 of the electronic device may include a memory card controller 201, a SIM card controller 202, a frequency divider 204, a power interface, and a ground interface. The memory card controller 201 may be configured to control running of the memory card circuit of the two-in-one card 7, and the SIM card controller 202 may be configured to control running of the SIM card circuit of the two-in-one card 7. A plurality of controllers of the processor 20 may be components independent of each other, or may be combined by using an integrated component, or one controller may be split into a plurality of components. This is not strictly limited in this embodiment of this application.

For example, a power interface of the processor 20 is configured to transmit a power signal, and a ground interface is configured to transmit a ground signal. The power signal may be a power signal (SIM VCC) of a SIM card or a power signal (NM VCC) of a memory card, and the ground signal may be a ground signal (NM GND) of the memory card or a ground signal (SIM GND) of the SIM card. The power interface and the ground interface may be independent of the SIM card controller 202 and the memory card controller 201, or may be separately split and integrated into the SIM card controller 202 and the memory card controller 201. This is not strictly limited in this embodiment of this application. In FIG. 30 and subsequent accompanying drawings, that the power interface and the ground interface are independent of the SIM card controller 202 and the memory card controller 201 is used as an example for illustration, and the power interface and the ground interface are respectively identified as a power supply and a ground.

For example, the interface of the memory card controller 201 and an interface of the SIM card controller 202 are connected to eight of 10 spring plates of the card connector 11. The power interface is connected to another one of the 10 spring plates, and the ground interface is connected to the other one of the 10 spring plates. In this embodiment, the electronic device implements interaction such as calling, data communication, and data storage of the two-in-one card 7 through the 10 spring plates of the card connector 11. There is a small quantity of spring plates, and the card connector 11 and the card holder assembly have small volumes, to help lighten and thin the electronic device.

For example, the memory card controller 201 supports an EMMC interface protocol, the memory card controller 201 includes a clock interface (CLK), and the clock interface (CLK) is configured to transmit a clock signal (NM CLK) of the memory card. The SIM card controller 202 includes a clock interface (CLK), and the clock interface (CLK) is configured to transmit a clock signal (SIM CLK) of the SIM card. The clock interface (CLK) of the memory card controller 201 is connected to one of 10 spring plates of the card connector 11, and the clock interface (CLK) of the memory card controller 201 is connected to the clock interface (CLK) of the SIM card controller 202 through the frequency divider 204.

In this embodiment, the frequency divider 204 is connected to the clock interface (CLK) of the memory card controller 201 and the clock interface (CLK) of the SIM card controller 202. The frequency divider 204 is configured to: adjust a frequency of the clock signal (NM CLK) that is of the memory card and that is transmitted through the clock interface (CLK) of the memory card controller 201, to form the clock signal (SIM CLK) of the SIM card, and transmit the clock signal (SIM CLK) of the SIM card with the clock interface (CLK) of the SIM card controller 202, so that the SIM card controller 202 and the memory card controller 201 implement clock alignment. For example, the frequency of the clock signal (NM CLK) of the memory card is 200 MHz, and the frequency divider 204 may adjust the frequency to 5 MHz, to form the clock signal (SIM CLK) of the SIM card.

The processor 20 of the electronic device provides the clock signal (NM CLK) of the memory card through one spring plate of the card connector 11, to provide a required clock signal for the two-in-one card 7. In addition, the clock interface (CLK) of the memory card controller 201 is connected to the clock interface (CLK) of the SIM card controller 202 through the frequency divider 204, so that a clock of the SIM card controller 202 can be aligned with that of the memory card controller 201, to improve communication efficiency and communication quality between the electronic device and the two-in-one card 7.

For example, the memory card controller 201 supports the EMMC interface protocol. The memory card controller 201 further includes four data interfaces (DATA 0, DATA 1, DATA 2, and DATA 3) and a command and response interface (CMD). The four data interfaces (DATA 0, DATA 1, DATA 2, and DATA 3) are configured to transmit data signals (NM DATA 0, NM DATA 1, NM DATA 2, and NM DATA 3) of the memory card, and the command and response interface (CMD) is configured to transmit a command and response signal (NM CMD) of the memory card. The SIM card controller 202 further includes a reset interface (RST) and a data interface (DATA), the reset interface (RST) is configured to transmit a reset signal (SIM RST) of the SIM card, and the data interface (DATA) is configured to transmit a data signal (SIM DATA) of the SIM card.

Seven of the 10 spring plates of the card connector 11 are connected to the four data interfaces (DATA 0, DATA 1, DATA 3, and DATA 2) of the memory card controller 201, the command and response interface (CMD) of the memory card controller 201, the data interface (DATA) of the SIM card controller 202, and the reset interface (RST) of the SIM card controller 202 in a one-to-one correspondence.

For example, the four data interfaces (DATA 0, DATA 1, DATA 3, and DATA 2) of the memory card controller 201 are electrically connected to the first spring plate, the second spring plate, the ninth spring plate, and the tenth spring plate of the card connector 11 in a one-to-one correspondence, the clock interface (CLK) of the memory card controller 201 is electrically connected to the fourth spring plate of the card connector 11, and the command and response interface (CMD) of the memory card controller 201 is electrically connected to the fifth spring plate of the card connector. The data interface (DATA) of the SIM card controller 202 is electrically connected to a third spring plate of the card connector 11, and the reset interface (RST) of the SIM card controller 202 is electrically connected to a sixth spring plate of the card connector 11. The power interface of the processor 20 is electrically connected to an eighth spring plate of the card connector 11, and the ground interface is electrically connected to a seventh spring plate of the card connector 11.

In this embodiment, when the two-in-one card 7 is inserted into the electronic device and the memory card circuit 712 of the two-in-one card 7 works, the memory card controller 201 transmits the data signals (NM DATA 0, NM DATA 1, NM DATA 3, NM DATA 2) of the memory card with the two-in-one card 7 through the first spring plate, the second spring plate, the ninth spring plate, and the tenth spring plate, transmits the command and response signal (NM CMD) of the memory card with the two-in-one card 7 through the fifth spring plate, and transmits the clock signal (NM CLK) of the memory card with the two-in-one card 7 through the fourth spring plate. The power interface of the processor 20 transmits the power signal (NM VCC) of the memory card with the two-in-one card 7 through the eighth spring plate, and the ground interface transmits the ground signal (NM GND) of the memory card with the two-in-one card 7 through the seventh spring plate. The two-in-one card 7 implements a data storage function.

When the two-in-one card 7 is inserted into the electronic device and the SIM card circuit 713 of the two-in-one card 7 works, the SIM card controller 202 receives a clock signal that is sent by the memory card controller 201 and that is adjusted by the frequency divider 204, and the SIM card controller 202 transmits the data signal (SIM DATA) of the SIM card with the two-in-one card 7 through the third spring plate. The power interface of the processor 20 transmits the power signal (SIM VCC) of the SIM card with the two-in-one card 7 through the eighth spring plate, and the ground interface transmits the ground signal (SIM GND) of the SIM card with the two-in-one card 7 through the seventh spring plate. The two-in-one card 7 implements a calling function and a data communication function.

When the electronic device needs to perform a reset operation on the SIM card circuit 713 of the two-in-one card 7, the SIM card controller 202 transmits the reset signal (SIM RST) of the SIM card with the two-in-one card 7 through the sixth spring plate, to control the SIM card circuit 713 to be reset.

In some other embodiments, the frequency divider 204 may not be disposed in the processor 20, and the frequency divider 715 may not be disposed in the two-in-one card 7 either. In the processor 20 of the electronic device, the clock interface (CLK) of the memory card controller 201 and the clock interface (CLK) of the SIM card controller 202 are electrically connected to the fourth spring plate of the card connector 11. In the two-in-one card 7, the clock interface (CLK) of the memory card circuit 712 and the clock interface (CLK) of the SIM card circuit 713 are electrically connected to the fourth gold finger 724 of the card interface 72. The memory card controller 201 sends the clock signal (NM CLK) of the memory card to the fourth gold finger 724 through the fourth spring plate, the SIM card controller 202 sends the clock signal (SIM CLK) of the SIM card to the fourth gold finger 724 through the fourth spring plate, and the memory card circuit 712 and the SIM card circuit 713 perform corresponding processing based on a received signal, in other words, process only a clock signal that may be identified by a circuit. For example, when a signal transmitted through the fourth gold finger 724 includes only the clock signal (NM CLK) of the memory card, the memory card circuit 712 processes the clock signal (NM CLK) of the memory card; when a signal transmitted through the fourth gold finger 724 includes only the clock signal (SIM CLK) of the SIM card, the SIM card circuit 713 processes the clock signal (SIM CLK) of the SIM card; and when a signal transmitted through the fourth gold finger 724 includes the clock signal (NM CLK) of the memory card and the clock signal (SIM CLK) of the SIM card, the memory card circuit 712 processes the clock signal (NM CLK) of the memory card, for example, collects a signal above 100 MHz, and the SIM card circuit 713 processes the clock signal (SIM CLK) of the SIM card, for example, collects a signal below 5 MHz.

In some other embodiments, the frequency divider 204 may not be disposed in the processor 20, and the frequency divider 715 may not be disposed in the two-in-one card 7 either. A frequency of the clock signal (SIM CLK) of the SIM card is increased to be the same as a frequency of the clock signal (NM CLK) of the memory card. For example, the frequency of the clock signal (SIM CLK) of the SIM card is increased to a frequency of 19.2 MHz or a frequency of 20 MHz required by the clock signal (NM CLK) of the memory card, to implement clock sharing. In this case, in the electronic device, the clock interface (CLK) of the memory card controller 201 is electrically connected to the clock interface (CLK) of the SIM card controller 202, and one of the clock interfaces is electrically connected to the fourth spring plate of the card connector 11. In the two-in-one card 7, the clock interface (CLK) of the memory card circuit 712 and the clock interface (CLK) of the SIM card circuit 713 are electrically connected to the fourth gold finger 724.

In some other embodiments, the frequency divider 204 may be replaced with a switch in the processor 20, and the frequency divider 715 may not be disposed in the two-in-one card 7. In this case, in the processor 20 of the electronic device, the switch is connected to the clock interface (CLK) of the memory card controller 201 and the clock interface (CLK) of the SIM card controller 202, and is further connected to the fourth spring plate. In the two-in-one card 7, the clock interface (CLK) of the memory card circuit 712 and the clock interface (CLK) of the SIM card circuit 713 are electrically connected to the fourth gold finger 724. The electronic device provides the clock signal of the memory card and the clock signal of the SIM card by sharing a same spring plate in a time-division manner. The clock signal of the SIM card is provided when there is a SIM card service, and the clock signal of the memory card is provided when there is a memory card service. In some cases, if the clock signal of the SIM card is the same as the clock signal of the memory card, a same clock signal can be provided. In some cases, if the SIM card and the memory card simultaneously have services, the clock signal of the SIM card may be preferentially provided. Providing of the clock signal of the memory card is restored after a service of the SIM card ends. In some other embodiments, in a solution in which the processor 20 replaces the frequency divider 204 with a switch, the frequency divider 715 in the two-in-one card 7 may also be replaced with a switch.

It may be understood that there is another solution of an implementation in which the clock signal (NM CLK) of the memory card and the clock signal (SIM CLK) of the SIM card share the fourth gold finger 724 for transmission. This is not strictly limited in this application.

Table 10 is a table of a correspondence between a plurality of spring plates of the card connector 11 and each of a plurality of gold fingers of the nano-SIM card 3, a plurality of gold fingers of the first NM card 4, a plurality of gold fingers of the two-in-one card 7 shown in FIG. 29, and transmission signals thereof. When the two-in-one card 7 is connected to the card connector 11, the first spring plate to the tenth spring plate of the card connector 11 abut against and are electrically connected to the first gold finger 721 to the tenth gold finger 7210 of the two-in-one card 7 in a one-to-one correspondence, and locations of the third gold finger 723 to the eighth gold finger 728 of the two-in-one card 7 correspond to locations of the first gold finger 321 to the sixth gold finger 326 of the nano-SIM card 3 in a one-to-one correspondence. In some embodiments, locations of the third gold finger 723 to the tenth gold finger 7210 of the two-in-one card 7 correspond to locations of the first gold finger 421 to the eighth gold finger 428 of the first NM card 4 in a one-to-one correspondence.

**Table 10**

| Card connector 11 | Nano-SIM card 3 | | First NM card 4 | | Two-in-one card 7 | |
|---|---|---|---|---|---|---|
| First spring plate | | | | | First gold finger 721 | NM DATA 0 |
| Second spring plate | | | | | Second gold finger 722 | NM DATA 1 |
| Third spring plate | First gold finger 321 | DATA | First gold finger 421 | DATA 1 | Third gold finger 723 | SIM DATA |
| Fourth spring plate | Second gold finger 322 | CLK | Second gold finger 422 | CLK | Fourth gold finger 724 | NM CLK and SIM CLK |
| Fifth spring plate | Third gold finger 323 | VPP | Third gold finger 423 | CMD | Fifth gold finger 725 | NM CMD |
| Sixth spring plate | Fourth gold finger 324 | RST | Fourth gold finger 424 | DATA 0 | Sixth gold finger 726 | SIM RST |
| Seventh spring plate | Fifth gold finger 325 | GND | Fifth gold finger 425 | GND | Seventh gold finger 727 | SIM GND and NM GND |
| Eighth spring plate | Sixth gold finger 326 | VCC | Sixth gold finger 426 | VCC | Eighth gold finger 728 | SIM VCC and NM VCC |
| Ninth spring plate | | | Seventh gold finger 427 | DATA 3 | Ninth gold finger 729 | NM DATA 3 |
| Tenth spring plate | | | Eighth gold finger 428 | DATA 2 | Tenth gold finger 7210 | NM DATA 2 |

When the electronic device is compatible with the nano-SIM card 3 and the two-in-one card 7 shown in FIG. 29, the SIM card controller 202 of the electronic device may not support a programming voltage/input signal. Alternatively, the SIM card controller 202 of the electronic device may support a programming voltage/input signal. In this case, the SIM card controller 202 of the electronic device may further include a programming voltage/input signal interface (VPP). The processor 20 may be provided with a switch, and the switch is connected to the programming voltage/input signal interface (VPP) of the SIM card controller 202 and the command and response interface (CMD) of the memory card controller 201, and is further connected to the fifth spring plate of the card connector 11. When the nano-SIM card 3 is inserted into the electronic device, the switch connects the programming voltage/input signal interface (VPP) of the SIM card controller 202 and the fifth spring plate. When the two-in-one card 7 is inserted into the electronic device, the switch connects the command and response interface (CMD) of the memory card controller 201 and the fifth spring plate.

In some other embodiments, this application further provides an electronic device. The electronic device is compatible with a nano-SIM card 3, a first NM card 4, and the two-in-one card 7 shown in FIG. 29. A processor of the electronic device may include a memory card controller, a SIM card controller, and an interface controller, the interface controller is electrically connected to the memory card controller and the SIM card controller, and the interface controller is further electrically connected to a plurality of spring plates of a card connector 11. An interface protocol (for example, an EMMC interface protocol) of the memory card controller can communicate with the first NM card 4 and a memory card circuit of the two-in-one card 7, and is configured to control the first NM card 4 and the memory card circuit of the two-in-one card 7 to run. The SIM card controller 202 is configured to control the nano-SIM card 3 to run. When different information cards are inserted into a card holder assembly of the electronic device and are electrically connected to the card connector 11, the interface controller can control the memory card controller and/or the SIM card controller to communicate with the information card through the card connector. For example, when a card tray 2 is installed with the nano-SIM card 3, and the nano-SIM card 3 is inserted into a card holder assembly 10, the interface controller controls the SIM card controller to communicate with the nano-SIM card 3 through the card connector 11; when the card tray 2 is installed with the first NM card 4, and the first NM card 4 is inserted into the card holder assembly 10, the interface controller controls the memory card controller to communicate with the first NM card 4 through the card connector 11; and when the card tray 2 is installed with the two-in-one card 7, and the two-in-one card 7 is inserted into the card holder assembly 10, the interface controller controls the memory card controller and the SIM card controller to communicate with the two-in-one card 7 through the card connector 11.

The interface controller may include a plurality of switches, and a connection relationship between a plurality of spring plates of the card connector 11 and a plurality of controllers in the processor is switched through the plurality of switches, to implement a communication requirement in different scenarios. The interface controller may further include a plurality of conducting wires. For other technical content of this embodiment, refer to related descriptions of the embodiment corresponding to FIG. 30. Details are not described herein again.

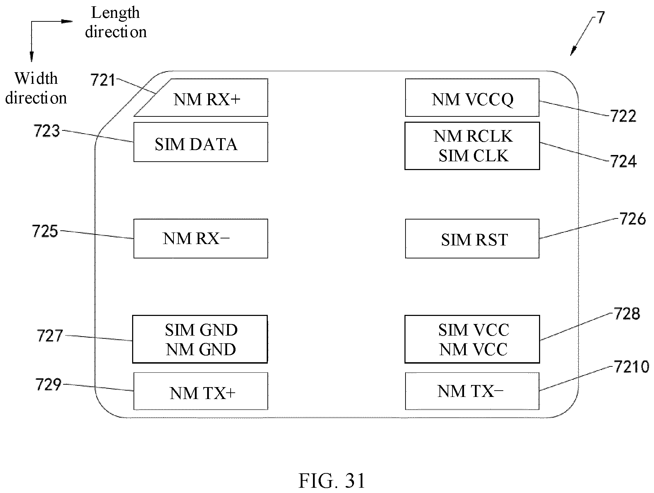

FIG. 31 is a diagram of the two-in-one card 7 shown in FIG. 17 in some other embodiments.

In some embodiments, a memory card circuit 712 of the two-in-one card 7 supports a UFS interface protocol. A card interface 72 of the two-in-one card 7 includes a first gold finger 721 to a tenth gold finger 7210. In the first gold finger 721 to the tenth gold finger 7210, one gold finger is configured to transmit a data signal (SIM DATA) of a SIM card, one gold finger is configured to transmit a reset signal (SIM RST) of the SIM card, four gold fingers are configured to transmit data signals (NM RX+, NM RX-, NM TX+, and NM TX-) of a memory card, one gold finger is configured to transmit a second power signal (NM VCCQ) of the memory card, one gold finger is configured to transmit a clock signal (SIM CLK) of the SIM card and a reference clock signal (NM RCLK) of the memory card, one gold finger is configured to transmit a ground signal (SIM GND) of the SIM card and a ground signal (NM GND) of the memory card, and one gold finger is configured to transmit a power signal (SIM VCC) of the SIM card and a first power signal (NM VCC) of the memory card.

For example, the first gold finger 721, a fifth gold finger 725, a ninth gold finger 729, and the tenth gold finger 7210 of the two-in-one card 7 are configured to transmit the data signals (NM RX+, NM RX-, NM TX+, and NM TX-) of the memory card. An example in which the first gold finger 721 is configured to transmit the data signal (NM RX+), the fifth gold finger 725 is configured to transmit the data signal (NM RX-), the ninth gold finger 729 is configured to transmit the data signal (NM TX+), and the tenth gold finger 7210 is configured to transmit the data signal (NM TX-) is used for description in the following embodiments. In some other embodiments, the data signals transmitted through the first gold finger 721, the fifth gold finger 725, the ninth gold finger 729, and the tenth gold finger 7210 can be exchanged. For example, the data signals transmitted through the first gold finger 721 and the fifth gold finger 725 are exchanged, and the data signals transmitted through the ninth gold finger 729 and the tenth gold finger 7210 are exchanged. Details are not described herein in another embodiment.

A third gold finger 723 is configured to transmit the data signal (SIM DATA) of the SIM card, the fourth gold finger 724 is configured to transmit the clock signal (SIM CLK) of the SIM card and the reference clock signal (NM RCLK) of the memory card, the second gold finger 722 is configured to transmit the second power signal (NM VCCQ) of the memory card, the sixth gold finger 726 is configured to transmit the reset signal (SIM RST) of the SIM card, the seventh gold finger 727 is configured to transmit the ground signal (SIM GND) of the SIM card and the ground signal (NM GND) of the memory card, and the eighth gold finger 728 is configured to transmit the power signal (SIM VCC) of the SIM card and the first power signal (NM VCC) of the memory card.

Refer to FIG. 31 and Table 11 together. Table 11 is an illustration table of a correspondence between the gold finger of the two-in-one card 7 shown in FIG. 31 and an interface of a circuit. In this embodiment of this application, for ease of illustration, an interface of a circuit or an interface of a controller used in the following descriptions and accompanying drawings is identified by using a signal transmitted through the interface of the circuit or the interface of the controller.

**Table 11**

| Two-in-one card 7 | | |
|---|---|---|
| Card interface 72 | Memory card circuit 712 | SIM card circuit 713 |
| First gold finger 721 | Data interface (RX+) | |
| Second gold finger 722 | Second power interface (VCCQ) | |
| Third gold finger 723 | | Data interface (DATA) |
| Fourth gold finger 724 | Reference clock interface (RCLK) | Clock interface (CLK) |
| Fifth gold finger 725 | Data interface (RX-) | |
| Sixth gold finger 726 | | Reset interface (RST) |
| Seventh gold finger 727 | Ground interface (GND) | Ground interface (GND) |
| Eighth gold finger 728 | First power interface (VCC) | Power interface (VCC) |
| Ninth gold finger 729 | Data interface (TX+) | |
| Tenth gold finger 7210 | Data interface (TX-) | |

In some embodiments, the memory card circuit 712 includes the four data interfaces (RX+, RX-, TX+, and TX-), the reference clock interface (RCLK), the second power interface (VCCQ), the ground interface (GND), and the first power interface (VCC). The four data interfaces (RX+, RX-, TX+, and TX-) of the memory card circuit 712 are configured to transmit the data signals (NM RX+, NM RX-, NM TX+, and NM TX-) of the memory card, the reference clock interface (RCLK) of the memory card circuit 712 is configured to transmit the reference clock signal (NM RCLK) of the memory card, the second power interface (VCCQ) of the memory card circuit 712 is configured to transmit the second power signal (NM VCCQ) of the memory card, the ground interface (GND) of the memory card circuit 712 is configured to transmit the ground signal (NM GND) of the memory card, and the first power interface (VCC) of the memory card circuit 712 is configured to transmit the first power signal (NM VCC) of the memory card. An interface of the memory card circuit 712 may be located in a control part of the memory card circuit 712.

The SIM card circuit 713 includes the data interface (DATA), the clock interface (CLK), the reset interface (RST), the ground interface (GND), and the power interface (VCC). The data interface (DATA) of the SIM card circuit 713 is configured to transmit the data signal (SIM DATA) of the SIM card, the clock interface (CLK) of the SIM card circuit 713 is configured to transmit the clock signal (SIM CLK) of the SIM card, the reset interface (RST) of the SIM card circuit 713 is configured to transmit the reset signal (SIM RST) of the SIM card, the ground interface (GND) of the SIM card circuit 713 is configured to transmit the ground signal (SIM GND) of the SIM card, and the power interface (VCC) of the SIM card circuit 713 is configured to transmit the power signal (SIM VCC) of the SIM card. An interface of the SIM card circuit 713 may be located in a control part of the SIM card circuit 713.

The first gold finger 721, the fifth gold finger 725, the ninth gold finger 729, and the tenth gold finger 7210 of the two-in-one card 7 are respectively electrically connected to the four data interfaces (RX+, RX-, TX+, and TX-) of the memory card circuit 712, the second gold finger 722 is electrically connected to the second power interface (VCCQ) of the memory card circuit 712, the third gold finger 723 is electrically connected to the data interface (DATA) of the SIM card circuit 713, the fourth gold finger 724 is electrically connected to the reference clock interface (CLK) of the memory card circuit 712 and is electrically connected to the clock interface (CLK) of the SIM card circuit 713 through the frequency divider 715, the sixth gold finger 726 is electrically connected to the reset interface (RST) of the SIM card circuit 713, the seventh gold finger 727 is electrically connected to the ground interface (GND) of the SIM card circuit 713 and the ground interface (GND) of the memory card circuit 712, and the eighth gold finger 728 is electrically connected to the power interface (VCC) of the SIM card circuit 713 and the first power interface (VCC) of the memory card circuit 712.

In this embodiment, the two-in-one card 7 implements signal transmission of the SIM card circuit 713 and signal transmission of the memory card circuit 712 through the first gold finger 721 to the tenth gold finger 7210, so that the two-in-one card 7 can integrate a SIM card function and a memory card function, to implement a plurality of functions, and increase a degree of integration. When the two-in-one card 7 is inserted into an electronic device, a quantity of information cards that need to be inserted can be effectively reduced, and a quantity of card holder assemblies can be reduced, to help lighten and thin the electronic device, and improve user experience.

In addition, the first gold finger 721, the fifth gold finger 725, the ninth gold finger 729, and the tenth gold finger 7210 are exclusive gold fingers of the memory card circuit 712, and are configured to transmit high-speed data of the memory card. A connection circuit switching design between a high-speed data interface and a low-speed data interface does not need to be performed for the first gold finger 721, the fifth gold finger 725, the ninth gold finger 729, and the tenth gold finger 7210, to effectively reduce difficulty in designing an internal circuit of the two-in-one card 7. An implementation is easy.

In addition, the second gold finger 722, the third gold finger 723, and the sixth gold finger 726 are also exclusive gold fingers of the SIM card circuit 713 or the memory card circuit 712. The connection circuit switching design does not need to be performed for the gold fingers, so that the difficulty in designing the internal circuit of the two-in-one card 7 is low. An implementation is easy.

For example, the frequency divider 715 is configured to change a frequency of a signal. In this embodiment, the frequency divider 715 is disposed, so that an initial clock signal transmitted through the fourth gold finger 724 may be the reference clock signal (NM RCLK) of the memory card, and the reference clock signal (NM RCLK) of the memory card is directly transmitted to the reference clock interface (RCLK) of the memory card circuit 712. The frequency divider 715 adjusts a frequency of the reference clock signal (NM RCLK) of the memory card, to form the clock signal (SIM CLK) of the SIM card, and then transmits the clock signal (SIM CLK) of the SIM card to the clock interface (CLK) of the SIM card circuit 713. For example, the frequency of the reference clock signal (NM RCLK) of the memory card is 200 MHz, and the frequency divider 715 may adjust the frequency to 5 MHz, to form the clock signal (SIM CLK) of the SIM card.

In this embodiment, the two-in-one card 7 may implement sharing for the reference clock signal (NM RCLK) of the memory card and the clock interface (CLK) of the SIM card circuit 713 through a same gold finger (namely, the fourth gold finger 724), so that a degree of integration of the card interface 72 of the two-in-one card 7 is high. In addition, connection circuit switching does not need to be performed for the fourth gold finger 724, implementation difficulty of the two-in-one card 7 is low, an implementation is easy, and reliability of the two-in-one card 7 is high. The reference clock signal (NM RCLK) of the memory card and the clock interface (CLK) of the SIM card circuit 713 may share the fourth gold finger 724 in a time-division manner, or may simultaneously use the fourth gold finger 724. This is not strictly limited in this application.

For example, the SIM card circuit 713 and the memory card circuit 712 each transmit a ground signal through the seventh gold finger 727, and transmit a power signal through the eighth gold finger 728. The two-in-one card 7 may be provided with no solution of switching a related connection circuit, or a switching solution is easy to implement. Therefore, a degree of integration of the card interface 72 of the two-in-one card 7 can be increased, and the difficulty in designing the internal circuit is low, so that reliability of the two-in-one card 7 is high, and costs are low. For a solution in which the SIM card circuit 713 and the memory card circuit 712 transmit the ground signal and the power signal through the seventh gold finger 727 and the eighth gold finger 728, specifically refer to related descriptions in the foregoing embodiments. Details are not described herein again.

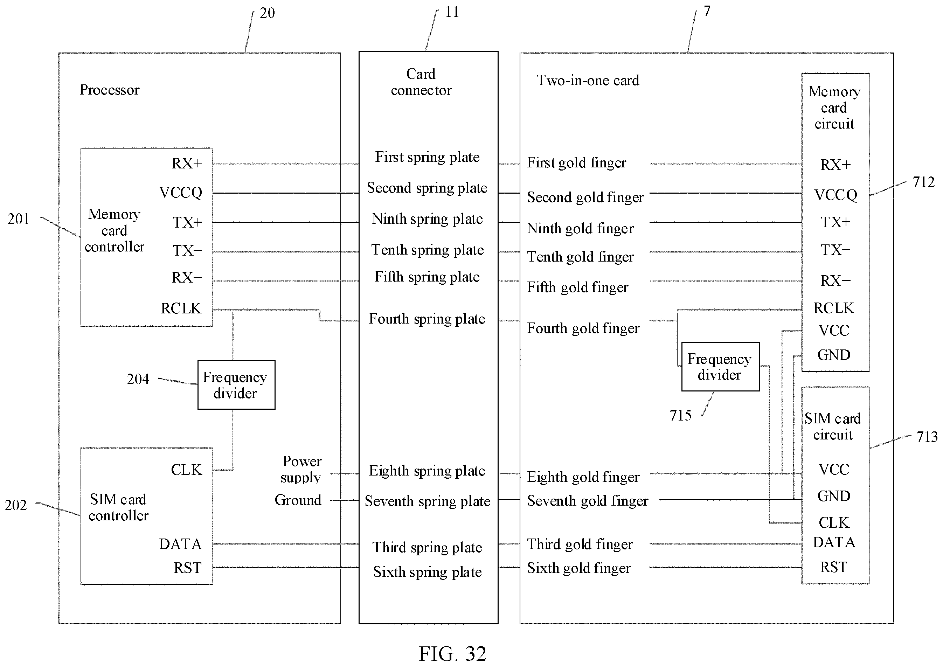

Refer to FIG. 31 and FIG. 32 together. FIG. 32 is a schematic of a connection circuit between the two-in-one card 7 shown in FIG. 31 and an electronic device.

In some embodiments, when the two-in-one card 7 is inserted into a card holder assembly of the electronic device, and is electrically connected to a card connector 11, a first spring plate to a tenth spring plate of the card connector 11 abut against and are electrically connected to a first gold finger 721 to a tenth gold finger 7210 of the two-in-one card 7 in a one-to-one correspondence. For example, a processor 20 of the electronic device may include a memory card controller 201, a SIM card controller 202, a frequency divider 204, a power interface, and a ground interface. The memory card controller 201 may be configured to control running of the memory card circuit of the two-in-one card 7, and the SIM card controller 202 may be configured to control running of the SIM card circuit of the two-in-one card 7. A plurality of controllers of the processor 20 may be components independent of each other, or may be combined by using an integrated component, or one controller may be split into a plurality of components. This is not strictly limited in this embodiment of this application.

For example, a power interface of the processor 20 is configured to transmit a power signal, and a ground interface is configured to transmit a ground signal. The power signal may be a power signal (SIM VCC) of a SIM card or a first power signal (NM VCC) of a memory card, and the ground signal may be a ground signal (NM GND) of the memory card or a ground signal (SIM GND) of the SIM card. The power interface and the ground interface may be independent of the SIM card controller 202 and the memory card controller 201, or may be separately split and integrated into the SIM card controller 202 and the memory card controller 201. This is not strictly limited in this embodiment of this application. In FIG. 32 and subsequent accompanying drawings, that the power interface and the ground interface are independent of the SIM card controller 202 and the memory card controller 201 is used as an example for illustration, and the power interface and the ground interface are respectively identified as a power supply and a ground.

For example, the interface of the memory card controller 201 and an interface of the SIM card controller 202 are connected to eight of 10 spring plates of the card connector 11. The power interface is connected to another one of the 10 spring plates, and the ground interface is connected to the other one of the 10 spring plates. In this embodiment, the electronic device implements interaction such as calling, data communication, and data storage of the two-in-one card 7 through the 10 spring plates of the card connector 11. There is a small quantity of spring plates, and the card connector 11 and the card holder assembly have small volumes, to help lighten and thin the electronic device.

For example, the memory card controller 201 supports a UFS interface protocol. The memory card controller 201 includes a reference clock interface (RCLK), and the reference clock interface (RCLK) is configured to transmit a reference clock signal (NM RCLK) of the memory card. The SIM card controller 202 includes a clock interface (CLK), and the clock interface (CLK) is configured to transmit a clock signal (SIM CLK) of the SIM card. The reference clock interface (RCLK) of the memory card controller 201 is connected to one of the 10 spring plates of the card connector 11, and the reference clock interface (RCLK) of the memory card controller 201 is connected to the clock interface (CLK) of the SIM card controller 202 through the frequency divider 204.

In this embodiment, the frequency divider 204 is connected to the reference clock interface (RCLK) of the memory card controller 201 and the clock interface (CLK) of the SIM card controller 202. The frequency divider 204 is configured to: adjust a frequency of the reference clock signal (NM RCLK) that is of the memory card and that is transmitted through the reference clock interface (RCLK) of the memory card controller 201, to form the clock signal (SIM CLK) of the SIM card, and transmit the clock signal (SIM CLK) of the SIM card with the clock interface (CLK) of the SIM card controller 202, so that the SIM card controller 202 and the memory card controller 201 implement clock alignment. For example, the frequency of the reference clock signal (NM RCLK) of the memory card is 200 MHz, and the frequency divider 204 may adjust the frequency to 5 MHz, to form the clock signal (SIM CLK) of the SIM card.

The processor 20 of the electronic device provides the reference clock signal (NM RCLK) of the memory card through one spring plate of the card connector 11, to provide a required clock signal for the two-in-one card 7. In addition, the reference clock interface (RCLK) of the memory card controller 201 is connected to the clock interface (CLK) of the SIM card controller 202 through the frequency divider 204, so that a clock of the SIM card controller 202 can be aligned with that of the memory card controller 201, to improve communication efficiency and communication quality between the electronic device and the two-in-one card 7.

For example, the memory card controller 201 further includes four data interfaces (RX+, RX-, TX+, and TX-) and a second power interface (VCCQ), the four data interfaces (RX+, RX-, TX+, and TX-) are configured to transmit data signals (NM RX+, NM RX-, NM TX+, and NM TX-) of the memory card, and the second power interface (VCCQ) is configured to transmit a second power signal (NM VCCQ) of the memory card. The SIM card controller 202 further includes a reset interface (RST) and a data interface (DATA), the reset interface (RST) is configured to transmit a reset signal (SIM RST) of the SIM card, and the data interface (DATA) is configured to transmit a data signal (SIM DATA) of the SIM card.

Seven of the 10 spring plates of the card connector 11 are connected to the four data interfaces (RX+, RX-, TX+, and TX-) of the memory card controller 201, the second power interface (VCCQ) of the memory card controller 201, the data interface (DATA) of the SIM card controller 202, and the reset interface (RST) of the SIM card controller 202 in a one-to-one correspondence.

For example, the four data interfaces (RX+, RX-, TX+, and TX-) of the memory card controller 201 are electrically connected to the first spring plate, a fifth spring plate, a ninth spring plate, and the tenth spring plate of the card connector 11 in a one-to-one correspondence, the second power interface (VCCQ) is electrically connected to a second spring plate of the card connector 11, and the reference clock interface (RCLK) is electrically connected to a fourth spring plate of the card connector 11. The data interface (DATA) of the SIM card controller 202 is electrically connected to a third spring plate of the card connector 11, and the reset interface (RST) of the SIM card controller 202 is electrically connected to a sixth spring plate of the card connector 11. The power interface of the processor 20 is electrically connected to an eighth spring plate of the card connector 11, and the ground interface is electrically connected to a seventh spring plate of the card connector 11.

In this embodiment, when the two-in-one card 7 is inserted into the electronic device and the memory card circuit 712 of the two-in-one card 7 works, the memory card controller 201 transmits the data signals (NM RX+, NM RX-, NM TX+, and NM TX-) of the memory card with the two-in-one card 7 through the first spring plate, the fifth spring plate, the ninth spring plate, and the tenth spring plate, transmits the second power signal (NM VCCQ) of the memory card with the two-in-one card 7 through the second spring plate, and transmits the reference clock signal (NM RCLK) of the memory card with the two-in-one card 7 through the fourth spring plate. The power interface of the processor 20 transmits the first power signal (NM VCC) of the memory card with the two-in-one card 7 through the eighth spring plate, and the ground interface transmits the ground signal (NM GND) of the memory card with the two-in-one card 7 through the seventh spring plate. The two-in-one card 7 implements a data storage function.

When the two-in-one card 7 is inserted into the electronic device and the SIM card circuit 713 of the two-in-one card 7 works, the SIM card controller 202 receives a clock signal that is sent by the memory card controller 201 and that is adjusted by the frequency divider 204, and the SIM card controller 202 transmits the data signal (SIM DATA) of the SIM card with the two-in-one card 7 through the third spring plate. The power interface of the processor 20 transmits the power signal (SIM VCC) of the SIM card with the two-in-one card 7 through the eighth spring plate, and the ground interface transmits the ground signal (SIM GND) of the SIM card with the two-in-one card 7 through the seventh spring plate. The two-in-one card 7 implements a calling function and a data communication function. When the electronic device needs to perform a reset operation on the SIM card circuit 713 of the two-in-one card 7, the SIM card controller 202 transmits the reset signal (SIM RST) of the SIM card with the two-in-one card 7 through the sixth spring plate, to control the SIM card circuit 713 to be reset.

In some other embodiments, the frequency divider 204 may not be disposed in the processor 20, and the frequency divider 715 may not be disposed in the two-in-one card 7 either. In the processor 20 of the electronic device, the reference clock interface (RCLK) of the memory card controller 201 and the clock interface (CLK) of the SIM card controller 202 are electrically connected to the fourth spring plate of the card connector 11. In the two-in-one card 7, the reference clock interface (RCLK) of the memory card circuit 712 and the clock interface (CLK) of the SIM card circuit 713 are electrically connected to the fourth gold finger 724 of the card interface 72. The memory card controller 201 sends the reference clock signal (NM RCLK) of the memory card to the fourth gold finger 724 through the fourth spring plate, the SIM card controller 202 sends the clock signal (SIM CLK) of the SIM card to the fourth gold finger 724 through the fourth spring plate, and the memory card circuit 712 and the SIM card circuit 713 perform corresponding processing based on a received signal, in other words, process only a clock signal that may be identified by a circuit. For example, when a signal transmitted through the fourth gold finger 724 includes only the reference clock signal (NM RCLK) of the memory card, the memory card circuit 712 processes the reference clock signal (NM RCLK) of the memory card; when a signal transmitted through the fourth gold finger 724 includes only the clock signal (SIM CLK) of the SIM card, the SIM card circuit 713 processes the clock signal (SIM CLK) of the SIM card; and when a signal transmitted through the fourth gold finger 724 includes the reference clock signal (NM RCLK) of the memory card and the clock signal (SIM CLK) of the SIM card, the memory card circuit 712 processes the reference clock signal (NM RCLK) of the memory card, for example, collects a signal above 100 MHz, and the SIM card circuit 713 processes the clock signal (SIM CLK) of the SIM card, for example, collects a signal below 5 MHz.

In some other embodiments, the frequency divider 204 may not be disposed in the processor 20, and the frequency divider 715 may not be disposed in the two-in-one card 7 either. A frequency of the clock signal (SIM CLK) of the SIM card is increased to be the same as a frequency of the reference clock signal (NM RCLK) of the memory card. For example, the frequency of the clock signal (SIM CLK) of the SIM card is increased to a frequency of 19.2 MHz or a frequency of 20 MHz required by the reference clock signal (NM RCLK) of the memory card, to implement clock sharing. In this case, in the electronic device, the reference clock interface (RCLK) of the memory card controller 201 is electrically connected to the clock interface (CLK) of the SIM card controller 202, and one of the clock interfaces is electrically connected to the fourth spring plate of the card connector 11. In the two-in-one card 7, the reference clock interface (RCLK) of the memory card circuit 712 and the clock interface (CLK) of the SIM card circuit 713 are electrically connected to the fourth gold finger 724.

In some other embodiments, the frequency divider 204 may be replaced with a switch in the processor 20, and the frequency divider 715 may not be disposed in the two-in-one card 7. In this case, in the processor 20 of the electronic device, the switch is connected to the reference clock interface (RCLK) of the memory card controller 201 and the clock interface (CLK) of the SIM card controller 202, and is further connected to the fourth spring plate. In the two-in-one card 7, the reference clock interface (RCLK) of the memory card circuit 712 and the clock interface (CLK) of the SIM card circuit 713 are electrically connected to the fourth gold finger 724. The electronic device provides the reference clock signal of the memory card and the clock signal of the SIM card by sharing a same spring plate in a time-division manner. The clock signal of the SIM card is provided when there is a SIM card service, and the reference clock signal of the memory card is provided when there is a memory card service. In some cases, if the clock signal of the SIM card is the same as the reference clock signal of the memory card, a same clock signal can be provided. In some cases, if the SIM card and the memory card simultaneously have services, the clock signal of the SIM card may be preferentially provided. Providing of the reference clock signal of the memory card is restored after a service of the SIM card ends. In some other embodiments, in a solution in which the processor 20 replaces the frequency divider 204 with a switch, the frequency divider 715 in the two-in-one card 7 may also be replaced with a switch.

It may be understood that there is another solution of an implementation in which the reference clock signal (NM RCLK) of the memory card and the clock signal (SIM CLK) of the SIM card share the fourth gold finger 724 for transmission. This is not strictly limited in this application.

In some other embodiments, a signal arrangement of the card interface 72 of the two-in-one card 7 may be in another manner. For example, the first gold finger 721 is configured to transmit the second power signal (NM VCCQ) of the memory card, the second gold finger 722 is configured to transmit one of the data signals (for example, NM RX+) of the memory card, and signal arrangements of the other gold fingers remain unchanged. In this case, the first gold finger 721 of the two-in-one card 7 is electrically connected to the second power interface (VCCQ) of the memory card circuit 712, the second gold finger 722 is connected to one of the data interfaces (for example, RX+) of the memory card circuit 712, and a connection circuit between another interface and a gold finger remains unchanged. The second power interface (VCCQ) of the memory card controller 201 of the electronic device is electrically connected to the first spring plate, one of the data interfaces (for example, RX+) of the memory card controller 201 is electrically connected to the second spring plate, and a connection circuit between another interface and the spring plate of the card connector 11 remains unchanged. Working procedures of the two-in-one card 7 and the electronic device are adaptively adjusted. Details are not described herein again.

Table 12 is a table of a correspondence between a plurality of spring plates of the card connector 11 and each of a plurality of gold fingers of the nano-SIM card 3, a plurality of gold fingers of the first NM card 4, a plurality of gold fingers of the two-in-one card 7 shown in FIG. 31, and transmission signals thereof. When the two-in-one card 7 is connected to the card connector 11, the first spring plate to the tenth spring plate of the card connector 11 abut against and are electrically connected to the first gold finger 721 to the tenth gold finger 7210 of the two-in-one card 7 in a one-to-one correspondence, and locations of the third gold finger 723 to the eighth gold finger 728 of the two-in-one card 7 correspond to locations of the first gold finger 321 to the sixth gold finger 326 of the nano-SIM card 3 in a one-to-one correspondence. In some embodiments, locations of the third gold finger 723 to the tenth gold finger 7210 of the two-in-one card 7 correspond to locations of the first gold finger 421 to the eighth gold finger 428 of the first NM card 4 in a one-to-one correspondence.

**Table 12**

| Card connector 11 | Nano-SIM card 3 | | First NM card 4 | | Two-in-one card 7 | |
|---|---|---|---|---|---|---|
| First spring plate | | | | | First gold finger 721 | NMRX+ |
| Second spring plate | | | | | Second gold finger 722 | NM VCCQ |
| Third spring plate | First gold finger 321 | DATA | First gold finger 421 | DATA 1 | Third gold finger 723 | SIM DATA |
| Fourth spring plate | Second gold finger 322 | CLK | Second gold finger 422 | CLK | Fourth gold finger 724 | NM RCLK and SIM CLK |
| Fifth spring plate | Third gold finger 323 | VPP | Third gold finger 423 | CMD | Fifth gold finger 725 | NMRX- |
| Sixth spring plate | Fourth gold finger 324 | RST | Fourth gold finger 424 | DATA 0 | Sixth gold finger 726 | SIM RST |
| Seventh spring plate | Fifth gold finger 325 | GND | Fifth gold finger 425 | GND | Seventh gold finger 727 | SIM GND and NM GND |
| Eighth spring plate | Sixth gold finger 326 | VCC | Sixth gold finger 426 | VCC | Eighth gold finger 728 | SIM VCC and NM VCC |
| Ninth spring plate | | | Seventh gold finger 427 | DATA 3 | Ninth gold finger 729 | NM TX+ |
| Tenth spring plate | | | Eighth gold finger 428 | DATA 2 | Tenth gold finger 7210 | NM TX- |

When the electronic device is compatible with the nano-SIM card 3 and the two-in-one card 7 shown in FIG. 31, the SIM card controller 202 of the electronic device may not support a programming voltage/input signal. Alternatively, the SIM card controller 202 of the electronic device may support a programming voltage/input signal. In this case, the SIM card controller 202 of the electronic device may further include a programming voltage/input signal interface (VPP). The processor 20 may be provided with a switch, and the switch is connected to the programming voltage/input signal interface (VPP) of the SIM card controller 202 and the data interface (for example, RX-) of the memory card controller 201, and is further connected to the fifth spring plate of the card connector 11. When the nano-SIM card 3 is inserted into the electronic device, the switch connects the programming voltage/input signal interface (VPP) of the SIM card controller 202 and the fifth spring plate. When the two-in-one card 7 is inserted into the electronic device, the switch connects the data interface (for example, RX-) of the memory card controller 201 and the fifth spring plate.

In some other embodiments, this application further provides an electronic device. The electronic device is compatible with a nano-SIM card 3, a first NM card 4, and the two-in-one card 7 shown in FIG. 31. A processor of the electronic device may include a memory card controller, a second memory card controller, a SIM card controller, and an interface controller, the interface controller is electrically connected to the memory card controller, the second memory card controller, and the SIM card controller, and the interface controller is further electrically connected to a plurality of spring plates of a card connector 11.

An interface protocol (for example, a UFS interface protocol) of the memory card controller can communicate with a memory card circuit of the two-in-one card 7, and is used to control the memory card circuit of the two-in-one card 7 to run. The SIM card controller is configured to control the nano-SIM card 3 to run. An interface protocol (for example, an EMMC interface protocol) of the second memory card controller can communicate with the first NM card 4, and is used to control the first NM card 4 to run.

When different information cards are inserted into a card holder assembly 10 of the electronic device, and are electrically connected to the card connector 11, the interface controller can control the SIM card controller to communicate with the information card through the card connector 11, or control the memory card controller and the SIM card controller to communicate with the information card through the card connector 11, or control the second memory card controller to communicate with the information card through the card connector 11. For example, when a card tray 2 is installed with the nano-SIM card 3, and the nano-SIM card 3 is inserted into a card holder assembly 10, the interface controller controls the SIM card controller to communicate with the nano-SIM card 3 through the card connector 11; when the card tray 2 is installed with the first NM card 4, and the first NM card 4 is inserted into the card holder assembly 10, the interface controller controls the second memory card controller to communicate with the first NM card 4 through the card connector 11; and when the card tray 2 is installed with the two-in-one card 7, and the two-in-one card 7 is inserted into the card holder assembly 10, the interface controller controls the memory card controller and the SIM card controller to communicate with the two-in-one card 7 through the card connector 11.

The interface controller may include a plurality of switches, and a connection relationship between a plurality of spring plates of the card connector 11 and a plurality of controllers in the processor is switched through the plurality of switches, to implement a communication requirement in different scenarios. The interface controller may further include a plurality of conducting wires. For other technical content of this embodiment, refer to related descriptions of the embodiment corresponding to FIG. 32. Details are not described herein again.

In this embodiment, a high-speed signal (for example, NM RX+) of the two-in-one card 7 is arranged on the first gold finger 721. Because a location of the first gold finger 721 of the two-in-one card 7 corresponds to none of locations of all gold fingers of the nano-SIM card 3 and the first NM card 4, regardless of whether the information card inserted into the electronic device is the two-in-one card 7, the nano-SIM card 3, or the first NM card 4, the processor 20 does not need to switch an interface electrically connected to the first spring plate, to simplify a circuit of the processor 20, and reduce design difficulty and costs.

A second power signal (NM VCCQ) of a memory card of the two-in-one card 7 is arranged on a second gold finger 722. Because a location of the second gold finger 722 of the two-in-one card 7 corresponds to none of locations of all the gold fingers of the nano-SIM card 3 and the first NM card 4, the second gold finger 722 of the two-in-one card 7 does not need to share a same spring plate of the card connector 11 of the electronic device with the nano-SIM card 3 and the first NM card 4, to prevent the second power signal (NM VCCQ) of the memory card from sharing a same spring plate with data signals of the nano-SIM card 3 and the first NM card 4, and reduce a risk that the nano-SIM card 3 and the first NM card 4 are burnt by the second power signal (NM VCCQ) of the memory card when the nano-SIM card 3 and the first NM card 4 are inserted into the electronic device and are connected to the card connector 11. Reliability of compatibility of the electronic device with the nano-SIM card 3, the first NM card 4, and the two-in-one card 7 is high. In addition, a high-voltage resistant design that is used to prevent a circuit from being burnt by the second power signal (NM VCCQ) of the memory card does not need to be deployed for the first NM card 4 and the nano-SIM card 3 either, to reduce costs.

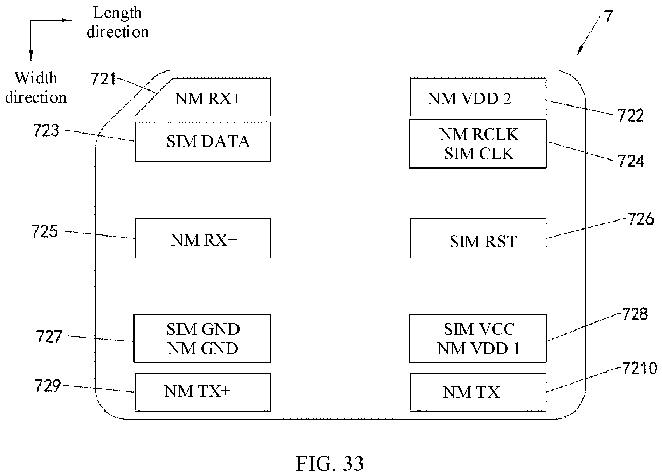

FIG. 33 is a diagram of the two-in-one card 7 shown in FIG. 17 in some other embodiments.

In some embodiments, a PCIE interface protocol is used for a memory card circuit 712 of the two-in-one card 7. A card interface 72 of the two-in-one card 7 includes a first gold finger 721 to a tenth gold finger 7210. In the first gold finger 721 to the tenth gold finger 7210, one gold finger is configured to transmit a data signal (SIM DATA) of a SIM card, one gold finger is configured to transmit a reset signal (SIM RST) of the SIM card, four gold fingers are configured to transmit data signals (NM RX+, NM RX-, NM TX+, and NM TX-) of a memory card, one gold finger is configured to transmit a second power signal (NM VDD 2) of the memory card, one gold finger is configured to transmit a clock signal (SIM CLK) of the SIM card and a reference clock signal (NM RCLK) of the memory card, one gold finger is configured to transmit a ground signal (SIM GND) of the SIM card and a ground signal (NM GND) of the memory card, and one gold finger is configured to transmit a power signal (SIM VCC) of the SIM card and a first power signal (NM VDD 1) of the memory card.

For example, the first gold finger 721, a fifth gold finger 725, a ninth gold finger 729, and the tenth gold finger 7210 of the two-in-one card 7 are configured to transmit the data signals (NM RX+, NM RX-, NM TX+, and NM TX-) of the memory card. An example in which the first gold finger 721 is configured to transmit the data signal (NM RX+), the fifth gold finger 725 is configured to transmit the data signal (NM RX-), the ninth gold finger 729 is configured to transmit the data signal (NM TX+), and the tenth gold finger 7210 is configured to transmit the data signal (NM TX-) is used for description in the following embodiments. In some other embodiments, the data signals transmitted through the first gold finger 721, the fifth gold finger 725, the ninth gold finger 729, and the tenth gold finger 7210 can be exchanged. For example, the data signals transmitted through the first gold finger 721 and the fifth gold finger 725 are exchanged, and the data signals transmitted through the ninth gold finger 729 and the tenth gold finger 7210 are exchanged. Details are not described herein in another embodiment.

A third gold finger 723 is configured to transmit the data signal (SIM DATA) of the SIM card, the fourth gold finger 724 is configured to transmit the clock signal (SIM CLK) of the SIM card and the reference clock signal (NM RCLK) of the memory card, the second gold finger 722 is configured to transmit the second power signal (NM VDD 2) of the memory card, the sixth gold finger 726 is configured to transmit the reset signal (SIM RST) of the SIM card, the seventh gold finger 727 is configured to transmit the ground signal (SIM GND) of the SIM card and the ground signal (NM GND) of the memory card, and the eighth gold finger 728 is configured to transmit the power signal (SIM VCC) of the SIM card and the first power signal (NM VDD 1) of the memory card.

Refer to FIG. 33 and Table 13 together. Table 13 is an illustration table of a correspondence between the gold finger of the two-in-one card 7 shown in FIG. 33 and an interface of a circuit. In this embodiment of this application, for ease of illustration, an interface of a circuit or an interface of a controller used in the following descriptions and accompanying drawings is identified by using a signal transmitted through the interface of the circuit or the interface of the controller.

**Table 13**

| Two-in-one card 7 | | |
|---|---|---|
| Card interface 72 | Memory card circuit 712 | SIM card circuit 713 |
| First gold finger 721 | Data interface (RX+) | |
| Second gold finger 722 | Second power interface (VDD 2) | |
| Third gold finger 723 | | Data interface (DATA) |
| Fourth gold finger 724 | Reference clock interface (RCLK) | Clock interface (CLK) |
| Fifth gold finger 725 | Data interface (RX-) | |
| Sixth gold finger 726 | | Reset interface (RST) |
| Seventh gold finger 727 | Ground interface (GND) | Ground interface (GND) |
| Eighth gold finger 728 | First power interface (VDD 1) | Power interface (VCC) |
| Ninth gold finger 729 | Data interface (TX+) | |
| Tenth gold finger 7210 | Data interface (TX-) | |

In some embodiments, the memory card circuit 712 includes the four data interfaces (RX+, RX-, TX+, and TX-), the reference clock interface (RCLK), the second power interface (VDD 2), the ground interface (GND), and the first power interface (VDD 1). The four data interfaces (RX+, RX-, TX+, and TX-) of the memory card circuit 712 are configured to transmit the data signals (NM RX+, NM RX-, NM TX+, and NM TX-) of the memory card, the reference clock interface (RCLK) of the memory card circuit 712 is configured to transmit the reference clock signal (NM RCLK) of the memory card, the second power interface (VDD 2) of the memory card circuit 712 is configured to transmit the second power signal (NM VDD 2) of the memory card, the ground interface (GND) of the memory card circuit 712 is configured to transmit the ground signal (NM GND) of the memory card, and the first power interface (VDD 1) of the memory card circuit 712 is configured to transmit the first power signal (NM VDD 1) of the memory card. An interface of the memory card circuit 712 may be located in a control part of the memory card circuit 712.

The SIM card circuit 713 includes the data interface (DATA), the clock interface (CLK), the reset interface (RST), the ground interface (GND), and the power interface (VCC). The data interface (DATA) of the SIM card circuit 713 is configured to transmit the data signal (SIM DATA) of the SIM card, the clock interface (CLK) of the SIM card circuit 713 is configured to transmit the clock signal (SIM CLK) of the SIM card, the reset interface (RST) of the SIM card circuit 713 is configured to transmit the reset signal (SIM RST) of the SIM card, the ground interface (GND) of the SIM card circuit 713 is configured to transmit the ground signal (SIM GND) of the SIM card, and the power interface (VCC) of the SIM card circuit 713 is configured to transmit the power signal (SIM VCC) of the SIM card. An interface of the SIM card circuit 713 may be located in a control part of the SIM card circuit 713.

The first gold finger 721, the fifth gold finger 725, the ninth gold finger 729, and the tenth gold finger 7210 of the two-in-one card 7 are respectively electrically connected to the four data interfaces (RX+, RX-, TX+, and TX-) of the memory card circuit 712, the second gold finger 722 is electrically connected to the second power interface (VDD 2) of the memory card circuit 712, the third gold finger 723 is electrically connected to the data interface (DATA) of the SIM card circuit 713, the fourth gold finger 724 is electrically connected to the reference clock interface (CLK) of the memory card circuit 712 and is electrically connected to the clock interface (CLK) of the SIM card circuit 713 through the frequency divider 715, the sixth gold finger 726 is electrically connected to the reset interface (RST) of the SIM card circuit 713, the seventh gold finger 727 is electrically connected to the ground interface (GND) of the SIM card circuit 713 and the ground interface (GND) of the memory card circuit 712, and the eighth gold finger 728 is electrically connected to the power interface (VCC) of the SIM card circuit 713 and the first power interface (VDD 1) of the memory card circuit 712.

In this embodiment, the two-in-one card 7 implements signal transmission of the SIM card circuit 713 and signal transmission of the memory card circuit 712 through the first gold finger 721 to the tenth gold finger 7210, so that the two-in-one card 7 can integrate a SIM card function and a memory card function, to implement a plurality of functions, and increase a degree of integration. When the two-in-one card 7 is inserted into an electronic device, a quantity of information cards that need to be inserted can be effectively reduced, and a quantity of card holder assemblies can be reduced, to help lighten and thin the electronic device, and improve user experience.

In addition, the first gold finger 721, the fifth gold finger 725, the ninth gold finger 729, and the tenth gold finger 7210 are exclusive gold fingers of the memory card circuit 712, and are configured to transmit high-speed data of the memory card. A connection circuit switching design between a high-speed data interface and a low-speed data interface does not need to be performed for the first gold finger 721, the fifth gold finger 725, the ninth gold finger 729, and the tenth gold finger 7210, to effectively reduce difficulty in designing an internal circuit of the two-in-one card 7. An implementation is easy.

In addition, the second gold finger 722, the third gold finger 723, and the sixth gold finger 726 are also exclusive gold fingers of the SIM card circuit 713 or the memory card circuit 712. The connection circuit switching design does not need to be performed for the gold fingers, so that the difficulty in designing the internal circuit of the two-in-one card 7 is low. An implementation is easy.

For example, the frequency divider 715 is configured to change a frequency of a signal. In this embodiment, the frequency divider 715 is disposed, so that an initial clock signal transmitted through the fourth gold finger 724 may be the reference clock signal (NM RCLK) of the memory card, and the reference clock signal (NM RCLK) of the memory card is directly transmitted to the reference clock interface (RCLK) of the memory card circuit 712. The frequency divider 715 adjusts a frequency of the reference clock signal (NM RCLK) of the memory card, to form the clock signal (SIM CLK) of the SIM card, and then transmits the clock signal (SIM CLK) of the SIM card to the clock interface (CLK) of the SIM card circuit 713. For example, the frequency of the reference clock signal (NM RCLK) of the memory card is 200 MHz, and the frequency divider 715 may adjust the frequency to 5 MHz, to form the clock signal (SIM CLK) of the SIM card.

In this embodiment, the two-in-one card 7 may implement sharing for the reference clock signal (NM RCLK) of the memory card and the clock interface (CLK) of the SIM card circuit 713 through a same gold finger (namely, the fourth gold finger 724), so that a degree of integration of the card interface 72 of the two-in-one card 7 is high. In addition, connection circuit switching does not need to be performed for the fourth gold finger 724, implementation difficulty of the two-in-one card 7 is low, an implementation is easy, and reliability of the two-in-one card 7 is high. The reference clock signal (NM RCLK) of the memory card and the clock interface (CLK) of the SIM card circuit 713 may share the fourth gold finger 724 in a time-division manner, or may simultaneously use the fourth gold finger 724. This is not strictly limited in this application.

For example, the SIM card circuit 713 and the memory card circuit 712 each transmit a ground signal through the seventh gold finger 727, and transmit a power signal through the eighth gold finger 728. The two-in-one card 7 may be provided with no solution of switching a related connection circuit, or a switching solution is easy to implement. Therefore, a degree of integration of the card interface 72 of the two-in-one card 7 can be increased, and the difficulty in designing the internal circuit is low, so that reliability of the two-in-one card 7 is high, and costs are low. For a solution in which the SIM card circuit 713 and the memory card circuit 712 transmit the ground signal and the power signal through the seventh gold finger 727 and the eighth gold finger 728, specifically refer to related descriptions in the foregoing embodiments. Details are not described herein again.

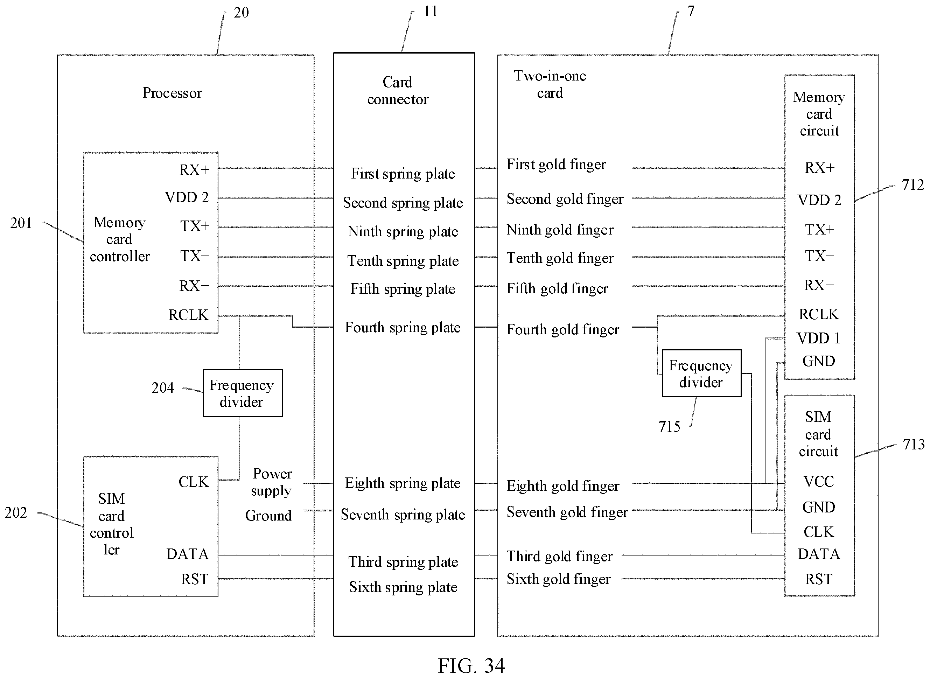

In some embodiments, refer to FIG. 33 and FIG. 34 together. FIG. 34 is a schematic of a connection circuit between the two-in-one card 7 shown in FIG. 33 and an electronic device.

In some embodiments, when the two-in-one card 7 is inserted into a card holder assembly of the electronic device, and is electrically connected to a card connector 11, a first spring plate to a tenth spring plate of the card connector 11 abut against and are electrically connected to a first gold finger 721 to a tenth gold finger 7210 of the two-in-one card 7 in a one-to-one correspondence. For example, a processor 20 of the electronic device may include a memory card controller 201, a SIM card controller 202, a frequency divider 204, a power interface, and a ground interface. The memory card controller 201 may be configured to control running of the memory card circuit of the two-in-one card 7, and the SIM card controller 202 may be configured to control running of the SIM card circuit of the two-in-one card 7. A plurality of controllers of the processor 20 may be components independent of each other, or may be combined by using an integrated component, or one controller may be split into a plurality of components. This is not strictly limited in this embodiment of this application.

For example, a power interface of the processor 20 is configured to transmit a power signal, and a ground interface is configured to transmit a ground signal. The power signal may be a power signal (SIM VCC) of a SIM card or a first power signal (NM VDD 1) of a memory card, and the ground signal may be a ground signal (NM GND) of the memory card or a ground signal (SIM GND) of the SIM card. The power interface and the ground interface may be independent of the SIM card controller 202 and the memory card controller 201, or may be separately split and integrated into the SIM card controller 202 and the memory card controller 201. This is not strictly limited in this embodiment of this application. In FIG. 34 and subsequent accompanying drawings, that the power interface and the ground interface are independent of the SIM card controller 202 and the memory card controller 201 is used as an example for illustration, and the power interface and the ground interface are respectively identified as a power supply and a ground.

For example, the interface of the memory card controller 201 and an interface of the SIM card controller 202 are connected to eight of 10 spring plates of the card connector 11. The power interface is connected to another one of the 10 spring plates, and the ground interface is connected to the other one of the 10 spring plates. In this embodiment, the electronic device implements interaction such as calling, data communication, and data storage of the two-in-one card 7 through the 10 spring plates of the card connector 11. There is a small quantity of spring plates, and the card connector 11 and the card holder assembly have small volumes, to help lighten and thin the electronic device.

For example, the memory card controller 201 supports a PCIE interface protocol. The memory card controller 201 includes a reference clock interface (RCLK), and the reference clock interface (RCLK) is configured to transmit a reference clock signal (NM RCLK) of the memory card. The SIM card controller 202 includes a clock interface (CLK), and the clock interface (CLK) is configured to transmit a clock signal (SIM CLK) of the SIM card. The reference clock interface (RCLK) of the memory card controller 201 is connected to one of the 10 spring plates of the card connector 11, and the reference clock interface (RCLK) of the memory card controller 201 is connected to the clock interface (CLK) of the SIM card controller 202 through the frequency divider 204.

In this embodiment, the frequency divider 204 is connected to the reference clock interface (RCLK) of the memory card controller 201 and the clock interface (CLK) of the SIM card controller 202. The frequency divider 204 is configured to: adjust a frequency of the reference clock signal (NM RCLK) that is of the memory card and that is transmitted through the reference clock interface (RCLK) of the memory card controller 201, to form the clock signal (SIM CLK) of the SIM card, and transmit the clock signal (SIM CLK) of the SIM card with the clock interface (CLK) of the SIM card controller 202, so that the SIM card controller 202 and the memory card controller 201 implement clock alignment. For example, the frequency of the reference clock signal (NM RCLK) of the memory card is 200 MHz, and the frequency divider 204 may adjust the frequency to 5 MHz, to form the clock signal (SIM CLK) of the SIM card.

The processor 20 of the electronic device provides the reference clock signal (NM RCLK) of the memory card through one spring plate of the card connector 11, to provide a required clock signal for the two-in-one card 7. In addition, the reference clock interface (RCLK) of the memory card controller 201 is connected to the clock interface (CLK) of the SIM card controller 202 through the frequency divider 204, so that a clock of the SIM card controller 202 can be aligned with that of the memory card controller 201, to improve communication efficiency and communication quality between the electronic device and the two-in-one card 7.

For example, the memory card controller 201 further includes four data interfaces (RX+, RX-, TX+, and TX-) and a second power interface (VDD 2), the four data interfaces (RX+, RX-, TX+, and TX-) are configured to transmit data signals (NM RX+, NM RX-, NM TX+, and NM TX-) of the memory card, and the second power interface (VDD 2) is configured to transmit a second power signal (NM VDD 2) of the memory card. The SIM card controller 202 includes a reset interface (RST) and a data interface (DATA), the reset interface (RST) is configured to transmit a reset signal (SIM RST) of the SIM card, and the data interface (DATA) is configured to transmit a data signal (SIM DATA) of the SIM card.

Seven of the 10 spring plates of the card connector 11 are connected to the four data interfaces (RX+, RX-, TX+, and TX-) of the memory card controller 201, the second power interface (VDD 2) of the memory card controller 201, the data interface (DATA) of the SIM card controller 202, and the reset interface (RST) of the SIM card controller 202 in a one-to-one correspondence.

For example, the four data interfaces (RX+, RX-, TX+, and TX-) of the memory card controller 201 are electrically connected to the first spring plate, a fifth spring plate, a ninth spring plate, and the tenth spring plate of the card connector 11 in a one-to-one correspondence, the second power interface (VDD 2) is electrically connected to a second spring plate of the card connector 11, and the reference clock interface (RCLK) is electrically connected to a fourth spring plate of the card connector 11. The data interface (DATA) of the SIM card controller 202 is electrically connected to a third spring plate of the card connector 11, and the reset interface (RST) of the SIM card controller 202 is electrically connected to a sixth spring plate of the card connector 11. The power interface of the processor 20 is electrically connected to an eighth spring plate of the card connector 11, and the ground interface is electrically connected to a seventh spring plate of the card connector 11.

In this embodiment, when the two-in-one card 7 is inserted into the electronic device and the memory card circuit 712 of the two-in-one card 7 works, the memory card controller 201 transmits the data signals (NM RX+, NM RX-, NM TX+, and NM TX-) of the memory card with the two-in-one card 7 through the first spring plate, the fifth spring plate, the ninth spring plate, and the tenth spring plate, transmits the second power signal (NM VDD 2) of the memory card with the two-in-one card 7 through the second spring plate, and transmits the reference clock signal (NM RCLK) of the memory card with the two-in-one card 7 through the fourth spring plate. The power interface of the processor 20 transmits the first power signal (NM VDD 1) of the memory card with the two-in-one card 7 through the eighth spring plate, and the ground interface transmits the ground signal (NM GND) of the memory card with the two-in-one card 7 through the seventh spring plate. The two-in-one card 7 implements a data storage function.

When the two-in-one card 7 is inserted into the electronic device and the SIM card circuit 713 of the two-in-one card 7 works, the SIM card controller 202 receives a clock signal that is sent by the memory card controller 201 and that is adjusted by the frequency divider 204, and the SIM card controller 202 transmits the data signal (SIM DATA) of the SIM card with the two-in-one card 7 through the third spring plate. The power interface of the processor 20 transmits the power signal (SIM VCC) of the SIM card with the two-in-one card 7 through the eighth spring plate, and the ground interface transmits the ground signal (SIM GND) of the SIM card with the two-in-one card 7 through the seventh spring plate. The two-in-one card 7 implements a calling function and a data communication function. When the electronic device needs to perform a reset operation on the SIM card circuit 713 of the two-in-one card 7, the SIM card controller 202 transmits the reset signal (SIM RST) of the SIM card with the two-in-one card through the sixth spring plate, to control the SIM card circuit 713 to be reset.

In some other embodiments, the frequency divider 204 may not be disposed in the processor 20, and the frequency divider 715 may not be disposed in the two-in-one card 7 either. In the processor 20 of the electronic device, the reference clock interface (RCLK) of the memory card controller 201 and the clock interface (CLK) of the SIM card controller 202 are electrically connected to the fourth spring plate of the card connector 11. In the two-in-one card 7, the reference clock interface (RCLK) of the memory card circuit 712 and the clock interface (CLK) of the SIM card circuit 713 are electrically connected to the fourth gold finger 724 of the card interface 72. The memory card controller 201 sends the reference clock signal (NM RCLK) of the memory card to the fourth gold finger 724 through the fourth spring plate, the SIM card controller 202 sends the clock signal (SIM CLK) of the SIM card to the fourth gold finger 724 through the fourth spring plate, and the memory card circuit 712 and the SIM card circuit 713 perform corresponding processing based on a received signal, in other words, process only a clock signal that may be identified by a circuit. For example, when a signal transmitted through the fourth gold finger 724 includes only the reference clock signal (NM RCLK) of the memory card, the memory card circuit 712 processes the reference clock signal (NM RCLK) of the memory card; when a signal transmitted through the fourth gold finger 724 includes only the clock signal (SIM CLK) of the SIM card, the SIM card circuit 713 processes the clock signal (SIM CLK) of the SIM card; and when a signal transmitted through the fourth gold finger 724 includes the reference clock signal (NM RCLK) of the memory card and the clock signal (SIM CLK) of the SIM card, the memory card circuit 712 processes the reference clock signal (NM RCLK) of the memory card, for example, collects a signal above 100 MHz, and the SIM card circuit 713 processes the clock signal (SIM CLK) of the SIM card, for example, collects a signal below 5 MHz.

In some other embodiments, the frequency divider 204 may not be disposed in the processor 20, and the frequency divider 715 may not be disposed in the two-in-one card 7 either. A frequency of the clock signal (SIM CLK) of the SIM card is increased to be the same as a frequency of the reference clock signal (NM RCLK) of the memory card. For example, the frequency of the clock signal (SIM CLK) of the SIM card is increased to a frequency of 19.2 MHz or a frequency of 20 MHz required by the reference clock signal (NM RCLK) of the memory card, to implement clock sharing. In this case, in the electronic device, the reference clock interface (RCLK) of the memory card controller 201 is electrically connected to the clock interface (CLK) of the SIM card controller 202, and one of the clock interfaces is electrically connected to the fourth spring plate of the card connector 11. In the two-in-one card 7, the reference clock interface (RCLK) of the memory card circuit 712 and the clock interface (CLK) of the SIM card circuit 713 are electrically connected to the fourth gold finger 724.

In some other embodiments, the frequency divider 204 may be replaced with a switch in the processor 20, and the frequency divider 715 may not be disposed in the two-in-one card 7. In this case, in the processor 20 of the electronic device, the switch is connected to the reference clock interface (RCLK) of the memory card controller 201 and the clock interface (CLK) of the SIM card controller 202, and is further connected to the fourth spring plate. In the two-in-one card 7, the reference clock interface (RCLK) of the memory card circuit 712 and the clock interface (CLK) of the SIM card circuit 713 are electrically connected to the fourth gold finger 724. The electronic device provides the reference clock signal of the memory card and the clock signal of the SIM card by sharing a same spring plate in a time-division manner. The clock signal of the SIM card is provided when there is a SIM card service, and the reference clock signal of the memory card is provided when there is a memory card service. In some cases, if the clock signal of the SIM card is the same as the reference clock signal of the memory card, a same clock signal can be provided. In some cases, if the SIM card and the memory card simultaneously have services, the clock signal of the SIM card may be preferentially provided. Providing of the reference clock signal of the memory card is restored after a service of the SIM card ends. In some other embodiments, in a solution in which the processor 20 replaces the frequency divider 204 with a switch, the frequency divider 715 in the two-in-one card 7 may also be replaced with a switch.

It may be understood that there is another solution of an implementation in which the reference clock signal (NM RCLK) of the memory card and the clock signal (SIM CLK) of the SIM card share the fourth gold finger 724 for transmission. This is not strictly limited in this application.

In some other embodiments, a signal arrangement of the card interface 72 of the two-in-one card 7 may be in another manner. For example, the second gold finger 722 is configured to transmit one data signal (for example, NM RX+) of the memory card, the first gold finger 721 is configured to transmit the second power signal (NM VDD 2) of the memory card, and signal arrangements of the other gold fingers remain unchanged. In this case, the second gold finger 722 of the two-in-one card 7 is connected to one data interface (for example, RX+) of the memory card circuit 712, the first gold finger 721 is electrically connected to the second power interface (VDD 2) of the memory card circuit 712, and a connection circuit between another interface and a gold finger remains unchanged. One data interface (for example, RX+) of the memory card controller 201 of the electronic device is electrically connected to the second spring plate, the second power interface (VDD 2) of the memory card controller 201 is electrically connected to the first spring plate, and a connection circuit between another interface and the spring plate of the card connector 11 remains unchanged. Working procedures of the two-in-one card 7 and the electronic device are adaptively adjusted. Details are not described herein again.

Table 14 is a table of a correspondence between a plurality of spring plates of the card connector 11 and each of a plurality of gold fingers of the nano-SIM card 3, a plurality of gold fingers of the first NM card 4, a plurality of gold fingers of the two-in-one card 7 shown in FIG. 33, and transmission signals thereof. When the two-in-one card 7 is connected to the card connector 11, the first spring plate to the tenth spring plate of the card connector 11 abut against and are electrically connected to the first gold finger 721 to the tenth gold finger 7210 of the two-in-one card 7 in a one-to-one correspondence, and locations of the third gold finger 723 to the eighth gold finger 728 of the two-in-one card 7 correspond to locations of the first gold finger 321 to the sixth gold finger 326 of the nano-SIM card 3 in a one-to-one correspondence. In some embodiments, locations of the third gold finger 723 to the tenth gold finger 7210 of the two-in-one card 7 correspond to locations of the first gold finger 421 to the eighth gold finger 428 of the first NM card 4 in a one-to-one correspondence.

**Table 14**

| Card connector 11 | Nano-SIM card 3 | | First NM card 4 | | Two-in-one card 7 | |
|---|---|---|---|---|---|---|
| First spring plate | | | | | First gold finger 721 | NMRX+ |
| Second spring plate | | | | | Second gold finger 722 | NM VDD 2 |
| Third spring plate | First gold finger 321 | DATA | First gold finger 421 | DATA 1 | Third gold finger 723 | SIM DATA |
| Fourth spring plate | Second gold finger 322 | CLK | Second gold finger 422 | CLK | Fourth gold finger 724 | NM RCLK and SIM CLK |
| Fifth spring plate | Third gold finger 323 | VPP | Third gold finger 423 | CMD | Fifth gold finger 725 | NMRX- |
| Sixth spring plate | Fourth gold finger 324 | RST | Fourth gold finger 424 | DATA 0 | Sixth gold finger 726 | SIM RST |
| Seventh spring plate | Fifth gold finger 325 | GND | Fifth gold finger 425 | GND | Seventh gold finger 727 | SIM GND and NM GND |
| Eighth spring plate | Sixth gold finger 326 | VCC | Sixth gold finger 426 | VCC | Eighth gold finger 728 | SIM VCC and NM VDD 1 |
| Ninth spring plate | | | Seventh gold finger 427 | DATA 3 | Ninth gold finger 729 | NM TX+ |
| Tenth spring plate | | | Eighth gold finger 428 | DATA 2 | Tenth gold finger 7210 | NM TX- |

When the electronic device is compatible with the nano-SIM card 3 and the two-in-one card 7 shown in FIG. 33, the SIM card controller 202 of the electronic device may not support a programming voltage/input signal. Alternatively, the SIM card controller 202 of the electronic device may support a programming voltage/input signal. In this case, the SIM card controller 202 of the electronic device may further include a programming voltage/input signal interface (VPP). The processor 20 may be provided with a switch, and the switch is connected to the programming voltage/input signal interface (VPP) of the SIM card controller 202 and the data interface (for example, RX-) of the memory card controller 201, and is further connected to the fifth spring plate of the card connector 11. When the nano-SIM card 3 is inserted into the electronic device, the switch connects the programming voltage/input signal interface (VPP) of the SIM card controller 202 and the fifth spring plate. When the two-in-one card 7 is inserted into the electronic device, the switch connects the data interface (for example, RX-) of the memory card controller 201 and the fifth spring plate.

In some other embodiments, this application further provides an electronic device. The electronic device is compatible with a nano-SIM card 3, a first NM card 4, and the two-in-one card 7 shown in FIG. 31. A processor of the electronic device may include a memory card controller, a second memory card controller, a SIM card controller, and an interface controller, the interface controller is electrically connected to the memory card controller, the second memory card controller, and the SIM card controller, and the interface controller is further electrically connected to a plurality of spring plates of a card connector 11.

An interface protocol (for example, a PCIE interface protocol) of the memory card controller can communicate with a memory card circuit of the two-in-one card 7, and is used to control the memory card circuit of the two-in-one card 7 to run. The SIM card controller is configured to control the nano-SIM card 3 to run. An interface protocol (for example, an EMMC interface protocol) of the second memory card controller can communicate with the first NM card 4, and is used to control the first NM card 4 to run.

When different information cards are inserted into a card holder assembly 10 of the electronic device, and are electrically connected to the card connector 11, the interface controller can control the SIM card controller to communicate with the information card through the card connector 11, or control the memory card controller and the SIM card controller to communicate with the information card through the card connector 11, or control the second memory card controller to communicate with the information card through the card connector 11. For example, when a card tray 2 is installed with the nano-SIM card 3, and the nano-SIM card 3 is inserted into a card holder assembly 10, the interface controller controls the SIM card controller to communicate with the nano-SIM card 3 through the card connector 11; when the card tray 2 is installed with the first NM card 4, and the first NM card 4 is inserted into the card holder assembly 10, the interface controller controls the second memory card controller to communicate with the first NM card 4 through the card connector 11; and when the card tray 2 is installed with the two-in-one card 7, and the two-in-one card 7 is inserted into the card holder assembly 10, the interface controller controls the memory card controller and the SIM card controller to communicate with the two-in-one card 7 through the card connector 11.

The interface controller may include a plurality of switches, and a connection relationship between a plurality of spring plates of the card connector 11 and a plurality of controllers in the processor is switched through the plurality of switches, to implement a communication requirement in different scenarios. The interface controller may further include a plurality of conducting wires. For other technical content of this embodiment, refer to related descriptions of the embodiment corresponding to FIG. 32. Details are not described herein again.

In this embodiment, a high-speed signal (for example, NM RX+) of the two-in-one card 7 is arranged on the first gold finger 721. Because a location of the first gold finger 721 of the two-in-one card 7 corresponds to none of locations of all gold fingers of the nano-SIM card 3 and the first NM card 4, regardless of whether the information card inserted into the electronic device is the two-in-one card 7, the nano-SIM card 3, or the first NM card 4, the processor 20 does not need to switch an interface electrically connected to the first spring plate, to simplify a circuit of the processor 20, and reduce design difficulty and costs.

A second power signal (NM VDD 2) of a memory card of the two-in-one card 7 is arranged on a second gold finger 722. Because a location of the second gold finger 722 of the two-in-one card 7 corresponds to none of locations of all the gold fingers of the nano-SIM card 3 and the first NM card 4, the second gold finger 722 of the two-in-one card 7 does not need to share a same spring plate of the card connector 11 of the electronic device with the nano-SIM card 3 and the first NM card 4, to prevent the second power signal (NM VDD 2) of the memory card from sharing a same spring plate with data signals of the nano-SIM card 3 and the first NM card 4, and reduce a risk that the nano-SIM card 3 and the first NM card 4 are burnt by the second power signal (NM VDD 2) of the memory card when the nano-SIM card 3 and the first NM card 4 are inserted into the electronic device and are connected to the card connector 11. Reliability of compatibility of the electronic device with the nano-SIM card 3, the first NM card 4, and the two-in-one card 7 is high. In addition, a high-voltage resistant design that is used to prevent a circuit from being burnt by the second power signal (NM VDD 2) of the memory card does not need to be deployed for the first NM card 4 and the nano-SIM card 3 either, to reduce costs.

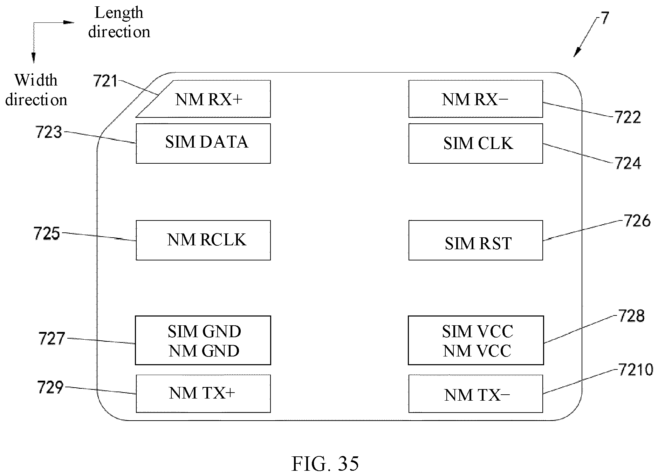

FIG. 35 is a diagram of the two-in-one card 7 shown in FIG. 17 in some other embodiments.

In some embodiments, a memory card circuit 712 of the two-in-one card 7 supports a UFS interface protocol. A card interface 72 of the two-in-one card 7 includes a first gold finger 721 to a tenth gold finger 7210. In the first gold finger 721 to the tenth gold finger 7210, one gold finger is configured to transmit a data signal (SIM DATA) of a SIM card, one gold finger is configured to transmit a clock signal (SIM CLK) of the SIM card, one gold finger is configured to transmit a reset signal (SIM RST) of the SIM card, four gold fingers are configured to transmit data signals (NM RX+, NM RX-, NM TX+, and NM TX-) of a memory card, one gold finger is configured to transmit a reference clock signal (NM RCLK) of the memory card, one gold finger is configured to transmit a ground signal (SIM GND) of the SIM card and a ground signal (NM GND) of the memory card, and one gold finger is configured to transmit a power signal (SIM VCC) of the SIM card and a first power signal (NM VCC) of the memory card.

For example, the first gold finger 721, a second gold finger 722, a ninth gold finger 729, and the tenth gold finger 7210 of the two-in-one card 7 are configured to transmit the data signals (NM RX+, NM RX-, NM TX+, and NM TX-) of the memory card. An example in which the first gold finger 721 is configured to transmit the data signal (NM RX+), the second gold finger 722 is configured to transmit the data signal (NM RX-), the ninth gold finger 729 is configured to transmit the data signal (NM TX+), and the tenth gold finger 7210 is configured to transmit the data signal (NM TX-) is used for description in the following embodiments. In some other embodiments, the data signals transmitted through the first gold finger 721, the second gold finger 722, the ninth gold finger 729, and the tenth gold finger 7210 can be exchanged. For example, the data signals transmitted through the first gold finger 721 and the second gold finger 722 are exchanged, and the data signals transmitted through the ninth gold finger 729 and the tenth gold finger 7210 are exchanged. Details are not described herein in another embodiment.

The third gold finger 723 is configured to transmit the data signal (SIM DATA) of the SIM card, the fourth gold finger 724 is configured to transmit the clock signal (SIM CLK) of the SIM card, the fifth gold finger 725 is configured to transmit the reference clock signal (NM RCLK) of the memory card, the sixth gold finger 726 is configured to transmit the reset signal (SIM RST) of the SIM card, the seventh gold finger 727 is configured to transmit the ground signal (SIM GND) of the SIM card and the ground signal (NM GND) of the memory card, and the eighth gold finger 728 is configured to transmit the power signal (SIM VCC) of the SIM card and the first power signal (NM VCC) of the memory card.

Refer to FIG. 35 and Table 15 together. Table 15 is an illustration table of a correspondence between the gold finger of the two-in-one card 7 shown in FIG. 35 and an interface of a circuit. In this embodiment of this application, for ease of illustration, an interface of a circuit or an interface of a controller used in the following descriptions and accompanying drawings is identified by using a signal transmitted through the interface of the circuit or the interface of the controller.

**Table 15**

| Two-in-one card 7 | | |
|---|---|---|
| Card interface 72 | Memory card circuit 712 | SIM card circuit 713 |
| First gold finger 721 | Data interface (RX+) | |
| Second gold finger 722 | Data interface (RX-) | |
| Third gold finger 723 | | Data interface (DATA) |
| Fourth gold finger 724 | | Clock interface (CLK) |
| Fifth gold finger 725 | Reference clock interface (RCLK) | |
| Sixth gold finger 726 | | Reset interface (RST) |
| Seventh gold finger 727 | Ground interface (GND) | Ground interface (GND) |
| Eighth gold finger 728 | First power interface (VCC) | Power interface (VCC) |
| Ninth gold finger 729 | Data interface (TX+) | |
| Card interface 72 | Memory card circuit 712 | SIM card circuit 713 |
| Tenth gold finger 7210 | Data interface (TX-) | |

In some embodiments, the memory card circuit 712 includes the four data interfaces (RX+, RX-, TX+, and TX-), the second power interface (VCCQ), the reference clock interface (RCLK), the ground interface (GND), and the first power interface (VCC). The four data interfaces (RX+, RX-, TX+, and TX-) of the memory card circuit 712 are configured to transmit the data signals (NM RX+, NM RX-, NM TX+, and NM TX-) of the memory card, the second power interface (VCCQ) of the memory card circuit 712 is configured to transmit the second power signal (NM VCCQ) of the memory card, the reference clock interface (RCLK) of the memory card circuit 712 is configured to transmit the reference clock signal (NM RCLK) of the memory card, the ground interface (GND) of the memory card circuit 712 is configured to transmit the ground signal (NM GND) of the memory card, and the first power interface (VCC) of the memory card circuit 712 is configured to transmit the first power signal (NM VCC) of the memory card.

The SIM card circuit 713 includes the data interface (DATA), the clock interface (CLK), the reset interface (RST), the ground interface (GND), and the power interface (VCC). The data interface (DATA) of the SIM card circuit 713 is configured to transmit the data signal (SIM DATA) of the SIM card, the clock interface (CLK) of the SIM card circuit 713 is configured to transmit the clock signal (SIM CLK) of the SIM card, the reset interface (RST) of the SIM card circuit 713 is configured to transmit the reset signal (SIM RST) of the SIM card, the ground interface (GND) of the SIM card circuit 713 is configured to transmit the ground signal (SIM GND) of the SIM card, and the power interface (VCC) of the SIM card circuit 713 is configured to transmit the power signal (SIM VCC) of the SIM card.

The two-in-one card 7 further includes a voltage regulator 716. The first gold finger 721, the second gold finger 722, the ninth gold finger 729, and the tenth gold finger 7210 of the two-in-one card 7 are respectively electrically connected to the four data interfaces (RX+, RX-, TX+, and TX-) of the memory card circuit 712, the third gold finger 723 is electrically connected to the data interface (DATA) of the SIM card circuit 713, the fourth gold finger 724 is electrically connected to the clock interface (CLK) of the SIM card circuit 713, the fifth gold finger 725 is electrically connected to the reference clock interface (RCLK) of the memory card circuit 712, the sixth gold finger 726 is electrically connected to the reset interface (RST) of the SIM card circuit 713, the seventh gold finger 727 is electrically connected to the ground interface (GND) of the SIM card circuit 713 and the ground interface (GND) of the memory card circuit 712, and the eighth gold finger 728 is electrically connected to the power interface (VCC) of the SIM card circuit 713 and the first power interface (VCC) of the memory card circuit 712. The eighth gold finger 728 is further electrically connected to the second power interface (VCCQ) of the memory card circuit 712 through the voltage regulator 716.

In this embodiment, the two-in-one card 7 implements signal transmission of the SIM card circuit 713 and signal transmission of the memory card circuit 712 through the first gold finger 721 to the tenth gold finger 7210, so that the two-in-one card 7 can integrate a SIM card function and a memory card function, to implement a plurality of functions, and increase a degree of integration. When the two-in-one card 7 is inserted into an electronic device, a quantity of information cards that need to be inserted can be effectively reduced, and a quantity of card holder assemblies can be reduced, to help lighten and thin the electronic device, and improve user experience.

In addition, the first gold finger 721, the second gold finger 722, the ninth gold finger 729, and the tenth gold finger 7210 are exclusive gold fingers of the memory card circuit 712, and are configured to transmit high-speed data of the memory card. A connection circuit switching design between a high-speed data interface and a low-speed data interface does not need to be performed for the first gold finger 721, the second gold finger 722, the ninth gold finger 729, and the tenth gold finger 7210, to effectively reduce difficulty in designing an internal circuit of the two-in-one card 7. An implementation is easy.

In addition, the third gold finger 723 to the sixth gold finger 726 are also exclusive gold fingers of the SIM card circuit 713 or the memory card circuit 712. The connection circuit switching design does not need to be performed for the gold fingers, so that the difficulty in designing the internal circuit of the two-in-one card 7 is low. An implementation is easy.

For example, the SIM card circuit 713 and the memory card circuit 712 each transmit a ground signal through the seventh gold finger 727, and transmit a power signal through the eighth gold finger 728. The two-in-one card 7 may be provided with no solution of switching a related connection circuit, or a switching solution is easy to implement. Therefore, a degree of integration of the card interface 72 of the two-in-one card 7 can be increased, and the difficulty in designing the internal circuit is low, so that reliability of the two-in-one card 7 is high, and costs are low. For a solution in which the SIM card circuit 713 and the memory card circuit 712 transmit the ground signal and the power signal through the seventh gold finger 727 and the eighth gold finger 728, specifically refer to related descriptions in the foregoing embodiments. Details are not described herein again.

For example, the eighth gold finger 728 is electrically connected to the second power interface (VCCQ) of the memory card circuit 712 through the voltage regulator 716, and the voltage regulator 716 can adjust a voltage of a power signal transmitted through the eighth gold finger 728, to form the second power signal (NM VCCQ) of the memory card, and transmit the second power interface (VCCQ) of the memory card circuit 712. For example, a voltage of the first power signal (NM VCC) of the memory card is 2.5 V, and the voltage regulator 716 may adjust the voltage to 1.2 V to 1.25 V, to form the second power signal (NM VCCQ) of the memory card.

In this embodiment, because the second power signal (NM VCCQ) of the memory card may be obtained by regulating the voltage of the first power signal (NM VCC) of the memory card, data transmission does not need to be performed through a separate gold finger, to reduce a quantity of gold fingers of the card interface 72 of the two-in-one card 7, and increase a degree of integration of the card interface 72. In addition, an internal circuit structure of the two-in-one card 7 is simple, and an implementation is easy.

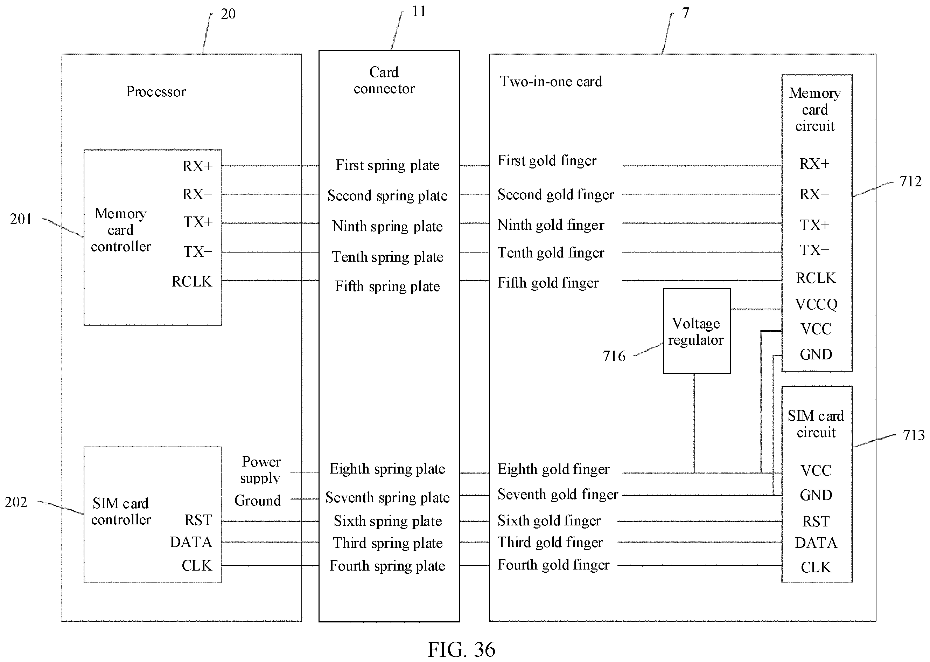

Refer to FIG. 35 and FIG. 36 together. FIG. 36 is a schematic of a connection circuit between the two-in-one card 7 shown in FIG. 35 and an electronic device.

In some embodiments, when the two-in-one card 7 is inserted into a card holder assembly of the electronic device, and is electrically connected to a card connector 11, a first spring plate to a tenth spring plate of the card connector 11 abut against and are electrically connected to a first gold finger 721 to a tenth gold finger 7210 of the two-in-one card 7 in a one-to-one correspondence. For example, a processor 20 of the electronic device may include a memory card controller 201, a SIM card controller 202, a power interface, and a ground interface. The memory card controller 201 may be configured to control running of the memory card circuit of the two-in-one card 7, and the SIM card controller 202 may be configured to control running of the SIM card circuit of the two-in-one card 7. A plurality of controllers of the processor 20 may be components independent of each other, or may be combined by using an integrated component, or one controller may be split into a plurality of components. This is not strictly limited in this embodiment of this application.

For example, a power interface of the processor 20 is configured to transmit a power signal, and a ground interface is configured to transmit a ground signal. The power signal may be a power signal (SIM VCC) of a SIM card or a first power signal (NM VCC) of a memory card, and the ground signal may be a ground signal (NM GND) of the memory card or a ground signal (SIM GND) of the SIM card. The power interface and the ground interface may be independent of the SIM card controller 202 and the memory card controller 201, or may be separately split and integrated into the SIM card controller 202 and the memory card controller 201. This is not strictly limited in this embodiment of this application. In FIG. 36 and subsequent accompanying drawings, that the power interface and the ground interface are independent of the SIM card controller 202 and the memory card controller 201 is used as an example for illustration, and the power interface and the ground interface are respectively identified as a power supply and a ground.

For example, the memory card controller 201 supports a UFS interface protocol. The memory card controller 201 includes four data interfaces (RX+, RX-, TX+, and TX-) and a reference clock interface (RCLK), the four data interfaces (RX+, RX-, TX+, and TX-) are configured to transmit data signals (NM RX+, NM RX-, NM TX+, and NM TX-) of the memory card, and the reference clock interface (RCLK) is configured to transmit a reference clock signal (NM RCLK) of the memory card. The SIM card controller 202 includes a reset interface (RST), a data interface (DATA), and a clock interface (CLK), the reset interface (RST) is configured to transmit a reset signal (SIM RST) of the SIM card, the data interface (DATA) is configured to transmit a data signal (SIM DATA) of the SIM card, and the clock interface (CLK) is configured to transmit a clock signal (SIM CLK) of the SIM card.

Eight of the 10 spring plates of the card connector 11 are connected to the four data interfaces (RX+, RX-, TX+, and TX-) of the memory card controller 201, the reference clock interface (RCLK) of the memory card controller 201, the data interface (DATA) of the SIM card controller 202, the clock interface (CLK) of the SIM card controller 202, and the reset interface (RST) of the SIM card controller 202 in a one-to-one correspondence.

For example, the four data interfaces (RX+, RX-, TX+, and TX-) of the memory card controller 201 are respectively electrically connected to the first spring plate, a second spring plate, a ninth spring plate, and the tenth spring plate of the card connector 11, and the reference clock interface (RCLK) of the memory card controller 201 is electrically connected to a fifth spring plate of the card connector 11. The data interface (DATA) of the SIM card controller 202 is electrically connected to a third spring plate of the card connector 11, the clock interface (CLK) of the SIM card controller 202 is electrically connected to a fourth spring plate of the card connector 11, and the reset interface (RST) of the SIM card controller 202 is electrically connected to a sixth spring plate. The power interface of the processor 20 is electrically connected to an eighth spring plate of the card connector 11, and the ground interface is electrically connected to a seventh spring plate of the card connector 11.

In this embodiment, when the two-in-one card 7 is inserted into the electronic device and the memory card circuit 712 of the two-in-one card 7 works, the memory card controller 201 transmits the data signals (NM RX+, NM RX-, NM TX+, and NM TX-) of the memory card with the two-in-one card 7 through the first spring plate, the second spring plate, the ninth spring plate, and the tenth spring plate, and transmits the reference clock signal (NM RCLK) of the memory card with the two-in-one card 7 through the fifth spring plate. The power interface of the processor 20 transmits the first power signal (NM VCC) of the memory card with the two-in-one card 7 through the eighth spring plate. In the two-in-one card 7, the first power signal (NM VCC) of the memory card is adjusted to the second power signal (NM VCCQ) of the memory card by using the voltage regulator 716, and is transmitted to the memory card circuit 712. The ground interface transmits the ground signal (NM GND) of the memory card with the two-in-one card 7 through the seventh spring plate. The two-in-one card 7 implements a data storage function.

When the two-in-one card 7 is inserted into the electronic device and the SIM card circuit 713 of the two-in-one card 7 works, the SIM card controller 202 transmits the data signal (SIM DATA) of the SIM card with the two-in-one card 7 through the third spring plate, and transmits the clock signal (SIM CLK) of the SIM card with the two-in-one card 7 through the fourth spring plate. The power interface of the processor 20 transmits the power signal (SIM VCC) of the SIM card with the two-in-one card 7 through the eighth spring plate, and the ground interface transmits the ground signal (SIM GND) of the SIM card with the two-in-one card 7 through the seventh spring plate. The two-in-one card 7 implements a calling function and a data communication function. When the electronic device needs to perform a reset operation on the SIM card circuit 713 of the two-in-one card 7, the reset signal (SIM RST) of the SIM card is transmitted with the two-in-one card 7 through the sixth spring plate, to control the SIM card circuit 713 to be reset.

Table 16 is a table of a correspondence between a plurality of spring plates of the card connector 11 and each of a plurality of gold fingers of the nano-SIM card 3, a plurality of gold fingers of the first NM card 4, a plurality of gold fingers of the two-in-one card 7 shown in FIG. 35, and transmission signals thereof. When the two-in-one card 7 is connected to the card connector 11, the first spring plate to the tenth spring plate of the card connector 11 abut against and are electrically connected to the first gold finger 721 to the tenth gold finger 7210 of the two-in-one card 7 in a one-to-one correspondence, and locations of the third gold finger 723 to the eighth gold finger 728 of the two-in-one card 7 correspond to locations of the first gold finger 321 to the sixth gold finger 326 of the nano-SIM card 3 in a one-to-one correspondence. In some embodiments, locations of the third gold finger 723 to the tenth gold finger 7210 of the two-in-one card 7 correspond to locations of the first gold finger 421 to the eighth gold finger 428 of the first NM card 4 in a one-to-one correspondence.

**Table 16**

| Card connector 11 | Nano-SIM card 3 | | First NM card 4 | | Two-in-one card 7 | |
|---|---|---|---|---|---|---|
| First spring plate | | | | | First gold finger 721 | NM RX+ |
| Second spring plate | | | | | Second gold finger 722 | NM RX- |
| Third spring plate | First gold finger 321 | DATA | First gold finger 421 | DATA 1 | Third gold finger 723 | SIM DATA |
| Fourth spring plate | Second gold finger 322 | CLK | Second gold finger 422 | CLK | Fourth gold finger 724 | SIM CLK |
| Fifth spring plate | Third gold finger 323 | VPP | Third gold finger 423 | CMD | Fifth gold finger 725 | NM RCLK |
| Sixth spring plate | Fourth gold finger 324 | RST | Fourth gold finger 424 | DATA 0 | Sixth gold finger 726 | SIM RST |
| Seventh spring plate | Fifth gold finger 325 | GND | Fifth gold finger 425 | GND | Seventh gold finger 727 | SIM GND and NM GND |
| Eighth spring plate | Sixth gold finger 326 | VCC | Sixth gold finger 426 | VCC | Eighth gold finger 728 | SIM VCC and NM VCC |
| Ninth spring plate | | | Seventh gold finger 427 | DATA 3 | Ninth gold finger 729 | NM TX+ |
| Tenth spring plate | | | Eighth gold finger 428 | DATA 2 | Tenth gold finger 7210 | NM TX- |

When the electronic device is compatible with the nano-SIM card 3 and the two-in-one card 7 shown in FIG. 35, the SIM card controller 202 of the electronic device may not support a programming voltage/input signal. Alternatively, the SIM card controller 202 of the electronic device may support a programming voltage/input signal. In this case, the SIM card controller 202 of the electronic device may further include a programming voltage/input signal interface (VPP). The processor 20 may be provided with a switch, and the switch is connected to the programming voltage/input signal interface (VPP) of the SIM card controller 202 and the reference clock interface (RCLK) of the memory card controller 201, and is further connected to the fifth spring plate of the card connector 11. When the nano-SIM card 3 is inserted into the electronic device, the switch connects the programming voltage/input signal interface (VPP) of the SIM card controller 202 and the fifth spring plate. When the two-in-one card 7 is inserted into the electronic device, the switch connects the reference clock interface (RCLK) of the memory card controller 201 and the fifth spring plate.

In some other embodiments, this application further provides an electronic device. The electronic device is compatible with a nano-SIM card 3, a first NM card 4, and the two-in-one card 7 shown in FIG. 35. A processor of the electronic device may include a memory card controller, a second memory card controller, a SIM card controller, and an interface controller, the interface controller is electrically connected to the memory card controller, the second memory card controller, and the SIM card controller, and the interface controller is further electrically connected to a plurality of spring plates of a card connector 11.

An interface protocol (for example, a UFS interface protocol) of the memory card controller can communicate with a memory card circuit of the two-in-one card 7, and is used to control the memory card circuit of the two-in-one card 7 to run. The SIM card controller is configured to control the nano-SIM card 3 to run. An interface protocol (for example, an EMMC interface protocol) of the second memory card controller can communicate with the first NM card 4, and is used to control the first NM card 4 to run.

When different information cards are inserted into a card holder assembly 10 of the electronic device, and are electrically connected to the card connector 11, the interface controller can control the SIM card controller to communicate with the information card through the card connector 11, or control the memory card controller and the SIM card controller to communicate with the information card through the card connector 11, or control the second memory card controller to communicate with the information card through the card connector 11. For example, when a card tray 2 is installed with the nano-SIM card 3, and the nano-SIM card 3 is inserted into a card holder assembly 10, the interface controller controls the SIM card controller to communicate with the nano-SIM card 3 through the card connector 11; when the card tray 2 is installed with the first NM card 4, and the first NM card 4 is inserted into the card holder assembly 10, the interface controller controls the second memory card controller to communicate with the first NM card 4 through the card connector 11; and when the card tray 2 is installed with the two-in-one card 7, and the two-in-one card 7 is inserted into the card holder assembly 10, the interface controller controls the memory card controller and the SIM card controller to communicate with the two-in-one card 7 through the card connector 11.

The interface controller may include a plurality of switches, and a connection relationship between a plurality of spring plates of the card connector 11 and a plurality of controllers in the processor is switched through the plurality of switches, to implement a communication requirement in different scenarios. The interface controller may further include a plurality of conducting wires. For other technical content of this embodiment, refer to related descriptions of the embodiment corresponding to FIG. 32. Details are not described herein again.

In this embodiment, two high-speed signals (for example, NM RX+ and NM RX-) of the two-in-one card 7 are arranged on the first gold finger 721 and the second gold finger 722. Because locations of the first gold finger 721 and the second gold finger 722 of the two-in-one card 7 correspond to none of locations of all gold fingers of the nano-SIM card 3 and the first NM card 4, regardless of whether the information card inserted into the electronic device is the two-in-one card 7, the nano-SIM card 3, or the first NM card 4, the processor 20 does not need to switch an interface electrically connected to the first spring plate and the second spring plate, to simplify a circuit of the processor 20, and reduce design difficulty and costs.

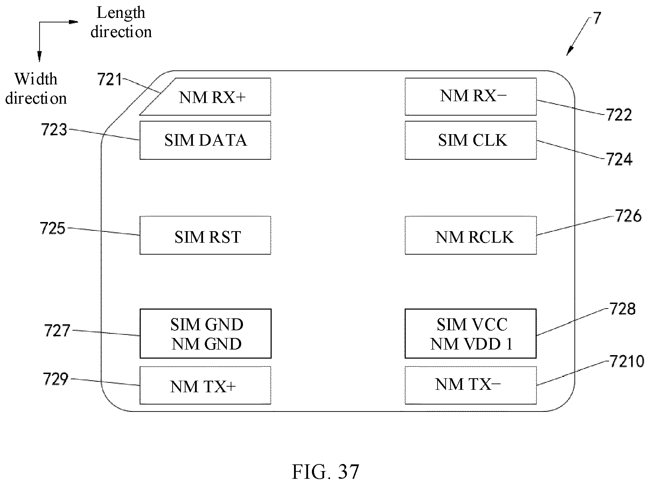

FIG. 37 is a diagram of the two-in-one card 7 shown in FIG. 17 in some other embodiments.

In some embodiments, a PCIE interface protocol is used for a memory card circuit 712 of the two-in-one card 7. A card interface 72 of the two-in-one card 7 includes a first gold finger 721 to a tenth gold finger 7210. In the first gold finger 721 to the tenth gold finger 7210, one gold finger is configured to transmit a data signal (SIM DATA) of a SIM card, one gold finger is configured to transmit a clock signal (SIM CLK) of the SIM card, one gold finger is configured to transmit a reset signal (SIM RST) of the SIM card, four gold fingers are configured to transmit the data signals (NM RX+, NM RX-, NM TX+, and NM TX-) of a memory card, one gold finger is configured to transmit a reference clock signal (NM RCLK) of the memory card, one gold finger is configured to transmit a ground signal (SIM GND) of the SIM card and a ground signal (NM GND) of the memory card, and one gold finger is configured to transmit a power signal (SIM VCC) of the SIM card and a first power signal (NM VDD 1) of the memory card.

For example, the first gold finger 721, a second gold finger 722, a ninth gold finger 729, and the tenth gold finger 7210 of the two-in-one card 7 are configured to transmit the data signals (NM RX+, NM RX-, NM TX+, and NM TX-) of the memory card. An example in which the first gold finger 721 is configured to transmit the data signal (NM RX+), the second gold finger 722 is configured to transmit the data signal (NM RX-), the ninth gold finger 729 is configured to transmit the data signal (NM TX+), and the tenth gold finger 7210 is configured to transmit the data signal (NM TX-) is used for description in the following embodiments. In some other embodiments, the data signals transmitted through the first gold finger 721, the second gold finger 722, the ninth gold finger 729, and the tenth gold finger 7210 can be exchanged. For example, the data signals transmitted through the first gold finger 721 and the second gold finger 722 are exchanged, and the data signals transmitted through the ninth gold finger 729 and the tenth gold finger 7210 are exchanged. Details are not described herein in another embodiment.

The third gold finger 723 is configured to transmit the data signal (SIM DATA) of the SIM card, the fourth gold finger 724 is configured to transmit the clock signal (SIM CLK) of the SIM card, the fifth gold finger 725 is configured to transmit the reset signal (SIM RST) of the SIM card, the sixth gold finger 726 is configured to transmit the reference clock signal (NM RCLK) of the memory card, the seventh gold finger 727 is configured to transmit the ground signal (SIM GND) of the SIM card and the ground signal (NM GND) of the memory card, and the eighth gold finger 728 is configured to transmit the power signal (SIM VCC) of the SIM card and the first power signal (NM VDD 1) of the memory card.

Refer to FIG. 37 and Table 17 together. Table 17 is an illustration table of a correspondence between the gold finger of the two-in-one card 7 shown in FIG. 37 and an interface of a circuit. In this embodiment of this application, for ease of illustration, an interface of a circuit or an interface of a controller used in the following descriptions and accompanying drawings is identified by using a signal transmitted through the interface of the circuit or the interface of the controller.

**Table 17**

| Two-in-one card 7 | | |
|---|---|---|
| Card interface 72 | Memory card circuit 712 | SIM card circuit 713 |
| First gold finger 721 | Data interface (RX+) | |
| Second gold finger 722 | Data interface (RX-) | |
| Third gold finger 723 | | Data interface (DATA) |
| Fourth gold finger 724 | | Clock interface (CLK) |
| Fifth gold finger 725 | | Reset interface (RST) |
| Sixth gold finger 726 | Reference clock interface (RCLK) | |
| Seventh gold finger 727 | Ground interface (GND) | Ground interface (GND) |
| Eighth gold finger 728 | First power interface (VDD 1) | Power interface (VCC) |
| Ninth gold finger 729 | Data interface (TX+) | |
| Tenth gold finger 7210 | Data interface (TX-) | |

In some embodiments, the memory card circuit 712 includes the four data interfaces (RX+, RX-, TX+, and TX-), the second power interface (VDD 2), the reference clock interface (RCLK), the ground interface (GND), and the first power interface (VDD 1). The four data interfaces (RX+, RX-, TX+, and TX-) of the memory card circuit 712 are configured to transmit the data signals (NM RX+, NM RX-, NM TX+, and NM TX-) of the memory card, the second power interface (VDD 2) of the memory card circuit 712 is configured to transmit the second power signal (NM VDD 2) of the memory card, the reference clock interface (RCLK) of the memory card circuit 712 is configured to transmit the reference clock signal (NM RCLK) of the memory card, the ground interface (GND) of the memory card circuit 712 is configured to transmit the ground signal (NM GND) of the memory card, and the first power interface (VDD 1) of the memory card circuit 712 is configured to transmit the first power signal (NM VDD 1) of the memory card.

The SIM card circuit 713 includes the data interface (DATA), the clock interface (CLK), the reset interface (RST), the ground interface (GND), and the power interface (VCC). The data interface (DATA) of the SIM card circuit 713 is configured to transmit the data signal (SIM DATA) of the SIM card, the clock interface (CLK) of the SIM card circuit 713 is configured to transmit the clock signal (SIM CLK) of the SIM card, the reset interface (RST) of the SIM card circuit 713 is configured to transmit the reset signal (SIM RST) of the SIM card, the ground interface (GND) of the SIM card circuit 713 is configured to transmit the ground signal (SIM GND) of the SIM card, and the power interface (VCC) of the SIM card circuit 713 is configured to transmit the power signal (SIM VCC) of the SIM card.

The first gold finger 721, the second gold finger 722, the ninth gold finger 729, and the tenth gold finger 7210 of the two-in-one card 7 are respectively electrically connected to the four data interfaces (RX+, RX-, TX+, and TX-) of the memory card circuit 712, the third gold finger 723 is electrically connected to the data interface (DATA) of the SIM card circuit 713, the fourth gold finger 724 is electrically connected to the clock interface (CLK) of the SIM card circuit 713, the fifth gold finger 725 is electrically connected to the reset interface (RST) of the SIM card circuit 713, the sixth gold finger 726 is electrically connected to the reference clock interface (RCLK) of the memory card circuit 712, the seventh gold finger 727 is electrically connected to the ground interface (GND) of the SIM card circuit 713 and the ground interface (GND) of the memory card circuit 712, and the eighth gold finger 728 is electrically connected to the power interface (VCC) of the SIM card circuit 713 and the first power interface (VDD 1) of the memory card circuit 712. The eighth gold finger 728 is further electrically connected to the second power interface (VDD 2) of the memory card circuit 712 through the voltage regulator 716.

In this embodiment, the two-in-one card 7 implements signal transmission of the SIM card circuit 713 and signal transmission of the memory card circuit 712 through the first gold finger 721 to the tenth gold finger 7210, so that the two-in-one card 7 can integrate a SIM card function and a memory card function, to implement a plurality of functions, and increase a degree of integration. When the two-in-one card 7 is inserted into an electronic device, a quantity of information cards that need to be inserted can be effectively reduced, and a quantity of card holder assemblies can be reduced, to help lighten and thin the electronic device, and improve user experience.

In addition, the first gold finger 721, the second gold finger 722, the ninth gold finger 729, and the tenth gold finger 7210 are exclusive gold fingers of the memory card circuit 712, and are configured to transmit high-speed data of the memory card. A connection circuit switching design between a high-speed data interface and a low-speed data interface does not need to be performed for the first gold finger 721, the second gold finger 722, the ninth gold finger 729, and the tenth gold finger 7210, to effectively reduce difficulty in designing an internal circuit of the two-in-one card 7. An implementation is easy.

In addition, the third gold finger 723 to the sixth gold finger 726 are also exclusive gold fingers of the SIM card circuit 713 or the memory card circuit 712. The connection circuit switching design does not need to be performed for the gold fingers, so that the difficulty in designing the internal circuit of the two-in-one card 7 is low. An implementation is easy.

For example, the SIM card circuit 713 and the memory card circuit 712 each transmit a ground signal through the seventh gold finger 727, and transmit a power signal through the eighth gold finger 728. The two-in-one card 7 may be provided with no solution of switching a related connection circuit, or a switching solution is easy to implement. Therefore, a degree of integration of the card interface 72 of the two-in-one card 7 can be increased, and the difficulty in designing the internal circuit is low, so that reliability of the two-in-one card 7 is high, and costs are low. For a solution in which the SIM card circuit 713 and the memory card circuit 712 transmit the ground signal and the power signal through the seventh gold finger 727 and the eighth gold finger 728, specifically refer to related descriptions in the foregoing embodiments. Details are not described herein again.

For example, the eighth gold finger 728 is electrically connected to the second power interface (VDD 2) of the memory card circuit 712 through the voltage regulator 716, and the voltage regulator 716 can adjust a voltage of a power signal transmitted through the eighth gold finger 728, to form the second power signal (NM VDD 2) of the memory card, and transmit the second power interface (VDD 2) of the memory card circuit 712.

In this embodiment, because the second power signal (NM VDD 2) of the memory card may be obtained by regulating the voltage of the first power signal (NM VDD 1) of the memory card, data transmission does not need to be performed through a separate gold finger, to reduce a quantity of gold fingers of the card interface 72 of the two-in-one card 7, and increase a degree of integration of the card interface 72. In addition, an internal circuit structure of the two-in-one card 7 is simple, and an implementation is easy.

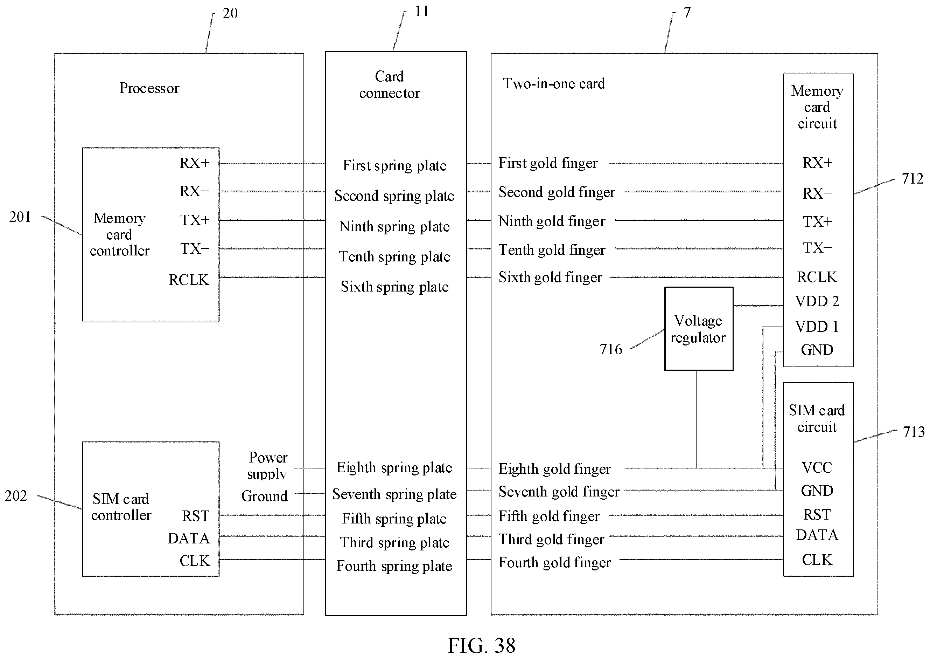

Refer to FIG. 37 and FIG. 38 together. FIG. 38 is a schematic of a connection circuit between the two-in-one card 7 shown in FIG. 37 and an electronic device.

In some embodiments, when the two-in-one card 7 is inserted into a card holder assembly of the electronic device, and is electrically connected to a card connector 11, a first spring plate to a tenth spring plate of the card connector 11 abut against and are electrically connected to a first gold finger 721 to a tenth gold finger 7210 of the two-in-one card 7 in a one-to-one correspondence. For example, a processor 20 of the electronic device may include a memory card controller 201, a SIM card controller 202, a power interface, and a ground interface. The memory card controller 201 may be configured to control running of the memory card circuit of the two-in-one card 7, and the SIM card controller 202 may be configured to control running of the SIM card circuit of the two-in-one card 7. A plurality of controllers of the processor 20 may be components independent of each other, or may be combined by using an integrated component, or one controller may be split into a plurality of components. This is not strictly limited in this embodiment of this application.

For example, a power interface of the processor 20 is configured to transmit a power signal, and a ground interface is configured to transmit a ground signal. The power signal may be a power signal (SIM VCC) of a SIM card or a first power signal (NM VDD 1) of a memory card, and the ground signal may be a ground signal (NM GND) of the memory card or a ground signal (SIM GND) of the SIM card. The power interface and the ground interface may be independent of the SIM card controller 202 and the memory card controller 201, or may be separately split and integrated into the SIM card controller 202 and the memory card controller 201. This is not strictly limited in this embodiment of this application. In FIG. 38 and subsequent accompanying drawings, that the power interface and the ground interface are independent of the SIM card controller 202 and the memory card controller 201 is used as an example for illustration, and the power interface and the ground interface are respectively identified as a power supply and a ground.

For example, the memory card controller 201 supports a PCIE interface protocol. The memory card controller 201 includes four data interfaces (RX+, RX-, TX+, and TX-) and a reference clock interface (RCLK), the four data interfaces (RX+, RX-, TX+, and TX-) are configured to transmit data signals (NM RX+, NM RX-, NM TX+, and NM TX-) of the memory card, and the reference clock interface (RCLK) is configured to transmit a reference clock signal (NM RCLK) of the memory card. The SIM card controller 202 includes a reset interface (RST), a data interface (DATA), and a clock interface (CLK), the reset interface (RST) is configured to transmit a reset signal (SIM RST) of the SIM card, the data interface (DATA) is configured to transmit a data signal (SIM DATA) of the SIM card, and the clock interface (CLK) is configured to transmit a clock signal (SIM CLK) of the SIM card.

Eight of the 10 spring plates of the card connector 11 are connected to the four data interfaces (RX+, RX-, TX+, and TX-) of the memory card controller 201, the reference clock interface (RCLK) of the memory card controller 201, the data interface (DATA) of the SIM card controller 202, the clock interface (CLK) of the SIM card controller 202, and the reset interface (RST) of the SIM card controller 202 in a one-to-one correspondence.

For example, the four data interfaces (RX+, RX-, TX+, and TX-) of the memory card controller 201 are respectively electrically connected to the first spring plate, a second spring plate, a ninth spring plate, and the tenth spring plate of the card connector 11, and the reference clock interface (RCLK) of the memory card controller 201 is electrically connected to a sixth spring plate of the card connector 11. The data interface (DATA) of the SIM card controller 202 is electrically connected to a third spring plate of the card connector 11, the clock interface (CLK) of the SIM card controller 202 is electrically connected to a fourth spring plate of the card connector 11, and the reset interface (RST) of the SIM card controller 202 is electrically connected to a fifth spring plate. The power interface of the processor 20 is electrically connected to an eighth spring plate of the card connector 11, and the ground interface is electrically connected to a seventh spring plate of the card connector 11.

In this embodiment, when the two-in-one card 7 is inserted into the electronic device and the memory card circuit 712 of the two-in-one card 7 works, the memory card controller 201 transmits the data signals (NM RX+, NM RX-, NM TX+, and NM TX-) of the memory card with the two-in-one card 7 through the first spring plate, the second spring plate, the ninth spring plate, and the tenth spring plate, and transmits the reference clock signal (NM RCLK) of the memory card with the two-in-one card 7 through the sixth spring plate. The power interface of the processor 20 transmits the first power signal (NM VDD 1) of the memory card with the two-in-one card 7 through the eighth spring plate. In the two-in-one card 7, the first power signal (NM VDD 1) of the memory card is adjusted to the second power signal (NM VDD 2) of the memory card by using the voltage regulator 716, and is transmitted to the memory card circuit 712. The ground interface transmits the ground signal (NM GND) of the memory card with the two-in-one card 7 through the seventh spring plate. The two-in-one card 7 implements a data storage function.

When the two-in-one card 7 is inserted into the electronic device and the SIM card circuit 713 of the two-in-one card 7 works, the SIM card controller 202 transmits the data signal (SIM DATA) of the SIM card with the two-in-one card 7 through the third spring plate, and transmits the clock signal (SIM CLK) of the SIM card with the two-in-one card 7 through the fourth spring plate. The power interface of the processor 20 transmits the power signal (SIM VCC) of the SIM card with the two-in-one card 7 through the eighth spring plate, and the ground interface transmits the ground signal (SIM GND) of the SIM card with the two-in-one card 7 through the seventh spring plate. The two-in-one card 7 implements a calling function and a data communication function. When the electronic device needs to perform a reset operation on the SIM card circuit 713 of the two-in-one card 7, the reset signal (SIM RST) of the SIM card is transmitted with the two-in-one card 7 through the fifth spring plate, to control the SIM card circuit 713 to be reset.

In some other embodiments, a fifth gold finger 725 of the two-in-one card 7 may be configured to transmit a reference clock signal (NM RCLK) of the memory card, and a sixth gold finger 726 is configured to transmit a reset signal (SIM RST) of the SIM card. In this case, the reference clock interface (RCLK) of the memory card circuit 712 is electrically connected to the fifth gold finger 725 of the card interface 72, and the reset interface (RST) of the SIM card circuit 713 is electrically connected to the fifth gold finger 725 of the card interface 72. On an electronic device side, the reference clock interface (RCLK) of the memory card controller 201 is electrically connected to the fifth spring plate of the card connector 11, and the reset interface (RST) of the SIM card controller 202 is electrically connected to the sixth spring plate of the card connector 11.

Table 18 is a table of a correspondence between a plurality of spring plates of the card connector 11 and each of a plurality of gold fingers of the nano-SIM card 3, a plurality of gold fingers of the first NM card 4, a plurality of gold fingers of the two-in-one card 7 shown in FIG. 37, and transmission signals thereof. When the two-in-one card 7 is connected to the card connector 11, the first spring plate to the tenth spring plate of the card connector 11 abut against and are electrically connected to the first gold finger 721 to the tenth gold finger 7210 of the two-in-one card 7 in a one-to-one correspondence, and locations of the third gold finger 723 to the eighth gold finger 728 of the two-in-one card 7 correspond to locations of the first gold finger 321 to the sixth gold finger 326 of the nano-SIM card 3 in a one-to-one correspondence. In some embodiments, locations of the third gold finger 723 to the tenth gold finger 7210 of the two-in-one card 7 correspond to locations of the first gold finger 421 to the eighth gold finger 428 of the first NM card 4 in a one-to-one correspondence.

**Table 18**

| Card connector 11 | Nano-SIM card 3 | | First NM card 4 | | Two-in-one card 7 | |
|---|---|---|---|---|---|---|
| First spring plate | | | | | First gold finger 721 | NM RX+ |
| Second spring plate | | | | | Second gold finger 722 | NM RX- |
| Third spring plate | First gold finger 321 | DATA | First gold finger 421 | DATA 1 | Third gold finger 723 | SIM DATA |
| Fourth spring plate | Second gold finger 322 | CLK | Second gold finger 422 | CLK | Fourth gold finger 724 | SIM CLK |
| Fifth spring plate | Third gold finger 323 | VPP | Third gold finger 423 | CMD | Fifth gold finger 725 | SIM RST |
| Sixth spring plate | Fourth gold finger 324 | RST | Fourth gold finger 424 | DATA 0 | Sixth gold finger 726 | NM RCLK |
| Seventh spring plate | Fifth gold finger 325 | GND | Fifth gold finger 425 | GND | Seventh gold finger 727 | SIM GND and NM GND |
| Eighth spring plate | Sixth gold finger 326 | VCC | Sixth gold finger 426 | VCC | Eighth gold finger 728 | SIM VCC and NM VDD 1 |
| Ninth spring plate | | | Seventh gold finger 427 | DATA 3 | Ninth gold finger 729 | NM TX+ |
| Tenth spring plate | | | Eighth gold finger 428 | DATA 2 | Tenth gold finger 7210 | NM TX- |

When the electronic device is compatible with the nano-SIM card 3 and the two-in-one card 7 shown in FIG. 37, the SIM card controller 202 of the electronic device may not support a programming voltage/input signal. Alternatively, the SIM card controller 202 of the electronic device may support a programming voltage/input signal. In this case, the SIM card controller 202 of the electronic device may further include a programming voltage/input signal interface (VPP). The processor 20 may be provided with a first switch, and the first switch is connected to the programming voltage/input signal interface (VPP) of the SIM card controller 202 and the reset interface (RST) of the SIM card controller 202, and is further connected to the fifth spring plate of the card connector 11. When the nano-SIM card 3 is inserted into the electronic device, the first switch connects the programming voltage/input signal interface (VPP) of the SIM card controller 202 and the fifth spring plate. When the two-in-one card 7 is inserted into the electronic device, the first switch connects the reset interface (RST) of the SIM card controller 202 and the fifth spring plate.

The processor 20 of the electronic device includes a second switch, and the second switch is connected to the reset interface (RST) of the SIM card controller 202 and the reference clock interface (RCLK) of the memory card controller 201, and is further connected to the sixth spring plate of the card connector 11. When the nano-SIM card 3 is inserted into the electronic device, the second switch connects the reset interface (RST) of the SIM card controller 202 and the sixth spring plate. When the two-in-one card 7 is inserted into the electronic device, the second switch connects the reference clock interface (RCLK) of the memory card controller 201 and the sixth spring plate.

In some other embodiments, this application further provides an electronic device. The electronic device is compatible with a nano-SIM card 3, a first NM card 4, and the two-in-one card 7 shown in FIG. 35. A processor of the electronic device may include a memory card controller, a second memory card controller, a SIM card controller, and an interface controller, the interface controller is electrically connected to the memory card controller, the second memory card controller, and the SIM card controller, and the interface controller is further electrically connected to a plurality of spring plates of a card connector 11.

An interface protocol (for example, a PCIE interface protocol) of the memory card controller can communicate with a memory card circuit of the two-in-one card 7, and is used to control the memory card circuit of the two-in-one card 7 to run. The SIM card controller is configured to control the nano-SIM card 3 to run. An interface protocol (for example, an EMMC interface protocol) of the second memory card controller can communicate with the first NM card 4, and is used to control the first NM card 4 to run.

When different information cards are inserted into a card holder assembly 10 of the electronic device, and are electrically connected to the card connector 11, the interface controller can control the SIM card controller to communicate with the information card through the card connector 11, or control the memory card controller and the SIM card controller to communicate with the information card through the card connector 11, or control the second memory card controller to communicate with the information card through the card connector 11. For example, when a card tray 2 is installed with the nano-SIM card 3, and the nano-SIM card 3 is inserted into a card holder assembly 10, the interface controller controls the SIM card controller to communicate with the nano-SIM card 3 through the card connector 11; when the card tray 2 is installed with the first NM card 4, and the first NM card 4 is inserted into the card holder assembly 10, the interface controller controls the second memory card controller to communicate with the first NM card 4 through the card connector 11; and when the card tray 2 is installed with the two-in-one card 7, and the two-in-one card 7 is inserted into the card holder assembly 10, the interface controller controls the memory card controller and the SIM card controller to communicate with the two-in-one card 7 through the card connector 11.

The interface controller may include a plurality of switches, and a connection relationship between a plurality of spring plates of the card connector 11 and a plurality of controllers in the processor is switched through the plurality of switches, to implement a communication requirement in different scenarios. The interface controller may further include a plurality of conducting wires. For other technical content of this embodiment, refer to related descriptions of the embodiment corresponding to FIG. 32. Details are not described herein again.

In this embodiment, two high-speed signals (for example, NM RX+ and NM RX-) of the two-in-one card 7 are arranged on the first gold finger 721 and the second gold finger 722. Because locations of the first gold finger 721 and the second gold finger 722 of the two-in-one card 7 correspond to none of locations of all gold fingers of the nano-SIM card 3 and the first NM card 4, regardless of whether the information card inserted into the electronic device is the two-in-one card 7, the nano-SIM card 3, or the first NM card 4, the processor 20 does not need to switch an interface electrically connected to the first spring plate and the second spring plate, to simplify a circuit of the processor 20, and reduce design difficulty and costs.

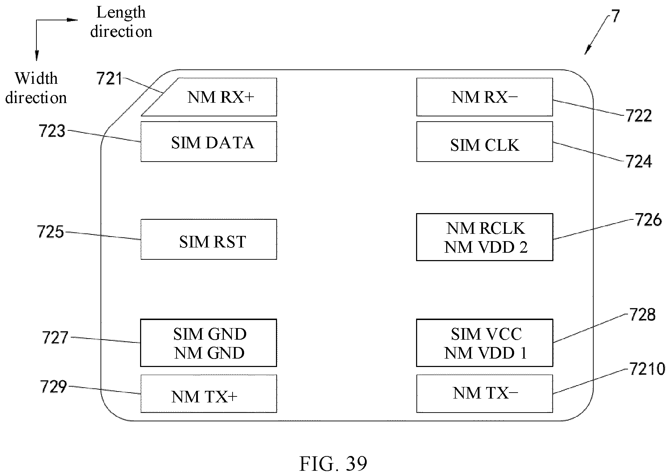

FIG. 39 is a diagram of the two-in-one card 7 shown in FIG. 17 in some other embodiments.

In some embodiments, a PCIE interface protocol is used for a memory card circuit 712 of the two-in-one card 7. A card interface 72 of the two-in-one card 7 includes a first gold finger 721 to a tenth gold finger 7210. In the first gold finger 721 to the tenth gold finger 7210, one gold finger is configured to transmit a data signal (SIM DATA) of a SIM card, one gold finger is configured to transmit a clock signal (SIM CLK) of the SIM card, one gold finger is configured to transmit a reset signal (SIM RST) of the SIM card, four gold fingers are configured to transmit data signals (NM RX+, NM RX-, NM TX+, and NM TX-) of a memory card, one gold finger is configured to transmit a reference clock signal (NM RCLK) of the memory card and a second power signal (NM VDD 2) of the memory card, one gold finger is configured to transmit a ground signal (SIM GND) of the SIM card and a ground signal (NM GND) of the memory card, and one gold finger is configured to transmit a power signal (SIM VCC) of the SIM card and a first power signal (NM VDD 1) of the memory card.

For example, the first gold finger 721, a second gold finger 722, a ninth gold finger 729, and the tenth gold finger 7210 of the two-in-one card 7 are configured to transmit the data signals (NM RX+, NM RX-, NM TX+, and NM TX-) of the memory card. An example in which the first gold finger 721 is configured to transmit the data signal (NM RX+), the second gold finger 722 is configured to transmit the data signal (NM RX-), the ninth gold finger 729 is configured to transmit the data signal (NM TX+), and the tenth gold finger 7210 is configured to transmit the data signal (NM TX-) is used for description in the following embodiments. In some other embodiments, the data signals transmitted through the first gold finger 721, the second gold finger 722, the ninth gold finger 729, and the tenth gold finger 7210 can be exchanged. For example, the data signals transmitted through the first gold finger 721 and the second gold finger 722 are exchanged, and the data signals transmitted through the ninth gold finger 729 and the tenth gold finger 7210 are exchanged. Details are not described herein in another embodiment.

The third gold finger 723 is configured to transmit the data signal (SIM DATA) of the SIM card, the fourth gold finger 724 is configured to transmit the clock signal (SIM CLK) of the SIM card, the fifth gold finger 725 is configured to transmit the reset signal (SIM RST) of the SIM card, the sixth gold finger 726 is configured to transmit the reference clock signal (NM RCLK) of the memory card and the second power signal (NM VDD 2) of the memory card, the seventh gold finger 727 is configured to transmit the ground signal (SIM GND) of the SIM card and the ground signal (NM GND) of the memory card, and the eighth gold finger 728 is configured to transmit the power signal (SIM VCC) of the SIM card and the first power signal (NM VDD 1) of the memory card.

Refer to FIG. 39 and Table 19 together. Table 19 is an illustration table of a correspondence between the gold finger of the two-in-one card 7 shown in FIG. 39 and an interface of a circuit. In this embodiment of this application, for ease of illustration, an interface of a circuit or an interface of a controller used in the following descriptions and accompanying drawings is identified by using a signal transmitted through the interface of the circuit or the interface of the controller.

**Table 19**

| Two-in-one card 7 | | |
|---|---|---|
| Card interface 72 | Memory card circuit 712 | SIM card circuit 713 |
| First gold finger 721 | Data interface (RX+) | |
| Second gold finger 722 | Data interface (RX-) | |
| Third gold finger 723 | | Data interface (DATA) |
| Fourth gold finger 724 | | Clock interface (CLK) |
| Fifth gold finger 725 | | Reset interface (RST) |
| Sixth gold finger 726 | Reference clock interface (RCLK) | |
| | Second power interface (VDD 2) | |
| Seventh gold finger 727 | Ground interface (GND) | Ground interface (GND) |
| Eighth gold finger 728 | First power interface (VDD 1) | Power interface (VCC) |
| Ninth gold finger 729 | Data interface (TX+) | |
| Tenth gold finger 7210 | Data interface (TX-) | |

In some embodiments, the memory card circuit 712 includes the four data interfaces (RX+, RX-, TX+, and TX-), the second power interface (VDD 2), the reference clock interface (RCLK), the ground interface (GND), and the first power interface (VDD 1). The four data interfaces (RX+, RX-, TX+, and TX-) of the memory card circuit 712 are configured to transmit the data signals (NM RX+, NM RX-, NM TX+, and NM TX-) of the memory card, the second power interface (VDD 2) of the memory card circuit 712 is configured to transmit the second power signal (NM VDD 2) of the memory card, the reference clock interface (RCLK) of the memory card circuit 712 is configured to transmit the reference clock signal (NM RCLK) of the memory card, the ground interface (GND) of the memory card circuit 712 is configured to transmit the ground signal (NM GND) of the memory card, and the first power interface (VDD 1) of the memory card circuit 712 is configured to transmit the first power signal (NM VDD 1) of the memory card.

The SIM card circuit 713 includes the data interface (DATA), the clock interface (CLK), the reset interface (RST), the ground interface (GND), and the power interface (VCC). The data interface (DATA) of the SIM card circuit 713 is configured to transmit the data signal (SIM DATA) of the SIM card, the clock interface (CLK) of the SIM card circuit 713 is configured to transmit the clock signal (SIM CLK) of the SIM card, the reset interface (RST) of the SIM card circuit 713 is configured to transmit the reset signal (SIM RST) of the SIM card, the ground interface (GND) of the SIM card circuit 713 is configured to transmit the ground signal (SIM GND) of the SIM card, and the power interface (VCC) of the SIM card circuit 713 is configured to transmit the power signal (SIM VCC) of the SIM card.

The first gold finger 721, the second gold finger 722, the ninth gold finger 729, and the tenth gold finger 7210 of the two-in-one card 7 are respectively electrically connected to the four data interfaces (RX+, RX-, TX+, and TX-) of the memory card circuit 712, the third gold finger 723 is electrically connected to the data interface (DATA) of the SIM card circuit 713, the fourth gold finger 724 is electrically connected to the clock interface (CLK) of the SIM card circuit 713, the fifth gold finger 725 is electrically connected to the reset interface (RST) of the SIM card circuit 713, the sixth gold finger 726 is electrically connected to the reference clock interface (RCLK) of the memory card circuit 712 and the second power interface (VDD 2) of the memory card circuit 712, the seventh gold finger 727 is electrically connected to the ground interface (GND) of the SIM card circuit 713 and the ground interface (GND) of the memory card circuit 712, and the eighth gold finger 728 is electrically connected to the power interface (VCC) of the SIM card circuit 713 and the first power interface (VDD 1) of the memory card circuit 712.

In this embodiment, the two-in-one card 7 implements signal transmission of the SIM card circuit 713 and signal transmission of the memory card circuit 712 through the first gold finger 721 to the tenth gold finger 7210, so that the two-in-one card 7 can integrate a SIM card function and a memory card function, to implement a plurality of functions, and increase a degree of integration. When the two-in-one card 7 is inserted into an electronic device, a quantity of information cards that need to be inserted can be effectively reduced, and a quantity of card holder assemblies can be reduced, to help lighten and thin the electronic device, and improve user experience.

In addition, the first gold finger 721, the second gold finger 722, the ninth gold finger 729, and the tenth gold finger 7210 are exclusive gold fingers of the memory card circuit 712, and are configured to transmit high-speed data of the memory card. A connection circuit switching design between a high-speed data interface and a low-speed data interface does not need to be performed for the first gold finger 721, the second gold finger 722, the ninth gold finger 729, and the tenth gold finger 7210, to effectively reduce difficulty in designing an internal circuit of the two-in-one card 7. An implementation is easy.

In addition, the third gold finger 723 to the fifth gold finger 725 are also exclusive gold fingers of the SIM card circuit 713 or the memory card circuit 712. The connection circuit switching design does not need to be performed for the gold fingers, so that the difficulty in designing the internal circuit of the two-in-one card 7 is low. An implementation is easy.

For example, the SIM card circuit 713 and the memory card circuit 712 each transmit a ground signal through the seventh gold finger 727, and transmit a power signal through the eighth gold finger 728. The two-in-one card 7 may be provided with no solution of switching a related connection circuit, or a switching solution is easy to implement. Therefore, a degree of integration of the card interface 72 of the two-in-one card 7 can be increased, and the difficulty in designing the internal circuit is low, so that reliability of the two-in-one card 7 is high, and costs are low. For a solution in which the SIM card circuit 713 and the memory card circuit 712 transmit the ground signal and the power signal through the seventh gold finger 727 and the eighth gold finger 728, specifically refer to related descriptions in the foregoing embodiments. Details are not described herein again.

A separate circuit 717 is disposed in the two-in-one card 7. The separate circuit 717 is electrically connected to the sixth gold finger 726, the reference clock interface (RCLK) of the memory card circuit 712, and the second power interface (VDD 2) of the memory card circuit 712. The separate circuit 717 is configured to: separate a signal transmitted through the sixth gold finger 726 from the reference clock signal (NM RCLK) of the memory card, and transmit the signal to the reference clock interface (RCLK) of the memory card circuit 712, and is further configured to: separate the signal transmitted through the sixth gold finger 726 from the second power signal (NM VDD 2) of the memory card, and transmit the signal to the second power interface (VDD 2) of the memory card circuit 712.

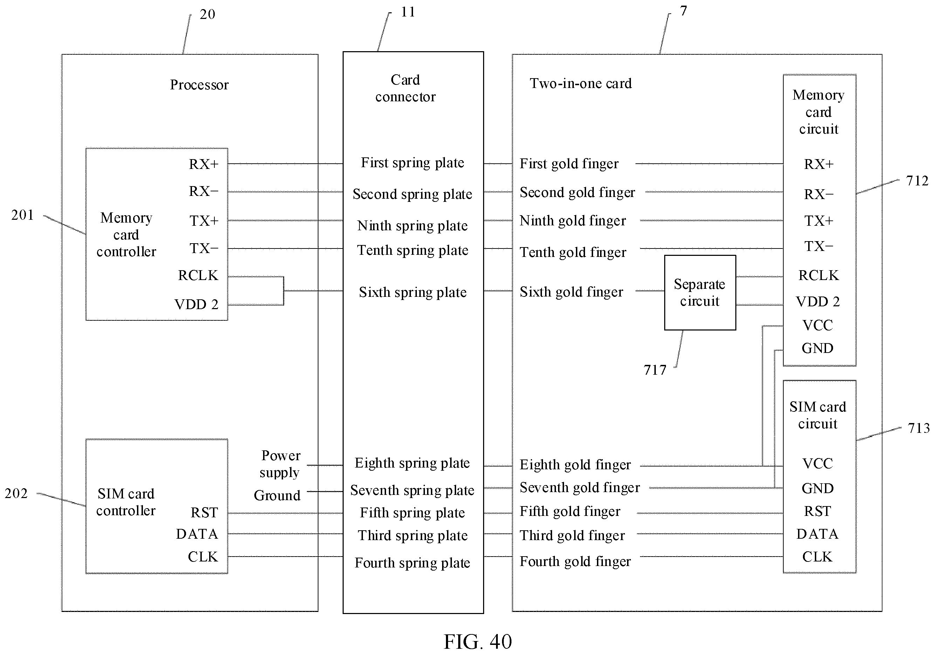

Refer to FIG. 39 and FIG. 40 together. FIG. 40 is a schematic of a connection circuit between the two-in-one card 7 shown in FIG. 39 and an electronic device. In some embodiments, when the two-in-one card 7 is inserted into a card holder assembly of the electronic device, and is electrically connected to a card connector 11, a first spring plate to a tenth spring plate of the card connector 11 abut against and are electrically connected to a first gold finger 721 to a tenth gold finger 7210 of the two-in-one card 7 in a one-to-one correspondence. For example, a processor 20 of the electronic device may include a memory card controller 201, a SIM card controller 202, a power interface, and a ground interface. The memory card controller 201 may be configured to control running of the memory card circuit of the two-in-one card 7, and the SIM card controller 202 may be configured to control running of the SIM card circuit of the two-in-one card 7. A plurality of controllers of the processor 20 may be components independent of each other, or may be combined by using an integrated component, or one controller may be split into a plurality of components. This is not strictly limited in this embodiment of this application.

For example, a power interface of the processor 20 is configured to transmit a power signal, and a ground interface is configured to transmit a ground signal. The power signal may be a power signal (SIM VCC) of a SIM card or a first power signal (NM VDD 1) of a memory card, and the ground signal may be a ground signal (NM GND) of the memory card or a ground signal (SIM GND) of the SIM card. The power interface and the ground interface may be independent of the SIM card controller 202 and the memory card controller 201, or may be separately split and integrated into the SIM card controller 202 and the memory card controller 201. This is not strictly limited in this embodiment of this application. In FIG. 40 and subsequent accompanying drawings, that the power interface and the ground interface are independent of the SIM card controller 202 and the memory card controller 201 is used as an example for illustration, and the power interface and the ground interface are respectively identified as a power supply and a ground.

For example, the memory card controller 201 supports a PCIE interface protocol. The memory card controller 201 includes four data interfaces (RX+, RX-, TX+, and TX-), a reference clock interface (RCLK), and a second power interface (VDD 2), the four data interfaces (RX+, RX-, TX+, and TX-) are configured to transmit data signals (NM RX+, NM RX-, NM TX+, and NM TX-) of the memory card, the reference clock interface (RCLK) is configured to transmit a reference clock signal (NM RCLK) of the memory card, and the second power interface (VDD 2) is configured to transmit a second power signal (NM VDD 2) of the memory card. The SIM card controller 202 includes a reset interface (RST), a data interface (DATA), and a clock interface (CLK), the reset interface (RST) is configured to transmit a reset signal (SIM RST) of the SIM card, the data interface (DATA) is configured to transmit a data signal (SIM DATA) of the SIM card, and the clock interface (CLK) is configured to transmit a clock signal (SIM CLK) of the SIM card.

For example, the reference clock interface (RCLK) and the second power interface (VDD 2) of the memory card controller 201 are connected to a same spring plate in the 10 spring plates of the card connector 11. In this embodiment, because the reference clock signal (NM RCLK) of the memory card and the second power signal (NM VDD 2) of the memory card may be separated, the two signals are transmitted through a same spring plate of the card connector 11, to reduce a quantity of spring plates of the card connector 11, reduce an area of the card connector 11, and facilitate miniaturization of the electronic device.

For example, the four data interfaces (RX+, RX-, TX+, and TX-) of the memory card controller 201 are respectively electrically connected to the first spring plate, a second spring plate, a ninth spring plate, and the tenth spring plate of the card connector 11, and the reference clock interface (RCLK) and the second power interface (VDD 2) of the memory card controller 201 are electrically connected to a sixth spring plate of the card connector 11. The data interface (DATA) of the SIM card controller 202 is electrically connected to a third spring plate of the card connector 11, the clock interface (CLK) of the SIM card controller 202 is electrically connected to a fourth spring plate of the card connector 11, and the reset interface (RST) of the SIM card controller 202 is electrically connected to a fifth spring plate. The power interface of the processor 20 is electrically connected to an eighth spring plate of the card connector 11, and the ground interface is electrically connected to a seventh spring plate of the card connector 11.

In this embodiment, when the two-in-one card 7 is inserted into the electronic device and the memory card circuit 712 of the two-in-one card 7 works, the memory card controller 201 transmits the data signals (NM RX+, NM RX-, NM TX+, and NM TX-) of the memory card with the two-in-one card 7 through the first spring plate, the second spring plate, the ninth spring plate, and the tenth spring plate, and transmits the reference clock signal (NM RCLK) of the memory card and the second power signal (NM VDD 2) of the memory card with the two-in-one card 7 through the sixth spring plate. The power interface of the processor 20 transmits the first power signal (NM VDD 1) of the memory card with the two-in-one card 7 through the eighth spring plate, and the ground interface transmits the ground signal (NM GND) of the memory card with the two-in-one card 7 through the seventh spring plate. The two-in-one card 7 implements a data storage function.

When the two-in-one card 7 is inserted into the electronic device and the SIM card circuit 713 of the two-in-one card 7 works, the SIM card controller 202 transmits the data signal (SIM DATA) of the SIM card with the two-in-one card 7 through the third spring plate, and transmits the clock signal (SIM CLK) of the SIM card with the two-in-one card 7 through the fourth spring plate. The power interface of the processor 20 transmits the power signal (SIM VCC) of the SIM card with the two-in-one card 7 through the eighth spring plate, and the ground interface transmits the ground signal (SIM GND) of the SIM card with the two-in-one card 7 through the seventh spring plate. The two-in-one card 7 implements a calling function and a data communication function. When the electronic device needs to perform a reset operation on the SIM card circuit 713 of the two-in-one card 7, the reset signal (SIM RST) of the SIM card is transmitted with the two-in-one card 7 through the fifth spring plate, to control the SIM card circuit 713 to be reset.

In some other embodiments, a fifth gold finger 725 of the two-in-one card 7 may be configured to transmit the reference clock signal (NM RCLK) of the memory card and the second power signal (NM VDD 2) of the memory card, and a sixth gold finger 726 is configured to transmit a reset signal (SIM RST) of the SIM card. In this case, the reference clock interface (RCLK) and the second power interface (VDD 2) of the memory card circuit 712 are electrically connected to the fifth gold finger 725 of the card interface 72, and the reset interface (RST) of the SIM card circuit 713 is electrically connected to the fifth gold finger 725 of the card interface 72. On an electronic device side, the reference clock interface (RCLK) and the second power interface (VDD 2) of the memory card controller 201 are electrically connected to the fifth spring plate of the card connector 11, and the reset interface (RST) of the SIM card controller 202 is electrically connected to the sixth spring plate of the card connector 11.

Table 20 is a table of a correspondence between a plurality of spring plates of the card connector 11 and each of a plurality of gold fingers of the nano-SIM card 3, a plurality of gold fingers of the first NM card 4, a plurality of gold fingers of the two-in-one card 7 shown in FIG. 39, and transmission signals thereof. When the two-in-one card 7 is connected to the card connector 11, the first spring plate to the tenth spring plate of the card connector 11 abut against and are electrically connected to the first gold finger 721 to the tenth gold finger 7210 of the two-in-one card 7 in a one-to-one correspondence, and locations of the third gold finger 723 to the eighth gold finger 728 of the two-in-one card 7 correspond to locations of the first gold finger 321 to the sixth gold finger 326 of the nano-SIM card 3 in a one-to-one correspondence. In some embodiments, locations of the third gold finger 723 to the tenth gold finger 7210 of the two-in-one card 7 correspond to locations of the first gold finger 421 to the eighth gold finger 428 of the first NM card 4 in a one-to-one correspondence.

**Table 20**

| Card connector 11 | Nano-SIM card 3 | | First NM card 4 | | Two-in-one card 7 | |
|---|---|---|---|---|---|---|
| First spring plate | | | | | First gold finger 721 | NMRX+ |
| Second spring plate | | | | | Second gold | NMRX- |
| Third spring plate | First gold finger 321 | DATA | First gold finger 421 | DATA 1 | Third gold finger 723 | SIM DATA |
| Fourth spring plate | Second gold finger 322 | CLK | Second gold finger 422 | CLK | Fourth gold finger 724 | SIM CLK |
| Fifth spring plate | Third gold finger 323 | VPP | Third gold finger 423 | CMD | Fifth gold finger 725 | SIM RST |
| Sixth spring plate | Fourth gold finger 324 | RST | Fourth gold finger 424 | DATA 0 | Sixth gold finger 726 | NM RCLK and NM VDD 2 |
| Seventh spring plate | Fifth gold finger 325 | GND | Fifth gold finger 425 | GND | Seventh gold finger 727 | SIM GND and NM GND |
| Eighth spring plate | Sixth gold finger 326 | VCC | Sixth gold finger 426 | VCC | Eighth gold finger 728 | SIM VCC and NM VDD 1 |
| Ninth spring plate | | | Seventh gold finger 427 | DATA 3 | Ninth gold finger 729 | NM TX+ |
| Tenth spring plate | | | Eighth gold finger 428 | DATA 2 | Tenth gold finger 7210 | NM TX- |

When the electronic device is compatible with the nano-SIM card 3 and the two-in-one card 7 shown in FIG. 39, the SIM card controller 202 of the electronic device may not support a programming voltage/input signal. Alternatively, the SIM card controller 202 of the electronic device may support a programming voltage/input signal. In this case, the SIM card controller 202 of the electronic device may further include a programming voltage/input signal interface (VPP). The processor 20 may be provided with a first switch, and the first switch is connected to the programming voltage/input signal interface (VPP) of the SIM card controller 202 and the reset interface (RST) of the SIM card controller 202, and is further connected to the fifth spring plate of the card connector 11. When the nano-SIM card 3 is inserted into the electronic device, the first switch connects the programming voltage/input signal interface (VPP) of the SIM card controller 202 and the fifth spring plate. When the two-in-one card 7 is inserted into the electronic device, the first switch connects the reset interface (RST) of the SIM card controller 202 and the fifth spring plate.

The processor 20 of the electronic device includes a second switch, and the second switch is connected to the reset interface (RST) of the SIM card controller 202, and the reference clock interface (RCLK) and the second power interface (VDD 2) of the memory card controller 201, and is further connected to the sixth spring plate of the card connector 11. When the nano-SIM card 3 is inserted into the electronic device, the second switch connects the reset interface (RST) of the SIM card controller 202 and the sixth spring plate. When the two-in-one card 7 is inserted into the electronic device, the second switch connects the reference clock interface (RCLK) and the second power interface (VDD 2) of the memory card controller 201 and the sixth spring plate.

In some other embodiments, this application further provides an electronic device. The electronic device is compatible with a nano-SIM card 3, a first NM card 4, and the two-in-one card 7 shown in FIG. 35. A processor of the electronic device may include a memory card controller, a second memory card controller, a SIM card controller, and an interface controller, the interface controller is electrically connected to the memory card controller, the second memory card controller, and the SIM card controller, and the interface controller is further electrically connected to a plurality of spring plates of a card connector 11.

An interface protocol (for example, a PCIE interface protocol) of the memory card controller can communicate with a memory card circuit of the two-in-one card 7, and is used to control the memory card circuit of the two-in-one card 7 to run. The SIM card controller is configured to control the nano-SIM card 3 to run. An interface protocol (for example, an EMMC interface protocol) of the second memory card controller can communicate with the first NM card 4, and is used to control the first NM card 4 to run.

When different information cards are inserted into a card holder assembly 10 of the electronic device, and are electrically connected to the card connector 11, the interface controller can control the SIM card controller to communicate with the information card through the card connector 11, or control the memory card controller and the SIM card controller to communicate with the information card through the card connector 11, or control the second memory card controller to communicate with the information card through the card connector 11. For example, when a card tray 2 is installed with the nano-SIM card 3, and the nano-SIM card 3 is inserted into a card holder assembly 10, the interface controller controls the SIM card controller to communicate with the nano-SIM card 3 through the card connector 11; when the card tray 2 is installed with the first NM card 4, and the first NM card 4 is inserted into the card holder assembly 10, the interface controller controls the second memory card controller to communicate with the first NM card 4 through the card connector 11; and when the card tray 2 is installed with the two-in-one card 7, and the two-in-one card 7 is inserted into the card holder assembly 10, the interface controller controls the memory card controller and the SIM card controller to communicate with the two-in-one card 7 through the card connector 11.

The interface controller may include a plurality of switches, and a connection relationship between a plurality of spring plates of the card connector 11 and a plurality of controllers in the processor is switched through the plurality of switches, to implement a communication requirement in different scenarios. The interface controller may further include a plurality of conducting wires. For other technical content of this embodiment, refer to related descriptions of the embodiment corresponding to FIG. 32. Details are not described herein again.

In this embodiment, two high-speed signals (for example, NM RX+ and NM RX-) of the two-in-one card 7 are arranged on the first gold finger 721 and the second gold finger 722. Because locations of the first gold finger 721 and the second gold finger 722 of the two-in-one card 7 correspond to none of locations of all gold fingers of the nano-SIM card 3 and the first NM card 4, regardless of whether the information card inserted into the electronic device is the two-in-one card 7, the nano-SIM card 3, or the first NM card 4, the processor 20 does not need to switch an interface electrically connected to the first spring plate and the second spring plate, to simplify a circuit of the processor 20, and reduce design difficulty and costs.

Based on the descriptions in the foregoing embodiments, in a case of no conflict, in some other embodiments of this application, when the first gold finger 721, the second gold finger 722, and the tenth gold finger 7210 of the two-in-one card 7 are used as data interfaces, the first gold finger 721, the second gold finger 722, and the tenth gold finger 7210 may be electrically connected to a high-voltage resistant circuit or a protection switch, to prevent a circuit from being burnt due to a short circuit of a spring plate when a third spring plate of the card connector 11 outputs a high-voltage data signal of the SIM card controller 202, a fourth spring plate outputs a high-voltage clock signal of the SIM card controller 202, and an eighth spring plate outputs a high-voltage power signal, to improve reliability of the two-in-one card 7. The high-voltage resistant circuit or the protection switch is located in the package 711 of the two-in-one card 7. In some other embodiments, a high-impedance protection circuit may be provided in the electronic device, to prevent a circuit of the two-in-one card 7 from being burnt. For example, this can be implemented by adding a protection circuit in an interface controller or another controller of the electronic device.

In some other embodiments of this application, the two-in-one card may also have another design manner, and a card connector and a card holder assembly that match the two-in-one card may be incompatible with the first NM card.

In some other embodiments of this application, the two-in-one card may also have another design manner, and a card connector and a card holder assembly that match the two-in-one card may be incompatible with the nano-SIM card. In this case, arrangement locations of the first gold finger to the tenth gold finger of the two-in-one card may be adjusted, signal arrangement locations of the first gold finger to the tenth gold finger may be exchanged, and a dimension of the card body of the two-in-one card may be changed.

In some embodiments, the electronic device may identify, in an information card identification method, a type of an information card inserted into the electronic device.

In some embodiments, in the information card identification method, whether the information card is a nano-SIM card or a two-in-one card can be identified. The information card identification method may be applied to an electronic device that is compatible with the nano-SIM card and the two-in-one card.

An information card identification method includes the following steps.

Step 001: Execute a first initialization procedure.

Step 002: If a first reply instruction is received, determine that an inserted information card is a first card; or if a first reply instruction is not received, determine that an inserted information card is not a first card, and execute a second initialization procedure.

Step 003: If a second reply instruction is received, determine that the inserted information card is a second card; or if a second reply instruction is not received, determine that the inserted information card is not a second card.

In this embodiment, an electronic device executes an initialization procedure of the information card. If a specific reply signal is received, the electronic device can determine whether the information card is an information card corresponding to the initialization procedure; or if no specific reply signal is received, the electronic device determines that the information card is not an information card corresponding to the initialization procedure, and executes a next initialization procedure, to determine whether the information card is an information card corresponding to the next initialization procedure.

In this embodiment, the electronic device can automatically identify a type of the information card by using a processor, and control a controller corresponding to the information card to be connected with a card connector, so that the information card can automatically match the electronic device, to perform communication, and improve use experience of a user.

In some embodiments, the first initialization procedure may be a SIM card initialization procedure, and the first card is a nano-SIM card; and the second initialization procedure may be a two-in-one card initialization procedure, and the second card is a two-in-one card. Alternatively, the first initialization procedure may be a two-in-one card initialization procedure, and the first card is a two-in-one card; and the second initialization procedure may be a SIM card initialization procedure, and the second card is a nano-SIM card.

In some embodiments, the information card identification method responds to powering-on of the electronic device or restart of the electronic device.

In some embodiments, the information card identification method responds to that it is detected that a state of a card tray is switched from a detached state to an inserted state. As shown in FIG. 3, the electronic device may detect, by using an insertion detection spring plate in a card holder assembly, whether the state of the card tray is the detached state or the inserted state.

In some other embodiments, in the information card identification method, whether the information card is a nano-SIM card, a first NM card, or a two-in-one card can be identified. The information card identification method may be applied to an electronic device that is compatible with the nano-SIM card, the first NM card, and the two-in-one card.

An information card identification method includes the following steps.

Step 001: Execute a first initialization procedure.

Step 002: If a first reply instruction is received, determine that an inserted information card is a first card; or if a first reply instruction is not received, determine that an inserted information card is not a first card, and execute a second initialization procedure.

Step 003: If a second reply instruction is received, determine that the inserted information card is a second card; or if a second reply instruction is not received, determine that the inserted information card is not a second card, and execute a third initialization procedure.

Step 004: If a third reply instruction is received, determine that the inserted information card is a third card; or if the third reply instruction is not received, determine that the inserted information card is not a third card.

A main difference between the information card identification method in this embodiment and the information card identification method in the foregoing embodiment lies in that, in step 003, when it is determined that the inserted information card is not the second card, in the information card identification method, the third initialization procedure continues to be executed, to determine whether the information card is the third card.

In some embodiments, in the first initialization procedure, the second initialization procedure, and the third initialization procedure, one is a SIM card initialization procedure, another is a first NM card initialization procedure, and the other is a two-in-one card initialization procedure. Correspondingly, in the first card, the second card, and the third card, one is a nano-SIM card, another is a first NM card, and the other is a two-in-one card.

In some embodiments, the information card identification method responds to powering-on of an electronic device or restart of an electronic device. The first initialization procedure may be the SIM card initialization procedure or the two-in-one card initialization procedure. In this embodiment, when the electronic device is powered on or the electronic device is restarted, in the information card identification method, the SIM card initialization procedure or the two-in-one card initialization procedure is first performed, to determine whether the information card is a nano-SIM card or a two-in-one card, so as to first enter a networked state. Certainly, in some other embodiments, when the information card identification method responds to powering-on of the electronic device or restart of the electronic device, in the information card identification method, another initialization procedure may be first executed. This is not strictly limited in this embodiment of this application.

For other content of the information card identification method in this embodiment, refer to related descriptions of the information card identification method in the foregoing embodiments. Details are not described herein again.

In some other embodiments, a detection circuit for detecting a type of the information card may be further disposed in a processor, and the processor can identify the type of the information card based on a detection result of the detection circuit. A specific manner in which the processor identifies the type of the information card is not strictly limited in this embodiment of this application.

The foregoing embodiments are merely used to describe the technical solutions of this application, but are not intended to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A card (7), comprising a card body (71) and a card interface (72), wherein the card body (71) comprises a memory card circuit (712) and a SIM card circuit (713), the card interface (72) is fastened to the card body (71), the memory card circuit (712) and the SIM card circuit (713) transmit signals through 10 gold fingers of the card interface (72), and the 10 gold fingers are exposed on a same side of the card body (71).

2. The card (7) according to claim 1, wherein one of the 10 gold fingers is configured to transmit a reset signal of a SIM card and one signal of a memory card.

3. The card (7) according to claim 2, wherein the card (7) further comprises a switching circuit (714), the switching circuit (714) is connected to a reset interface of the SIM card circuit (713) and one interface of the memory card circuit (712), and the switching circuit (714) is further connected to one of the 10 gold fingers.

4. The card (7) according to claim 2 or 3, wherein the memory card circuit (712) supports an EMMC interface protocol; and
one of the 10 gold fingers is configured to transmit a data signal of the SIM card, one gold finger is configured to transmit a clock signal of the SIM card, four gold fingers are configured to transmit data signals of the memory card, one gold finger is configured to transmit a clock signal of the memory card, one gold finger is configured to transmit the reset signal of the SIM card and a command and response signal of the memory card, one gold finger is configured to transmit a ground signal of the SIM card and a ground signal of the memory card, and one gold finger is configured to transmit a power signal of the SIM card and a power signal of the memory card.

5. The card (7) according to claim 4, wherein the 10 gold fingers are arranged in an array, the 10 gold fingers are arranged in a first column of gold fingers and a second column of gold fingers in a length direction of the card (7), the first column of gold fingers comprises a first gold finger (721), a third gold finger (723), a fifth gold finger (725), a seventh gold finger (727), and a ninth gold finger (729) that are arranged in a width direction of the card (7), and the second column of gold fingers comprises a second gold finger (722), a fourth gold finger (724), a sixth gold finger (726), an eighth gold finger (728), and a tenth gold finger (7210) that are arranged in the width direction of the card (7); and
the first gold finger (721), the second gold finger (722), the ninth gold finger (729), and the tenth gold finger (7210) are configured to transmit the data signals of the memory card, the third gold finger (723) is configured to transmit the data signal of the SIM card, the fourth gold finger (724) is configured to transmit the clock signal of the SIM card, the fifth gold finger (725) is configured to transmit the clock signal of the memory card, the sixth gold finger (726) is configured to transmit the reset signal of the SIM card and the command and response signal of the memory card, the seventh gold finger (727) is configured to transmit the ground signal of the SIM card and the ground signal of the memory card, and the eighth gold finger (728) is configured to transmit the power signal of the SIM card and the power signal of the memory card.

6. The card (7) according to claim 2 or 3, wherein the memory card circuit (712) supports an EMMC interface protocol; and
one of the 10 gold fingers is configured to transmit a data signal of the SIM card, one gold finger is configured to transmit a clock signal of the SIM card, four gold fingers are configured to transmit data signals of the memory card, one gold finger is configured to transmit a command and response signal of the memory card, one gold finger is configured to transmit the reset signal of the SIM card and a clock signal of the memory card, one gold finger is configured to transmit a ground signal of the SIM card and a ground signal of the memory card, and one gold finger is configured to transmit a power signal of the SIM card and a power signal of the memory card.

7. The card (7) according to claim 6, wherein the 10 gold fingers are arranged in an array, the 10 gold fingers are arranged in a first column of gold fingers and a second column of gold fingers in a length direction of the card (7), the first column of gold fingers comprises a first gold finger (721), a third gold finger (723), a fifth gold finger (725), a seventh gold finger (727), and a ninth gold finger (729) that are arranged in a width direction of the card (7), and the second column of gold fingers comprises a second gold finger (722), a fourth gold finger (724), a sixth gold finger (726), an eighth gold finger (728), and a tenth gold finger (7210) that are arranged in the width direction of the card (7); and
the first gold finger (721), the second gold finger (722), the ninth gold finger (729), and the tenth gold finger (7210) are configured to transmit the data signals of the memory card, the third gold finger (723) is configured to transmit the data signal of the SIM card, the fourth gold finger (724) is configured to transmit the clock signal of the SIM card, the fifth gold finger (725) is configured to transmit the command and response signal of the memory card, the sixth gold finger (726) is configured to transmit the reset signal of the SIM card and the clock signal of the memory card, the seventh gold finger (727) is configured to transmit the ground signal of the SIM card and the ground signal of the memory card, and the eighth gold finger (728) is configured to transmit the power signal of the SIM card and the power signal of the memory card.

8. The card (7) according to claim 2 or 3, wherein the memory card circuit (712) supports a LTFS interface protocol or a PCIE interface protocol; and
one of the 10 gold fingers is configured to transmit a data signal of the SIM card, one gold finger is configured to transmit a clock signal of the SIM card, four gold fingers are configured to transmit data signals of the memory card, one gold finger is configured to transmit a second power signal of the memory card, one gold finger is configured to transmit the reset signal of the SIM card and a reference clock signal of the memory card, one gold finger is configured to transmit a ground signal of the SIM card and a ground signal of the memory card, and one gold finger is configured to transmit a power signal of the SIM card and a first power signal of the memory card.

9. The card (7) according to claim 8, wherein the 10 gold fingers are arranged in an array, the 10 gold fingers are arranged in a first column of gold fingers and a second column of gold fingers in a length direction of the card (7), the first column of gold fingers comprises a first gold finger (721), a third gold finger (723), a fifth gold finger (725), a seventh gold finger (727), and a ninth gold finger (729) that are arranged in a width direction of the card (7), and the second column of gold fingers comprises a second gold finger (722), a fourth gold finger (724), a sixth gold finger (726), an eighth gold finger (728), and a tenth gold finger (7210) that are arranged in the width direction of the card (7);
the fifth gold finger (725), the ninth gold finger (729), and the tenth gold finger (7210) are configured to transmit the data signals of the memory card, the third gold finger (723) is configured to transmit the data signal of the SIM card, the fourth gold finger (724) is configured to transmit the clock signal of the SIM card, the sixth gold finger (726) is configured to transmit the reset signal of the SIM card and the reference clock signal of the memory card, the seventh gold finger (727) is configured to transmit the ground signal of the SIM card and the ground signal of the memory card, and the eighth gold finger (728) is configured to transmit the power signal of the SIM card and the first power signal of the memory card; and
one of the first gold finger (721) and the second gold finger (722) is configured to transmit the data signal of the memory card, and the other is configured to transmit the second power signal of the memory card.

10. The card (7) according to claim 1, wherein one of the 10 gold fingers is configured to transmit a clock signal of the SIM card and a clock signal or a reference clock signal of the memory card.

11. The card (7) according to claim 10, wherein the card (7) further comprises a frequency divider (715), and the frequency divider (715) is connected to a clock interface of the SIM card circuit (713), is further connected to a clock interface or a reference clock interface of the memory card circuit (712), and is further connected to one of the 10 gold fingers.

12. The card (7) according to claim 10 or 11, wherein the memory card circuit (712) supports an EMMC interface protocol; and
one of the 10 gold fingers is configured to transmit a data signal of the SIM card, one gold finger is configured to transmit a reset signal of the SIM card, four gold fingers are configured to transmit data signals of the memory card, one gold finger is configured to transmit a command and response signal of the memory card, one gold finger is configured to transmit the clock signal of the SIM card and a clock signal of the memory card, one gold finger is configured to transmit a ground signal of the SIM card and a ground signal of the memory card, and one gold finger is configured to transmit a power signal of the SIM card and a power signal of the memory card.

13. The card (7) according to claim 12, wherein the 10 gold fingers are arranged in an array, the 10 gold fingers are arranged in a first column of gold fingers and a second column of gold fingers in a length direction of the card (7), the first column of gold fingers comprises a first gold finger (721), a third gold finger (723), a fifth gold finger (725), a seventh gold finger (727), and a ninth gold finger (729) that are arranged in a width direction of the card (7), and the second column of gold fingers comprises a second gold finger (722), a fourth gold finger (724), a sixth gold finger (726), an eighth gold finger (728), and a tenth gold finger (7210) that are arranged in the width direction of the card (7); and
the first gold finger (721), the second gold finger (722), the ninth gold finger (729), and the tenth gold finger (7210) are configured to transmit the data signals of the memory card, the third gold finger (723) is configured to transmit the data signal of the SIM card, the fourth gold finger (724) is configured to transmit the clock signal of the SIM card and the clock signal of the memory card, the fifth gold finger (725) is configured to transmit the command and response signal of the memory card, the sixth gold finger (726) is configured to transmit the reset signal of the SIM card, the seventh gold finger (727) is configured to transmit the ground signal of the SIM card and the ground signal of the memory card, and the eighth gold finger (728) is configured to transmit the power signal of the SIM card and the power signal of the memory card.

14. The card (7) according to claim 10 or 11, wherein the memory card circuit (712) supports a LTFS interface protocol or a PCIE interface protocol; and
one of the 10 gold fingers is configured to transmit a data signal of the SIM card, one gold finger is configured to transmit the reset signal of the SIM card, four gold fingers are configured to transmit data signals of the memory card, one gold finger is configured to transmit a second power signal of the memory card, one gold finger is configured to transmit a clock signal of the SIM card and a reference clock signal of the memory card, one gold finger is configured to transmit a ground signal of the SIM card and a ground signal of the memory card, and one gold finger is configured to transmit a power signal of the SIM card and a first power signal of the memory card.

15. The card (7) according to claim 14, wherein the 10 gold fingers are arranged in an array, the 10 gold fingers are arranged in a first column of gold fingers and a second column of gold fingers in a length direction of the card (7), the first column of gold fingers comprises a first gold finger (721), a third gold finger (723), a fifth gold finger (725), a seventh gold finger (727), and a ninth gold finger (729) that are arranged in a width direction of the card (7), and the second column of gold fingers comprises a second gold finger (722), a fourth gold finger (724), a sixth gold finger (726), an eighth gold finger (728), and a tenth gold finger (7210) that are arranged in the width direction of the card (7);
the fifth gold finger (725), the ninth gold finger (729), and the tenth gold finger (7210) are configured to transmit the data signals of the memory card, the third gold finger (723) is configured to transmit the data signal of the SIM card, the fourth gold finger (724) is configured to transmit the clock signal of the SIM card and the reference clock signal of the memory card, the sixth gold finger (726) is configured to transmit the reset signal of the SIM card, the seventh gold finger (727) is configured to transmit the ground signal of the SIM card and the ground signal of the memory card, and the eighth gold finger (728) is configured to transmit the power signal of the SIM card and the first power signal of the memory card; and
one of the first gold finger (721) and the second gold finger (722) is configured to transmit the data signal of the memory card, and the other is configured to transmit the second power signal of the memory card.

16. The card (7) according to claim 1, wherein the card (7) further comprises a voltage regulator (716), and one of the 10 gold fingers is connected to a power interface of the SIM card circuit (713), is further connected to a first power interface of the memory card circuit (712), and is further connected to a second power interface of the memory card circuit (712) through the voltage regulator (716).

17. The card (7) according to claim 16, wherein the memory card circuit (712) supports a LTFS interface protocol or a PCIE interface protocol; and
one of the 10 gold fingers is configured to transmit a data signal of the SIM card, one gold finger is configured to transmit a clock signal of the SIM card, one gold finger is configured to transmit the reset signal of the SIM card, four gold fingers are configured to transmit data signals of the memory card, one gold finger is configured to transmit a reference clock signal of the memory card, one gold finger is configured to transmit a ground signal of the SIM card and a ground signal of the memory card, and one gold finger is configured to transmit a power signal of the SIM card and a first power signal of the memory card.

18. The card (7) according to claim 17, wherein the 10 gold fingers are arranged in an array, the 10 gold fingers are arranged in a first column of gold fingers and a second column of gold fingers in a length direction of the card (7), the first column of gold fingers comprises a first gold finger (721), a third gold finger (723), a fifth gold finger (725), a seventh gold finger (727), and a ninth gold finger (729) that are arranged in a width direction of the card (7), and the second column of gold fingers comprises a second gold finger (722), a fourth gold finger (724), a sixth gold finger (726), an eighth gold finger (728), and a tenth gold finger (7210) that are arranged in the width direction of the card (7);
the first gold finger (721), the second gold finger (722), the ninth gold finger (729), and the tenth gold finger (7210) are configured to transmit the data signals of the memory card, the third gold finger (723) is configured to transmit the data signal of the SIM card, the fourth gold finger (724) is configured to transmit the clock signal of the SIM card, the seventh gold finger (727) is configured to transmit the ground signal of the SIM card and the ground signal of the memory card, and the eighth gold finger (728) is configured to transmit the power signal of the SIM card and the first power signal of the memory card; and
one of the fifth gold finger (725) and the sixth gold finger (726) is configured to transmit the reference clock signal of the memory card, and the other is configured to transmit the reset signal of the SIM card.

19. The card (7) according to claim 1, wherein the memory card circuit (712) supports a PCIE interface protocol, and one of the 10 gold fingers is configured to transmit a reference clock signal of the memory card and a second power signal of the memory card.

20. The card (7) according to claim 19, wherein the card (7) further comprises a separate circuit (717), a reference clock interface and a second power interface of the memory card circuit (712) are connected to the separate circuit (717), and the separate circuit (717) is further connected to one of the 10 gold fingers.

21. The card (7) according to claim 19 or 20, wherein the 10 gold fingers are arranged in an array, the 10 gold fingers are arranged in a first column of gold fingers and a second column of gold fingers in a length direction of the card (7), the first column of gold fingers comprises a first gold finger (721), a third gold finger (723), a fifth gold finger (725), a seventh gold finger (727), and a ninth gold finger (729) that are arranged in a width direction of the card (7), and the second column of gold fingers comprises a second gold finger (722), a fourth gold finger (724), a sixth gold finger (726), an eighth gold finger (728), and a tenth gold finger (7210) that are arranged in the width direction of the card (7);
the first gold finger (721), the second gold finger (722), the ninth gold finger (729), and the tenth gold finger (7210) are configured to transmit the data signals of the memory card, the third gold finger (723) is configured to transmit the data signal of the SIM card, the fourth gold finger (724) is configured to transmit the clock signal of the SIM card, the seventh gold finger (727) is configured to transmit the ground signal of the SIM card and the ground signal of the memory card, and the eighth gold finger (728) is configured to transmit the power signal of the SIM card and the first power signal of the memory card; and
one of the fifth gold finger (725) and the sixth gold finger (726) is configured to transmit the reference clock signal of the memory card and the second power signal of the memory card, and the other is configured to transmit the reset signal of the SIM card.

22. The card (7) according to any one of claims 5, 7, 9, 13, 15, 18, and 21, wherein a dimension of the card body (71) of the card (7) is the same as a dimension of a card body (31) of a nano-SIM card (3);
a location of the third gold finger (723) corresponds to a location of a first gold finger (321) of the nano-SIM card (3);
a location of the fourth gold finger (724) corresponds to a location of a second gold finger (322) of the nano-SIM card (3);
a location of the fifth gold finger (725) corresponds to a location of a third gold finger (323) of the nano-SIM card (3);
a location of the sixth gold finger (726) corresponds to a location of a fourth gold finger (324) of the nano-SIM card (3);
a location of the seventh gold finger (727) corresponds to a location of a fifth gold finger (325) of the nano-SIM card (3); and
a location of the eighth gold finger (728) corresponds to a location of a sixth gold finger (326) of the nano-SIM card (3).

23. The card (7) according to claim 22, wherein the card (7) and the nano-SIM card (3) are able to be installed in a same card holder assembly (10), and a card connector (11) of the card holder assembly (10) comprises a first spring plate (11a) to a tenth spring plate (11j) that are arranged in an array;
when the card (7) is installed in the card holder assembly (10), the third gold finger (723) is electrically connected to a third spring plate (1 1c) of the card connector (11), the fourth gold finger (724) is electrically connected to a fourth spring plate (11d) of the card connector (11), the fifth gold finger (725) is electrically connected to a fifth spring plate (11e) of the card connector (11), the sixth gold finger (726) is electrically connected to a sixth spring plate (11f) of the card connector (11), the seventh gold finger (727) is electrically connected to a seventh spring plate (11g) of the card connector (11), and the eighth gold finger (728) is electrically connected to an eighth spring plate (11h) of the card connector (11); and
when the nano-SIM card (3) is installed in the card holder assembly (10), the first gold finger (321) of the nano-SIM card (3) is electrically connected to the third spring plate (11c) of the card connector (11), the second gold finger (322) of the nano-SIM card (3) is electrically connected to the fourth spring plate (11d) of the card connector (11), the third gold finger (323) of the nano-SIM card (3) is electrically connected to the fifth spring plate (11e) of the card connector (11), the fourth gold finger (324) of the nano-SIM card (3) is electrically connected to the sixth spring plate (11f) of the card connector (11), the fifth gold finger (325) of the nano-SIM card (3) is electrically connected to the seventh spring plate (11g) of the card connector (11), and the sixth gold finger (326) of the nano-SIM card (3) is electrically connected to the eighth spring plate (11h) of the card connector (11).

24. The card (7) according to claim 22 or 23, wherein the card body (71) of the card (7) comprises a first edge (7111), a second edge (7112), a third edge (7113), and a fourth edge (7114), the first edge (7111) and the third edge (7113) are disposed opposite to each other and extend along the length direction of the card (7), the second edge (7112) and the fourth edge (7114) are disposed opposite to each other and extend along the width direction of the card (7), and a spacing between the second edge (7112) and the fourth edge (7114) is greater than a spacing between the first edge (7111) and the third edge (7113);
a corner of the card body (71) of the card (7) is a beveled edge, and the beveled edge is disposed between the first edge (7111) and the second edge (7112); and
the first column of gold fingers is located between the second edge (7112) and the second column of gold fingers, the first gold finger (721) is located between the first edge (7111) and the third gold finger (723), and the second gold finger (722) is located between the first edge (7111) and the fourth gold finger (724).

25. The card (7) according to claim 24, wherein the 10 gold fingers are arranged in a first row of gold fingers (721 and 722) to a fifth row of gold fingers (729 and 7210) in the width direction of the card (7);
a center spacing between a second row of gold fingers (723 and 724) and a third row of gold fingers (725 and 726) is greater than a center spacing between the first row of gold fingers (721 and 722) and the second row of gold fingers (723 and 724), and is greater than a center spacing between a fourth row of gold fingers (727 and 728) and the fifth row of gold fingers (729 and 7210); and
a center spacing between the third row of gold fingers (725 and 726) and the fourth row of gold fingers (727 and 728) is greater than the center spacing between the first row of gold fingers (721 and 722) and the second row of gold fingers (723 and 724), and is greater than the center spacing between the fourth row of gold fingers (727 and 728) and the fifth row of gold fingers (729 and 7210).

26. The card (7) according to claim 25, wherein the center spacing between the second row of gold fingers (723 and 724) and the third row of gold fingers (725 and 726) falls within a range of 1.5 mm to 2.8 mm, the center spacing between the third row of gold fingers (725 and 726) and the fourth row of gold fingers (727 and 728) falls within the range of 1.5 mm to 2.8 mm, and the center spacing between the first row of gold fingers (721 and 722) and the second row of gold fingers (723 and 724) falls within a range of 1.0 mm to 1.7 mm, and the center spacing between the fourth row of gold fingers (727 and 728) and the fifth row of gold fingers (729 and 7210) falls within the range of 1.0 mm to 1.7 mm.
